# EUROPEAN PATENT APPLICATION

(11) **EP 4 726 909 A1**
(43) Date of publication of application: **15.04.2026**
(21) Application number: 24818604.1
(22) Date of filing: 03.06.2024
(51) Int. Cl.: H01M 50/682, H01M 50/35, H01M 50/244, H01M 50/30, H01M 50/204, H01M 10/613, H01M 50/289

(54) **LARGE-CAPACITY BATTERY, COVER PLATE, SHELL, CYLINDER ASSEMBLY, CYLINDER, ELASTIC SUPPORTING PIECE, BOTTOM SUPPORTING PIECE AND PREPARATION PROCESS OF LARGE-CAPACITY BATTERY**

(30) Priority: 06.06.2023 CN 202310662884; 06.06.2023 CN 202310662911; 06.06.2023 CN 202310662902; 06.06.2023 CN 202310662922; 06.06.2023 CN 202310662918; 06.06.2023 CN 202310662893; 06.06.2023 CN 202310662891; 05.07.2023 CN 202321740557 U; 30.08.2023 CN 202311100700; 28.09.2023 CN 202311273194; 11.11.2023 CN 202311497436; 11.11.2023 CN 202323043209 U; 07.12.2023 CN 202311668470; 07.12.2023 CN 202311668461; 27.12.2023 CN 202311819170; 27.12.2023 CN 202311819167; 27.12.2023 CN 202323582851 U; 07.02.2024 CN 202410173490; 07.02.2024 CN 202420287688 U; 26.04.2024 CN 202420882247 U
(71) Applicant: D-Aus Energy Storage Technology (Xi'an) Co., Ltd, Xi' An, Shaanxi 710075 (CN)
(72) Inventor: LEI, Zhengjun, Shaanxi 710075 (CN); CHEN, Mengqi, Shaanxi 710075 (CN)
(74) Representative: Inchingalo, Simona
(86) International application number: PCT/CN2024/096998
(87) International publication number: WO 2024/251072

(57) **Abstract**

The present application relates to the field of batteries, in particular to a large-capacity battery, a cover plate, a shell, a cylinder assembly, a cylinder, an elastic supporting piece, a bottom supporting piece and a preparation process of a large-capacity battery. The problem of an existing large-capacity battery sharing pipeline assembly being difficult to assemble is solved. The large-capacity battery comprises a shell and a plurality of battery cells, and the plurality of battery cells are arranged in the shell in the same direction; and the shell is provided with a shared chamber, and an inner cavity of the shared chamber is in communication with inner cavities of all the battery cells. According to the present application, the plurality of battery cells are arranged in one shell with the shared chamber, the shared chamber does not need to be inserted, the problem of coaxial insertion does not need to be considered in an arrangement direction of the battery cells, and requirements for machining precision and assembly precision are relatively low; and a special tool is not needed, an assembly process is simple, machining difficulty and machining cost of the large-capacity battery with a shared system are greatly reduced, and mass production can be achieved.

## Description

### Technical Field

The present invention belongs to the field of batteries, and specifically to a high-capacity battery, a cover plate, a housing, a cylinder assembly, a cylinder, an elastic support member, a bottom support member, and a process for preparing a high-capacity battery.

### Background

At present, a plurality of battery cells are connected in parallel or in series in the market to form a high-capacity battery (which may also be referred to as a battery module or a battery pack).

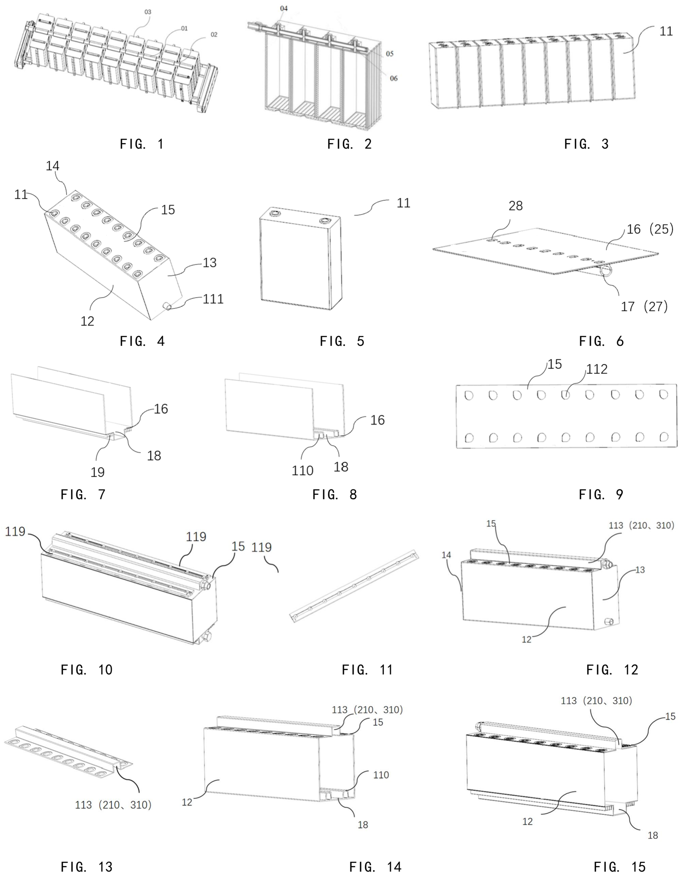

An existing high-capacity battery has a structure shown in FIG. 1, and includes a battery pack body formed by connecting a plurality of battery cells in parallel, and a shared tubing assembly located at a bottom of the battery pack body, wherein the shared tubing assembly is configured to penetrate through all inner cavities of the plurality of battery cells such that all the battery cells in the battery pack are in an electrolyte system. The battery pack may improve the uniformity of electrolyte in each battery cell of the plurality of battery cells in the battery pack via the shared tubing assembly, so as to prolong cycle life, and may also replenish the electrolyte for the battery pack via the shared tubing assembly to prolong the service life of the battery pack while improving the use safety of the battery pack.

However, such shared tubing assembly is formed by directly hermetically inserting a plurality of sub-tubes 01 and intermediate connection tubes 02 through interference fit with each other, wherein the plurality of sub-tubes 01 are respectively disposed on a lower cover plate 03 of the battery cell; and the sub-tubes extend in an arrangement direction of the battery cell 11, are integrally extruded with the lower cover plate 03, and are in communication with openings of the lower cover plate 03.

During assembly, two ends of the sub-tube 01 serve as connection ends of the intermediate connection tube 02. When two battery cells are connected, the ends of the sub-tubes on the two battery cells are respectively pressed into the two ends of the intermediate connection tube 02.

The shared tubing assembly needs each sub-tube 01 and the intermediate connection tube 02 to be coaxial to achieve an effectively connection during an inserted connection. However, it is difficult to ensure the coaxiality between each sub-tube and the intermediate connection tube 02 due to the following reasons.
1) The sub-tube and the lower cover plate are formed as an integral piece, and the coaxiality of each sub-tube deviates during insertion if the position of the sub-tube on the lower cover plate on each integral piece slightly deviates, or there is a slight deviation in the size of each sub-tube itself.
2) When the integrated piece hereinabove is welded with a cylinder, an inconsistency may occur in the position of the sub-tube relative to the cylinder due to variations in the welding process, thus causing deviations in the coaxiality of each sub-tube during insertion.
3) The solution needs to utilize a special tooling during insertion, and due to improper use of the tooling or operational issues by construction personnel, deviations may occur in the coaxiality of each sub-tube if there is any carelessness.

Furthermore, during insertion, the deviation between the sub-tubes increases with the number of insertions, making it more difficult to ensure the coaxiality between the sub-tubes as the number of insertions increases, thus leading to a decrease in yield during assembly as the number of insertions increases.

To sum up, the solution may cause displacement of the sub-tubes relative to the lower cover plate during insertion as the sub-tubes of two adjacent battery cells of the plurality of battery cells are difficult to be coaxial, or cause displacement of the lower cover plate relative to the cylinder, thus resulting in damage to a battery.

Disclosed in the Chinese Patent CN115411422A is a high-capacity battery, including a battery cell group. As shown in FIG. 2, a battery cell housing body is provided with a conduit 04 protruding from a housing body (the conduit 04 is in communication with an inner cavity of a battery cell via a through hole provided in a housing body of the battery cell); a confluence tube 05 is provided with a plurality of through holes 06; when the battery cell group is formed, the conduit 04 is hermetically connected to the confluence tube 05 via the through holes 06; and the conduit 04 and the confluence tube 05 form a gas path channel of the battery cell group, and a flue gas outlet is provided in at least one end of the confluence tube 05. When thermal runaway occurs in any battery cell in the battery cell group, a thermal runaway flue gas is discharged into the confluence tube 05 via the conduit 04 and the through hole 06, and then the thermal runaway flue gas is discharged to a designated location for treatment from the flue gas outlet provided in the confluence tube 05.

In the patent, a gas region in the inner cavity of the each battery cell is in communication with the gas path channel, and the thermal runaway flue gas may be directly discharged from the channel, thereby achieving high safety. However, during assembly of the channel, it is required that the through hole in the battery cell, the conduit, and the through hole in the corresponding confluence tube are all coaxial to achieve an effective connection, imposing high requirements on processing and assembly accuracy.

### Summary

The present invention provides a high-capacity battery, so as to overcome the problem of difficult assembly of a shared tubing assembly or gas passage in the high-capacity battery.

In order to overcome the problem hereinabove, some embodiments of the present invention provide a high-capacity battery, including a housing and a plurality of battery cells, wherein the plurality of battery cells are arranged in the housing in the same direction; and the housing is provided with a sharing chamber, and an inner cavity of the sharing chamber is in communication with inner cavities of all the battery cells.

On the basis of the technical concept hereinabove, the present invention provides a total of twenty specific technical solutions as follows.

### First embodiment:

In this embodiment, a first aspect provides a high-capacity battery, including a housing and a plurality of battery cells, wherein the plurality of battery cells are connected in parallel in sequence and arranged in an inner cavity of the housing; an inner cavity of the each battery cell of the plurality of battery cells includes an electrolyte region and a gas region; an electrolyte sharing chamber (i.e., the sharing chamber hereinabove is the electrolyte sharing chamber) is disposed at a bottom of the housing; and the electrolyte sharing chamber is in communication with the electrolyte region of the inner cavity of the each battery cell of the plurality of battery cells.

In this embodiment, a second aspect provides a housing for a high-capacity battery. The housing is configured to accommodate a plurality of battery cells, and includes a U-shaped housing body, a first end plate, a third end plate, and a second cover plate. A sharing chamber is disposed at a bottom of the U-shaped housing body; the sharing chamber is an electrolyte sharing chamber; the electrolyte sharing chamber is configured to be in communication with an electrolyte region of an inner cavity of the each battery cell of the plurality of battery cells; the first end plate and the third end plate respectively cover two opposite open ends of the U-shaped housing body; the second cover plate is provided with a third through hole capable of allowing an electrode terminal of the each battery cell of the plurality of battery cells to extend out; and the second cover plate covers a top open end of the U-shaped housing body and is hermetically connected to the top open end of the U-shaped housing body.

This embodiment places the plurality of battery cells inside the housing having the electrolyte sharing chamber at the bottom. By utilizing the electrolyte sharing chamber to penetrate through the inner cavity of the each battery cell of the plurality of battery cells is located in the housing, electrolyte in each battery cell of the plurality of battery cells is shared to ensure the consistency of the each battery cell of the plurality of battery cells. That is, the electrolyte in all the battery cells is in a same system by communicating an electrolyte cavity of the each battery cell of the plurality of battery cells, such that differences between the electrolyte in each battery cell of the plurality of battery cells are reduced, and the consistency between the battery cells is improved to a certain extent, thereby prolonging the cycle life of the high-capacity battery to a certain extent.

The electrolyte sharing chamber in this embodiment does not need to be inserted, such that in an arrangement direction of the battery cells, the problem of coaxial insertion does not need to be taken into consideration, thereby reducing requirements for processing accuracy and assembly accuracy. Meanwhile, special tooling is not required, and an assembly process is relatively simple, greatly reducing the processing difficulty and processing cost of such high-capacity batteries with sharing systems, thereby achieving mass production.

The electrode terminal of the each battery cell of the plurality of battery cells in this embodiment extends out of a top of the housing, and compared to a structure of the electrode terminal located inside the housing, the electrode terminal has a better heat dissipation effect. Furthermore, when the electrode terminal extends out of the housing, it is also convenient to subsequently utilize a heat exchange apparatus to timely dissipate heat from the electrode terminal if a temperature of the battery is too high. Therefore, it may ensure that such high-capacity batteries operate at an optimal temperature.

The housing in this embodiment is constituted by a U-shaped housing body and a cover plate covering three open ends of the U-shaped housing body. The U-shaped housing body may be integrally processed, and then the cover plate is utilized to seal the open ends. The potential leakage points of the entire housing are only located at connection portions between the cover plate and the U-shaped housing body. By selecting reliable connection means, the entire housing may be a superior closed system to ensure that the electrolyte inside the high-capacity battery is not affected by external environments.

This embodiment provides a first channel at a bottom of the U-shaped housing body as the electrolyte sharing chamber, and the first channel is utilized to penetrate through the electrolyte region of the inner cavity of the each battery cell of the plurality of battery cells is located in the housing. Compared to a structure adopting a hollow tube section as the electrolyte sharing chamber, through holes do not need to be added, and the first channel directly penetrates through the electrolyte region of the inner cavity of the each battery cell of the plurality of battery cells via a first through hole, thereby achieving simple structure and processing.

The first channel and the U-shaped housing body may be formed as an integral piece. For example, the first channel may be formed by protruding, adopting a bending or aluminum extrusion process, the bottom of the U-shaped housing body in a direction away from the top of the U-shaped housing body, or the first channel may also be formed by integrally forming a first support rib, facilitating processing while achieving lower processing costs.

The embodiment provides a heat dissipation fin at the bottom of the U-shaped housing body to improve the heat dissipation performance of the high-capacity battery.

This embodiment provides a gas chamber on the second cover plate, the gas region of the inner cavity of the each battery cell of the plurality of battery cells penetrates through the gas chamber to cause gas paths of the battery cells to communicate with each other, such that gases in all the battery cells are in a same environment to achieve a gas balance, thereby reducing differences between the battery cells, improving the consistency between the battery cells, and further prolonging the cycle life of the high-capacity battery.

The gas chamber in this embodiment may also directly cover a first explosion venting portion at a top of the each battery cell of the plurality of battery cells to serve as an explosion venting tube. When a pressure of the inner cavity of any battery cell of the plurality of battery cells is too high, a gas or thermal runaway flue gas in the inner cavity breaks through the first explosion venting portion on each battery cell of the plurality of battery cells to enter the gas chamber, and then is discharged from the gas chamber. Since each battery cell of the plurality of battery cells includes the first explosion venting portion and the first explosion venting portion is located in the gas region of the each battery cell of the plurality of battery cells, the thermal runaway flue gas breaks through the first explosion venting portion and enters the explosion venting tube, and a pressure build-up time is short, thereby achieving higher safety.

The U-shaped housing body and the second cover plate in this embodiment may be integrally formed adopting the aluminum extrusion process. During extrusion, the electrolyte sharing chamber may also be integrally formed by means of extrusion simultaneously, facilitating processing while achieving lower processing costs. Furthermore, compared to the structure in which the U-shaped housing body and the second cover plate are separately arranged, potential leakage points are further reduced, making it easier to achieve a superior closed system for the entire housing.

This embodiment divides the inner cavity of the cylinder into a plurality of battery cell mounting cavities by adding partition plates. When each battery cell of the plurality of battery cells is fixed in the corresponding battery cell mounting cavity, a side wall is in direct contact with the partition plate. In a first aspect, the mounting stability of the each battery cell of the plurality of battery cells in the housing body may be improved. In a second aspect, the occurrence of a problem of reduced cycling performance of a high-capacity battery caused by the swelling of the each battery cell of the plurality of battery cells may be prevented. In a third aspect, heat generated during the charging and discharging of the each battery cell of the plurality of battery cells may be transferred to the outside via the partition plate, thereby reducing a risk of thermal runaway. In a fourth aspect, the strength of the cylinder may also be improved.

### Second embodiment:

In this embodiment, a first aspect provides a high-capacity battery, including a housing and a plurality of battery cells, wherein the plurality of battery cells are connected in parallel in sequence and arranged in an inner cavity of the housing; an inner cavity of the each battery cell of the plurality of battery cells includes an electrolyte region and a gas region; and the housing includes a cylinder, a fourth cover plate, and a fifth cover plate.

The cylinder is open at a top and a bottom; an electrolyte sharing chamber is disposed on the fourth cover plate (i.e., the sharing chamber hereinabove is the electrolyte sharing chamber); the fourth cover plate covers the bottom open end of the cylinder and is hermetically connected to the bottom open end of the cylinder; the electrolyte sharing chamber is in communication with the electrolyte region of the inner cavity of the each battery cell of the plurality of battery cells; the fifth cover plate is provided with a third through hole capable of allowing an electrode terminal of the each battery cell of the plurality of battery cells to extend out; the fifth cover plate covers the top open end of the cylinder and is hermetically connected to the top open end of the cylinder; and the electrode terminal of the each battery cell of the plurality of battery cells extends out of the third through hole, and a housing region corresponding to the third through hole is fixedly sealed with a housing body of the battery cell.

In this embodiment, a second aspect provides another high-capacity battery, including a housing and a plurality of battery cells, wherein the plurality of battery cells are connected in parallel in sequence and arranged in an inner cavity of the housing; an inner cavity of the each battery cell of the plurality of battery cells includes an electrolyte region and a gas region; a first through hole penetrating through the inner cavity of the battery cell is provided at a bottom of a housing body of the each battery cell of the plurality of battery cells; the housing includes a cylinder, a fifth cover plate, and a hollow box body configuring for an electrolyte sharing chamber; and the cylinder is open at the top and the bottom.

The hollow box body covers the bottom open end of the cylinder and is hermetically connected to the bottom open end of the cylinder; a second through hole penetrating through the first through hole is provided at a top of the hollow box body, and an inner cavity of the hollow box body is in communication with the electrolyte region of the inner cavity of the each battery cell of the plurality of battery cells via the first through hole and the second through hole; the fifth cover plate is provided with a third through hole capable of allowing an electrode terminal of the each battery cell of the plurality of battery cells to extend out; the fifth cover plate covers the top open end of the cylinder and is hermetically connected to the top open end of the cylinder; and the electrode terminal of the each battery cell of the plurality of battery cells extends out of the third through hole, and a housing region corresponding to the third through hole is fixedly sealed with the housing body of the battery cell.

In this embodiment, a third aspect further provides a housing for a high-capacity battery. The housing is configured to accommodate a plurality of battery cells and includes a cylinder, a fourth cover plate, and a fifth cover plate. The cylinder is open at a top and a bottom; an electrolyte sharing chamber is disposed on the fourth cover plate; the fourth cover plate covers a bottom open end of the cylinder and is hermetically connected to the bottom open end of the cylinder; the electrolyte sharing chamber is configured to be in communication with an electrolyte region of an inner cavity of the each battery cell of the plurality of battery cells; the fifth cover plate is provided with a third through hole capable of allowing an electrode terminal of the each battery cell of the plurality of battery cells to extend out; the fifth cover plate covers a top open end of the cylinder and is hermetically connected to the top open end of the cylinder.

In this embodiment, a fourth aspect further provides another housing for a high-capacity battery. The housing is configured to accommodate a plurality of battery cells. A first through hole penetrating through an inner cavity of the battery cell is provided at a bottom of a housing body of the each battery cell of the plurality of battery cells; the housing includes a cylinder, a fifth cover plate, and a hollow box body; the cylinder is open at a top and a bottom; the hollow box body covers the bottom open end of the cylinder and is hermetically connected to the bottom open end of the cylinder; a top of the hollow box body is provided with a second through hole, and an inner cavity of the hollow box body is in communication with an electrolyte region of the inner cavity of the each battery cell of the plurality of battery cells via the second through hole and the first through hole; the fifth cover plate is provided with a third through hole capable of allowing an electrode terminal of the each battery cell of the plurality of battery cells to extend out; and the fifth cover plate covers the top open end of the cylinder and is hermetically connected to the top open end of the cylinder.

This embodiment places the plurality of battery cells inside the housing. The housing is of a split structure, and includes a cylinder that may accommodate the plurality of battery cells, and the fourth cover plate and the fifth cover plate sealing the open ends of the cylinder; and the fourth cover plate is provided with the electrolyte sharing chamber. By utilizing the electrolyte sharing chamber to penetrate through the electrolyte region of the inner cavity of the each battery cell of the plurality of battery cells is located in the housing, electrolyte in each battery cell of the plurality of battery cells is shared to ensure the consistency of the each battery cell of the plurality of battery cells. That is, the electrolyte in all the battery cells is in a same system by communicating an electrolyte cavity of the each battery cell of the plurality of battery cells, such that differences between the electrolyte in each battery cell of the plurality of battery cells are reduced, and the consistency between the battery cells is improved to a certain extent, thereby prolonging the cycle life of the high-capacity battery to a certain extent.

The electrolyte sharing chamber in this embodiment does not need to be inserted, such that in an arrangement direction of the battery cells, the problem of coaxial insertion does not need to be taken into consideration, thereby reducing requirements for processing accuracy and assembly accuracy. Meanwhile, special tooling is not required, and an assembly process is relatively simple, greatly reducing the processing difficulty and processing cost of such high-capacity batteries with sharing systems, thereby achieving mass production.

Furthermore, this embodiment fixes the fourth cover plate to the bottom open end of the cylinder, and each battery cell of the plurality of battery cells may be placed into the inner cavity of the housing from the top open end of the cylinder, facilitating assembly. The cylinder may be integrally formed adopting an extrusion process, facilitating processing while achieving lower processing costs.

This embodiment may provide the gas chamber on the fifth cover plate to directly cover a first explosion venting portion at a top of the each battery cell of the plurality of battery cells to serve as an explosion venting tube. When a pressure of the inner cavity of any battery cell of the plurality of battery cells is too high, a gas or thermal runaway flue gas in the inner cavity breaks through the first explosion venting portion on each battery cell of the plurality of battery cells to enter the gas chamber, and then is discharged from the gas chamber. Since each battery cell of the plurality of battery cells includes the first explosion venting portion and the first explosion venting portion is located in the gas region of the each battery cell of the plurality of battery cells, the thermal runaway flue gas breaks through the first explosion venting portion and enters the explosion venting tube, and a pressure build-up time is short, thereby achieving higher safety.

This embodiment provides a gas chamber on the fifth cover plate, the inner cavity of the each battery cell of the plurality of battery cells penetrates through the gas chamber to cause gas paths of the battery cells to communicate with each other, such that gases in all the battery cells are in a same environment to achieve a gas balance, thereby reducing differences between the battery cells, improving the consistency between the battery cells, and further prolonging the cycle life of the high-capacity battery.

This embodiment divides the inner cavity of the cylinder into a plurality of battery cell mounting cavities by adding partition plates. When each battery cell of the plurality of battery cells is fixed in the corresponding battery cell mounting cavity, a side wall is in direct contact with the partition plate. In a first aspect, the mounting stability of the each battery cell of the plurality of battery cells in the housing body may be improved. In a second aspect, the occurrence of a problem of reduced cycling performance of a high-capacity battery caused by the swelling of the each battery cell of the plurality of battery cells may be prevented. In a third aspect, heat generated during the charging and discharging of the each battery cell of the plurality of battery cells may be transferred to the outside via the partition plate, thereby reducing a risk of thermal runaway. In a fourth aspect, the strength of the cylinder may also be improved.

### Third embodiment:

In this embodiment, a first aspect provides a high-capacity battery, including a housing and a plurality of battery cells, wherein the plurality of battery cells are sequentially arranged in series or in parallel in an inner cavity of the housing; an inner cavity of the each battery cell of the plurality of battery cells includes a gas region; a gas sharing chamber (i.e., the sharing chamber hereinabove is the gas sharing chamber) is disposed at a top of the housing; and the gas sharing chamber is in communication with the gas region of the inner cavity of the each battery cell of the plurality of battery cells.

In this embodiment, a second aspect further provides a housing for a high-capacity battery. The housing is configured to accommodate a plurality of battery cells, and includes a cylinder, a fourth cover plate, and a fifth cover plate. The cylinder is open at a top and a bottom; the fourth cover plate covers the bottom open end of the cylinder and is hermetically connected to the bottom open end of the cylinder; the fifth cover plate is provided with a gas sharing chamber configured to be in communication with a gas region of an inner cavity of the each battery cell of the plurality of battery cells; the fifth cover plate is provided with a third through hole capable of allowing an electrode terminal of the each battery cell of the plurality of battery cells to extend out; and the fifth cover plate covers the top open end of the cylinder and is hermetically connected to the top open end of the cylinder.

In this embodiment, a third aspect further provides another housing for a high-capacity battery. The housing is configured to accommodate a plurality of battery cells, and includes a U-shaped housing body, a first end plate, a second cover plate, and a third end plate. The first end plate and the third end plate respectively cover two opposite open ends of the U-shaped housing body; the second cover plate is provided with a gas sharing chamber configured to penetrate with a gas region of an inner cavity of the each battery cell of the plurality of battery cells; the second cover plate is provided with a third through hole capable of allowing an electrode terminal of the each battery cell of the plurality of battery cells to extend out; and the second cover plate covers a top open end of the U-shaped housing body and is hermetically connected to the top open end of the U-shaped housing body.

This embodiment places the plurality of battery cells inside the housing with the gas sharing chamber at the top. By utilizing the gas sharing chamber to penetrate through the gas region of the inner cavity of the each battery cell of the plurality of battery cells is located in the housing, a gas in the battery cell is shared to ensure the consistency of the each battery cell of the plurality of battery cells, thereby prolonging the cycle life of the high-capacity battery to a certain extent. The gas sharing chamber in this embodiment does not need to be spliced, such that the coaxial problem of splicing members does not need to be taken into consideration, requirements for processing accuracy and assembly accuracy are lower, and the processing difficulty and processing cost of such high-capacity batteries with sharing systems are greatly reduced, thereby achieving mass production.

The housing in this embodiment is of a split structure, and includes a cylinder that may accommodate the plurality of battery cells, and the first end plate and the second cover plate, which seal the open ends of the cylinder. After the housing is designed as the split structure and the first end plate is fixed to the bottom open end of the cylinder, each battery cell of the plurality of battery cells may be placed in the inner cavity of the housing from the top open end of the cylinder, and then the second cover plate is fixed to the top open end of the cylinder, facilitating convenient assembly. Furthermore, the cylinder may be integrally formed adopting an extrusion process, and the second cover plate and the gas sharing chamber may also be integrally formed adopting the extrusion process, facilitating processing while achieving lower processing costs. Furthermore, the potential leakage points of the entire housing are only located at connection portions between the cover plate and the cylinder. By selecting reliable connection means, the entire housing may be a superior closed system to ensure that the electrolyte inside each battery cell of the plurality of battery cells is not affected by external environments.

The housing in this embodiment may also be constituted by the U-shaped housing body and the cover plate covering three open ends of the U-shaped housing body, the U-shaped housing body and the top cover plate may be integrally formed adopting an aluminum extrusion process, and the gas sharing chamber may also be integrally formed by means of extrusion, facilitating processing while achieving lower processing costs. Moreover, there are fewer potential leakage points, such that the entire housing may be a superior closed system to ensure that the electrolyte inside each battery cell of the plurality of battery cells is not affected by external environments.

This embodiment divides the inner cavity into a plurality of battery cell mounting cavities by adding partition plates. When each battery cell of the plurality of battery cells is fixed in the corresponding battery cell mounting cavity, a side wall is in direct contact with the partition plate. In a first aspect, the mounting stability of the each battery cell of the plurality of battery cells in the housing body may be improved. In a second aspect, the occurrence of a problem of reduced cycling performance of a high-capacity battery caused by the swelling of the each battery cell of the plurality of battery cells may be prevented. In a third aspect, heat generated during the charging and discharging of the each battery cell of the plurality of battery cells may be transferred to the outside via the partition plate, thereby reducing a risk of thermal runaway. In a fourth aspect, the strength of the cylinder may also be improved.

### Fourth embodiment:

This embodiment provides a high-capacity battery, including a housing and n battery cells, wherein the n battery cells are connected in parallel in sequence and arranged in an inner cavity of the housing; an inner cavity of the each battery cell of the plurality of battery cells includes an electrolyte region and a gas region, wherein n is an integer greater than or equal to 2; an electrolyte sharing chamber (i.e., the sharing chamber hereinabove is the electrolyte sharing chamber) is disposed at a bottom of the housing; the electrolyte sharing chamber is in communication with the electrolyte region of the inner cavity of the each battery cell of the plurality of battery cells; a gas sharing chamber is disposed on a side wall of the housing; and the gas sharing chamber is in communication with the gas region of the inner cavity of the each battery cell of the plurality of battery cells.

This embodiment places the plurality of battery cells inside the housing having the electrolyte sharing chamber at the bottom. By utilizing the electrolyte sharing chamber to penetrate through the inner cavity of the each battery cell of the plurality of battery cells is located in the housing, electrolyte in each battery cell of the plurality of battery cells is shared to ensure the consistency of the each battery cell of the plurality of battery cells. That is, the electrolyte in all the battery cells is in a same system by communicating an electrolyte cavity of the each battery cell of the plurality of battery cells, such that differences between the electrolyte in each battery cell of the plurality of battery cells are reduced, and the consistency between the battery cells is improved to a certain extent, thereby prolonging the cycle life of the high-capacity battery to a certain extent.

The electrolyte sharing chamber in this embodiment does not need to be inserted, such that in an arrangement direction of the battery cells, the problem of coaxial insertion does not need to be taken into consideration, thereby reducing requirements for processing accuracy and assembly accuracy. Meanwhile, special tooling is not required, and an assembly process is relatively simple, greatly reducing the processing difficulty and processing cost of such high-capacity batteries with sharing systems, thereby achieving mass production. Moreover, this embodiment further provides the gas sharing chamber on the sidewall of the housing. By utilizing the gas sharing chamber to penetrate through the gas region of the inner cavity of the each battery cell of the plurality of battery cells is located in the housing, a gas balance is achieved, causing the gas in each battery cell of the plurality of battery cells to be shared to further ensure the consistency of the each battery cell of the plurality of battery cells, such that the cycle life of the high-capacity battery may be further prolonged compared to the high-capacity battery in the Background.

The housing in this embodiment is of a split structure, and includes a cylinder that may accommodate the plurality of battery cells, and the first end plate and the second cover plate, which seal the open ends of the cylinder. After the housing is designed as the split structure and the first end plate is fixed to the bottom open end of the cylinder, each battery cell of the plurality of battery cells may be placed in the inner cavity of the housing from the top open end of the cylinder, facilitating convenient assembly. Furthermore, the cylinder may be integrally formed adopting an extrusion process, facilitating processing while achieving lower processing costs.

This embodiment forms the electrolyte sharing chamber by arranging a support rib on the first end plate and forms the gas sharing chamber by arranging a first partition plate in the cylinder, causing the structure of the entire high-capacity battery is relatively regular. On one hand, it is easy to integrate energy storage devices on the basis of such high-capacity batteries; and on the other hand, the high-capacity battery may be treated as a whole, and the overall safety performance of such high-capacity batteries is improved by coating an insulating film (which may also be referred to as a blue film or protective film) outside the high-capacity battery.

This embodiment divides the inner cavity into a plurality of battery cell mounting cavities by adding partition plates. When each battery cell of the plurality of battery cells is fixed in the corresponding battery cell mounting cavity, a side wall is in direct contact with the partition plate. In a first aspect, the mounting stability of the each battery cell of the plurality of battery cells in the housing body may be improved. In a second aspect, the occurrence of a problem of reduced cycling performance of a high-capacity battery caused by the swelling of the each battery cell of the plurality of battery cells may be prevented. In a third aspect, heat generated during the charging and discharging of the each battery cell of the plurality of battery cells may be transferred to the outside via the partition plate, thereby reducing a risk of thermal runaway. In a fourth aspect, the strength of the cylinder may also be improved.

### Fifth embodiment:

This embodiment provides a high-capacity battery, including a housing and a plurality of battery cells, wherein the plurality of battery cells are sequentially arranged in series or in parallel in an inner cavity of the housing; an inner cavity of the each battery cell of the plurality of battery cells includes a gas region; a gas chamber (i.e., the sharing chamber hereinabove is the gas chamber) is disposed at a top of the housing; the gas chamber covers a first explosion venting portion at a top of the each battery cell of the plurality of battery cells; and when the first explosion venting portion of any battery cell of the plurality of battery cells is broken through by flue gas in the inner cavity, the gas region of the inner cavity of the battery cell is in communication with the inner cavity of the gas chamber, and the flue gas is discharged by the gas chamber.

This embodiment places the plurality of battery cells inside the housing with the gas chamber at the top, and the gas chamber serves as an explosion venting channel, such that the safety of the high-capacity battery is improved. The gas chamber in this embodiment does not need to be spliced, such that the coaxial problem of splicing members does not need to be taken into consideration, requirements for processing accuracy and assembly accuracy are lower, and the processing difficulty and processing cost of such high-capacity batteries with top explosion venting channels are greatly reduced, thereby achieving mass production.

The housing in this embodiment is of a split structure, and includes a cylinder that may accommodate the plurality of battery cells, and the first end plate and the second cover plate, which seal the open ends of the cylinder. After the housing is designed as the split structure and the first end plate is fixed to the bottom open end of the cylinder, each battery cell of the plurality of battery cells may be placed in the inner cavity of the housing from the top open end of the cylinder, and then the second cover plate is fixed to the top open end of the cylinder, facilitating convenient assembly. Furthermore, the cylinder may be integrally formed adopting an extrusion process, and the second cover plate and the gas chamber may also be integrally formed adopting the extrusion process, facilitating processing while achieving lower processing costs.

The housing in this embodiment may also be constituted by the U-shaped housing body and the cover plate covering three open ends of the U-shaped housing body, the U-shaped housing body and the top cover plate may be integrally formed adopting an aluminum extrusion process, and during the formation of the integral piece, the gas chamber may be integrally formed by means of extrusion at the same time, facilitating processing while achieving lower processing costs.

This embodiment divides the inner cavity into a plurality of battery cell mounting cavities by adding partition plates. When each battery cell of the plurality of battery cells is fixed in the corresponding battery cell mounting cavity, a side wall is in direct contact with the partition plate. In a first aspect, the mounting stability of the each battery cell of the plurality of battery cells in the housing body may be improved. In a second aspect, the occurrence of a problem of reduced cycling performance of a high-capacity battery caused by the swelling of the each battery cell of the plurality of battery cells may be prevented. In a third aspect, heat generated during the charging and discharging of the each battery cell of the plurality of battery cells may be transferred to the outside via the partition plate, thereby reducing a risk of thermal runaway. In a fourth aspect, the strength of the cylinder may also be improved.

### Sixth embodiment:

This embodiment provides a high-capacity battery, including a housing, a plurality of battery cells, and a heat transfer tube, wherein the plurality of battery cells are arranged in the housing in a same direction; the housing is provided with a sharing chamber, and an inner cavity of the sharing chamber is in communication with inner cavities of all the battery cells; a third through hole is provided in a housing top plate corresponding to an electrode terminal of the each battery cell of the plurality of battery cells; the electrode terminal of the each battery cell of the plurality of battery cells extends out of the third through hole, and the region of the housing top plate corresponding to the third through hole is fixedly sealed with a housing body of the battery cell; a heat transfer tube clamping portion is provided at the portion of the electrode terminal of the each battery cell of the plurality of battery cells extending out of the third through hole; and the heat transfer tube is fixed on the heat transfer tube clamping portion of the electrode terminal of the each battery cell of the plurality of battery cells, and the heat transfer tube is insulated from each battery cell of the plurality of battery cells.

This embodiment fixes the heat transfer tube at the portion at which the electrode terminal of the each battery cell of the plurality of battery cells extends out of an avoidance hole, and the heat transfer tube is in direct contact with the electrode terminal of the each battery cell of the plurality of battery cells, so as to timely dissipate heat from the electrode terminal of the battery cell, such that balanced heat dissipation of the each battery cell of the plurality of battery cells in the high-capacity battery is achieved, thereby improving the use safety of the high-capacity battery.

This embodiment adopts an aluminum material as a main material of the heat transfer tube, and thus has high heat exchange efficiency. Furthermore, when a heat tube serves as the heat exchange tube, although its heat exchange efficiency is relatively high, a length of the heat tube itself is limited, and the application scenarios are relatively limited, such that the heat exchange member is only suitable for cases where there are fewer battery cells in a high-capacity battery and there are fewer high-capacity batteries in an energy storage device. Compared with the heat tube, the aluminum tube may be customized according to an actual length requirement. By performing an insulation treatment on the aluminum tube and using water as a heat transfer medium, primary heat transfer is achieved, such that the aluminum tube is applicable to a high-capacity battery with a plurality of battery cells and an energy storage device with a plurality of high-capacity batteries. Moreover, this embodiment simultaneously arranges an insulating layer and an insulating sleeve on the aluminum tube to form a dual-insulation structure. Through such dual-insulation arrangement, when the heat transfer tube exchanges heat with the battery cell, reliable insulation performance between the heat transfer tube or the battery cell may still be maintained even if one of the insulating layer or the insulating sleeve is damaged, thereby improving the safety of the battery cell during use.

In this embodiment, in order to overcome the problem that during long-term use, dew forms on the surface due to a temperature difference between the inside and outside of the heat transfer tube and the dew may seep into a gap between the electrode terminal and the avoidance hole when accumulating to a certain amount, leading to a short circuit, by laying an insulating sealant layer on the housing top plate, when the dew forms on the surface of the heat transfer tube fixed on the electrode terminal, the dew cannot seep into the gap between the electrode terminal and the avoidance hole under the blocking of the insulating sealant layer, thereby preventing the occurrence of a short circuit in a battery.

This embodiment provides insulation protection for the electrode terminal by utilizing an insulating protective cover, such that potential safety hazards caused by exposed electrode terminal during operation of the high-capacity battery are avoided, and the problem of a short circuit in the high-capacity battery due to the falling of some foreign objects of an external environment into the position of the electrode terminal is also avoided, thereby improving the safety of the high-capacity battery.

### Seventh embodiment:

A first aspect of this embodiment provides a high-capacity battery, including a housing, a plurality of battery cells, and current collector piece, wherein the plurality of battery cells are arranged in the housing in a same direction; the sharing chamber is an electrolyte sharing chamber; the housing includes a cylinder, and end plates that are respectively sealed and fixed to two opposite open ends of the cylinder; the cylinder includes a main cylinder body and a fixing portion disposed on the main cylinder body; the main cylinder body includes a cylinder top plate, a cylinder bottom plate, and two cylinder side plates; the cylinder top plate is provided with a third through hole corresponding to an electrode terminal of the battery cell on a one-to-one basis; a housing region corresponding to the third through hole is fixedly sealed with a housing body of the battery cell; the current collector piece is electrically connected to the electrode terminal of the each battery cell of the plurality of battery cells; the cylinder bottom plate is provided with a first channel as the electrolyte sharing chamber; and the fixing portion is located on an outer wall of at least one of the cylinder bottom plate and the two cylinder side plates, and is configured to fix a heat exchange tube.

A second aspect of this embodiment provides a cylinder assembly for a high-capacity battery. The cylinder assembly includes a main cylinder body and a fixing portion disposed on the main cylinder body. The main cylinder body includes a cylinder top plate, a cylinder bottom plate, and two cylinder side plates; the cylinder top plate is provided with a third through hole corresponding to an electrode terminal of the each battery cell of the plurality of battery cells on a one-to-one basis; the cylinder bottom plate is provided with a first channel as an electrolyte sharing chamber; and the fixing portion is located on an outer wall of at least one of the cylinder bottom plate and the two cylinder side plates, and is configured to fix a heat exchange tube.

This embodiment adds a heat exchange tube fixing portion on an outer wall of the main cylinder body, and after the heat exchange tube is fixed to the heat exchange tube fixing portion, heat exchange of the high-capacity battery may be realized by introducing a heat transfer medium into the heat exchange tube. Moreover, since an inner cavity of such cylinder is filled with electrolyte, the heat exchange tube may also directly act on the electrolyte in the inner cavity of the cylinder to achieve heat exchange of the electrolyte, causing the high-capacity battery to always operate within a set temperature threshold range, thereby improving the safety performance and cycle life of the high-capacity battery.

The main cylinder body and the fixing portion in this embodiment are integrally formed adopting an aluminum extrusion process, facilitating simple processing. Furthermore, when the main cylinder body serves as partial structure of the housing of the high-capacity battery, it ensures that the housing has high sealing performance.

This embodiment may further fix a heat exchange assembly on the current collector piece of the high-capacity battery. The heat exchange assembly is mainly constituted by 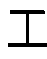 -shaped tube members, wherein a tube member (a third tube member) located between two tube members (a first tube member and a second tube member) is directly fixed on the high-capacity battery, ports of the first tube member and the second tube member are connected to a heat transfer medium source, and a primary heat exchange mode is adopted, achieving a good heat exchange effect and a simple structure; and during mounting, the heat exchange assembly may be integrally fixed to the high-capacity battery, such that a mounting process is also simple and convenient.

This embodiment may communicate the heat exchange tube located on the side wall with the first tube member and the second tube member in the heat exchange assembly, causing the heat exchange tube and the heat transfer member to jointly share one heat transfer medium source, such that the structure is simple compared to the structure in which a heat exchange tube and a heat exchange assembly are respectively connected to different heat transfer medium sources.

### Eighth embodiment:

A first aspect of this embodiment provides a high-capacity battery, including a housing, and a plurality of battery cells that are arranged in the housing and connected in parallel, wherein the plurality of battery cells are connected in parallel; the housing includes a cylinder, and a first end plate and a third end plate, which are respectively sealed and fixed to two opposite open ends of the cylinder; the cylinder is formed by enclosing a cylinder top plate, a cylinder bottom plate, and two cylinder side plates; third through holes allowing a first electrode terminal and a second electrode terminal of the battery cell to extend out are provided on the cylinder top plate corresponding to the first electrode terminal and the second electrode terminal of the each battery cell of the plurality of battery cells; the first electrode terminal and the second electrode terminal of the each battery cell of the plurality of battery cells extend out of the third through holes in the cylinder top plate, and a cylinder top plate region corresponding to the third through holes is fixedly sealed with a housing body of the battery cell; at least one sharing chamber is provided in the cylinder side plate; and a sixth through hole penetrating through the inner cavity of the battery cell is provided in a side wall of the housing body of the each battery cell of the plurality of battery cells, and the sharing chamber is in communication with the inner cavity of the each battery cell of the plurality of battery cells via the sixth through hole.

A second aspect in this embodiment provides a cylinder for a high-capacity battery. The cylinder is configured to accommodate a plurality of battery cells, and formed by enclosing a cylinder top plate, a cylinder bottom plate, and two cylinder side plates. The cylinder top plate is provided with third through holes corresponding to a first electrode terminal and a second electrode terminal of the each battery cell of the plurality of battery cells and allowing the first electrode terminal and the second electrode terminal of the battery cell to extend out; at least one sharing chamber is disposed on the cylinder side plate; and the sharing chamber is configured to be in communication with an inner cavity of the each battery cell of the plurality of battery cells.

In the cylinder for a high-capacity battery in this embodiment, the cylinder side plate is provided the sharing chamber communicating with the inner cavity of the each battery cell of the plurality of battery cells, such that an environment of the inner cavity of the each battery cell of the plurality of battery cells tends to be consistent, and the consistency between the battery cells is improved to a certain extent, thereby prolonging the cycle life of the high-capacity battery to a certain extent.

This embodiment integrally forms a first channel on the cylinder side plate as the sharing chamber, and the first channel is in communication with the inner cavity of the each battery cell of the plurality of battery cells is located in the housing. Compared to the structure in which a hollow tube section is fixed on the side wall of the cylinder as the sharing chamber, through holes communicating with the inner cavity of the each battery cell of the plurality of battery cells do not need to be additionally provided in the hollow tube section, and at the same time, the step of mounting the hollow tube section on the side wall of the cylinder by means of welding is omitted. The first channel directly penetrates through the cavity of the each battery cell of the plurality of battery cells via the through hole in the side wall of the housing of the each battery cell of the plurality of battery cells, thereby achieving simple structure and processing.

This embodiment may integrally form the cylinder adopting an aluminum extrusion process, and forms the sharing chamber on the cylinder side plate while forming the cylinder, facilitating processing while achieving lower processing costs.

The sharing chamber in this embodiment may serve as an electrolyte sharing chamber to share electrolyte in each battery cell of the plurality of battery cells, so as to ensure the consistency of the each battery cell of the plurality of battery cells. That is, the electrolyte in all the battery cells is in a same system by communicating an electrolyte cavity of the each battery cell of the plurality of battery cells, such that differences between the electrolyte in each battery cell of the plurality of battery cells are reduced.

The sharing chamber in this embodiment may serve as a gas sharing chamber to achieve communication between a gas inside each battery cell of the plurality of battery cells, thereby achieving a gas balance. The gases in all the battery cells are kept in a same environment, such that the consistency between the battery cells is further improved, thereby further prolonging the cycle life of the high-capacity battery.

The sharing chamber in this embodiment may serve as a gas-liquid sharing chamber. By limiting the size and mounting position of the gas-liquid sharing chamber in a height direction of the cylinder side plate, the gas and electrolyte in each battery cell of the plurality of battery cells may enter the chamber at the same time. In this case, the gas is distributed in the upper half of the sharing chamber, and the electrolyte is distributed in the lower half of the sharing chamber. Gas-liquid sharing may be achieved by one sharing chamber, such that compared to the embodiment that uses two separate chambers to achieve gas-liquid sharing, the structure is simpler, and such high-capacity batteries may have a smaller size, thereby causing an energy storage device formed by the plurality of high-capacity batteries to have a higher energy density.

The size of the gas-liquid sharing chamber in this embodiment in a height direction is the same as a height of the cylinder side plate, and thus is not limited by a position of a gas-liquid separation layer in the battery cell, such that gas-liquid sharing is more easily achieved, and a fault tolerance rate is high.

This embodiment symmetrically arranges the sharing chambers on two cylinder side plates. The two sharing chambers may achieve gas-liquid sharing, and may also serve as support frames. The high-capacity battery may be fixed on a battery rack on the basis of the two sharing chambers.

This embodiment provides a second explosion venting portion and a liquid injection port in the sharing chamber. When thermal runaway occurs in any battery cell of the plurality of battery cells, the electrolyte may be first discharged from the second explosion venting portion, so as to avoid the occurrence of a greater safety problem caused by vaporization of a large amount of electrolyte at a thermal runaway temperature. Moreover, via the liquid injection port, the electrolyte may also be injected into the inner cavity of the each battery cell of the plurality of battery cells via the sharing chamber, or the electrolyte in the inner cavity of the each battery cell of the plurality of battery cells is replaced via the liquid injection port.

### Ninth embodiment:

A first aspect of this embodiment provides a high-capacity battery. An inner cavity of the each battery cell of the plurality of battery cells includes an electrolyte region and a gas region; the housing is provided with a third through hole capable of allowing an electrode terminal of the each battery cell of the plurality of battery cells to extend out; the electrode terminal of the each battery cell of the plurality of battery cells extends out of the corresponding third through hole, and a housing region around the third through hole is fixedly sealed with a housing body of the battery cell; a length direction of the housing is defined as an x direction, a width direction of the housing is defined as a y direction, and a height direction of the housing is defined as a z direction; the sharing chamber is an electrolyte sharing chamber, and the housing is provided with at least one fourth chamber interpenetrating with the electrolyte sharing chamber; the electrolyte sharing chamber extends in the x direction, and the fourth chamber extends in the z direction; and both the electrolyte sharing chamber and the fourth chamber contain electrolyte, and the electrolyte is in communication with the electrolyte region of the inner cavity of the each battery cell of the plurality of battery cells.

A second aspect of this embodiment provides a cylinder for a high-capacity battery. The cylinder includes at least one fourth chamber disposed in the cylinder. The fourth chamber is configured to be in communication with an electrolyte region of an inner cavity of the each battery cell of the plurality of battery cells in a high-capacity battery.

This embodiment places the plurality of battery cells inside one housing having an electrolyte sharing chamber and the fourth chamber interpenetrating with each other, and injects electrolyte in the electrolyte sharing chamber and the fourth chamber. By utilizing the electrolyte sharing chamber to penetrate through the inner cavity of the each battery cell of the plurality of battery cells is located in the housing, the electrolyte in the electrolyte sharing chamber and the fourth chamber is in communication with electrolyte in each battery cell of the plurality of battery cells to keep the electrolyte in all the battery cells to be in a same system, such that differences between the electrolyte in each battery cell of the plurality of battery cells are reduced, and the consistency between the battery cells is improved to a certain extent, thereby prolonging the cycle life of the high-capacity battery to a certain extent.

The electrolyte sharing chamber and fourth chamber in this embodiment do not need to be inserted, such that in an arrangement direction of the battery cells, the problem of coaxial insertion does not need to be taken into consideration, thereby reducing requirements for processing accuracy and assembly accuracy. Meanwhile, special tooling is not required, and an assembly process is relatively simple, greatly reducing the processing difficulty and processing cost of such high-capacity batteries with sharing systems, thereby achieving mass production.

Furthermore, this embodiment adopts the electrolyte sharing chamber and the fourth chamber in different directions. Compared to a high-capacity battery only provided with an electrolyte sharing chamber, with a same liquid storage capacity, since this embodiment may also store the electrolyte in the fourth chamber, a size of the electrolyte sharing chamber may be decreased in the z direction, such that a height of the entire high-capacity battery may be reduced.

This embodiment adopts a cylinder structure of which top and bottom are open, such that it is easy to process the fourth chamber therein. For example, a third partition plate parallel to a yz plane may be added in the position in the cylinder close to a first side plate, and a cavity formed among the first side plate, a second side plate, and the third partition plate serves as one fourth chamber. Alternatively, two third partition plates parallel to the yz plane may also be arranged at a middle portion of the cylinder, and a cavity formed between the two third partition plates and the two second side plates serves as one fourth chamber. When the cylinder and a fourth cover plate are split members, the cylinder may be integrally formed adopting an aluminum extrusion process, and the fourth chamber may be simultaneously formed during formation of the cylinder. When being formed as an integral piece, the cylinder and the fourth cover plate may be integrally formed adopting a die-casting process, and the fourth chamber may also be simultaneously formed during formation. Furthermore, the strength of the cylinder may be improved by adding the third partition plate parallel to the yz plane in the cylinder, thereby improving the structural stability of the entire high-capacity battery.

This embodiment may further provide a groove in a side wall of the cylinder, a cavity between the groove and the battery cell serves as the fourth chamber, and the addition of the partition plate is not required, thereby achieving a relatively simple structure.

This embodiment divides the inner cavity of the cylinder into a plurality of battery cell mounting cavities by adding fourth partition plates. When each battery cell of the plurality of battery cells is fixed in the corresponding battery cell mounting cavity, a side wall is in direct contact with the fourth partition plate. In a first aspect, the mounting stability of the each battery cell of the plurality of battery cells in the housing body may be improved. In a second aspect, the occurrence of a problem of reduced cycling performance of a high-capacity battery caused by the swelling of the each battery cell of the plurality of battery cells may be prevented. In a third aspect, heat generated during the charging and discharging of the each battery cell of the plurality of battery cells may be transferred to the outside via the fourth partition plate, thereby reducing a risk of thermal runaway. In a fourth aspect, the strength of the cylinder may further be improved.

This embodiment may further provide a through groove extending in the z direction in the fourth partition plate, a cavity between the through groove and the battery cell serves as one fourth chamber to increase a liquid storage space of the entire high-capacity battery.

This embodiment arranges a gas chamber on the housing, which may be in communication with the gas region of the inner cavity of the each battery cell of the plurality of battery cells, so as to cause a gas path of the each battery cell of the plurality of battery cells to communicate with each other, such that gases in all the battery cells are in a same environment to achieve a gas balance, thereby reducing differences between the battery cells, improving the consistency between the battery cells, and further prolonging the cycle life of the high-capacity battery. Furthermore, the gas chamber may be in communication with the electrolyte sharing chamber via the fourth chamber, such that the inner cavity of the each battery cell of the plurality of battery cells is completely in the same environment, thereby maximizing the consistency between the battery cell.

The gas chamber in this embodiment may directly cover a first explosion venting portion at a top of the each battery cell of the plurality of battery cells to serve as an explosion venting channel. When a pressure of the inner cavity of any battery cell of the plurality of battery cells is too high, a gas or thermal runaway flue gas in the inner cavity breaks through the first explosion venting portion on each battery cell of the plurality of battery cells to enter the gas chamber, and then is discharged from the gas chamber. Since each battery cell of the plurality of battery cells includes the first explosion venting portion and the first explosion venting portion is located in the gas region of the each battery cell of the plurality of battery cells, the thermal runaway flue gas breaks through the first explosion venting portion and enters the explosion venting channel, and a pressure build-up time is short, thereby achieving higher safety.

### Tenth embodiment:

**The concept of the embodiment is as follows:**
In order to improve the heat dissipation problem of the battery pack hereinabove, this embodiment provides a third through hole corresponding to an electrode terminal of the each battery cell of the plurality of battery cells in a housing top plate, and the electrode terminal of the each battery cell of the plurality of battery cells in the battery pack extends out of the housing via the corresponding third through hole, such that heat of the electrode terminal may be dissipated to the outside for heat dissipation.

In order to further improve heat dissipation efficiency, a heat exchange device may also be disposed at a portion at which the electrode terminal extends out of the third through hole. The heat of the electrode terminal that is most concentrated on each battery cell of the plurality of battery cells is dissipated to the outside for heat dissipation by means of connecting the heat exchange device and the electrode terminal of the each battery cell of the plurality of battery cells. The heat dissipation mode achieves balanced heat dissipation for each battery cell of the plurality of battery cells in the battery pack, thereby improving the use safety of the battery pack.

In order to simplify assembly of shared pipelines, this embodiment directly arranges a channel in the housing as a sharing chamber (the shared pipeline). The sharing chamber penetrates through an inner cavity of the each battery cell of the plurality of battery cells is located inside the housing, electrolyte and/or gas in each battery cell of the plurality of battery cells is shared to ensure the consistency of the each battery cell of the plurality of battery cells, thereby prolonging the cycle life of the battery pack to a certain extent. The channel does not need to be inserted, such that in an arrangement direction of the battery cells, the problem of coaxial insertion does not need to be taken into consideration, thereby reducing requirements for processing accuracy and assembly accuracy. Meanwhile, special tooling is not required, and an assembly process is relatively simple, greatly reducing the processing difficulty and processing cost of such battery packs with sharing systems, thereby achieving mass production.

However, it is to be noted that such housing must have good sealing performance to ensure that the electrolyte in the housing is not in contact with an external environment.

In order to ensure the sealing performance of the housing, a gap between the electrode terminal of the each battery cell of the plurality of battery cells and the third through hole needs to be sealed.

When a size of the each battery cell of the plurality of battery cells in a group in a height direction is relatively consistent, the region of the housing top plate corresponding to the third through hole may be directly welded with an upper cover plate region around the electrode terminal of the battery cell, so as to achieve sealing.

However, when the size of the each battery cell of the plurality of battery cells in the group differs significantly in the height direction, a problem of false welding or even inability to weld may occur between upper cover plates of part of the battery cells with smaller heights and a housing of the battery pack, making it difficult to ensure the sealing performance of the housing of the battery pack.

In order to overcome such problems, consideration is generally made from two aspects: firstly, the heights of the grouped battery cells are inspected and grouped to cause the battery cells with the same height to be in a same group; and secondly, improving the manufacturing accuracy of the battery cells to ensure the consistency of the battery cells.

The two methods hereinabove may achieve reliable welding and ensure the sealing performance of the housing of the battery pack, but complicate a manufacturing process of the battery pack and battery cells, increasing the production cost of the battery pack and battery cells, and reducing production efficiency.

Based on this, since a manufacturing error of the each battery cell of the plurality of battery cells in the high-capacity battery in the height direction is unavoidable, this embodiment adjusts the manufacturing error hereinabove while accepting the error. An external elastic support member may be added at a bottom of the battery cell, and the manufacturing error between the battery cells in the height direction is compensated by utilizing deformation of the elastic support member. For example, when one battery cell is relatively high, the battery cell may be pressed by utilizing the housing top plate, causing a bottom elastic support member to deform to decrease the height, such that an upper cover plate of the battery cell and an upper cover plate of a lowest battery cell are located on a same plane. Therefore, the upper cover plate of the each battery cell of the plurality of battery cells may be in good and close contact with the housing top plate, and the problem of false welding or even inability to weld does not occur in the region of the housing top plate corresponding to the third through hole and the upper cover plate region around the electrode terminal of the battery cell.

In this embodiment, a first aspect provides a high-capacity battery, including a housing, a plurality of battery cells, and an elastic support member configured to support the battery cell, wherein the plurality of battery cells are arranged in the housing in a same direction; the housing is provided with a sharing chamber, and an inner cavity of the sharing chamber is in communication with inner cavities of all the battery cells; a housing top plate is provided with a third through hole corresponding to an electrode terminal of the each battery cell of the plurality of battery cells; the electrode terminal of the each battery cell of the plurality of battery cells extends out of the third through hole, a region of the housing top plate corresponding to the third through hole is in contact with and fixedly sealed with an upper cover plate of the battery cell; the elastic support member has the capability for elastic deformation in a height direction of the battery cell, and is disposed between a housing bottom plate and each battery cell of the plurality of battery cells.

In this embodiment, a second aspect provides an elastic support member, configures to be disposed between housing bottom plate of a high-capacity battery and each battery cell of the plurality of battery cells, adopting a semi-tubular member with a cross section similar to a Ω shape, and including a semi-tubular member with an inverted U-shaped cross section and support plates respectively connected to two side walls of the semi-tubular member with the inverted U-shaped cross section via smooth arc transitions, wherein a size of a bottom open end of the semi-tubular member with the inverted U-shaped cross section is greater than a size of a top portion.

In this embodiment, a third aspect provides a housing top plate for a high-capacity battery. The cover plate of the housing is provided with a third through hole configured to allow an electrode terminal of the each battery cell of the plurality of battery cells to extend out; a protrusion is provided on the surface of the housing top plate close to the battery cell, and the protrusion is provided with a stepped through hole penetrating through the housing top plate to serve as the third through hole; and a small hole of the stepped through hole is close to the battery cell, and a hole depth of the small hole is less than that of a large hole.

This embodiment places the plurality of battery cells inside the housing having the sharing chamber. By utilizing the sharing chamber to penetrate through the inner cavity of the each battery cell of the plurality of battery cells is located in the housing, electrolyte and/or gas in each battery cell of the plurality of battery cells is shared to ensure the consistency of the each battery cell of the plurality of battery cells. That is, the electrolyte and/or gas in all the battery cells is in a same system by communicating the electrolyte and/or gas in each battery cell of the plurality of battery cells, such that differences between the battery cells are reduced, and the consistency between the battery cells is improved to a certain extent, thereby prolonging the cycle life of the battery pack to a certain extent.

The sharing chamber in this embodiment does not need to be inserted, such that in an arrangement direction of the battery cells, the problem of coaxial insertion does not need to be taken into consideration, thereby reducing requirements for processing accuracy and assembly accuracy. Meanwhile, special tooling is not required, and an assembly process is relatively simple, greatly reducing the processing difficulty and processing cost of such battery packs with sharing systems, thereby achieving mass production.

Furthermore, this embodiment provides the third through hole corresponding to the electrode terminal of the each battery cell of the plurality of battery cells in the housing top plate, and the electrode terminal of the each battery cell of the plurality of battery cells in the battery pack extends out of the housing via the corresponding third through hole, such that heat of the electrode terminal may be dissipated to the outside for heat dissipation. Moreover, an external elastic support member is added at the bottom of the battery cell, and a downward pressure is applied to each battery cell of the plurality of battery cells by utilizing the housing top plate, causing the elastic support member to deform to compensate an error between the battery cells in the height direction, such that the upper cover plates of the battery cells in a group are all located in the same plane and in good and close contact with the housing top plate. Therefore, the problem of false welding or even inability to weld does not occur in the region of the housing top plate corresponding to the third through hole and the upper cover plate region around the electrode terminal of the battery cell, thereby causing the entire housing to achieve better sealing performance.

### Eleventh embodiment:

This embodiment provides a high-capacity battery, including a housing and a plurality of battery cells, wherein the plurality of battery cells are sequentially connected in parallel in the housing in a same direction; the inner cavity of the each battery cell of the plurality of battery cells includes an electrolyte region and a gas region; the housing includes a cylinder, a fourth cover plate, and a fifth cover plate; the cylinder is open at a top and a bottom; a plurality of heat sink fins are disposed on a side wall of the cylinder; the fourth cover plate covers the bottom open end of the cylinder and is hermetically connected to the bottom open end of the cylinder; the sharing chamber is an electrolyte sharing chamber and disposed on the fourth cover plate, and the electrolyte sharing chamber is in communication with the electrolyte region of the inner cavity of the each battery cell of the plurality of battery cells; the fifth cover plate is provided with a third through hole capable of allowing an electrode terminal of the each battery cell of the plurality of battery cells to extend out; the fifth cover plate covers the top open end of the cylinder and is hermetically connected to the top open end of the cylinder; and the electrode terminal of the each battery cell of the plurality of battery cells extends out of the third through hole, and a housing region corresponding to the third through hole is fixedly sealed with a housing body of the battery cell.

This embodiment places the plurality of battery cells inside the housing. The housing is of a split structure, and includes a cylinder that may accommodate the plurality of battery cells, and the fourth cover plate and the fifth cover plate sealing the open ends of the cylinder; and the fourth cover plate is provided with the electrolyte sharing chamber. By utilizing the electrolyte sharing chamber to penetrate through the electrolyte region of the inner cavity of the each battery cell of the plurality of battery cells is located in the housing, electrolyte in each battery cell of the plurality of battery cells is shared to ensure the consistency of the each battery cell of the plurality of battery cells. That is, the electrolyte in all the battery cells is in a same system by communicating an electrolyte cavity of the each battery cell of the plurality of battery cells, such that differences between the electrolyte in each battery cell of the plurality of battery cells are reduced, and the consistency between the battery cells is improved to a certain extent, thereby prolonging the cycle life of the high-capacity battery to a certain extent.

Furthermore, this embodiment fixes the fourth cover plate to the bottom open end of the cylinder, and each battery cell of the plurality of battery cells may be placed into the inner cavity of the housing from the top open end of the cylinder, facilitating assembly.

Moreover, this embodiment arranges heat sink fins on side walls around a cylinder of the high-capacity battery, such that heat generated during operation of the high-capacity battery may be timely and effectively outputted to avoid heat accumulation inside the battery, thereby improving a heat dissipation effect of the high-capacity battery, and ensuring the effective operation of the high-capacity battery; and the overall strength of the cylinder may also be improved, thereby ensuring the safety of the high-capacity battery during transportation or use.

This embodiment divides the inner cavity of the cylinder into a plurality of battery cell mounting cavities by adding partition plates. When each battery cell of the plurality of battery cells is fixed in the corresponding battery cell mounting cavity, a side wall is in direct contact with the partition plate. In a first aspect, the mounting stability of the each battery cell of the plurality of battery cells in the housing body may be improved. In a second aspect, the strength of the cylinder may be improved. In a third aspect, the occurrence of a problem of reduced cycling performance of a high-capacity battery caused by the swelling of the each battery cell of the plurality of battery cells may be prevented. In a fourth aspect, heat generated during the charging and discharging of the each battery cell of the plurality of battery cells may be transferred to the outside via the partition plate, a hollow boss is simultaneously provided on the side wall of the cylinder corresponding to the partition plate as a natural air-cooled heat dissipation channel, thereby reducing a risk of thermal runaway.

The heat sink fin and hollow boss in this embodiment both extend in a z direction and arranged in an x direction, and may be integrally formed, adopting an aluminum extrusion process, with the cylinder, facilitating processing while achieving lower processing costs.

This embodiment adds a liquid cooling tube in communication with the hollow boss, and the hollow boss serves as a heat exchange medium circulation channel. When a battery temperature is higher than a normal operating temperature, an external heat exchange medium may be introduced into one of ports of the hollow boss via the liquid cooling tube, and the other port serves as an outlet for the heat exchange medium. The battery is cooled by the heat exchange medium entering an inner cavity of the hollow boss, thereby further preventing the occurrence of thermal runaway. When the battery temperature is lower than the normal operating temperature, the battery is heated by the heat exchange medium entering the inner cavity of the hollow boss, thereby ensuring the normal operation of the battery.

This embodiment arranges a support member on the side wall of the cylinder. When an energy storage device is assembled by utilizing the high-capacity battery, the high-capacity battery may be conveniently fixed on a support frame of an energy storage box body by means of the support member.

This embodiment arranges a gas chamber on the fifth cover plate, which may directly cover a gas port at a top of the each battery cell of the plurality of battery cells, and the gas port here includes the following two meanings.
1) The gas port is a through hole that is directly provided in the upper cover plate of the battery cell and penetrates through the inner cavity of the battery cell.

In this case, an inner cavity of the gas chamber is in communication with the gas region of the inner cavity of the each battery cell of the plurality of battery cells via the gas port, the gas chamber serves as a gas sharing chamber for each battery cell of the plurality of battery cells, and the gas regions of all the battery cells may be in communication with each other on the basis of the gas chamber, so as to achieve a gas balance, causing a gas in each battery cell of the plurality of battery cells to be shared to ensure the consistency of the each battery cell of the plurality of battery cells, thereby improving the cycle life of the high-capacity battery to a certain extent.

2) The gas port is an explosion vent or explosion-proof port provided in the upper cover plate of the battery cell, and an explosion venting film is disposed at the explosion vent or explosion-proof port.

In this case, the gas chamber is used as an explosion venting channel. When the explosion venting film at the gas port of any battery cell of the plurality of battery cells is broken through by flue gas in the inner cavity, the flue gas in the inner cavity of the battery cell is discharged via the gas chamber, thereby improving the safety of the high-capacity battery.

The electrolyte sharing chamber and gas chamber in this embodiment have identical structures and sizes, and thus may be formed adopting an aluminum extrusion process and using a same mold, thereby achieving lower processing costs. Furthermore, the structural symmetry of the entire housing and the uniformity of structural stiffness and strength may be further improved, thereby causing the housing to have higher stability.

### Twelfth embodiment:

A first aspect of this embodiment provides a high-capacity battery, including a housing and a plurality of battery cells, wherein the plurality of battery cells are arranged in the housing in a same direction.

The housing is provided with a sharing chamber, and an inner cavity of the sharing chamber is in communication with inner cavities of all the battery cells; the housing is provided with a third through hole corresponding to an electrode terminal of the each battery cell of the plurality of battery cells; the electrode terminal of the each battery cell of the plurality of battery cells extends out of the third through hole, and a housing region corresponding to the third through hole is fixedly sealed with a housing body of the battery cell; and the housing is provided with a heat exchange channel, and the heat exchange channel serves as a heat transfer medium circulation channel.

A second aspect of this embodiment provides a cylinder assembly for a high-capacity battery. The cylinder assembly includes a cylinder and a hollow member disposed on an outer wall of the cylinder. An inner cavity of the cylinder serves as an accommodating cavity of the each battery cell of the plurality of battery cells in a high-capacity battery; the hollow member is disposed on the outer wall of the cylinder; and an inner cavity of the hollow member serves as a heat exchange channel, and the heat exchange channel serves as a heat transfer medium circulation channel.

This embodiment places the plurality of battery cells inside the housing having the sharing chamber. By utilizing the sharing chamber to penetrate through the inner cavity of the each battery cell of the plurality of battery cells is located in the housing, electrolyte and/or gas in each battery cell of the plurality of battery cells is shared to ensure the consistency of the each battery cell of the plurality of battery cells. That is, the electrolyte and/or gas in all the battery cells is in a same system by communicating the electrolyte and/or gas in each battery cell of the plurality of battery cells, such that differences between the battery cells are reduced, and the consistency between the battery cells is improved to a certain extent, thereby prolonging the cycle life of the high-capacity battery to a certain extent.

The sharing chamber in this embodiment does not need to be inserted, such that in an arrangement direction of the battery cells, the problem of coaxial insertion does not need to be taken into consideration, thereby reducing requirements for processing accuracy and assembly accuracy. Meanwhile, special tooling is not required, and an assembly process is relatively simple, greatly reducing the processing difficulty and processing cost of such high-capacity batteries with sharing systems, thereby achieving mass production.

Furthermore, this embodiment adds a hollow member on an outer wall of the housing. An inner cavity of the hollow member serves as a heat exchange channel, and heat exchange of the high-capacity battery may be achieved by introducing a heat transfer medium into the heat exchange channel. Moreover, since the inner cavity of such housing contains electrolyte, when the heat exchange channel is formed in an outer wall region of the housing, the heat transfer medium in the heat exchange channel may also act on the electrolyte in the inner cavity of the housing to achieve heat exchange of the electrolyte, causing the high-capacity battery to always operate within a set temperature threshold range, thereby improving the safety performance and cycle life of the high-capacity battery.

This embodiment may dispose the hollow member on the cylinder constituting the housing, and the cylinder and the hollow member may be integrally formed adopting an aluminum extrusion process, facilitating simple processing and ensuring that the housing has high sealing performance.

### Thirteenth embodiment:

A first aspect of this embodiment provides a high-capacity battery, including a housing, a plurality of battery cells, and a bottom support member disposed between a housing bottom plate and each battery cell of the plurality of battery cells, wherein the plurality of battery cells are arranged in the housing in a same direction.

A housing top plate is provided with a third through hole corresponding to an electrode terminal of the each battery cell of the plurality of battery cells; each electrode terminal extends out of the third through hole, and a region of the housing top plate corresponding to the third through hole is fixedly sealed with a housing body of the battery cell.

The bottom support member includes a flat plate, and a third support rib and a fourth support rib, which are respectively disposed on two opposite surfaces of the flat plate.

The sharing chamber is an electrolyte sharing chamber; each battery cell of the plurality of battery cells is supported on the third support rib; a liquid channel extending in a length direction of the flat plate is formed between a lower cover plate of the each battery cell of the plurality of battery cells and the flat plate to serve as the electrolyte sharing chamber; and an inner cavity of the electrolyte sharing chamber is in communication with electrolyte regions of the inner cavities of all the battery cells.

The fourth support rib is in contact with the housing bottom plate of the high-capacity battery.

A second aspect of this embodiment provides a bottom support member, including a flat plate, and a third support rib and a fourth support rib, which are respectively disposed on two opposite surfaces of the flat plate.

The third support rib is configured to be in contact with a lower cover plate of the each battery cell of the plurality of battery cells in a high-capacity battery, so as to support each battery cell of the plurality of battery cells such that a liquid channel extending in a length direction of the flat plate is formed between the lower cover plate of the each battery cell of the plurality of battery cells and the flat plate to serve as an electrolyte sharing chamber.

The fourth support rib is configured to be in contact with housing bottom plate of the high-capacity battery to elevate each battery cell of the plurality of battery cells, so as to ensure that an electrode terminal extends out of a corresponding third through hole in a housing top plate.

This embodiment places the plurality of battery cells inside the housing, and disposes the bottom support member with a specific structure between the housing bottom plate and each battery cell of the plurality of battery cells. Each battery cell of the plurality of battery cells is supported on the basis of the third support rib of the bottom support member, such that the liquid channel is formed between the lower cover plate of the each battery cell of the plurality of battery cells and the flat plate of the bottom support member to serve as the electrolyte sharing chamber. By utilizing the electrolyte sharing chamber to penetrate through the inner cavity of the each battery cell of the plurality of battery cells is located in the housing, electrolyte in each battery cell of the plurality of battery cells is shared to ensure the consistency of the each battery cell of the plurality of battery cells. That is, the electrolyte in all the battery cells is in a same system by communicating an electrolyte cavity of the each battery cell of the plurality of battery cells, such that differences between the electrolyte in each battery cell of the plurality of battery cells are reduced, and the consistency between the battery cells is improved to a certain extent, thereby prolonging the cycle life of the high-capacity battery to a certain extent.

The electrolyte sharing chamber in this embodiment that is formed using the bottom support member does not need to be inserted, such that in an arrangement direction of the battery cells, the problem of coaxial insertion does not need to be taken into consideration, thereby reducing requirements for processing accuracy and assembly accuracy. Meanwhile, special tooling is not required, and an assembly process is relatively simple, greatly reducing the processing difficulty and processing cost of such high-capacity batteries with sharing systems, thereby achieving mass production.

Furthermore, in this embodiment, the electrode terminal of the each battery cell of the plurality of battery cells may extend, on the basis of the bottom support member, out of the housing top plate, and compared to a structure of the electrode terminal located inside the housing, the electrode terminal has a better heat dissipation effect. Furthermore, when the electrode terminal extends out of the housing, it is also convenient to subsequently utilize a heat exchange tube to timely dissipate heat from the dissipate if a temperature of the battery is too high. Therefore, it may ensure that such high-capacity batteries operate at an optimal temperature.

### Fourteenth embodiment:

An aspect of this embodiment provides a cover plate, so as to solve the problems of high manufacturing costs of a cover plate and a large weight of a high-capacity battery caused by the use of a thick cover plate for the existing high-capacity battery to meet a required pressure-bearing capacity.

The cover plate includes a cover plate body and a first pressure-bearing protrusion integrally formed on the cover plate body and extending in a length direction of the cover plate body, wherein a protrusion direction of the first pressure-bearing protrusion is a first direction. By disposing the first pressure-bearing protrusion, the cover plate body may meet a pressure-bearing capacity required by the high-capacity battery while having a relatively thin thickness. Moreover, the first pressure-bearing protrusion is integrally formed on the cover plate body, facilitating simple processing. Therefore, compared to the existing high-capacity batteries, the cover plate in this embodiment, when being designed with a thin thickness, may save raw materials for cover plate manufacturing, reducing costs and self-weight, and simultaneously meet pressure-bearing requirements during use.

Another aspect of this embodiment provides a high-capacity battery, including a housing and a plurality of battery cells, wherein the housing includes an upper cover plate, a lower cover plate, and a cylinder; a shared electrolyte system is formed by electrolyte in inner cavities of the plurality of battery cells and electrolyte in the housing. The shared electrolyte system may cause each battery cell of the plurality of battery cells to be in a unified electrolyte environment, and the improvement is that an upper cover plate of the high-capacity battery adopts the cover plate structure hereinabove.

In this embodiment, the first pressure-bearing protrusion disposed on the upper cover plate of the high-capacity battery hereinabove is a cover plate with a hollow structure, a vent hole is provided at a top of the each battery cell of the plurality of battery cells, and the first pressure-bearing protrusion on the cover plate is in communication with the vent hole of the each battery cell of the plurality of battery cells. The design purpose of this preferred solution is that, in order to cause each battery cell of the plurality of battery cells in the high-capacity battery to be in a gas balance system, the uniformity of the each battery cell of the plurality of battery cells is improved from the perspective of gas pressure, thereby further improving the cycling performance of the high-capacity battery; and since an internal pressure of the each battery cell of the plurality of battery cells is substantially the same, a risk of thermal runaway caused by an excessive internal pressure in any battery cell of the plurality of battery cells is greatly reduced, thereby improving the safety of the high-capacity battery.

In this embodiment, the first pressure-bearing protrusion disposed on the upper cover plate of the high-capacity battery hereinabove is the cover plate with the hollow structure, an explosion venting film is disposed at the top of the each battery cell of the plurality of battery cells, and the first pressure-bearing protrusion on the cover plate covers the explosion venting film of the each battery cell of the plurality of battery cells. When thermal runaway occurs in a battery cell, the explosion venting film is opened, and the thermal runaway flue gas is discharged, via the first pressure-bearing protrusion, to an external thermal runaway flue gas treatment device for treatment, thereby ensuring the safety of the high-capacity battery during operation.

This embodiment provides the first pressure-bearing protrusion on the cover plate body. When being used for the high-capacity battery, compared to an existing solution that adopts a thick cover plate to meet pressure-bearing requirements, the cover plate body of this embodiment may not only save the raw materials for cover plate manufacturing, reducing the costs and self-weight, but also meet the pressure-bearing requirements during use.

Furthermore, when adopting the existing cover plate with a relatively-large thickness as the upper cover plate for the high-capacity battery, a higher laser power is required to fixedly seal the cover plate and a top cover of the battery cell by means of fusion welding (the laser power of 4 kW is required when a 4 mm cover plate is adopted), wasting energy, but more importantly, a non-metal insulation portion inside the battery cell may be carbonized during laser fusion welding, leading to irreversible damage to the battery cell. The cover plate in this embodiment has a thinner thickness (the laser power of only 1.3 kW is required when a 2.5 mm cover plate is adopted), such that the problems hereinabove may be avoided.

The first pressure-bearing protrusion adopted in this embodiment is a hollow structure that is integrally formed on the cover plate body by means of extrusion or stamping, such that the use of raw materials may be further reduced, and the hollow structure may be used as a shared electrolyte channel when the electrolyte in each battery cell of the plurality of battery cells in the high-capacity battery is communicated, or may also be used as a gas channel when a gas region in each battery cell of the plurality of battery cells in the high-capacity battery is communicated.

In order to further improve the pressure-bearing capacity of the cover plate, this embodiment further designs, on the cover plate body, a plurality of second pressure-bearing protrusions disposed on two sides of the first pressure-bearing protrusion on the cover plate body and connected to the first pressure-bearing protrusion.

### Fifteenth embodiment:

A first aspect of this embodiment provides a high-capacity battery. One of the sharing chambers hereinabove serves as an explosion venting channel; a second explosion venting portion corresponding to the explosion venting channel is fixed on the housing; the explosion venting channel has at least two second explosion venting portions; and a thermal runaway flue gas is discharged from the second explosion venting portions via the explosion venting channel in a case where thermal runaway occurs in any battery cell of the plurality of battery cells. This solution arranges at least two second explosion venting portions on one explosion venting channel, and when thermal runaway occurs in any battery cell of the plurality of battery cells, thermal runaway flue gas is simultaneously discharged from the plurality of second explosion venting portions of the explosion venting channel (it can be understood that the plurality of second explosion venting portions are located at different portions of the explosion venting channel), such that heat and thermal runaway flue gas accumulated in the explosion venting channel and the battery cell may be reduced in a short time, thereby reducing the risk of explosion.

A second aspect of this embodiment provides another high-capacity battery. At least two sharing chambers hereinabove serve as explosion venting channels; second explosion venting portions corresponding to the explosion venting channels are fixed on the housing; each explosion venting channel has at least one second explosion venting portion; and a thermal runaway flue gas is discharged from the second explosion venting portions via at least two explosion venting channels in a case where thermal runaway occurs in any battery cell of the plurality of battery cells. The high-capacity battery of this solution includes at least two explosion venting channels, and at least one second explosion venting portion is disposed on each explosion venting channel. When thermal runaway occurs in any battery cell of the plurality of battery cells, thermal runaway flue gas is simultaneously discharged from the second explosion venting portions of different explosion venting channels, such that heat and thermal runaway flue gas accumulated in the explosion venting channel and the battery cell may be reduced in a short time, thereby reducing the risk of explosion.

### Sixteenth embodiment:

This embodiment provides a high-capacity battery. A housing includes a cylinder with at least the top end being an open end, a cover plate fixed to the open end of the cylinder, and n partition plates; the n partition plates are arranged in a same direction, are detachably fixed in the cylinder, and divide the cylinder into n+1 battery cell accommodating cavities, wherein n is greater than or equal to 1; the battery cell is located in the battery cell accommodating cavity; the cover plate fixed to the top open end of the cylinder is provided with a third through hole capable of allowing an electrode terminal of the each battery cell of the plurality of battery cells to extend out; and the electrode terminal of the each battery cell of the plurality of battery cells extends out of the third through hole, and a cover plate region corresponding to the third through hole is fixedly sealed with a housing body of the battery cell. This solution arranges the partition plate and the cylinder separately. The cylinder may be formed adopting a casting or extrusion process, and then each partition plate is detachably fixed to the cylinder, such that the problem of difficulty in ensuring the accuracy of the accommodating cavity during integral formation of the partition plate and the cylinder is overcome. A size of the accommodating cavity of the each battery cell of the plurality of battery cells is completely adapted to that of the battery cell, such that the battery cell may be firmly fixed in the accommodating cavity of the each battery cell of the plurality of battery cells.

### Seventeenth embodiment:

In this embodiment, a first aspect provides a cover plate for a high-capacity battery. The cover plate includes a flat plate and a gas chamber disposed on the flat plate. The gas chamber is configured to cover a gas port at a top of the each battery cell of the plurality of battery cells in a high-capacity battery; the flat plate is provided with n third through holes; the third through holes correspond to electrode terminals of the battery cells in the high-capacity battery on a one-to-one basis; and orthographic projections of the third through holes at a top of the high-capacity battery cover the corresponding electrode terminals, wherein n is an integer greater than 1.

In this embodiment, a second aspect provides a high-capacity battery, including the cover plate hereinabove.

Gas regions of inner cavities of a plurality of battery cells may be communicated by utilizing a gas chamber on the cover plate provided by this embodiment, so as to achieve a gas balance, causing a gas in each battery cell of the plurality of battery cells to be shared to ensure the consistency of the each battery cell of the plurality of battery cells, thereby improving the cycle life of the high-capacity battery to a certain extent.

The gas chamber on the cover plate provided by this embodiment may also be used as an explosion venting channel to improve the safety of the high-capacity battery.

The gas chamber in this embodiment is an integral piece, such that the coaxial problem of splicing members does not need to be taken into consideration, requirements for processing accuracy and assembly accuracy are lower, and the processing difficulty and processing cost of such high-capacity batteries with gas path channels are greatly reduced, thereby achieving mass production.

This embodiment may adopt gas chambers of various structural forms, both the structure and the preparation method are relatively simple, and different preparation methods may be selected according to actual construction environments and requirements to prepare gas chambers of different structural forms, such that the preparation method is flexible.

This embodiment adds a weak portion in a peripheral region of the third through hole. Deviations in a size of the each battery cell of the plurality of battery cells in a z direction may be compensated by means of deformation of the weak portion.

### Eighteenth embodiment:

In this embodiment, a first aspect provides a cover plate for a high-capacity battery. The cover plate includes a flat plate and an electrolyte sharing chamber disposed on the flat plate. The electrolyte sharing chamber is configured to communicate an electrolyte region of an inner cavity of the each battery cell of the plurality of battery cells in a high-capacity battery.

In this embodiment, a second aspect provides a high-capacity battery, including the cover plate hereinabove.

Electrolyte regions of inner cavities of a plurality of battery cells may be communicated by utilizing the electrolyte sharing chamber on the cover plate provided by this embodiment, causing electrolyte in each battery cell of the plurality of battery cells to be shared to ensure the consistency of the each battery cell of the plurality of battery cells, thereby improving the cycle life of the high-capacity battery to a certain extent.

The electrolyte sharing chamber in this embodiment is an integral piece, such that the coaxial problem of splicing members does not need to be taken into consideration, requirements for processing accuracy and assembly accuracy are lower, and the processing difficulty and processing cost of such high-capacity batteries with electrolyte sharing chambers are greatly reduced, thereby achieving mass production.

This embodiment may adopt electrolyte sharing chambers of various structural forms, both the structure and the preparation method are relatively simple, and different preparation methods may be selected according to actual construction environments and requirements to prepare electrolyte sharing chambers of different structural forms, such that the preparation method is flexible.

### Nineteenth embodiment:

This embodiment provides a process for preparing a high-capacity battery, including the following steps:
shell processing: processing a cylinder with two open ends, and processing a third through hole corresponding to an electrode terminal of the each battery cell of the plurality of battery cells in a cylinder top plate;
processing a first end plate and a third end plate, which are configured to cover the open ends of the cylinder;
placing of battery cells into the cylinder: arranging a plurality of battery cells in the cylinder such that the electrode terminal of the each battery cell of the plurality of battery cells extends out of the corresponding third through hole in the cylinder top plate;
sealing: fixedly sealing a housing region corresponding to each third through hole with a housing body of the corresponding battery cell; and hermetically connecting the first end plate and the third end plate to two opposite open ends of the cylinder, respectively; and
unpacking: providing, using an external force or electrolyte itself, an opening in the housing body of the battery cell such that an inner cavity of an electrolyte sharing chamber penetrates through an electrolyte region of an inner cavity of the each battery cell of the plurality of battery cells.

This embodiment places the plurality of battery cells having sealing assemblies and subjected to capacity grading and sorting inside the housing having the electrolyte sharing chamber. The cylinder is sealed by utilizing the cover plate. By means of the unpacking process, the opening is provided in the housing body of the battery cell to cause the electrolyte sharing chamber to penetrate through the electrolyte region of the inner cavity of the each battery cell of the plurality of battery cells, such that electrolyte in each battery cell of the plurality of battery cells is shared to ensure the consistency of the each battery cell of the plurality of battery cells. That is, the electrolyte in all the battery cells is in a same system by communicating an electrolyte cavity of the each battery cell of the plurality of battery cells, such that differences between the electrolyte in each battery cell of the plurality of battery cells are reduced, and the consistency between the battery cells is improved to a certain extent, thereby prolonging the cycle life of the high-capacity battery to a certain extent.

The electrolyte sharing chamber in this embodiment does not need to be inserted, such that in an arrangement direction of the battery cells, the problem of coaxial insertion does not need to be taken into consideration, thereby reducing requirements for processing accuracy and assembly accuracy. Meanwhile, special tooling is not required, and an assembly process is relatively simple, greatly reducing the processing difficulty and processing cost of such high-capacity batteries with sharing systems, thereby achieving mass production.

Furthermore, the electrode terminal of the each battery cell of the plurality of battery cells in this embodiment extends out of the top of the housing (a gap between the electrode terminal and the housing needs to be sealed to ensure the sealing performance of the entire housing). Compared to a structure of an electrode terminal located inside a housing, the electrode terminal has a better heat dissipation effect. Furthermore, when the electrode terminal extends out of the housing, it is also convenient to subsequently utilize a heat exchange apparatus to timely dissipate heat from the electrode terminal if a temperature of the battery is too high. Therefore, it may ensure that such high-capacity batteries operate at an optimal temperature.

Compared to the manufacturing of existing battery modules, the process of manufacturing a high-capacity battery of this embodiment needs to perform capacity grading and sorting operations on each battery cell of the plurality of battery cells to maintain minimal consistency differences among the plurality of battery cells in an initial state of a battery module.

In this embodiment, the plurality of battery cells are directly mounted in one sealed housing, and the plurality of battery cells are in a unified electrolyte system (equivalent to combining the plurality of battery cells into a high-capacity battery cell), reducing differences between the battery cells. Therefore, the process of manufacturing a high-capacity battery may omit capacity grading and sorting operations, thereby prolonging the cycle life of the high-capacity battery while improving the manufacturing efficiency of the high-capacity battery.

### Twentieth embodiment:

This embodiment provides a process for preparing a high-capacity battery, including the following steps:
shell processing: processing a semi-finished housing, wherein the semi-finished housing includes a cylinder with two opposite open ends and a first end plate fixed to any one of open ends of the cylinder, and the first end plate is provided with an electrolyte sharing chamber; and processing a second cover plate configured to be fixed to the other open end of the cylinder, and
processing a second cover plate configured to be fixed to the other open end of the cylinder, and processing, in the second cover plate, a third through hole corresponding to an electrode terminal of the each battery cell of the plurality of battery cells;
placing of battery cells into the semi-finished housing: arranging a plurality of battery cells in the semi-finished housing;
sealing: hermetically welding the second cover plate to the other open end of the cylinder, wherein the electrode terminal of the each battery cell of the plurality of battery cells extends out of the corresponding third through hole in the second cover plate, and then fixedly sealing a second cover plate region corresponding to the third through hole with a housing body of the battery cell; and
unpacking: providing, using an external force or electrolyte itself, an opening in the housing body of the battery cell such that an inner cavity of an electrolyte sharing chamber penetrates through an electrolyte region of an inner cavity of the each battery cell of the plurality of battery cells.

This embodiment places the plurality of battery cells inside the housing. The housing is of a split structure, and includes a cylinder that may accommodate the plurality of battery cells, and the first cover plate and the second cover plate sealing the open ends of the cylinder; and the fourth cover plate is provided with the electrolyte sharing chamber. By utilizing the electrolyte sharing chamber to penetrate through the electrolyte region of the inner cavity of the each battery cell of the plurality of battery cells is located in the housing, electrolyte in each battery cell of the plurality of battery cells is shared to ensure the consistency of the each battery cell of the plurality of battery cells. That is, the electrolyte in all the battery cells is in a same system by communicating an electrolyte cavity of the each battery cell of the plurality of battery cells, such that differences between the electrolyte in each battery cell of the plurality of battery cells are reduced, and the consistency between the battery cells is improved to a certain extent, thereby prolonging the cycle life of the high-capacity battery to a certain extent.

The electrolyte sharing chamber in this embodiment does not need to be inserted, such that in an arrangement direction of the battery cells, the problem of coaxial insertion does not need to be taken into consideration, thereby reducing requirements for processing accuracy and assembly accuracy. Meanwhile, special tooling is not required, and an assembly process is relatively simple, greatly reducing the processing difficulty and processing cost of such high-capacity batteries with sharing systems, thereby achieving mass production.

Furthermore, this embodiment may place each battery cell of the plurality of battery cells into an inner cavity of the semi-finished housing from the top open end of the cylinder, facilitating assembly.

Moreover, the electrode terminal of the each battery cell of the plurality of battery cells in this embodiment extends out of the top of the housing (the top of the housing here is the second cover plate, and a gap between the electrode terminal and the housing needs to be sealed to ensure the sealing performance of the entire housing). Compared to a structure of an electrode terminal located inside a housing, the electrode terminal has a better heat dissipation effect. Furthermore, when the electrode terminal extends out of the housing, it is also convenient to subsequently utilize a heat exchange apparatus to timely dissipate heat from the electrode terminal if a temperature of the battery is too high. Therefore, it may ensure that such high-capacity batteries operate at an optimal temperature.

### Brief Description of the Drawings

FIG. 1 is a schematic structural diagram of a high-capacity battery in the Background.
FIG. 2 is a schematic structural diagram of a high-capacity battery in the Background.
FIG. 3 is a schematic structural diagram of a high-capacity battery with a housing removed in Example 1.
FIG. 4 is a schematic structural diagram of a high-capacity battery in Example 1, Example 26, or Example 28.
FIG. 5 is a schematic structural diagram of a commercially-available square housing battery in Example 1, Example 5, Example 9, Example 19, or Example 24.
FIG. 6 is a schematic structural diagram of an electrolyte sharing chamber in Example 1, Example 5, Example 13, or Example 24.
FIG. 7 is a schematic structural diagram of another electrolyte sharing chamber in Example 1 or Example 26.
FIG. 8 is a schematic structural diagram of a third type of electrolyte sharing chamber in Example 1 or Example 26.
FIG. 9 is a schematic structural diagram of a second cover plate in Example 1 and a fifth cover plate in Example 5.
FIG. 10 is a schematic structural diagram of a high-capacity battery with a heat transfer connecting member in Example 1.
FIG. 11 is a schematic structural diagram of a heat transfer connecting member in Example 1, Example 5, Example 9, Example 15, Example 19, or Example 24.
FIG. 12 is a schematic structural diagram of a high-capacity battery in Example 2, Example 10, Example 16, Example 19, or Example 21.
FIG. 13 is a schematic structural diagram of a second cover plate in Example 2, Example 9, or Example 15 and a fifth cover plate in Example 20.
FIG. 14 is a schematic structural diagram of a cylinder in Example 3 and a cylindrical member in Example 27.
FIG. 15 is a schematic structural diagram of another cylinder in Example 3 and another cylindrical member in Example 27.
FIG. 16 is a schematic diagram of a structure in which a partition plate is added in an inner cavity of a U-shaped housing body in Example 4 and Example 28.
FIG. 17 is a schematic diagram of a structure in which an 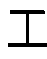 -shaped partition plate is mated with a battery cell in Example 4, Example 12, Example 18, Example 22, or Example 28.
FIG. 18 is a schematic structural diagram of a high-capacity battery in Example 5.
FIG. 19 is an exploded schematic diagram of a high-capacity battery in Example 5.
FIG. 20 is a schematic structural diagram of a housing in Example 5.
FIG. 21 is a schematic structural diagram of a fourth cover plate in Example 5 and a cover plate in Example 25.
FIG. 22 is another schematic structural diagram of a fourth cover plate in Example 5 and a cover plate in Example 25.
FIG. 23 is a schematic structural diagram of a high-capacity battery after addition of a heat transfer connecting member in Example 5.
FIG. 24 is a schematic structural diagram of a fifth cover plate in Example 6.
FIG. 25 is a schematic structural diagram of a housing in Example 7.
FIG. 26 is a schematic structural diagram of a cylinder in Example 8, a first type of cylinder after addition of a partition plate in Example 12 or Example 18, and a cylinder in Example 21.
FIG. 27 is a schematic structural diagram of a high-capacity battery in Example 9.
FIG. 28 is an exploded schematic diagram of a high-capacity battery in Example 9 and Example 15.
FIG. 29 is an exploded schematic structural diagram of a housing in Example 9 and Example 15.
FIG. 30 is a schematic structural diagram of a second cover plate in Example 9 and Example 15.
FIG. 31 are a schematic diagram of a third structure of a second cover plate in Example 9 and Example 15 and a schematic diagram of another structure of a fifth cover plate in Example 19.
FIG. 32 is a schematic structural diagram of a high-capacity battery with a heat transfer connecting member mounted in Example 9 and Example 15.
FIG. 33 is a schematic structural diagram of a cylinder of a high-capacity battery in Example 11, Example 17, or Example 21.
FIG. 34 is a schematic structural diagram of a second type of cylinder after addition of a partition plate in Example 12, Example 18, or Example 19.
FIG. 35 is a cross-sectional view of a third type of cylinder after addition of a partition plate in Example 12, Example 18, or Example 21.
FIG. 36 is a schematic structural diagram of a high-capacity battery in Example 13.
FIG. 37 is a schematic structural diagram of the each battery cell of the plurality of battery cells constituting a high-capacity battery in Example 13.
FIG. 38 is an exploded schematic structural diagram of a high-capacity battery in Example 13.
FIG. 39 is a schematic structural diagram of another first end plate and an electrolyte sharing chamber in Example 13.
FIG. 40 is a schematic structural diagram of a second cover plate in Example 13.
FIG. 41 is a schematic structural diagram of a cylinder in Example 13.
FIG. 42 is a cross-sectional view of a high-capacity battery in Example 13.
FIG. 43 is a schematic structural diagram of a cylinder with a second partition plate in Example 14.
FIG. 44 is a schematic structural diagram of another cylinder with a second partition plate in Example 14.
FIG. 45 is a cross-sectional view of a high-capacity battery with a sealing assembly in Example 14.
FIG. 46 is a schematic structural diagram of a high-capacity battery in Example 15.
FIG. 47 is a schematic structural diagram of a commercially-available square housing battery in Example 15.
FIG. 48 is a schematic structural diagram of a high-capacity battery in Example 19.
FIG. 49 is an exploded schematic structural diagram of a high-capacity battery after addition of a cover plate in Example 19.
FIG. 50 is a schematic structural diagram of a cover plate in Example 19.
FIG. 51 is a schematic structural diagram of a long-strip fourth through hole provided in a cover plate Example 19.
FIG. 52 is a schematic structural diagram of a cylinder in Example 19.
FIG. 53 is a schematic structural diagram of a U-shaped housing body in Example 19.
FIG. 54 is a schematic structural diagram of a high-capacity battery after addition of a cover plate and a heat transfer connecting member in Example 19.
FIG. 55 is a schematic structural diagram of a high-capacity battery after addition of a cover plate in Example 23.
FIG. 56 is a schematic structural diagram of a flat plate with a U-shaped long-strip member in Example 23.
FIG. 57 is a schematic structural diagram of a high-capacity battery without mounting a cover plate in Example 24.
FIG. 58 is a schematic structural diagram of a high-capacity battery after addition of a cover plate in Example 24.
FIG. 59 is a schematic structural diagram of a cover plate in Example 24.
FIG. 60 is a schematic structural diagram of a high-capacity battery after addition of a cover plate and a heat transfer connecting member in Example 24.
FIG. 61 is a schematic diagram of a third structure of a cover plate in Example 25.
FIG. 62 is a schematic structural diagram of a cover plate in Example 26.
FIG. 63 is a schematic structural diagram of a high-capacity battery in Example 29.
FIG. 64 is a schematic structural diagram of a flat plate with a U-shaped long-strip member in Example 29.
FIG. 65 is a schematic structural diagram of a high-capacity battery in Example 30 to Example 33 and Example 62 to Example 65.
FIG. 66 is a schematic diagram of partial structures of a high-capacity battery with one side end plate and a heat transfer tube removed in Example 30 to Example 33 and Example 62 to Example 65.
FIG. 67 is a schematic structural diagram of a cylinder for a high-capacity battery in Example 30 to Example 33 and Example 62 to Example 65.
FIG. 68 is a schematic diagram of a structure in which a bottom support member is disposed in a cylinder for a high-capacity battery in Example 30 to Example 33 and Example 62 to Example 65.
FIG. 69 is a schematic structural diagram of a bottom support member in Example 30 to Example 33 and Example 62 to Example 65.
FIG. 70 is a first schematic structural diagram of a battery cell in Example 30 to Example 33 and Example 62 to Example 65.
FIG. 71 is a second schematic structural diagram of a battery cell in Example 30 to Example 33 and Example 62 to Example 65.
FIG. 72 is a schematic structural diagram of another electrolyte sharing chamber in Example 30 to Example 33 and Example 62 to Example 65.
FIG. 73 is a first schematic structural diagram of a battery cell in Example 30 to Example 33 and Example 62 to Example 65.
FIG. 74 is a second schematic structural diagram of a battery cell in Example 30 to Example 33 and Example 62 to Example 65.
FIG. 75 is a schematic exploded diagram of a partial structure of a high-capacity battery in Example 30 to Example 33 and Example 62 to Example 65.
FIG. 76 is a partial exploded view of a high-capacity battery with an insulating sealant layer laid on a housing top plate in Example 30 to Example 33 and Example 62 to Example 65.
FIG. 77 is a schematic structural diagram of a high-capacity battery with an insulating sealant layer laid on a housing top plate in Example 30 to Example 33 and Example 62 to Example 65.
FIG. 78 is a schematic structural diagram of a high-capacity battery with an insulating protective cover in Example 30 to Example 33 and Example 62 to Example 65.
FIG. 79 is a partial exploded view of a high-capacity battery with an insulating protective cover in Example 30 to Example 33 and Example 62 to Example 65.
FIG. 80 is a schematic diagram of a first structure of a cylinder assembly in Example 34.
FIG. 81 is a schematic diagram of a second structure of a cylinder assembly in Example 34.
FIG. 82 is a schematic diagram of a third structure of a cylinder assembly in Example 34.
FIG. 83 is a schematic structural diagram of a cylinder assembly in some other examples.
FIG. 84 is a schematic structural diagram of another cylinder assembly in some other examples.
FIG. 85 is a schematic structural diagram of a cylinder assembly in Example 35.
FIG. 86 is a schematic structural diagram of a high-capacity battery in Example 36.
FIG. 87 is a schematic structural diagram of a high-capacity battery in Example 37.
FIG. 88 is a schematic structural diagram of a heat exchange assembly in Example 37.
FIG. 89 is another schematic structural diagram of a heat exchange assembly in Example 37.
FIG. 90 is a schematic structural diagram of a cylinder for a high-capacity battery in Example 39.
FIG. 91 is a schematic diagram of a structure in which an electrolyte sharing chamber is disposed on a cylinder side plate in Example 39.
FIG. 92 is a schematic diagram of a structure in which both cylinder side plates are provided with electrolyte sharing chambers.
FIG. 93 is a schematic structural diagram of a cylinder for a high-capacity battery in Example 40.
FIG. 94 is a side view of a cylinder for a high-capacity battery in Example 41.
FIG. 95 is a schematic diagram of a structure in which two sharing chambers are disposed on a same cylinder side plate.
FIG. 96 is a schematic structural diagram of a high-capacity battery in Example 44.
FIG. 97 is a cross-sectional view of a high-capacity battery in Example 44.
FIG. 98 is a schematic structural diagram of a battery cell in Example 44.
FIG. 99 is a schematic structural diagram of a current collector piece in Example 44.
FIG. 100 is a schematic structural diagram of a high-capacity battery in Example 45.
FIG. 101 is a schematic structural diagram of a high-capacity battery in Example 46.
FIG. 102 is a schematic structural diagram of a high-capacity battery in Example 47.
FIG. 103 is an exploded schematic structural diagram of a housing in Example 47.
FIG. 104 is a schematic structural diagram of a cylinder in Example 47.
FIG. 105 is a schematic structural diagram of a cylinder in Example 48.
FIG. 106 is a schematic structural diagram of another cylinder in Example 48.
FIG. 107 is a schematic structural diagram of a cylinder in Example 49.
FIG. 108 is an enlarged view of a partial structure of a high-capacity battery in Example 49.
FIG. 109 is a schematic structural diagram of a first type of cylinder in Example 50.
FIG. 110 is a schematic structural diagram of a second type of cylinder in Example 50.
FIG. 111 is a schematic structural diagram of a third type of cylinder in Example 50.
FIG. 112 is a schematic structural diagram of a fourth type of cylinder in Example 50.
FIG. 113 is a schematic diagram of a partial structure of a high-capacity battery with a fourth type of cylinder in Example 50.
FIG. 114 is a schematic structural diagram of a cylinder in Example 51.
FIG. 115 is a schematic diagram of a partial structure of a high-capacity battery in Example 51.
FIG. 116 is a schematic structural diagram of a high-capacity battery in Example 52.
FIG. 117 is an exploded schematic structural diagram of a housing in Example 52.
FIG. 118 is a schematic structural diagram of a battery pack in Example 54.
FIG. 119 is a cross-sectional view of a battery pack in Example 54.
FIG. 120 is an exploded view of a battery pack in Example 54.
FIG. 121 is a schematic structural diagram of housing bottom plate in Example 54.
FIG. 122 is a schematic structural diagram of housing bottom plate provided with an elastic support member in Example 54.
FIG. 123 is a schematic structural diagram of an elastic support member in Example 54.
FIG. 124 is a cross-sectional view of an elastic support member in Example 54.
FIG. 125 is a schematic structural diagram of a housing top plate in Example 55.
FIG. 126 is a cross-sectional view of a housing top plate in Example 55.
FIG. 127 is a schematic diagram of a partial structure of a housing in Example 55.
FIG. 128 is a schematic structural diagram of a high-capacity battery in Example 57.
FIG. 129 is an exploded schematic structural diagram of a high-capacity battery in Example 57.
FIG. 130 is an exploded schematic structural diagram of a housing in Example 57.
FIG. 131 is a schematic structural diagram of a cylinder in Example 57.
FIG. 132 is a schematic structural diagram of a cylinder with a first liquid cooling tube and a second liquid cooling tube in Example 57.
FIG. 133 is a schematic structural diagram of a first liquid cooling tube or a second liquid cooling tube in Example 57.
FIG. 134 is an exploded schematic structural diagram of a high-capacity battery in Example 58.
FIG. 135 is a schematic structural diagram of a first cover plate and a fourth cover plate in Example 58.
FIG. 136 is a schematic structural diagram of a second cover plate and a fifth cover plate in Example 58.
FIG. 137 is a schematic structural diagram of a high-capacity battery in Example 59.
FIG. 138 is a cross-sectional view of a high-capacity battery in Example 59.
FIG. 139 is an exploded view of a housing in Example 59.
FIG. 140 is a schematic structural diagram of a first cylinder in Example 59.
FIG. 141 is a cross-sectional view of another high-capacity battery in Example 59.
FIG. 142 is a schematic structural diagram of a high-capacity battery in Example 60.
FIG. 143 is an exploded view of a housing in Example 60.
FIG. 144 is a schematic structural diagram of a second cylinder in Example 60.
FIG. 145 is a schematic structural diagram of a high-capacity battery in Example 61.
FIG. 146 is a cross-sectional view of a high-capacity battery in Example 61.
FIG. 147 is a first schematic structural diagram of a cover plate in Example 66.
FIG. 148 is a second schematic structural diagram of a cover plate in Example 66.
FIG. 149 is a schematic structural diagram of a high-capacity battery in Example 66.
FIG. 150 is a stress simulation diagram of a cover plate without disposing a first pressure-bearing protrusion when a 0.5 MPa load is applied.
FIG. 151 is a deformation simulation diagram of a cover plate without disposing a first pressure-bearing protrusion when a 0.5 MPa load is applied.
FIG. 152 is a stress simulation diagram of a cover plate when a 0.5 MPa load is applied in Example 66.
FIG. 153 is a deformation simulation diagram of a cover plate when a 0.5 MPa load is applied in Example 66.
FIG. 154 is a first schematic structural diagram of a cover plate in Example 67.
FIG. 155 is a second schematic structural diagram of a cover plate in Example 67.
FIG. 156 is a schematic structural diagram of a high-capacity battery in Example 67.
FIG. 157 is a schematic structural diagram of a high-capacity battery in Example 69.
FIG. 158 is a partial exploded schematic diagram of a high-capacity battery in Example 69.
FIG. 159 is a schematic structural diagram of a high-capacity battery with an insulating protective cover in Example 69.
FIG. 160 is a partial exploded schematic diagram of a high-capacity battery with an insulating protective cover in Example 69.
FIG. 161 is a schematic structural diagram of a high-capacity battery in Example 70.
FIG. 162 is a partial exploded schematic diagram of a high-capacity battery in Example 70.
FIG. 163 is a schematic structural diagram of a cylinder assembly in Example 71.
FIG. 164 is a partial exploded schematic diagram of a cylinder assembly in Example 71.
FIG. 165 is a partial enlarged view of a cylinder assembly in Example 71.
FIG. 166 is a schematic structural diagram of a battery cell placed in a cylinder assembly in Example 71.
FIG. 167 is a partial schematic diagram of a cylinder assembly in Example 72.
FIG. 168 is a schematic structural diagram of a cylinder assembly in Example 73.
FIG. 169 is a cross-sectional view of a cylinder assembly in Example 73.
FIG. 170 is a schematic diagram of a partial structure of a cylinder assembly in Example 74.
FIG. 171 is a schematic structural diagram of a high-capacity battery in Example 75.
FIG. 172 is an exploded view of a high-capacity battery in Example 75.

In the drawings: 01. Sub-tube; 02. Intermediate connection tube; 03. Lower cover plate; 04. Conduit; 05. Confluence tube; 06. Through hole; 11. Battery cell; 12. U-shaped housing body; 13. First end plate; 14. Third end plate; 15. Second cover plate; 16. Bottom of U-shaped housing body; 17. Tube section; 18. First channel; 19. Fin; 110. First support rib; 111. Liquid injection port; 112. Third through hole; 113. Second channel; 115. Weak portion; 116. Partition plate; 117. Vertical beam; 118. Horizontal beam; 119. Heat transfer connecting member; 21. housing; 24. Cylinder; 241. Sub-square cylinder; 25. Fourth cover plate; 26. Fifth cover plate; 27. Electrolyte sharing chamber; 28. Second through hole; 210. Gas chamber; 211. Reinforcing rib; 214. Hollow box body; 33. First explosion venting portion; 37. Fifth through hole; 310. Gas sharing chamber; 410. Fourth through hole; 412. First partition plate; 413. First chamber; 414. Second chamber; 416. First through hole; 417. Second partition plate; 418. Sealing assembly; 61. Explosion vent or explosion-proof port; 63. Flat plate; 618. U-shaped long-strip member; 64. First cylinder; 67. Tenth through hole; 74. Second cylinder; 76. Cover plate; 725. Side plate; 81. End plate; 82. housing top plate; 83. housing bottom plate; 84. Electrode terminal; 841. Second end face; 842. Side wall; 87. Heat transfer tube clamping portion; 88. Heat transfer tube; 881. First tube; 882. Second tube; 883. Connection tube; 89. Bottom support member; 91. Third support rib; 911. Notch; 92. Fourth support rib; 815. Insulating protective cover; 8151. Insulating frame body; 8152. Insulating cover plate; 8153. Slit; 816. Lower cover plate of battery cell; 817. Upper cover plate of battery cell; 818. Baffle plate; 819. Channel; 820. Insulating sealant layer; 821. First electrical connection member; 822. Second electrical connection member; 1111. Heat sink fin; 3. Support member; 31. Fixing plate; 141. Sub-liquid cooling tube; 142. Three-way connector; 1421. Branch pipe of three-way connector; 32. Support plate; 1211. Cylinder top plate; 1212. Cylinder bottom plate; 1213. Cylinder side plate; 131. Sharing chamber; 1221. electrode terminal of battery cell; 125. Second through hole and sixth through hole; 126. Sealing connection member; 127. current collector piece; 1271. Main current collector piece body; 1272. Electrical connection column; 1273. Blind hole; 1274. Stress relief hole; 1275. Conductive column; 241. First cylinder; 2111. First cylinder top plate; 2112. First cylinder bottom plate; 2113. First cylinder side plate; 242. Second cylinder; 2131. Second cylinder end plate; 2132. Second cylinder side plate; 4. Hollow member; 135. Heat exchange channel; 8. Support rib; 205. Elastic support member; 251. Top of elastic support member; 206. Limiting column; 207. Step surface; 208. Liquid storage chamber; 209. First side plate; 210. Second side plate; 281. Third reinforcing rib; 200. End plate; 203. Cylinder top plate; 215. Cylinder bottom plate; 9. Boss; 10. First snap groove; 101. Heat exchange assembly; 102. First tube member; 103. Second tube member; 104. Third tube member; 105. First connection tube; 107. Second snap groove; 306. Third chamber; 307. Unpacking device operation port; 309. Fourth chamber; 3010. Third partition plate; 313. Fourth reinforcing rib; 314. Through groove; 315. Fourth partition plate; 316. Battery cell mounting cavity; 317. Fifth chamber; 311. Top open end; 123. Compensation plate; 403. Snap-fit structure; 431. Semi-transparent dovetail groove; 4311. First opening; 4312. Second opening; 432. Tenon; 433. Limiting block; 434. Snap groove; 454. Battery cell accommodating cavity; 437. First step surface; 438. Second step surface; 439. Third step surface; and 332. Second explosion venting portion.

### Detailed Description of the Embodiments

In order to make the objectives, features, and advantages hereinabove of the embodiment more obvious and easier to understand, the specific implementations of the embodiment are described in detail below with reference to the drawings in the specification. It is apparent that the described examples are part of the examples of the embodiment, rather than all examples. On the basis of the examples in the embodiment, all other examples obtained by a person of ordinary skill in the art without creative work shall fall within the protection scope of the embodiment.

Many specific details are set forth in the following description to facilitate full understanding of the embodiment, but the embodiment may also be implemented in other ways different from those described herein, similar derivatives may be made by a person skilled in the art without departing from the connotation of the embodiment, and therefore, the embodiment is not limited by the specific examples disclosed below.

In the description of the embodiment, it is to be noted that the terms "top and bottom", etc., indicating orientations or positional relationships, are on the basis of orientations or positional relationships shown in the drawings. These terms are used merely to simplify and facilitate the description of the embodiment, and are not intended to indicate or imply that the referenced devices or elements must have a specific orientation or be constructed and operated in a specific orientation. Therefore, such terms cannot be construed as limitations of the embodiment. In addition, the terms "first, second, third, fourth, etc." are for descriptive purposes only, and should not be construed as indicating or implying relative importance.

Example 1 to Example 4 below provide a high-capacity battery, including a housing and a plurality of battery cells connected in parallel and arranged in the housing, wherein the battery cells may be square housing batteries, or may also be a plurality of commercially-available pouch batteries connected in parallel. An inner cavity of the each battery cell of the plurality of battery cells includes an electrolyte region and a gas region.

A housing structure and a specific arrangement mode of the each battery cell of the plurality of battery cells in the housing may be set according to specific requirements. For example, when a square housing battery is selected as the battery cell, the housing may be a square housing body, and each square housing battery may be arranged in sequence in a length direction of the housing. The housing may also be a cylindrical hollow housing body, and each square housing battery may be arranged in a circumferential direction of the housing. However, compared to the square housing body, it is difficult to ensure the stability of the square housing battery in the cylindrical hollow housing body. Furthermore, an energy density of an energy storage device formed by such high-capacity batteries is average, but the high-capacity battery of such structure has better heat dissipation performance.

Considering from structural stability and energy density, the square housing body is preferred as the housing.

Example 1 to Example 4 dispose an electrolyte sharing chamber at a bottom of the housing; and the electrolyte sharing chamber is in communication with the electrolyte region of the inner cavity of the each battery cell of the plurality of battery cells.

It is to be noted herein that the electrolyte sharing chamber hereinabove is an electrolyte accommodating cavity, which needs to ensure, after in communication with the electrolyte region of the inner cavity of the each battery cell of the plurality of battery cells, electrolyte in the entire high-capacity battery is not in contact with an external environment.

In Example 1 to Example 4, the housing may adopt the following structural forms, in an example of a square housing.

First, the housing includes a cylinder with only the top being open, and a cover plate, wherein the electrolyte sharing chamber is disposed at a bottom of the cylinder.

The cylinder structure may be formed by means of die casting.

The cylinder with only the top being open is first formed by means of die casting; then the electrolyte sharing chamber is processed at the bottom of the cylinder. A groove recessing toward an outer surface may be directly processed in an inner surface of the bottom of the cylinder to serve as the electrolyte sharing chamber, or a through groove penetrating through a through hole at the bottom of the cylinder or extending in an arrangement direction of the batteries may also be provided at the bottom of the cylinder, and then the electrolyte sharing chamber in communication with the through hole or the through groove is added on the outer surface of the bottom of the cylinder.

The cylinder structure may also be formed by means of stamping.

The cylinder with only the top being open is formed by means of stamping, and in this case, a groove may be directly formed at the bottom of the cylinder by means of stamping, and the groove serves as the electrolyte sharing chamber.

It is to be noted that after the battery cell is placed in the cylinder, the top open end of the cylinder is sealed by the cover plate. In this embodiment, in order to improve the heat dissipation performance of such high-capacity batteries, an opening may be provided in the cover plate to allow an electrode terminal of the each battery cell of the plurality of battery cells to extend out of the opening. Moreover, in order to ensure that the electrolyte is not in contact with the outside, the opening needs to be fixedly sealed with a housing body of the battery cell after the electrode terminal of the each battery cell of the plurality of battery cells extends out of the opening.

Second, the housing includes a U-shaped housing body, a first end plate, a second cover plate, and a third end plate, wherein the U-shaped housing body refers to a housing body with a U-shaped cross section, that is, a housing body with three consecutive open ends.

An electrolyte sharing chamber is disposed at a bottom of the U-shaped housing body; and the electrolyte sharing chamber is in communication with the electrolyte region of the inner cavity of the each battery cell of the plurality of battery cells.

It is to be noted herein that the electrolyte sharing chamber hereinabove is an electrolyte accommodating cavity, which needs to ensure, after in communication with the electrolyte region of the inner cavity of the each battery cell of the plurality of battery cells, electrolyte in the entire high-capacity battery is not in contact with an external environment. By respectively and hermetically covering the first end plate and the third end plate on two opposite open ends of the U-shaped housing body, and covering the second cover plate on a top open end of the U-shaped housing body, the electrolyte in the high-capacity battery may not be in contact with the external environment.

Similar to the first solution hereinabove, in order to improve the heat dissipation performance of such high-capacity batteries, the second cover plate may be provided with a third through hole capable of allowing an electrode terminal of the each battery cell of the plurality of battery cells to extend out; the second cover plate covers a top open end of the U-shaped housing body and is hermetically connected to the top open end of the U-shaped housing body; the electrode terminal of the each battery cell of the plurality of battery cells extends out of the third through hole, and a housing region corresponding to the third through hole is fixedly sealed with a housing body of the battery cell.

It is to be noted herein that the second cover plate and the U-shaped housing body may be separately arranged, or may also be formed as an integral structure. The second solution is mainly used as an example below, and detail description is performed with reference to specific examples and the drawings of description.

For ease of description, in the following examples, a length direction of the housing is defined as an x direction, a width direction of the housing is defined as a y direction, and a height direction of the housing is defined as a z direction.

### Example 1

As shown in FIGs. 3 and 4, a high-capacity battery in this example includes 9 battery cells 11 connected in parallel, and the number of the battery cells in other examples may be adjusted according to actual requirements. Referring to FIG. 5, the battery cell 11 is a square housing battery, the square housing battery includes an upper cover plate, a lower cover plate, a cylinder, and a battery cell assembly; the battery cell assembly herein may also be referred to as an electrode assembly, which is assembled, adopting a stacking or winding process, by sequentially arranging a positive electrode terminal, a diaphragm, and a negative electrode terminal using a stacking or winding process. The upper cover plate, the cylinder, and the lower cover plate form a housing body of the battery cell 11, and the battery cell assembly is disposed in the housing body of the battery cell 11.

A first through hole penetrating through an inner cavity of the battery cell is provided at a bottom of the housing body of the each battery cell of the plurality of battery cells 11.

In combination with FIG. 4, the housing in this example includes a U-shaped housing body 12, a first end plate 13, a third end plate 14, and a second cover plate 15, wherein the U-shaped housing body 12 and the second cover plate 15 are separately arranged.

An electrolyte sharing chamber extending in an x direction is disposed at a bottom 16 of the U-shaped housing body.

The electrolyte sharing chamber may adopt the following structural forms.

In a first structure, as shown in FIG. 6, a tube section 17 with a square or circular cross section is fixed on an outer surface of the bottom 16 of the U-shaped housing body; second through holes 28 are provided in a tube wall and the bottom 16 of the U-shaped housing body; the plurality of second through holes 28 may be provided, and each corresponds to and penetrates through the first through hole of the each battery cell of the plurality of battery cells; or the second through hole may also be may be a long-strip through hole that penetrates through the first through holes of all the battery cells.

In a second structure, as shown in FIGs. 7 and 8, a first channel 18 extending in the x direction is disposed at the bottom 16 of the U-shaped housing body; and the first channel 18 is directly penetrates through the first through hole of the each battery cell of the plurality of battery cells 11. Compared to the first structure in which the tube section need to be disposed separately and the second through holes need to be provided at the bottom 16 of the U-shaped housing body and in the tube section, the second structure is simpler in processing and manufacturing.

The second structure may be implemented in the following two manners.

In the first manner, as shown in FIG. 7, the first channel 18 may be directly formed, adopting a bending, stamping, die-casting or aluminum extrusion process, at the bottom 16 of the U-shaped housing body, and an inner surface of the bottom 16 of the U-shaped housing body protrudes in a direction away from a top of the U-shaped housing body 12.

In order to achieve effective heat dissipation, heat dissipation fins 19 extending in the x direction are arranged on the outer surface of the bottom 16 of the U-shaped housing body and in positions located on two sides of the first channel 18, and heat generated by the high-capacity battery during operation may be timely dissipated via the fins 19.

In the second manner, as shown in FIG. 8, at least two first support ribs 110 extending in the x direction are disposed on an inner surface of the bottom 16 of the U-shaped housing body, and the two first support ribs 110 and a region of the bottom 16 of the U-shaped housing body are located between the two first support ribs 110 formed the first channel 18.

The structural regularity of the entire high-capacity battery may be ensured by adopting a structure of the electrolyte sharing chamber shown in FIG. 8. Similarly, on one hand, it is easy to ensure a density of an energy storage device when the energy storage device is integrated on the basis of such high-capacity batteries; and on the other hand, the high-capacity battery may be treated as a whole, and the overall safety performance of such high-capacity batteries is improved by coating an insulating film (which may also be referred to as a blue film or protective film) outside the high-capacity battery.

Two ends of the first channel 18 in FIGs. 7 and 8 located on a yz plane are open ends, which are subsequently sealed by the first end plate 13 and the third end plate 14. In other examples, the two ends of the first channel 18 located on the yz plane may also directly be closed ends. However, a forming manner is relatively complex.

In this example, the first channel 18 may also be provided with a liquid injection port 111 (referring to FIG. 4). After the inner cavity of the each battery cell of the plurality of battery cells 11 is in communication with the electrolyte sharing chamber, electrolyte may be injected again into the inner cavity of the each battery cell of the plurality of battery cells 11 and the electrolyte sharing chamber via the liquid injection port 111, so as to ensure the continuity of the electrolyte, and liquid replacement may also be achieved via the liquid injection port 111.

It is to be noted that when liquid is not injected, the liquid injection port 111 need to be sealed by a plug.

In a third structure, a gap between the inner surface of the bottom 16 of the U-shaped housing body and an outer surface of the lower cover plate of the each battery cell of the plurality of battery cells serves as the electrolyte sharing chamber. If this structure is adopted, the use of an auxiliary structure is required to improve the stability of the each battery cell of the plurality of battery cells in the housing.

A structure of the second cover plate 15 in this example is as shown in FIG. 9. The second cover plate 15 is provided with a third through hole 112 capable of allowing an electrode terminal of the each battery cell of the plurality of battery cells 11 to extend out. The second cover plate 15 covers a top open end of the U-shaped housing body 12, and is hermetically connected to the top open end of the U-shaped housing body 12. After the electrode terminal of the each battery cell of the plurality of battery cells 11 extends out of the third through hole 112, the third through hole 112 is fixedly sealed with the housing body of the battery cell.

An edge of the third through hole 112 may be welded with the housing body of the battery cell in a region around the electrode terminal to achieve sealing.

If a size of the each battery cell of the plurality of battery cells 1 in a z direction is not entirely identical, a problem of false welding or even inability to weld may occur between the housing bodies of part of the battery cells 1 with smaller sizes in the z direction and the housing of the high-capacity battery, making it difficult to ensure sealing performance between the third through hole 112 and the housing body of the battery cell.

In order to overcome such problems, a weak portion 15 may be provided in a region around the third through hole 112. During welding, differences in the size of the each battery cell of the plurality of battery cells in the z direction may be compensated by means of deformation of the weak portion 15, causing the electrode terminals of all the battery cells 1 to extend out of the third through hole 112. The weak portion 15 in this example may be an annular groove that is provided along the region around the third through hole 112 by using the center of the third through hole 112 as a central point. In other examples, the weak portion 15 may also be a long-strip groove that is provided in the region around the third through hole 112. In other examples, if a similar problem existed, that is, the electrode terminals of all the battery cells 1 may not simultaneously and completely extend out of the third through hole 112, the solution of adding the weak portion 15 in the region around the third through hole 112 may be adopted.

A sealing connection member may also be added between the third through hole 112 and the electrode terminal. The sealing connection member includes a hollow member. A bottom of the hollow member is configured to be hermetically connected to a first region of the battery cell, and a top of the hollow member is hermetically connected to a second region of the housing. The first region is a region that is located around any electrode terminal in an upper cover plate of any battery cell of the plurality of battery cells, and the second region is a region that corresponds to any one of the third through holes in the housing. The region corresponding to the third through hole is the peripheral region on the outer surface of the housing corresponding to any one of the third through holes; or the region corresponding to the third through hole is a hole wall of the third through hole. The region around the electrode terminal is the region around an insulating sealing gasket on the electrode terminal. The insulating sealing gasket is a component on the battery cell that is configured to insulate the electrode terminal from the upper cover plate.

A shape of the second cover plate 15 matches a shape of a top open end of the U-shaped housing body 12, which is a square housing body in this example, such that the flat plate is a square flat plate, an area may be slightly larger than an area of a top open end of the U-shaped housing body 12, and the second cover plate is fixed to a top open end of the U-shaped housing body 12 by means of fusion welding; or the area may also be slightly smaller than the area of a top open end of the U-shaped housing body 12, and the second cover plate is fixed to a top open end of the U-shaped housing body 12 by means of embedded welding.

The high-capacity battery in this example may be prepared by the following processes.

At Step 1, the U-shaped housing body 12, the first end plate 13, the third end plate 14, and the second cover plate 15 are processed.

At Step 2, capacity grading and sorting is performed to screen out the plurality of battery cells meeting requirements; the first through hole is provided at the bottom of the housing body of the battery cell and then sealed using the sealing assembly; the plurality of battery cells with the sealing assemblies at the first through holes are arranged in the U-shaped housing body 12 in Step 1, the sealing assembly of the each battery cell of the plurality of battery cells corresponds to the first channel 18 to ensure that the electrolyte region of the inner cavity of the each battery cell of the plurality of battery cells penetrates through the first channel 18 after the sealing assembly is opened by an external force or the electrolyte itself; and the sealing assembly may adopt sealing assemblies disclosed in Chinese patents CN218525645U and CN218525614U.

At Step 3, the second cover plate 15 is hermetically welded to a top open end of the U-shaped housing body 12, and the third through hole 112 is welded to a portion around the electrode terminal of the housing body of the battery cell to achieve sealing. The first end plate 13 and the third end plate 14 are welded to the other two opposite open ends of the U-shaped housing body 12. It is to be noted herein that the first end plate 13 and the third end plate 14 need to simultaneously seal the two open ends of the first channel 18 located on the yz plane. The first end plate, the second cover plate, and the third end plate may also be fixed to the open ends of the U-shaped housing body 12 by means of screw fastening or adhesive bonding. However, the sealing performance or connection reliability is relatively weak compared to the welding manner.

At Step 4, the sealing assembly is opened by using the external force or the electrolyte itself, an inner cavity of the first channel 18 penetrates through the electrolyte region of the inner cavity of the each battery cell of the plurality of battery cells.

After the inner cavity of the each battery cell of the plurality of battery cells 11 penetrates through the first channel 18, the electrolyte in the inner cavity of the each battery cell of the plurality of battery cells 11 is in communication with the first channel 18. In order to prevent a phenomenon of electrolyte interruption, the electrolyte may be injected, after the inner cavity of the each battery cell of the plurality of battery cells 11 penetrates through the first channel 18, into the first channel 18 to ensure the continuity of the electrolyte.

Then all the battery cells 11 are connected in parallel. Specifically, all the battery cells 11 may be connected in parallel by adopting a heat transfer connecting member 119 shown in FIGs. 10 and 11. The heat transfer connecting member is a slender member, and the slender member is configured to be connected to a positive electrode terminal or a negative electrode terminal of the each battery cell of the plurality of battery cells; and a clamping portion configured to mount a heat transfer tube is provided on the slender member in an axial direction. The positive electrode terminal or negative electrode terminal of the plurality of battery cells are connected by the heat transfer connecting member, and the heat transfer tube is clamped on the heat transfer connecting member, such that a local temperature of the electrode terminal on each battery cell of the plurality of battery cells may be controlled, thereby significantly reducing the occurrence of a thermal runaway phenomenon caused by an excessive electrode terminal temperature.

In order to form a more complete SEI film, causing the high-capacity battery to have a more stable cycling capability, formation may be performed on the entire high-capacity battery after the electrolyte is injected into the inner cavity of the each battery cell of the plurality of battery cells 11 via the first channel 18.

### Example 2

A difference between a high-capacity battery in this example and the high-capacity battery in Example 1 lies in that, a gas chamber is added on a second cover plate 15 as a gas sharing chamber or an explosion venting channel in this example. A structure is shown in FIG. 12. The first channel 18 in FIG. 12 adopted a structure shown in FIG. 8. Certainly, the first channel 18 may also adopt a structure shown in FIG. 7.

The gas chamber may adopt the following structural forms.
1. A tube section with a square or circular cross section is fixed on an outer surface of a top of the second cover plate 15; and fourth through holes are provided in a tube wall and the second cover plate 15.
2. A gap between an inner surface of the second cover plate 15 and an outer surface of an upper cover plate of the each battery cell of the plurality of battery cells serves as a gas chamber.
3. As shown in FIG. 13, the second cover plate 15 is provided with a second channel 113 extending in an x direction; this structure is simpler compared to the first structure, and compared to the second structure, the stability of the each battery cell of the plurality of battery cells in the housing is higher.

The second channel 113 may be formed, adopting a bending or aluminum extrusion process, directly on the second cover plate 15, and the second channel 113 protrudes in a direction away from a bottom 16 of a U-shaped housing body.

When the second channel 113 serves as the gas sharing chamber, a fifth through hole penetrating through an inner cavity of the each battery cell of the plurality of battery cells 11 need to be provided at a top of a housing body of the each battery cell of the plurality of battery cells 11, the second channel 113 penetrates through the fifth through hole, and the second channel 113 is in communication with a gas region of the inner cavity of the each battery cell of the plurality of battery cells 11 via the fifth through hole. In other examples, the second cover plate 15 and a top open end of the U-shaped housing body 12 may also be fixed by means of adhesive bonding or screw connection. However, the sealing performance or connection reliability is relatively weak compared to a welding manner. It is to be noted that during operation, two open ends (open ends parallel to a yz plane) of the second channel 113 need to be blocked to prevent an external environment from affecting electrolyte in the inner cavity of the each battery cell of the plurality of battery cells.

In this example, an exhaust valve and an explosion venting film are disposed on the second channel 113, or only the exhaust valve is disposed. The exhaust valve may be opened manually or automatically; and the exhaust valve is opened periodically, and gas in the gas region in each battery cell of the plurality of battery cells 11 may be discharged after passing through the second channel 113 and the exhaust valve. When the explosion venting film is disposed, the exhaust valve and the explosion venting film are located at two ends of the second channel 113, the explosion venting film is configured to allow thermal runaway flue gas to break through and be discharged from the second channel 113 when thermal runaway occurred in any battery cell of the plurality of battery cells 11, such that such high-capacity batteries have high safety performance.

Preparation may be performed by the following processes.

On the basis of the preparation process in Example 1, the fifth through hole is provided at the top of the each battery cell of the plurality of battery cells and then sealed using a sealing assembly; a plurality of battery cells with the sealing assemblies at the fifth through holes are arranged in the U-shaped housing body 12; the second cover plate 15 is hermetically welded to a top open end of the U-shaped housing body 12, causing the fifth through hole having the sealing assembly to correspond to the second channel 113, thereby ensuring that the fifth through hole penetrates through the second channel 113 after the sealing assembly is opened by an external force or the electrolyte itself; and the sealing assembly may adopt sealing assemblies disclosed in Chinese patents CN218525645U and CN218525614U, and the third through hole 112 is welded to a portion around the electrode terminal of the housing body of the battery cell to achieve sealing. Finally, the sealing assembly is opened by using the external force or the electrolyte itself, an inner cavity of the second channel 113 is in communication with the gas region of the inner cavity of the each battery cell of the plurality of battery cells.

When the second channel 113 serves as an explosion venting channel, the second channel 113 covers a first explosion venting portion at the top of the each battery cell of the plurality of battery cells 11, and when the first explosion venting portion of any battery cell of the plurality of battery cells 11 is broken through by the flue gas in the inner cavity, the gas region of the inner cavity of the battery cell 11 is in communication with the inner cavity of the second channel 113.

Preparation may be performed by the following processes.

On the basis of the preparation process in Example 1, the second cover plate 15 is hermetically welded to a top open end of the U-shaped housing body 12, causing the first explosion venting portion of the each battery cell of the plurality of battery cells to correspond to the second channel 113, thereby ensuring that the first explosion venting portion penetrates through the second channel 113 after the first explosion venting portion is broken through by the flue gas in the inner cavity. The third through hole 112 is welded to a portion around the electrode terminal of the housing body of the battery cell to achieve sealing.

It is to be noted that the first explosion venting portion in this example includes an explosion vent or explosion-proof port, etc. provided on the top of the battery cell 11 and having an explosion venting film.

### Example 3

A difference between this example and the examples hereinabove lies in that, in this example, a U-shaped housing body 12 and a second cover plate 15 are formed as an integral piece, and a structure of the integral piece is shown in FIGs. 14 and 15. The second cover plate 15 may or may not be provided with a gas chamber, and the following is described in an example of providing the gas chamber.

It may be understood that a housing in this example includes a cylinder shown in FIG. 14 or FIG. 15, and a first end plate 13 and a third end plate 14, which are configured to cover two opposite open ends of the cylinder, wherein the first end plate 13 and the third end plate 14 are located in a yz plane. Similarly, it is to be noted herein that the first end plate 13 and the third end plate 14 need to cover and seal two opposite open ends of a first channel 18 and a second channel 113 while simultaneously covering and sealing the two opposite open ends of the cylinder.

In this example, the cylinder may be integrally formed adopting an aluminum extrusion process. Since the cylinder extends in an x direction, the open end thereof is located on the yz plane, and extrusion is performed in the x direction, the cylinder with a target length may be formed by one-time extrusion.

It is to be noted that, when the cylinder shown in FIG. 14 is extruded, the first channel 18 does not need to be formed simultaneously, that is, a first support rib 110 and the cylinder need to be arranged separately; and when the cylinder shown in FIG. 15 is extruded, the first channel 18 need to be formed simultaneously.

The high-capacity battery in this example may be prepared by the following processes, in an example of the structure shown in FIG. 15 in which the gas chamber serves as a gas sharing chamber.

At Step 1, the cylinder, the first end plate 13, and the third end plate 14 are processed.

At Step 2, capacity grading and sorting is performed to screen out the plurality of battery cells meeting requirements; a first through hole is provided at a bottom of a housing body of a battery cell and then sealed using a sealing assembly; a fifth through hole is provided at a top of the housing body of the battery cell and then sealed using the sealing assembly; a plurality of battery cells with the sealing assemblies are arranged in the cylinder in Step 1, such that the first through hole with the sealing assembly corresponds to the first channel 18, and the fifth through hole with the sealing assembly corresponds to the second channel 113, thereby ensuring that after the sealing assembly is opened by an external force or electrolyte itself, the first through hole penetrates through the first channel 18, and the fifth through hole penetrates through the second channel 113; and the sealing assembly may adopt sealing assemblies disclosed in Chinese patents CN218525645U and CN218525614U. An electrode terminal of the each battery cell of the plurality of battery cells 11 extends out of the corresponding third through hole 112 in the second cover plate 15, and the third through hole 112 is welded to a portion around the electrode terminal of a housing body of the battery cell to achieve sealing. It is to be noted herein that, in order to ensure that each battery cell of the plurality of battery cells 11 may be smoothly arranged in the cylinder shown in FIG. 15, a minimum size of the cylinder in a z direction need to be greater than a size of the battery cell 11 in the z direction. Moreover, in order to ensure that the electrode terminal of the each battery cell of the plurality of battery cells 11 may extend out of the third through hole 112 at a top of the cylinder, a second support rib needs to be added at a bottom of the each battery cell of the plurality of battery cells 11.

The plurality of battery cells with the sealing assemblies may be arranged in the cylinder in Step 1 by the following three manners.
1) A long-strip equal-height second support rib is selected.

The plurality of battery cells 11 are fixed as an integral body, and pushed into an inner cavity of the cylinder from any open end of the cylinder; in this case, the bottom of the each battery cell of the plurality of battery cells 11 is in contact with the bottom of the cylinder, and the electrode terminal of the each battery cell of the plurality of battery cells 11 corresponds to the corresponding third through hole 112, but does not extend out of the third through hole 112; then, the plurality of battery cells 11 are supported, using a lifting tooling, from the bottom using a lifting tooling to separate the bottom of the each battery cell of the plurality of battery cells 11 from the bottom of the cylinder, wherein the electrode terminal of the each battery cell of the plurality of battery cells 11 extends out of the corresponding third through hole 112; and then, the long-strip equal-height second support rib is inserted in the x direction, and the lifting tooling is removed.

It is to be noted that, in the z direction, a size of the long-strip equal-height second support rib need to meet the following: after the second support rib is added between the bottom of the each battery cell of the plurality of battery cells 11 and the bottom of the cylinder, the electrode terminal of the each battery cell of the plurality of battery cells 11 extends out of the corresponding third through hole 112.

2) The second support rib is constituted by selecting a plurality of cushion blocks corresponding to the plurality of battery cells 11 on a one-to-one basis.

The plurality of battery cells 11 are sequentially pushed into an inner cavity of the cylinder from any open end of the cylinder, and after each battery cell of the plurality of battery cells 11 is pushed in place, a corresponding cushion block need to be inserted between the bottom of the each battery cell of the plurality of battery cells and the bottom of the cylinder to ensure that the electrode terminal of the battery cell 11 completely extends out of the corresponding third through hole 112. In most cases, a size of the cushion block corresponding to each battery cell of the plurality of battery cells in the z direction is different under this manner.

3) Each battery cell of the plurality of battery cells 11 is inverted and pushed into the inner cavity of the cylinder.

The cylinder is flipped to cause the top of the cylinder to face downward, the plurality of battery cells 11 are fixed as an integral body and pushed into the inner cavity of the cylinder from any open end of the cylinder; or the plurality of battery cells 11 are sequentially pushed into the inner cavity of the cylinder from any open end of the cylinder, wherein the electrode terminal of the each battery cell of the plurality of battery cells 11 extends out of the corresponding third through hole 112 under the action of gravity, and the second support rib is inserted between the bottom of the each battery cell of the plurality of battery cells 11 and the bottom of the cylinder; and the cylinder is flipped to cause the top of the cylinder to face upward.

At Step 3, the first end plate 13 and the third end plate 14 are welded to the other two opposite open ends of the U-shaped housing body 12.

At Step 4, the sealing assembly is opened by using the external force or the electrolyte itself, an inner cavity of the first channel 18 penetrates through an electrolyte region of the inner cavity of the each battery cell of the plurality of battery cells, and an inner cavity of the second channel 113 penetrates through the gas region of the inner cavity of the each battery cell of the plurality of battery cells.

After the inner cavity of the each battery cell of the plurality of battery cells 11 penetrates through the first channel 18, the electrolyte in the inner cavity of the each battery cell of the plurality of battery cells 11 is in communication with the first channel 18. In order to prevent a phenomenon of electrolyte interruption, the electrolyte may be injected, after the inner cavity of the each battery cell of the plurality of battery cells 11 penetrates through the first channel 18, into the first channel 18 to ensure the continuity of the electrolyte.

Then all the battery cells 11 are connected in parallel.

In order to form a more complete SEI film, causing the high-capacity battery to have a more stable cycling capability, formation is performed on the entire high-capacity battery after the electrolyte is injected into the inner cavity of the each battery cell of the plurality of battery cells 11 via the first channel 18.

If the gas chamber serves as an explosion venting channel, the steps differing from the steps hereinabove are as follows.

In Step 2, there is no need to provide the fifth through hole at the top of the housing body of the battery cell; the plurality of battery cells with the sealing assemblies at the first through holes are arranged in the cylinder in Step 1, such that the first through hole with the sealing assembly corresponds to the first channel 18 to ensure that after the sealing assembly is opened by the external force or the electrolyte itself, the first through hole penetrates through the first channel 18, and a first explosion venting portion at the top of the each battery cell of the plurality of battery cells corresponds to the second channel 113 to ensure that the first explosion venting portion penetrates through the second channel 113 after the first explosion venting portion is broken through by flue gas.

In Step 4, the sealing assembly is opened by using the external force or the electrolyte itself, an inner cavity of the first channel 18 penetrates through the electrolyte region of the inner cavity of the each battery cell of the plurality of battery cells.

If the cylinder shown in FIG. 14 is adopted, after the plurality of battery cells with the sealing assemblies are arranged in the cylinder shown in FIG. 14, the first support rib 110 is inserted between the bottom of the each battery cell of the plurality of battery cells and the bottom of the cylinder to form the first channel 18 while each battery cell of the plurality of battery cells may be supported, such that the electrode terminal of the each battery cell of the plurality of battery cells 11 may extend out of the third through hole 112 at the top of the cylinder. Alternatively, the plurality of battery cells with the sealing assemblies may also be arranged in the cylinder shown in FIG. 14 in the same three manners as hereinabove, and the second support rib hereinabove only need to be replaced with the first support rib 110.

### Example 4

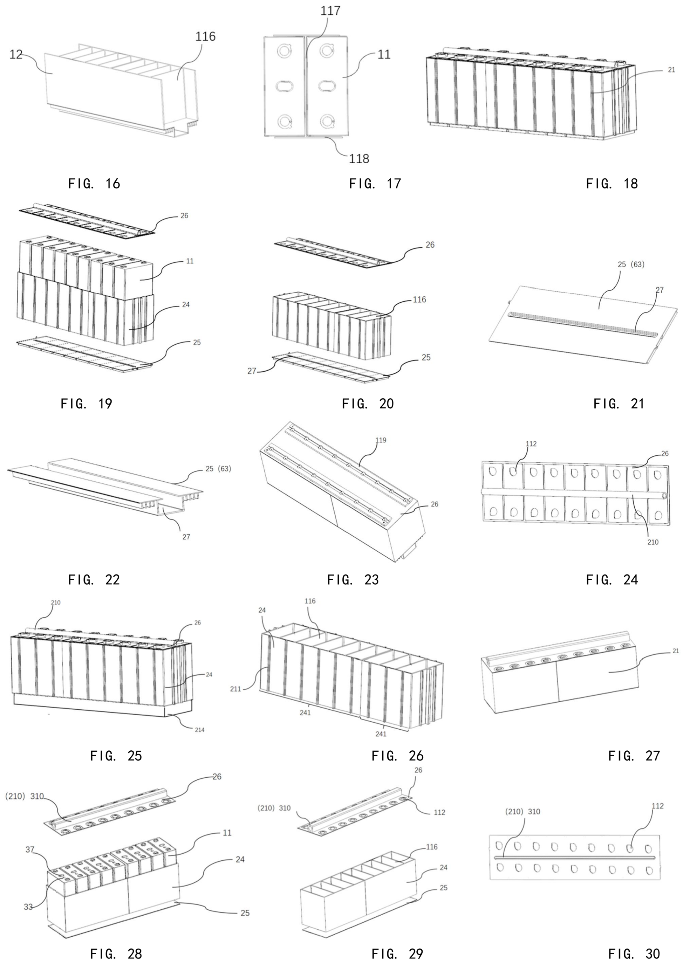

On the basis of Examples 1 to 3 hereinabove, this example added a plurality of partition plates 116 in an inner cavity of a U-shaped housing body 12 or an inner cavity of a cylinder, so as to divide the inner cavity of the U-shaped housing body 12 or the inner cavity of the cylinder into a plurality of battery cell 11 mounting cavities, as shown in FIGs. 17 and 18. The partition plate 116 may adopt a flat plate, or may also adopt an 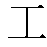 -shaped partition plate 116 shown in FIG. 17. A vertical beam 117 of the 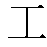 -shaped partition plate 116 is parallel to a first end plate 13 and a third end plate 14, and is in contact with side walls of two adjacent battery cells of the plurality of battery cells 11 located on a yz plane. One horizontal beam 118 of the 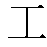 -shaped partition plate 116 is in contact with side walls of the two battery cells 11 located on an xz plane, and the other horizontal beam 118 of the 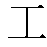 -shaped partition plate 116 is in contact with the other side walls of the two battery cells 11 located on the xz plane. The stability of the each battery cell of the plurality of battery cells 11 in the battery cell 11 mounting cavity may be improved by adding the 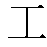 -shaped partition plate 116.

In this example, one battery cell 11 is fixed in each of the plurality of battery cell 11 mounting cavities; for each battery cell of the plurality of battery cells 11 near a middle portion, the side walls on two sides of the battery cell are in contact with the partition plate 116; and for the two battery cells 11 near the outermost side, one side wall is in contact with the partition plate 116, and the other side wall is in contact with the first end plate 13 or the third end plate 14. In a first aspect, the mounting stability of the each battery cell of the plurality of battery cells 11 in the housing body may be improved. In a second aspect, the occurrence of a problem of reduced cycling performance of a high-capacity battery caused by the swelling of the each battery cell of the plurality of battery cells 11 may be prevented. In a third aspect, heat generated during the charging and discharging of the each battery cell of the plurality of battery cells 11 may be transferred to the outside via the partition plate 116, thereby reducing a risk of thermal runaway. In a fourth aspect, the overall strength of the cylinder may also be improved. In other examples, two or more battery cells 11 may also be fixed in each of the plurality of battery cell 11 mounting cavities. However, the stability is relatively poor compared to the battery cell 11 in this example.

Example 5 to Example 8 below provide another high-capacity battery different from that in the examples hereinabove, including a housing and a plurality of battery cells connected in parallel and arranged in the housing, wherein the battery cells are the same as those in the examples hereinabove.

A housing structure and a specific arrangement mode of the each battery cell of the plurality of battery cells in the housing may be designed according to specific requirements, which has been clearly described in the examples hereinabove and are not described herein again.

Example 5 to Example 8 are mainly described in detail in an example of using a square housing battery as the battery cell and using a square housing body as the housing.

The housing may adopt the following structural forms.
1. The housing is of a split structure, and includes a cylinder of which top and bottom are open, and a fourth cover plate and a fifth cover plate.

Such cylinder structure may be formed by means of aluminum extrusion.

The cylinder of which top and bottom are open is first formed by means of aluminum extrusion, then the fourth cover plate with an electrolyte sharing chamber is processed, and the fourth cover plate is fixed to the bottom open end of the cylinder.

It is to be noted that after the battery cell is placed in the cylinder, the top open end of the cylinder is sealed by the fifth cover plate (requiring that the electrode terminal of the each battery cell of the plurality of battery cells extends out of the cover plate), so as to ensure that electrolyte is not in contact with the outside.

2. The housing is of the split structure, and includes the cylinder of which top and bottom are open, and the fifth cover plate and a hollow box body that may serve as the electrolyte sharing chamber.

Similar to the first solution, such cylinder structure may be formed by means of aluminum extrusion.

The cylinder of which top and bottom are open is first formed by means of aluminum extrusion, and then the hollow box body is covered on the bottom open end of the cylinder and hermetically connected to the bottom open end of the cylinder.

After the battery cell is placed in the cylinder, an inner cavity of the hollow box body is in communication with the electrolyte region of the inner cavity of the each battery cell of the plurality of battery cells, and the top open end of the cylinder is sealed by the fifth cover plate (requiring that the electrode terminal of the each battery cell of the plurality of battery cells extends out of the cover plate), so as to ensure that electrolyte is not in contact with the outside.

3. Different from the two structures hereinabove, the cylinder of this solution is formed by welding four rectangular plates. However, the overall strength and sealing performance of the cylinder are relatively poor due to a large number of welds.

Details are described below with reference to the drawings.

### Example 5

As shown in FIGs. 18 and 19, a high-capacity battery in this example includes 9 battery cells 11 connected in parallel, and the number of the battery cells in other examples may be adjusted according to actual requirements. Referring to FIG. 5, the battery cell 11 is consistent with that in the examples hereinabove, and thus is not described herein again.

In combination with FIG. 20, the housing 21 in this example selects the first structural form hereinabove, which is specifically a square housing. The housing includes a cylinder 24 with open ends at the top and bottom and a square cross section, a fourth cover plate 25 covering the bottom open end of the cylinder 24, and a fifth cover plate 26 covering the top open end. The fourth cover plate 25 is provided with an electrolyte sharing chamber 27.

The fourth cover plate 25 may adopt different structural forms, but it is required to ensure the sealing performance of a connection portion between the fourth cover plate and the bottom open end of the cylinder 24 when the fourth cover plate covers the bottom open end of the cylinder 24, and simultaneously ensure that an inner cavity of the electrolyte sharing chamber 27 provided on the fourth cover plate 25 penetrates through an inner cavity of the each battery cell of the plurality of battery cells 11. In this example, a flat plate matching a shape of the bottom open end of the cylinder 24 is selected as the fourth cover plate 25, and the sealing performance between the fourth cover plate and the bottom open end of the cylinder is ensured by welding the fourth cover plate 25 with an edge of the bottom open end of the cylinder 24. The cylinder in this example is a square cylinder 24, such that the flat plate is a square flat plate, an area may be slightly larger than an area of the bottom open end of the cylinder 24, and the flat plate is fixed to the bottom open end of the cylinder 24 by means of fusion welding; or the area may also be slightly smaller than the area of the bottom open end of the cylinder 24, and the flat plate is fixed to the bottom open end of the cylinder 24 by means of embedded welding. A first through hole penetrating through the inner cavity of the each battery cell of the plurality of battery cells is provided at a bottom of a housing body of the each battery cell of the plurality of battery cells 11, such that it ensured that the inner cavity of the electrolyte sharing chamber 27 penetrates through the inner cavity of the each battery cell of the plurality of battery cells 11.

Structures of the fourth cover plate 25 and the electrolyte sharing chamber 27 in this example may be structures shown in FIGs. 20 and 21, and a first channel extending in a length direction of the fourth cover plate 25 is provided in the fourth cover plate 25 as the electrolyte sharing chamber 27. Alternatively, the first channel may also be formed, adopting a bending or aluminum extrusion process, directly in the fourth cover plate 25, as shown in FIG. 22. The first channels in FIGs. 20, 21, and 22 all protrude in a direction away from a top of the cylinder. It is to be noted that openings at two ends of the electrolyte sharing chamber 27 in FIG. 22 need to be sealed.

The structures of the fourth cover plate 25 and the electrolyte sharing chamber 27 in this example may also be structures shown in FIG. 6, and the electrolyte sharing chamber 27 is a hollow tube section, with a cross section being rectangular or circular. The electrolyte sharing chamber and the fourth cover plate 25 are formed as an integral piece, which may also be formed adopting an aluminum extrusion process like the cylinder 24. When a hollow tube serves as the electrolyte sharing chamber 27, second through holes 28 penetrating the inner cavity of the electrolyte sharing chamber 27 need to be provided in a tube wall and the fourth cover plate 25, causing the inner cavity of the electrolyte sharing chamber 27 to penetrate through the inner cavity of the each battery cell of the plurality of battery cells 11. It is to be noted herein that, there may be a plurality of second through holes 28, and the number of the second through holes is equal to that of the battery cells 11. The second through holes 28 corresponds to and penetrates through first through holes on a one-to-one basis. One long-strip second through hole 28 extending in a length direction of the electrolyte sharing chamber 27 may also be directly provided in the fourth cover plate 25 and the electrolyte sharing chamber 27. A size of the second through hole 28 need to ensure that the second through hole 28 penetrates through the first through holes of all the battery cells 11 when the fourth cover plate 25 is welded to the bottom open end of the cylinder 24.

Similar to the examples hereinabove, this example may further provide a liquid injection port in the electrolyte sharing chamber 27.

A structure of the fifth cover plate 26 in this example is the same as that in the examples hereinabove, and thus is not described herein again.

The high-capacity battery in this example may be prepared by the following processes.

At Step 1, the housing 21 is processed, including the cylinder 24, the fourth cover plate 25 with the electrolyte sharing chamber 27, and the fifth cover plate 26.

At Step 2, the fourth cover plate 25 with the electrolyte sharing chamber 27 is hermetically welded to the bottom open end of the cylinder 24.

At Step 3, capacity grading and sorting is performed to screen out the plurality of battery cells meeting requirements; the first through hole is provided at the bottom of the housing body of the battery cell and then sealed using a sealing assembly; and the plurality of battery cells with the sealing assemblies at the first through holes are arranged in the cylinder 24 in Step 2.

If the electrolyte sharing chamber 27 is in the structural form of the first channel (the structures shown in FIGs. 20, 21, and 22), the first through hole with the sealing assembly need to correspond to the first channel, thereby ensuring that an electrolyte region of the inner cavity of the each battery cell of the plurality of battery cells penetrates through the electrolyte sharing chamber 27 after the sealing assembly is opened by an external force or electrolyte itself.

If the electrolyte sharing chamber 27 is in a tubular structural form (the structure shown in FIG. 6), the sealing assembly need to correspond to the second through hole 28, thereby ensuring that the electrolyte region of the inner cavity of the each battery cell of the plurality of battery cells penetrates through the electrolyte sharing chamber 27 after the sealing assembly is opened by the external force or the electrolyte itself.

The sealing assembly may adopt sealing assemblies disclosed in Chinese patents CN218525645U and CN218525614U.

At Step 4, the fifth cover plate 26 is hermetically welded to the top open end of the cylinder 24, a third through hole 112 is fixedly sealed with the housing body of the battery cell 11 after an electrode terminal of the each battery cell of the plurality of battery cells 11 extends out of the third through hole 112, and a specific sealing manner is the same as that in the example hereinabove.

In other examples, the fourth cover plate 25, the fifth cover plate 26, and the open ends of the cylinder 24 may also be fixed by means of adhesive bonding or screw connection. However, the sealing performance or connection reliability is relatively weak compared to a welding manner.

At Step 5, the sealing assembly is opened by using the external force or the electrolyte itself, the inner cavity of the electrolyte sharing chamber 27 penetrates through the electrolyte region of the inner cavity of the each battery cell of the plurality of battery cells.

After the inner cavity of the each battery cell of the plurality of battery cells 11 penetrates through the electrolyte sharing chamber 27, the electrolyte in the inner cavity of the each battery cell of the plurality of battery cells 11 is in communication with the electrolyte sharing chamber 27. In order to prevent a phenomenon of electrolyte interruption, the electrolyte may be injected, after the inner cavity of the each battery cell of the plurality of battery cells 11 penetrates through the electrolyte sharing chamber 27, into the electrolyte sharing chamber 27 to ensure the continuity of the electrolyte.

Then all the battery cells 11 may be connected in parallel. In other examples, each battery cell of the plurality of battery cells 11 may be connected in parallel between Step 4 and Step 5. Specifically, all the battery cells 11 may be connected in parallel by adopting the heat transfer connecting member 119 in the example hereinabove, as shown in FIGs. 23 and 11.

In order to form a more complete SEI film, causing the high-capacity battery to have a more stable cycling capability, formation is performed on the entire high-capacity battery after the electrolyte is injected into the inner cavity of the each battery cell of the plurality of battery cells 11 via the electrolyte sharing chamber 27.

### Example 6

A difference between this example and Example 5 lies in that, this example added a gas chamber 210 on a fifth cover plate 26 as a gas sharing chamber or an explosion venting channel, as shown in FIG. 24. A structure of the fifth cover plate 26 is the same as the structure of the second cover plate in Example 2, and thus is not described herein again.

When the gas chamber 210 serves as the gas sharing chamber, a fifth through hole penetrating through an inner cavity of the each battery cell of the plurality of battery cells 11 need to be provided at a top of a housing body of the each battery cell of the plurality of battery cells 11.

When the gas chamber 210 in the form of a second channel structure is selected, after the fifth cover plate 26 is fixed to a top open end of a cylinder 24, a second channel is in direct communication with a gas region of the inner cavity of the each battery cell of the plurality of battery cells via the fifth through hole.

When a hollow tube (the tube section in Example 2) is selected as the gas chamber 210, fourth through holes penetrating through the inner cavity of the gas chamber 210 need to be provided in a tube wall and the fifth cover plate 26. After the fifth cover plate 26 is fixed to the top open end of the cylinder 24, the gas chamber 210 is in communication with the gas region of the inner cavity of the each battery cell of the plurality of battery cells 11 via the fourth through hole and the fifth through hole. It is to be noted herein that, there may be a plurality of fourth through holes, and the number of the fourth through holes is equal to that of the battery cells 11. The fourth through holes corresponds to and penetrates through the fifth through holes on a one-to-one basis. One long-strip fourth through hole extending in a length direction of the gas chamber 210 may also be directly provided in the fifth cover plate 26 and the gas chamber 210. A size of the fourth through hole need to ensure that the fourth through hole penetrates through the fifth through holes of all the battery cells 11 when the fifth cover plate 26 is welded to the top open end of the cylinder 24.

When the gas chamber 210 serves as a gas sharing chamber, similar to Example 2, the gas chamber 210 may be provided with an exhaust valve and an explosion venting film, or only provided with the exhaust valve.

Preparation may be performed by the following processes.

On the basis of the preparation process in Example 5, the fifth through hole is provided at the top of the each battery cell of the plurality of battery cells and then sealed using a sealing assembly; a plurality of battery cells with the sealing assemblies at the fifth through holes are arranged in the cylinder 24; the fifth cover plate 26 is hermetically welded to the top open end of the cylinder 24, causing the fifth through hole having the sealing assembly to correspond to the fourth through hole, thereby ensuring that the fifth through hole penetrates through the fourth through hole after the sealing assembly is opened by an external force or electrolyte itself; and the sealing assembly may adopt sealing assemblies disclosed in Chinese patents CN218525645U and CN218525614U, and an edge of the third through hole 112 is welded to a portion of the housing body of the battery cell 11 in a region around an electrode terminal to achieve sealing. Finally, the sealing assembly is opened by using the external force or the electrolyte itself, an inner cavity of the gas chamber 210 is in communication with the gas region of the inner cavity of the each battery cell of the plurality of battery cells.

When the gas chamber 210 serves as an explosion venting channel, the gas chamber 210 covers a first explosion venting portion at the top of the each battery cell of the plurality of battery cells 11, and when the first explosion venting portion of any battery cell of the plurality of battery cells 11 is broken through by flue gas in the inner cavity, the gas region of the inner cavity of the battery cell 11 is in communication with the inner cavity of the gas chamber 210.

Preparation may be performed by the following processes.

On the basis of the preparation process in Example 5, the fifth cover plate 26 is hermetically welded to the top open end of the cylinder 24, causing the first explosion venting portion of the each battery cell of the plurality of battery cells to correspond to the gas chamber 210, thereby ensuring that the gas region of the inner cavity of the battery cell 11 is in communication with the inner cavity of the gas chamber 210 after the first explosion venting portion is broken through by the flue gas in the inner cavity. The edge of the third through hole 112 is welded to the portion of the housing body of the battery cell 11 in the region around the electrode terminal to achieve sealing.

It is to be noted that the first explosion venting portion in this example includes an explosion vent or explosion-proof port provided at the top of the battery cell 11 and having an explosion venting film, or an explosion vent provided with an explosion venting valve, etc.

### Example 7

A difference between this example and Example 5 and Example 6 lies in that, a housing 21 in this example selects the form of the second structure hereinabove, and a structure of the housing is shown in FIG. 25, including a cylinder 24, a fifth cover plate 26, and a hollow box body 214 configuring for an electrolyte sharing chamber.

The structures and forming methods of the cylinder 24 and the fifth cover plate 26 are the same as those in Example 5 or Example 6, and thus are not described herein again.

The hollow box body 214 covers a bottom open end of the cylinder 24, with its top being hermetically connected to the bottom open end of the cylinder 24. The connection may be implemented by means of welding or by means of adhesive bonding, etc. However, welding provided higher sealing performance and connection reliability, and therefore this example adopts the welding manner.

The hollow box body 214 is a hollow box body 214 with a rectangular cross section, and has the top provided with a second through hole penetrating through a first through hole, and an inner cavity of the hollow box body 214 is in communication with an electrolyte region of an inner cavity of the each battery cell of the plurality of battery cells 11 via the first through hole and the second through hole. Similarly, there may be a plurality of second through holes, and the number of the second through holes is equal to that of the battery cells 11. The second through holes corresponds to and penetrates through first through holes on a one-to-one basis. One long-strip second through hole extending in a length direction of the hollow box body 214 may also be directly provided at a top of in the hollow box body 214. A size of the second through hole need to ensure that the second through hole penetrates through the first through holes of all the battery cells 11 when the hollow box body 214 is welded to the bottom open end of the cylinder 24.

The preparation process is substantially the same as that in the examples hereinabove, and thus is not described herein again.

### Example 8

On the basis of Example 5 to Example 7, this example disposes a plurality of partition plates 116 in an inner cavity of a cylinder 24, so as to divide the inner cavity of the cylinder 24 into a plurality of battery cell 11 mounting cavities.

A specific structure is shown in FIG. 26. One battery cell 11 is fixed in each of the plurality of battery cell 11 mounting cavities; for each battery cell of the plurality of battery cells 11 near a middle portion, the side walls on two sides of the battery cell are in contact with the partition plate 116; and for the two battery cells 11 near the outermost side, one side wall is in contact with the partition plate 116, and the other side wall is in contact with a side wall of the cylinder 24. In a first aspect, the mounting stability of the each battery cell of the plurality of battery cells 11 in the housing body may be improved. In a second aspect, the occurrence of a problem of reduced cycling performance of a high-capacity battery caused by the swelling of the each battery cell of the plurality of battery cells 11 may be prevented. In a third aspect, heat generated during the charging and discharging of the each battery cell of the plurality of battery cells 11 may be transferred to the outside via the partition plate 116, thereby reducing a risk of thermal runaway. In a fourth aspect, the strength of the cylinder 24 may also be improved.

Two or more battery cells 11 may also be fixed in each of the plurality of battery cell 11 mounting cavities.

The partition plate 116 and the square cylinder 24 may be integrally extruded. When a length of the square cylinder 24 in an x direction is too long to be completed by one-time extrusion, two or more sub-square cylinders 241 may be extruded first and then the sub-square cylinders 241 are spliced and then connected to form the square cylinder 24 with a required size through welding. For the high-capacity battery in Example 5, two sub-square cylinders 241 capable of accommodating five battery cells 11 may be extruded, and the extra battery cell 11 mounting cavity may be used as an electrolyte storage tank. The electrolyte storage tank is in communication with an electrolyte sharing chamber and configures to inject electrolyte into such high-capacity batteries.

In order to ensure the load-bearing capacity of a housing 21, a fifth cover plate 26 may be welded again to the partition plate 116 from above the fifth cover plate 26. A plurality of reinforcing ribs 211 extending in a height direction and arranged in a length direction may also be disposed on a side wall of the cylinder 24. From the figure, it may be seen that each reinforcing rib 211 is located at a middle position of a side wall of the battery cell 11 mounting cavity.

Furthermore, when the partition plate 116 is provided, the fifth cover plate 26 excluding the gas chamber may be omitted, and an edge of an upper cover plate of the each battery cell of the plurality of battery cells 11 is sealed and welded to a top open end of the each of the plurality of battery cell 11 mounting cavities, such that a top open end of the cylinder 24 is sealed.

Example 9 to Example 12 below provide a high-capacity battery different from that in the examples hereinabove, including a housing and a plurality of battery cells connected in parallel or in series and arranged in the housing, wherein the battery cells may be square housing batteries, or may also be a plurality of commercially-available pouch batteries connected in parallel. An inner cavity of the each battery cell of the plurality of battery cells includes an electrolyte region and a gas region.

Similar to the examples hereinabove, a housing structure and a specific arrangement mode of the each battery cell of the plurality of battery cells in the housing may be set according to specific requirements.

A gas sharing chamber is disposed at a top of the housing; and the gas sharing chamber is in direct communication with the gas region of the inner cavity of the each battery cell of the plurality of battery cells.

The following examples are mainly described in detail in an example of using a square housing battery as the battery cell and using a square housing body as the housing.

The housing may adopt the following structural forms.
1. The housing is of a split structure, and includes a cylinder with only the top being open and a cover plate provided with a gas sharing chamber.

The cylinder structure may be formed by means of die casting or stamping.

After the battery cell is placed in the cylinder, a top open end of the cylinder is sealed by the cover plate (requiring that an electrode terminal of the each battery cell of the plurality of battery cells extends out of the cover plate, and the gas sharing chamber on the cover plate is in communication with the gas region of the inner cavity of the each battery cell of the plurality of battery cells).

2. The housing is of a split structure, and includes a cylinder of which top and bottom are open, and a fourth cover plate and a fifth cover plate.

Such cylinder structure may be formed by means of aluminum extrusion.

First, the cylinder of which top and bottom are open is formed by means of aluminum extrusion, then processing the fifth cover plate having a gas sharing chamber is processed, and the fifth cover plate and the gas sharing chamber may be integrally formed by means of aluminum extrusion or stamping; and the gas sharing chamber and the fifth cover plate may also be split structures, but the processing is relatively complex compared to the integral forming manner adopting aluminum extrusion.

The cylinder of which top and bottom are open may also be formed by welding four rectangular plates. However, the overall strength and sealing performance of the cylinder are relatively poor due to a large number of welds.

During assembly, first, the fourth cover plate is fixed to the bottom open end of the cylinder, then the battery cell is placed in the cylinder, and finally, the top open end of the cylinder is sealed by the fifth cover plate (requiring that the electrode terminal of the each battery cell of the plurality of battery cells extends out of the fifth cover plate, and the gas sharing chamber on the fifth cover plate is in communication with the gas region of the inner cavity of the each battery cell of the plurality of battery cells).

3. The housing is of a split structure, and includes a U-shaped housing body, a first end plate, a second cover plate, and a third end plate, wherein the U-shaped housing body referred to a housing body with a U-shaped cross section, that is, a housing body with three consecutive open ends. It is to be noted that, since the square housing is preferably selected, a bottom of the U-shaped housing body herein should be flat.

The second cover plate is provided with the gas sharing chamber; and the gas sharing chamber is in communication with the gas region of the inner cavity of the each battery cell of the plurality of battery cells. It is to be noted that the second cover plate and the U-shaped housing body may be separately arranged, or may also be formed as an integral structure.

If the second cover plate and the U-shaped housing body are split structures, the U-shaped housing body may be integrally formed by means of bending or stamping, and the second cover plate with the gas sharing chamber may be formed by means of bending or aluminum extrusion. During assembly, each battery cell of the plurality of battery cells is placed in the inner cavity of the U-shaped housing body, the second cover plate is fixed to the top open end of the U-shaped housing body (requiring that the electrode terminal of the each battery cell of the plurality of battery cells extends out of the second cover plate, and the gas sharing chamber on the second cover plate is in communication with the gas region of the inner cavity of the each battery cell of the plurality of battery cells), and finally the two opposite open ends are sealed by the first end plate and the third end plate.

If the second cover plate and the U-shaped housing body are formed as an integral structure, the second cover plate and the U-shaped housing body may be integrally formed by means of aluminum extrusion, and the gas sharing chamber may be integrally formed at the same time.

During assembly, each battery cell of the plurality of battery cells is placed in the inner cavity of the housing body from the two opposite open ends of the U-shaped housing body (requiring that the electrode terminal of the each battery cell of the plurality of battery cells extends out of the second cover plate, and the gas sharing chamber on the second cover plate is in communication with the gas region of the inner cavity of the each battery cell of the plurality of battery cells), and finally the two opposite open ends are sealed by the first end plate and the third end plate.

The following examples are mainly described in detail in an example of the housings in the forms of the second and third structures hereinabove.

### Example 9

As shown in FIGs. 27 and 28, a high-capacity battery in this example includes 9 battery cells 11 connected in parallel, and the number of the battery cells in other examples may be adjusted according to actual requirements. Referring to FIG. 5, the battery cell 11 is a square housing battery, which is consistent with the examples hereinabove, and thus is not described herein again.

In combination with FIG. 29, a housing 21 in this example is a square housing body, and includes a cylinder 24 with open ends at the top and bottom and a square cross section, a fourth cover plate 25 covering the bottom open end of the cylinder 24, and a fifth cover plate 26 covering the top open end. The fifth cover plate 26 is provided with a gas sharing chamber 310.

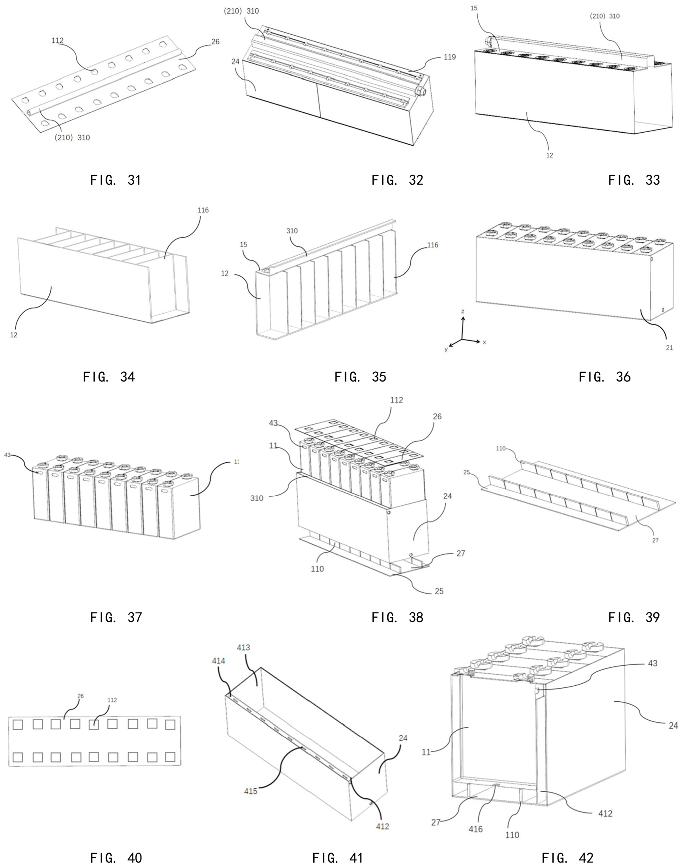

The fifth cover plate 26 is a flat plate, and a structure of the flat plate is the same as the structure of the second cover plate in Example 1, as shown in FIGs. 30 and 31. The flat plate covers the top open end of the cylinder 24 and is hermetically connected to the top open end. After an electrode terminal of the each battery cell of the plurality of battery cells 11 extends out of a third through hole 112, the third through hole 112 is fixedly sealed with a housing body of the battery cell 11, and a specific sealing manner is the same as that in the example hereinabove. A shape of the flat plate matches a shape of the top open end of the cylinder 24, and the flat plate may also be fixed to the top open end of the cylinder 24 by means of fusion welding or embedded welding.

The gas sharing chamber 310 may adopt the gas chamber with three structural forms in Example 2, as shown in FIGs. 13, 30, and 31. In FIG. 13, in a width direction (y direction) of the fifth cover plate 26, the flat plate is bent to form a second channel extending in an x direction. A structure of the entire fifth cover plate 26 may be understood as a cover plate with an omega-shaped cross section. **In** FIG. 31, a tube section (a hollow tube) is used as the gas sharing chamber 310. A second channel extending in a length direction (x direction) of the fifth cover plate 26 may also be provided on the fifth cover plate 26 as the gas sharing chamber 310, and a size of the second channel in the x direction is less than a size of the flat plate. Integral forming may be performed adopting a stamping process, as shown in FIG. 30; and the second channels in FIGs. 30 and 13 protrude in a direction away from a bottom of the cylinder 24.

A fifth through hole 37 penetrating through an inner cavity of the battery cell 11 is provided at the top of the housing body of the each battery cell of the plurality of battery cells 11 (see FIG. 28, the fifth through hole 37 and a first explosion venting portion 33 in FIG. 28 are located at different positions at the top of the battery cell 11, and it is to be noted that the fifth through hole 37 herein may also be a through hole formed by directly opening the first explosion venting portion 33).

When a tubular gas sharing chamber 310 is selected, fourth through holes penetrating through the fifth through hole 37 need to be provided in the fifth cover plate 26 and the gas sharing chamber 310, and the gas sharing chamber 310 is in communication with a gas region in the inner cavity of the each battery cell of the plurality of battery cells 11 via the fourth through hole and the fifth through hole 37. It is to be noted herein that, there may be a plurality of fourth through holes, and the number of the fourth through holes is equal to that of the battery cells 11. The fourth through holes corresponds to and penetrates through the fifth through holes 37 on a one-to-one basis. One long-strip fourth through hole extending in a length direction of the gas sharing chamber 310 may also be directly provided in the fifth cover plate 26 and the gas sharing chamber 310. A size of the fourth through hole need to ensure that the fourth through hole penetrates through the fifth through holes 37 of all the battery cells 11 when the fifth cover plate 26 is fixed to the top open end of the cylinder 24.

If the gas sharing chamber 310 is in the form of the second channel, that is, the structure shown in FIGs. 30 and 13, when the fifth cover plate 26 is fixed to the top open end of the cylinder 24, an inner cavity of the second channel directly penetrates through the gas region of the inner cavity of the each battery cell of the plurality of battery cells 11 via the fifth through hole 37.

Preparation may be performed by the following processes.

At Step 1, the housing 21 is processed, including the cylinder 24, the fifth cover plate 26 with the gas sharing chamber 310, and the fourth cover plate 25.

At Step 2, the fourth cover plate 25 is hermetically welded to the bottom open end of the cylinder 24.

At Step 3, capacity grading and sorting is performed to screen out the plurality of battery cells meeting requirements; the fifth through hole 37 is provided at the top of the each battery cell of the plurality of battery cells and then sealed using a sealing assembly; the plurality of battery cells with the sealing assemblies at the fifth through holes 37 are arranged in the cylinder 24; the fifth cover plate 26 is hermetically welded to the top open end of the cylinder 24 to ensure that the gas region of the inner cavity of the each battery cell of the plurality of battery cells 11 is in communication with the gas sharing chamber 310 after the sealing assembly is opened by an external force or electrolyte itself; and the sealing assembly may adopt sealing assemblies disclosed in Chinese patents CN218525645U and CN218525614U, and the third through hole 112 is welded to a portion around the electrode terminal of the housing body of the battery cell to achieve sealing. The sealing of the third through hole 112 and the housing body of the battery cell 11 may also be completed first, and then the fifth cover plate 26 is hermetically welded to the top open end of the cylinder 24. In other examples, the fifth cover plate 26 and the top open end of the cylinder 24, as well as the fourth cover plate 25 and the bottom open end of the cylinder 24, may also be fixed by means of adhesive bonding or screw connection. However, the sealing performance or connection reliability is relatively weak compared to a welding manner.

At Step 4, the sealing assembly is opened by using the external force or the electrolyte itself, and the inner cavity of the gas sharing chamber 310 is in communication with the gas region of the inner cavity of the each battery cell of the plurality of battery cells 11.

Then, all the battery cells 11 are connected in parallel or in series. In other examples, each battery cell of the plurality of battery cells 11 may be connected in parallel or in series between Step 3 and Step 4.

Specifically, all the battery cells 11 may be connected in parallel by adopting a same heat transfer connecting member 119 as in Example 1, as shown in FIGs. 11 and 32.

### Example 10

As shown in FIG. 12, a difference between this example and Example 9 lies in that, a housing 21 in this example includes a U-shaped housing body 12, a first end plate 13, a second cover plate 15, and a third end plate 14, wherein the U-shaped housing body 12 and the second cover plate 15 are separately arranged.

The second cover plate 15 is provided with a gas sharing chamber 310 extending in an x direction, with a structure being the same as that in Example 9.

Preparation may be performed by the following processes.

At Step 1, the U-shaped housing body 12, the first end plate 13, the second cover plate 15, and the third end plate 14 are processed.

At Step 2, capacity grading and sorting is performed to screen out a plurality of battery cells meeting requirements; a fifth through hole 37 is provided at a top of the each battery cell of the plurality of battery cells and then sealed using a sealing assembly; the plurality of battery cells with the sealing assemblies at the fifth through holes 37 are arranged in the U-shaped housing body 12 in Step 1; the second cover plate 15 is hermetically welded to a top open end of the U-shaped housing body 12 to ensure that a gas region of an inner cavity of the each battery cell of the plurality of battery cells penetrates through the gas sharing chamber 310 after the sealing assembly is opened by an external force or electrolyte itself; and the sealing assembly may adopt sealing assemblies disclosed in Chinese patents CN218525645U and CN218525614U, and a region of an edge of a third through hole 112 is welded to a housing body in a region around an electrode terminal to achieve sealing. The first end plate 13 and the third end plate 14 are welded to the other two opposite open ends of the U-shaped housing body 12. It is to be noted herein that, if the gas sharing chamber 310 is located at two open ends of a yz plane, the first end plate 13 and the third end plate 14 are required to simultaneously seal the two open ends of the gas sharing chamber 310 located on the yz plane. The first end plate 13, the second cover plate 15, and the third end plate 14 may also be fixed to the open ends of the U-shaped housing body 12 by means of screw fastening or adhesive bonding. However, the sealing performance or connection reliability is relatively weak compared to the welding manner.

At Step 3, the sealing assembly is opened by using the external force or the electrolyte itself, and an inner cavity of the gas sharing chamber 310 penetrates through the gas region of the inner cavity of the each battery cell of the plurality of battery cells.

Then, all the battery cells 11 are connected in parallel or in series, and in other examples, the operation may also be performed between Step 2 and Step 3.

### Example 11

A difference between this example and Example 10 lies in that, in this example, a U-shaped housing body 12 and a second cover plate 15 are formed as an integral piece, and a structure of the integral piece is shown in FIG. 33.

It may be understood that a housing 21 in this example includes a cylinder shown in FIG. 33, and a first end plate 13 and a third end plate 14, which are configured to cover two opposite open ends of the cylinder, wherein the first end plate 13 and the third end plate 14 are located in a yz plane (referring to FIG. 12).

In this example, the cylinder may be integrally formed adopting an aluminum extrusion process. Since the cylinder extends in an x direction, the open end thereof is located on the yz plane, and extrusion is performed in the x direction, the cylinder with a target length may be formed by one-time extrusion.

In order to achieve integral extrusion forming with the cylinder, a gas sharing chamber 310 in this example preferably adopted the following two structural forms.
1. A tube section with a square or circular cross section is formed on an outer surface of a top of the second cover plate 15 as the gas sharing chamber 310, and then fourth through holes penetrating through a tube inner cavity and corresponding to fifth through holes 37 need to be provided in a tube wall and the second cover plate 15.
2. A second channel extending in an x direction is formed on the second cover plate 15; and the second channel protrudes in a direction away from a bottom of the U-shaped housing body 12.

A process of processing a high-capacity battery in this example is similar to the preparation process in Example 3. A difference lies in that an electrolyte sharing chamber is not disposed at a bottom of the cylinder.

### Example 12

This example is similar to Example 8, a plurality of partition plates 116 are disposed in an inner cavity of a housing 21 in Example 9 to Example 11 to divide the inner cavity into a plurality of battery cell 11 mounting cavities. A specific structure is shown in FIGs. 26 and 17. In FIG. 17, a reference numeral 118 represents a horizontal beam of an 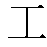 -shaped partition plate, and a reference numeral 117 represented a vertical beam of the 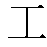 -shaped partition plate.

Example 13 and Example 14 provides another high-capacity battery, including a housing and a plurality of battery cells connected in parallel and arranged in the housing, wherein an inner cavity of the each battery cell of the plurality of battery cells includes an electrolyte region and a gas region. The battery cells may be square housing batteries, or may also be a plurality of commercially-available pouch batteries connected in parallel.

An electrolyte sharing chamber is disposed at a bottom of the housing; the electrolyte sharing chamber is in communication with the electrolyte region of the inner cavity of the each battery cell of the plurality of battery cells; a gas sharing chamber is disposed on a side wall of the housing; and the gas sharing chamber is in communication with the gas region of the inner cavity of the each battery cell of the plurality of battery cells.

It is to be noted herein that the electrolyte sharing chamber hereinabove is an electrolyte accommodating cavity, which need to ensure, after in communication with the electrolyte region of the inner cavity of the each battery cell of the plurality of battery cells, electrolyte in the entire high-capacity battery is not in contact with an external environment.

The following examples are mainly described in detail by using a square housing battery as the battery cell.

### Example 13

As shown in FIGs. 36 and 37, a high-capacity battery in this example includes 9 battery cells 11 connected in parallel, wherein the battery cells herein are consistent with those in the examples hereinabove, and thus are not described herein again. A housing 21 in this example is a square housing body. For ease of description, a length direction of the housing 21 is defined as an x direction, a width direction of the housing 21 is defined as a y direction, and a height direction of the housing 21 is defined as a z direction.

The housing 21 in the following two structural forms may be adopted.
1. The housing 21 is of a split structure, and includes a square cylinder with only the top being open and a cover plate configured to cover the open end, wherein an electrolyte sharing chamber is disposed at a bottom of the cylinder; and a gas sharing chamber is disposed on a side wall of the cylinder (the side wall parallel to an xz plane). It is to be noted that, after the battery cell is placed in the cylinder, the top open end of the cylinder is sealed by the cover plate (requiring that an electrode terminal of the each battery cell of the plurality of battery cells extends out of the cover plate), so as to ensure that electrolyte is not in contact with the outside.

A structure of a main cylinder body may be formed by means of die casting or stamping.

2. The housing 21 is of the split structure, as shown in FIG. 38, including a cylinder 24 of which top and bottom are open, and a fourth cover plate 25 and a fifth cover plate 26, which are configured to cover the two open ends, wherein the fourth cover plate 25 is provided with the electrolyte sharing chamber 27, and covers the bottom open end of the cylinder 24; and the gas sharing chamber 310 is disposed on the side wall of the cylinder 24 (the side wall parallel to the xz plane). Similarly, it is to be noted that, after the battery cell 11 is placed in the cylinder 24, the top open end of the cylinder 24 is sealed by the fifth cover plate 26 (requiring that the electrode terminal of the each battery cell of the plurality of battery cells 11 extends out of the cover plate), so as to ensure that the electrolyte is not in contact with the outside.

A structure of such cylinder 24 may be formed by means of aluminum extrusion.

A structure of the fourth cover plate 25 may adopt the three structures described in Example 5. As shown in FIG. 6, in an example of using the electrolyte sharing chamber as a hollow tube, and a cross section of the electrolyte sharing chamber 27 may be square or circular. A second through holes 28 is provided in the fourth cover plate 25 and the electrolyte sharing chamber 27. It is to be noted herein that, there may be a plurality of second through holes 28, and the number of the second through holes is equal to that of the battery cells 11. The second through holes 28 corresponds to and penetrates through first through holes 416 on a one-to-one basis. One long-strip second through hole 28 extending in a length direction of the electrolyte sharing chamber 27 may also be directly provided in the fourth cover plate 25 and the electrolyte sharing chamber 27. A size of the second through hole 28 need to ensure that the second through hole 28 penetrates through the first through holes 416 of all the battery cells 11 when the fourth cover plate 25 is welded to the bottom open end of the cylinder 24.

A structure shown in FIG. 39 may also be adopted. The fourth cover plate 25 is a flat plate; two first support ribs 110 extending in an x direction are disposed on the fourth cover plate 25; and a groove is formed by the two first support ribs 110 and a region of the fourth cover plate 25 located between the two first support ribs 110, so as to constitute the electrolyte sharing chamber 27.

Compared with the first solution, the fourth cover plate may cause a structure of the high-capacity battery to be more regular. When the fourth cover plate 25 is fixed to the bottom open end of the cylinder 24, there is no need to provide the second through hole 28, such that a processing procedure is simple, and the electrolyte sharing chamber 27 may penetrate through the electrolyte regions of the inner cavities of all the battery cells 11 via the first through holes 416.

Similar to the examples hereinabove, this example may further provide a liquid injection port in the electrolyte sharing chamber 27.

A structure of the fifth cover plate 26 in this example is shown in FIG. 40, which is the same as that of the second cover plate in Example 1, and thus is not described herein again.

The gas sharing chamber 310 may be disposed, adopting the following two structural forms, on the side wall of the cylinder 24.
1. A first partition plate 412 parallel to an xz plane is disposed in an inner cavity of the cylinder 24 to divide the inner cavity of the cylinder 24 into a first chamber 413 and a second chamber 414; the battery cells 11 are arranged in the first chamber 413; the second chamber 414 serves as the gas sharing chamber 310; and the gas sharing chamber 310 penetrates through the gas region of the inner cavity of the each battery cell of the plurality of battery cells 11 via a ninth through hole 43 provided in a side wall of the each battery cell of the plurality of battery cells.

As shown in FIG. 41, in the z direction, a size of the first partition plate 412 may be similar to a size of the cylinder 24, such that an upper end and a lower end of the first partition plate 412 are in contact with the fifth cover plate 26 and the fourth cover plate 25, respectively. **In** this case, a tenth through hole 415 penetrating through the ninth through hole 43 need to be provided in the first partition plate 412 to ensure that the gas sharing chamber 310 penetrates through the gas region of the inner cavity of the each battery cell of the plurality of battery cells 11.

As shown in FIG. 42, in the z direction, the size of the first partition plate 412 may also be designed to be less than the size of the cylinder 24, that is, the upper end of the first partition plate 412 is lower than the ninth through hole 43, and in this case, the gas sharing chamber 310 may penetrate through the gas region of the inner cavity of the each battery cell of the plurality of battery cells 11 without providing the tenth through hole 415 in the first partition plate 412.

2. A sixth through hole penetrating through the ninth through hole 43 is provided in the side wall of the cylinder 24 parallel to the xz plane, and the gas sharing chamber is fixed on an outer surface of the sixth through hole. A through hole penetrating through the sixth through hole may be provided, adopting a square box body or a tubular structure, in the side wall of the gas sharing chamber that is in contact with the cylinder 24.

Compared to the structure of the second solution, the overall structure of the first solution is more regular. On one hand, it is easy to integrate energy storage devices on the basis of such high-capacity batteries; and on the other hand, the high-capacity battery may be treated as a whole, and the overall safety performance of such high-capacity batteries is improved by coating an insulating film (which may also be referred to as a blue film or protective film) outside the high-capacity battery.

The high-capacity battery in this example may be prepared by the following processes.

At Step 1, the housing 21 is processed, including the cylinder 24, the fourth cover plate 25 with the electrolyte sharing chamber 27, and the fifth cover plate 26 provided with a third through hole 112.

At Step 2, the fourth cover plate 25 with the electrolyte sharing chamber 27 is hermetically welded to the bottom open end of the cylinder 24.

At Step 3, capacity grading and sorting is performed to screen out the plurality of battery cells 11 meeting requirements; the first through holes 416 are provided at the bottoms of the housing bodies of the battery cells 11 and then sealed using sealing assemblies 418; the ninth through holes 43 are provided in the side walls of the housing bodies of the battery cells 11 and then sealed using the sealing assemblies 418; the plurality of battery cells 11 with the sealing assemblies 418 at the first through holes 416 and the ninth through holes 43 are arranged in the cylinder 24 in Step 2, such that the first through hole 416 with the sealing assembly 418 corresponds to the groove configuring for the electrolyte sharing chamber 27, thereby ensuring that the electrolyte region of the inner cavity of the each battery cell of the plurality of battery cells 11 penetrates through the electrolyte sharing chamber 27 after the sealing assembly 418 is opened by an external force or electrolyte itself, and the ninth through hole 43 with the sealing assembly 418 corresponds to the gas sharing chamber 310, thereby ensuring that the gas region of the inner cavity of the each battery cell of the plurality of battery cells 11 penetrates through the gas sharing chamber 310 after the sealing assembly 418 is opened by the external force or the electrolyte itself.

The sealing assembly 418 may adopt sealing assemblies disclosed in Chinese patents CN218525645U and CN218525614U.

It is to be noted that, when the structure of the gas sharing chamber 310 shown in FIG. 41 is adopted, if the selected sealing assembly 418 protruded from the ninth through hole 43 (e.g., the sealing assembly 418 with a traction ring in CN218525645U), the battery cell 11 may not be mounted in the first chamber 413; and if a sealing film that may be dissolved in the electrolyte is selected as a sealing assembly (e.g., the sealing film with a protective film in CN218525645U), and since the size of the gas sharing chamber in the z direction is similar to the size of the cylinder, more electrolyte is consumed when the sealing assembly is dissolved using the electrolyte, and in addition, a penetration effect between the gas region of the each battery cell of the plurality of battery cells and the gas sharing chamber may also be affected. Therefore, in order to overcome such problems, the sealing assembly 418 may be sealed on the tenth through hole 415 (the sealing assembly 418 selected a sealing assembly similar to one having the traction ring or a weak portion that protruded from the tenth through hole and may be opened by the external force), thereby ensuring that the gas region of the inner cavity of the each battery cell of the plurality of battery cells 11 penetrates through the gas sharing chamber 310 after the sealing assembly 418 is opened by the external force. In this case, Step 3 is preferably performed in an environment that a dew point standard is -20°C to -40°C, humidity is ≤1%, a temperature is 23°C±2°C, and a cleanliness level is 100,000 grades.

At Step 4, the fifth cover plate 26 is hermetically welded to the top open end of the cylinder 24 such that each electrode terminal extends out of the corresponding third through hole 112, and a region of an edge of the third through hole 112 is welded to the housing body around the electrode terminal to achieve sealing.

At Step 5, the sealing assembly 418 is opened by using the external force or the electrolyte itself, the inner cavity of the electrolyte sharing chamber 27 penetrates through the electrolyte region of the inner cavity of the each battery cell of the plurality of battery cells 11, and the inner cavity of the gas sharing chamber 310 penetrates through the gas region of the inner cavity of the each battery cell of the plurality of battery cells 11.

In other examples, the fourth cover plate 25 and the bottom open end of the cylinder 24, as well as the fifth cover plate 26 and the top open end of the cylinder 24, may also be fixed by means of adhesive bonding or screw connection. However, the sealing performance or connection reliability is relatively weak compared to a welding manner.

After the inner cavity of the each battery cell of the plurality of battery cells 11 penetrates through the electrolyte sharing chamber 27, the electrolyte in the inner cavity of the each battery cell of the plurality of battery cells 11 is in communication with the electrolyte sharing chamber 27. In order to prevent a phenomenon of electrolyte interruption, the electrolyte may be injected, after the inner cavity of the each battery cell of the plurality of battery cells 11 penetrates through the electrolyte sharing chamber 27, into the electrolyte sharing chamber 27 to ensure the continuity of the electrolyte.

Then all the battery cells 11 are connected in parallel. In other examples, each battery cell of the plurality of battery cells 11 may be connected in parallel between Step 4 and Step 5.

In order to form a more complete SEI film, causing the high-capacity battery to have a more stable cycling capability, formation is performed on the entire high-capacity battery after the electrolyte is injected into the inner cavity of the each battery cell of the plurality of battery cells 11 via the electrolyte sharing chamber 27.

### Example 14

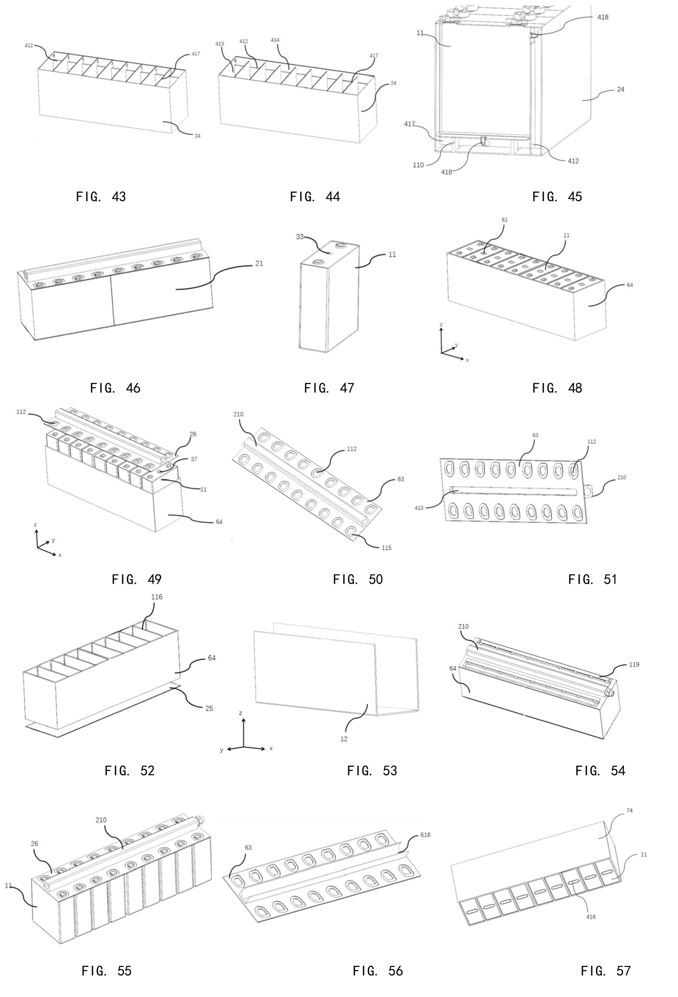

As shown in FIGs. 43 and 44, a difference between this example and Example 13 lies in that this example provides a plurality of second partition plates 417 arranged in an x direction in an inner cavity of a cylinder 24.

In FIG. 43, in a z direction, an upper end of a first partition plate 412 is lower than a ninth through hole 43, a size of the second partition plate 417 in a y direction is similar to a size of the cylinder 24, a first chamber 413 is divided into a plurality of battery cell 11 mounting cavities, the first partition plate 412 is divided into a plurality of first sub-partition plates, and a second chamber 414 is divided into a plurality of small gas chambers. An opening is provided at a portion of the second partition plate 417 located in the second chamber 414 to ensure gas communication of the plurality of small gas chambers, and at the same time, it need to ensure that a sealing assembly 418 sealed at the ninth through hole 43 may be smoothly opened using an external force or electrolyte itself. Alternatively, the second partition plate 417 may only be disposed in the first chamber, as shown in FIG. 44. However, compared to a structure shown in FIG. 43, the structural strength of the second chamber is weaker.

Furthermore, as shown in FIG. 45, in order to improve the stability of the second partition plate 417, snap grooves extending in the z direction may be provided on two first support ribs 110, and a bottom edge of the second partition plate 417 may be snapped into the snap grooves of the two first support ribs 110. However, the connectivity of an electrolyte sharing chamber 27 need to be ensured. For example, an opening may be provided in the second partition plate 417 or a size of the second partition plate 417 in the z direction may be decreased, such that there is a gap between a lower end of the second partition plate 417 and a bottom of the cylinder 24. Moreover, it need to ensure that the sealing assembly 418 sealed at a first through hole 416 may be smoothly opened by the external force or the electrolyte itself. As shown in FIG. 45, the sealing assembly 418 adopted is a sealing assembly that has a weak portion and protruded from the first through hole 416. By providing a through hole in the portion of the second partition plate 417 located in the electrolyte sharing chamber 27, an external unpacking tool or a dedicated tooling may pass through, such that the weak portion of the sealing assembly 418 is broken to open the sealing assembly 418, thereby causing an electrolyte region of an inner cavity of the each battery cell of the plurality of battery cells to penetrate through the electrolyte sharing chamber 27.

One battery cell 11 is fixed in each of the plurality of battery cell 11 mounting cavities; for each battery cell of the plurality of battery cells 11 near a middle portion, the side walls on two sides of the battery cell are in contact with two adjacent second partition plates 417; and for the two battery cells 11 near the outermost side, one side wall is in contact with the second partition plate 417, and the other side wall is in contact with a side wall of the cylinder 24. In a first aspect, the mounting stability of the each battery cell of the plurality of battery cells 11 in the housing body may be improved. In a second aspect, the occurrence of a problem of reduced cycling performance of a high-capacity battery caused by the swelling of the each battery cell of the plurality of battery cells 11 may be prevented. In a third aspect, heat generated during the charging and discharging of the each battery cell of the plurality of battery cells 11 may be transferred to the outside via the second partition plate 417, thereby reducing a risk of thermal runaway. In a fourth aspect, the strength of the cylinder 24 may also be improved.

Two or more battery cells 11 may also be fixed in each of the plurality of battery cell 11 mounting cavities.

When a length of the square cylinder 24 in the x direction is too long to be completed by one-time extrusion, two or more sub-square cylinders may be extruded first, and then the sub-square cylinders are spliced and then connected to form the square cylinder 24 with a required size through welding. For the high-capacity battery in Example 13, two sub-square cylinders capable of accommodating five battery cells 11 may be extruded, and the extra battery cell 11 mounting cavity may be used as an electrolyte storage tank. The electrolyte storage tank is in communication with an electrolyte sharing chamber and configures to inject electrolyte into such high-capacity batteries.

Furthermore, when one battery cell 11 is fixed in each of the plurality of battery cell 11 mounting cavities, a fifth cover plate 26 may be designed as a split structure and includes sub-fifth cover plates 26 corresponding to the plurality of battery cells 11 on a one-to-one basis. In combination with FIG. 36, it may be seen that each sub-fifth cover plate 26 is provided with a third through hole 112 capable of allowing an electrode terminal of the corresponding battery cell 11 to extend out; n sub-fifth covers 26 respectively covers top open ends of the battery cell 11 mounting cavities, and are hermetically connected to the open ends; and the electrode terminal of the corresponding battery cell 11 extends out of the third through hole 112, the third through hole 112 is sealed with a housing body of the battery cell, and a specific sealing manner is the same as that in the examples hereinabove.

Example 15 to Example 18 provides another high-capacity battery, including a housing and a plurality of battery cells connected in parallel or in series and arranged in the housing, wherein the battery cells may be square housing batteries, or may also be a plurality of commercially-available pouch batteries connected in parallel. An inner cavity of the each battery cell of the plurality of battery cells includes an electrolyte region and a gas region.

The following examples are mainly described in detail by using a square housing battery as the battery cell.

A housing structure and a specific arrangement mode of the each battery cell of the plurality of battery cells in the housing may be set according to specific requirements.

A gas chamber is provided at a top of the housing.

The gas chamber may serve as an explosion venting channel, and covers a first explosion venting portion at a top of the each battery cell of the plurality of battery cells. When the first explosion venting portion of any battery cell of the plurality of battery cells is broken through by flue gas in an inner cavity, a gas region of the inner cavity of the battery cell is in communication with an inner cavity of the gas chamber, and the flue gas is discharged via the gas chamber.

It is to be noted that the first explosion venting portion includes an explosion vent or explosion-proof port provided at the top of the battery cell and having an explosion venting film, or an explosion vent provided with an explosion venting valve, etc.

The housing may adopt a plurality of structural forms of the high-capacity battery described in Example 9 to Example 12. A difference lies in that the gas chamber is not in direct communication with the gas region of the inner cavity of the each battery cell of the plurality of battery cells.

The following examples are mainly described in detail in an example of the housings in the forms of the second and third structures hereinabove.

### Example 15

As shown in FIG. 46, a high-capacity battery in this example includes 9 battery cells 11 connected in parallel, wherein the battery cell 11 is a square housing battery, which is consistent with the examples hereinabove, and thus is not described herein again. In other examples, the number of battery cells may be adjusted according to actual requirements. A top of a housing body of the battery cell 11 includes a first explosion venting portion 33, as shown in FIG. 28, and a difference lies in that the top of the each battery cell of the plurality of battery cells in this example is not provided with a fifth through hole 37.

In combination with FIG. 29, a housing 21 in this example is similar to that in Example 9, is a square housing body, and includes a cylinder 24 with open ends at the top and bottom and a square cross section, a fourth cover plate 25 covering the bottom open end of the cylinder 24, and a fifth cover plate 26 covering the top open end. The fifth cover plate 26 is provided with a gas chamber 210.

The fifth cover plate 26 in this example is the same as the fifth cover plate 26 in Example 9. Details may be described in combination with FIGs. 30 to 31, and corresponding descriptions are found in Example 9, which are not described herein again.

It is to be noted that, when a tubular gas chamber 210 is selected, a fourth through hole need to be provided in the fifth cover plate 26 and the gas chamber 210 such that, when the first explosion venting portion 33 of any battery cell of the plurality of battery cells 11 is broken through by flue gas in an inner cavity, gas in an inner cavity of the battery cell 11 entered the gas chamber 210 via the fourth through hole and then is discharged.

If the gas chamber 210 is in the form of a second channel, that is, the structure shown in FIGs. 30 and 13, when the fifth cover plate 26 is fixed to a top open end of the cylinder 24, the projection of an inner cavity of the second channel at a top of the battery cell completely covers all the first explosion venting portions.

A specific preparation process is similar to that in Example 9. A difference lies in that, in Step 3, the fifth cover plate 26 is hermetically welded to the top open end of the cylinder 24 to ensure that, after the first explosion venting portion 33 is broken through by the flue gas in the inner cavity, the gas in the inner cavity of the each battery cell of the plurality of battery cells 11 enters the gas chamber 210 and is discharged.

Similar to the examples hereinabove, a heat transfer connecting member 119 shown in FIGs. 11 and 32 may also be adopted to connect all the battery cells 11 in parallel.

### Example 16

As shown in FIG. 12, a difference between this example and Example 15 lies in that, a housing 21 in this example includes a U-shaped housing body 12, a first end plate 13, a second cover plate 15, and a third end plate 14, wherein the U-shaped housing body 12 and the second cover plate 15 are separately arranged.

The second cover plate 15 is provided with a gas chamber 210 extending in an x direction, with a structure being the same as that in Example 15.

A preparation process is similar to that in Example 10. A difference lies in that, in Step 2, the second cover plate 15 is hermetically welded to a top open end of the U-shaped housing body 12 to ensure that, after a first explosion venting portion 33 is broken through by flue gas in an inner cavity, gas in an inner cavity of the each battery cell of the plurality of battery cells 11 enters the gas chamber 210 and is discharged.

### Example 17

A difference between this example and Example 16 lies in that, in this example, a U-shaped housing body 12 and a second cover plate 15 are formed as an integral piece, and a structure of the integral piece is shown in FIG. 33. It may be understood that a housing 21 in this example includes a cylinder shown in FIG. 33, and a first end plate 13 and a third end plate 14, which are configured to cover two opposite open ends of the cylinder, wherein the first end plate 13 and the third end plate 14 are located in a yz plane (referring to FIG. 12).

In this example, the cylinder may be integrally formed adopting an aluminum extrusion process. Since the cylinder extends in an x direction, the open end thereof is located on the yz plane, and extrusion is performed in the x direction, the cylinder with a target length may be formed by one-time extrusion.

In order to achieve integral extrusion forming with the cylinder, the gas chamber 210 in this example may adopt the same structural form as the gas sharing chamber in Example 11. Details may be found in corresponding descriptions in Example 11, and thus are not descried herein again.

A process of preparing the high-capacity battery in this example is similar to that in Example 11. A difference lies in that, a plurality of battery cells are arranged in the cylinder shown in FIG. 33, so as to ensure that, after a first explosion venting portion 33 is broken through by flue gas in an inner cavity, gas in an inner cavity of the each battery cell of the plurality of battery cells 11 enters the gas chamber 210 and is discharged.

### Example 18

In this example, a plurality of partition plates 116 are disposed in an inner cavity of the housing 21 in Example 15 to Example 17 to divide the inner cavity into a plurality of battery cell 11 mounting cavities. Similar to Example 12, a specific structure may be shown in FIGs. 26, 16, and 17. **In** FIG. 17, a reference numeral 118 represents a horizontal beam of an 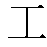 -shaped partition plate, and a reference numeral 117 represents a vertical beam of the 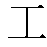 -shaped partition plate.

Example 19 to Example 23 below provide a cover plate suitable for a high-capacity battery. A high-capacity battery is manufactured by connecting a plurality of battery cells in parallel or in series. The battery cells here may be square housing batteries, or may also be a plurality of commercially-available pouch batteries connected in parallel. An inner cavity of the each battery cell of the plurality of battery cells includes an electrolyte region and a gas region. The cover plate includes a flat plate and a gas chamber disposed on the flat plate. A specific shape of the flat plate matches a shape of a top of the high-capacity battery. For example, if the battery cells are arranged in sequence in a same direction in a square housing body, the shape of the flat plate may be rectangular; and if the battery cells are arranged in a cylindrical hollow housing body in a manner of circular arrangement, the shape of the flat plate may be circular or annular. However, compared to the square housing body, it is relatively difficult to ensure the stability of the square housing battery in the cylindrical hollow housing body. Furthermore, an energy density of an energy storage device formed by such high-capacity batteries is average. However, the high-capacity battery with this structure has better heat dissipation performance. Moreover, if an annular hollow housing body is selected, a heat dissipation device may also be disposed in the middle of the annular hollow housing body, thereby further improving the heat dissipation performance of the high-capacity battery.

The following examples are mainly described in detail with respect to a rectangular flat plate adapted to the high-capacity battery formed by sequentially arranging the square housing batteries in the same direction.

For ease of description, a length direction of the flat plate (an arrangement direction of the battery cells) is defined as an x direction, a thickness direction of the flat plate (a height direction of the battery cells) is defined as a z direction, and a width direction of the flat plate (a width direction of the battery cells) is defined as a y direction.

The cover plate is fixed to the top of the high-capacity battery, and the gas chamber covers a gas port at a top of the each battery cell of the plurality of battery cells in the high-capacity battery.

It is to be noted that the gas port herein includes the following two meanings.
1) The gas port is a through hole (fifth through hole) that is directly provided in an upper cover plate of the battery cell and penetrates through an inner cavity of the battery cell.

In this case, an inner cavity of the gas chamber is in communication with a gas region of the inner cavity of the each battery cell of the plurality of battery cells via the gas port, the gas chamber serves as a gas sharing chamber for each battery cell of the plurality of battery cells, and the gas regions of all the battery cells may be in communication with each other on the basis of the gas chamber, so as to achieve a gas balance, causing a gas in each battery cell of the plurality of battery cells to be shared to ensure the consistency of the each battery cell of the plurality of battery cells, thereby improving the cycle life of the high-capacity battery to a certain extent.

2) The gas port is an explosion vent or explosion-proof port provided in the upper cover plate of the battery cell, and an explosion venting film is disposed at the explosion vent or explosion-proof port.

In this case, the gas chamber is used as an explosion venting channel. When the explosion venting film at the gas port of any battery cell of the plurality of battery cells is broken through by flue gas in the inner cavity, the flue gas in the inner cavity of the battery cell is discharged via the gas chamber, thereby improving the safety of the high-capacity battery.

The gas chamber mainly includes the following two structural forms.

First structure: the gas chamber is a hollow tube disposed on the flat plate.

At least one fourth through hole penetrating through an inner cavity of the hollow tube is provided in the flat plate and the hollow tube; an orthographic projection of the fourth through hole on the top of the high-capacity battery at least covers a partial region of the gas port at the top of the each battery cell of the plurality of battery cells.

When the cover plate is fixed to the top of the high-capacity battery, the hollow tube is located on an upper surface (a top surface of the flat plate) of the flat plate.

If the gas chamber serves as an explosion venting channel, the fourth through hole is located above the explosion venting port or explosion-proof port of the each battery cell of the plurality of battery cells, and when the explosion venting port or explosion-proof port of any battery cell of the plurality of battery cells is broken through by the flue gas in the inner cavity, the gas region of the inner cavity of the battery cell is in communication with the inner cavity of the hollow tube, and the flue gas is discharged via the hollow tube.

If the gas chamber serves as a gas sharing chamber, the fourth through hole penetrates through a through hole (the fifth through hole) at the top of the each battery cell of the plurality of battery cells, such that the inner cavity of the hollow tube is in direct communication with the gas region of the inner cavity of the each battery cell of the plurality of battery cells. It is to be noted that during operation of the high-capacity battery, two open ends of the hollow tube need to be blocked to prevent an external environment from affecting electrolyte in the inner cavity of the each battery cell of the plurality of battery cells. Furthermore, when the open end of the hollow tube is sealed using an explosion venting film or an explosion venting valve, the gas chamber may also serve as the explosion venting channel.

Second structure: the gas chamber is a second channel that is formed on the flat plate; and an orthographic projection of an inner cavity of the second channel at the top of the high-capacity battery at least covers a partial region of the gas port at the top of the each battery cell of the plurality of battery cells.

When configuring for the gas sharing chamber, the second channel may include the following two structures.
1) The second channel extending in the x direction is directly disposed on a lower surface of the flat plate, two ends of the second channel parallel to a yz plane are closed ends, that is, in the x direction, a size of the second channel is smaller than a size of the flat plate; and the corresponding second channel may be directly formed on the lower surface of the flat plate by means of milling or casting, and the structure required the flat plate to have a large size in the z direction.

When the cover plate is fixed to the top of the high-capacity battery, the open end (an open end parallel to an xy plane) of the second channel faces downward, that is, faced toward a bottom of the high-capacity battery, and the inner cavity of the second channel directly penetrates through the gas region of the inner cavity of the each battery cell of the plurality of battery cells via the through hole at the top of the each battery cell of the plurality of battery cells.

2) The flat plate protrudes toward the z direction to form the second channel, and the two ends of the second channel parallel to the yz plane are open ends, that is, in the x direction, the size of the second channel is equal to the size of the flat plate; a bending process may be adopted to bend the flat plate to form the second channel extending in the x direction, and the structure of the entire cover plate may be understood as a cover plate with an omega-shaped cross section; and this structure may also be integrally formed adopting an aluminum extrusion process.

When the cover plate is fixed to the top of the high-capacity battery, a first open end (the open end parallel to an xy plane) of the second channel faces downward, that is, faced toward a bottom of the high-capacity battery, and the inner cavity of the second channel directly penetrates through the gas region of the inner cavity of the each battery cell of the plurality of battery cells via the through hole at the top of the each battery cell of the plurality of battery cells. It is to be noted that during operation, two second open ends of the second channel parallel to the yz plane need to be blocked to prevent an external environment from affecting electrolyte in the inner cavity of the each battery cell of the plurality of battery cells. Furthermore, when the explosion venting film or explosion venting valve is mounted at the second open end of the second channel, the gas chamber may also serve as the explosion venting channel.

When such second channel serves as the explosion venting channel, the 2nd) structure hereinabove may be adopted. It is to be noted that, since the explosion venting film is disposed at the gas port of the each battery cell of the plurality of battery cells, the electrolyte in the inner cavity of the each battery cell of the plurality of battery cells is not in communication with the external environment. Therefore, during operation, the two open ends of the second channel parallel to the yz plane does not need to be blocked.

Further descriptions are made below according to the gas chambers in different structural forms and a cooperative relationship between the cover plate and different high-capacity batteries with reference to the drawings.

### Example 19

This example is described in an example of using the gas chamber 210 in the first structural form hereinabove.

A high-capacity battery in this example includes 9 battery cells 11 connected in parallel, and the number of battery cells 11 in other examples may be adjusted according to actual requirements. Nine battery cells 11 connected in parallel are arranged in an x direction in a rectangular housing, and a fifth cover plate 26 serves as a top plate of the rectangular housing. **In** order to conveniently illustrate the arrangement of the each battery cell of the plurality of battery cells 11 in the housing, FIG. 48 shows a schematic structural diagram of a high-capacity battery without mounting the fifth cover plate 26. Furthermore, for ease of description, a housing structure without the fifth cover plate 26 may be defined as a first cylinder 64.

Referring to FIG. 5, the battery cell 11 is a square housing battery, which is consistent with the examples hereinabove, and thus is not described herein again.

It is to be noted that, in this example, an electrolyte sharing chamber may also be disposed at a bottom of the first cylinder 64; and the electrolyte sharing chamber is in communication with an electrolyte region of an inner cavity of the each battery cell of the plurality of battery cells 11.

As shown in FIGs. 49 to 51, the fifth cover plate 26 covers a top of the high-capacity battery, and includes a flat plate 63 and a gas chamber 210 disposed on the flat plate.

A shape of the flat plate 63 matches a shape of the top open end of the first cylinder 64, which is a square cylinder in this example, such that the flat plate 63 is a square flat plate, an area may be slightly larger than an area of the top open end of the first cylinder 64, and the flat plate is fixed to the top open end of the first cylinder 64 by means of fusion welding; or the area may also be slightly smaller than the area of the top open end of the first cylinder 64, and the flat plate is fixed to the top open end of the first cylinder 64 by means of embedded welding.

The flat plate 63 is provided with a third through hole 112 (referring to FIGs. 50 to 51) capable of allowing an electrode terminal of the each battery cell of the plurality of battery cells 11 to extend out. After the electrode terminal of the each battery cell of the plurality of battery cells 11 extends out of the third through hole 112, the third through hole 112 is fixedly sealed with an upper cover plate of the battery cell 11, and a specific sealing manner is the same as that in the examples hereinabove.

As shown in FIGs. 50 and 31, the gas chamber 210 in this example is a hollow tube extending in a length direction of the flat plate 63, and may be formed at one time adopting an aluminum extrusion process; and a cross section of the hollow tube may be square or circular. In other examples, the hollow tube and the flat plate 63 may also be separately arranged. However, compared to an integral piece formed at one time, the processing is relatively complex.

When the hollow tube serves as a gas sharing chamber, a fifth through hole 37 penetrating through an inner cavity of the battery cell 11 need to be provided in the upper cover plate of the each battery cell of the plurality of battery cells 11 (referring to FIG. 49, it is to be noted that the fifth through hole 37 herein may be a through hole formed by directly opening an explosion vent or explosion-proof port 61 of the battery cell 11, or may also be a through hole at a position different from the explosion vent or explosion-proof port 61). A fourth through hole 410 penetrating through an inner cavity of the hollow tube in the flat plate 63 and the hollow tube. An orthographic projection of the fourth through hole 410 on the top of the high-capacity battery at least covers a partial region of the fifth through hole 37 on the top of the each battery cell of the plurality of battery cells 11. When the fifth cover plate 26 is fixed to the open end at the top of the first cylinder 64, the inner cavity of the hollow tube is in communication with a gas region in the inner cavity of the each battery cell of the plurality of battery cells 11 via the fourth through hole 410 and the fifth through hole 37. It is to be noted herein that, there may be a plurality of fourth through holes 410, and the number of fourth through holes is equal to that of the battery cells 11. The fourth through holes 410 corresponds to and penetrates through the fifth through holes 37 on a one-to-one basis. One long-strip fourth through hole 410 (as shown in FIG. 51) extending in a length direction of the hollow tube may also be directly provided in the fifth cover plate 26 and the hollow tube. A size of the fourth through hole 410 need to ensure that the fourth through hole 410 penetrates through the fifth through holes 37 of all the battery cells 11 when the fifth cover plate 26 is fixed to the top open end of the first cylinder 64. Alternatively, the plurality of fourth through holes with the number different from the battery cells may also be adopted, and each fourth through hole may penetrate through the fifth through holes in at least two battery cells.

An exhaust valve and an explosion venting film may be disposed on the hollow tube, or only the exhaust valve is disposed. The exhaust valve may be opened manually or automatically; and the exhaust valve is opened periodically, and gas in the gas region of the each battery cell of the plurality of battery cells 11 may be discharged after passing through the hollow tube and the exhaust valve. When the explosion venting film is disposed, the exhaust valve and the explosion venting film are located at two ends of the hollow tube, the explosion venting film is configured to allow thermal runaway flue gas to break through and be discharged from the hollow tube when thermal runaway occurred in any battery cell of the plurality of battery cells 11, such that such high-capacity batteries have high safety performance.

The high-capacity battery hereinabove with the fifth cover plate 26 may be prepared by the following processes, in an example of using the gas chamber 210 a gas sharing chamber.

At Step 1, a housing is processed, wherein the housing includes the first cylinder 64 and the fifth cover plate 26.

The first cylinder 64 may be formed by the following method.
1) A cylindrical member of which top and bottom are open is integrally formed adopting an aluminum extrusion process, then the fourth cover plate 25 configured to cover the bottom open end is processed and hermetically fixed to the bottom open end of the cylindrical member to form the first cylinder 64, as shown in FIG. 52, a partition plate is disposed in the cylinder in FIG. 52, and a specific structure of the partition plate is introduced in detail in subsequent examples.
2) The first cylinder 64 with the open top is integrally formed adopting a die-casting or stamping process.
3) A U-shaped housing body 12 (as shown in FIG. 53) is integrally formed adopting the aluminum extrusion process or a bending process; a length direction of the U-shaped housing body 12 is defined as the x direction, a width direction is defined as a y direction, and a height direction is defined as a z direction; and a U-shaped upper cover plate is an open end, and two ends parallel to a yz plane are open ends; then side cover plates configured to cover the two opposite open ends are processed, and hermetically fixed to the two opposite open ends of the U-shaped housing body 12 to form the first cylinder 64 (it is to be noted that, in the subsequent Step 2, the plurality of battery cells 11 with sealing assemblies at the fifth through holes 37 are arranged in the U-shaped housing body 12, and then the side cover plates may also be hermetically fixed to the two opposite open ends of the U-shaped housing body 12).

At Step 2, capacity grading and sorting is performed to screen out the plurality of battery cells 11 meeting requirements; the fifth through hole 37 is provided at the top of the each battery cell of the plurality of battery cells 11 and then sealed using the sealing assembly; and it is to be noted that, the fifth through hole 37 herein may also be a through hole formed by directly opening the explosion vent or explosion-proof port 61. The plurality of battery cells 11 with the sealing assemblies at the fifth through holes 37 are arranged in the first cylinder 64; the fifth cover plate 26 is hermetically welded to the top open end of the first cylinder 64 to ensure that the gas region of the inner cavity of the each battery cell of the plurality of battery cells 11 is in communication with the hollow tube after the sealing assembly is opened by an external force or electrolyte itself; and the sealing assembly may adopt sealing assemblies disclosed in Chinese patents CN218525645U and CN218525614U. The third through hole 112 is fixedly sealed with the battery cell 11. A specific sealing manner is the same as that in the examples hereinabove, and thus is not described herein again.

In Step 2, the fixed sealing of the third through hole 112 and the upper cover plate of the battery cell 11 may also be completed first, and then the flat plate 63 is hermetically welded to the top open end of the first cylinder 64. In other examples, the flat plate 63 and the top open end of the first cylinder 64 may also be fixed by means of adhesive bonding or screw connection. However, the sealing performance or connection reliability is relatively weak compared to a welding manner.

At Step 3, the sealing assembly is opened using the external force or the electrolyte itself (the sealing assembly may be opened by extending an unpacking tool into the gas chamber from the open end of one end of the hollow tube, or the sealing assembly is opened by injecting the electrolyte from the open end), and the inner cavity of the hollow tube is in communication with the gas region of the inner cavity of the each battery cell of the plurality of battery cells 11. It is to be noted that during operation of the high-capacity battery, two open ends of the hollow tube need to be blocked.

Then, all the battery cells 11 are connected in parallel or in series. In other examples, each battery cell of the plurality of battery cells 11 may be connected in parallel or in series between Step 2 and Step 3.

Specifically, a heat transfer connecting member 119 shown in FIGs. 11 and 54 may be adopted to connect all the battery cells 11 in parallel, and a structure of the heat transfer connecting member 119 is the same as that in the examples hereinabove, and thus is not described herein again.

When the hollow tube serves as an explosion venting channel, there is no need to provide the fifth through hole 37 penetrating the inner cavity of the each battery cell of the plurality of battery cells 11 in the upper cover plate of the each battery cell of the plurality of battery cells 11, but the fourth through hole 410 corresponding to the explosion vent or explosion-proof port 61 need to be provided in the flat plate 63 and the hollow tube. The orthographic projection of the fourth through hole 410 on the top of the high-capacity battery at least covers a partial region of the explosion vent or explosion-proof port 61 on the top of the each battery cell of the plurality of battery cells 11. When the explosion vent or explosion-proof port 61 of any battery cell of the plurality of battery cells 11 is broken through by flue gas in the inner cavity, the inner cavity of the battery cell 11 is in communication with a gas region of the inner cavity of the hollow tube via the fourth through hole 410.

Differences between this preparation process and the preparation process hereinabove lies in that,
in Step 2, there is no need to provide the fifth through hole 37 at the top of the each battery cell of the plurality of battery cells 11; the plurality of battery cells 11 meeting the requirements are directly arranged in the first cylinder 64; the fifth cover plate 26 is hermetically welded to the top open end of the first cylinder 64 such that the explosion vent or explosion-proof port 61 of the each battery cell of the plurality of battery cells 11 corresponds to the fourth through hole 410, so as to ensure that the explosion vent or explosion-proof port 61 penetrates through the fourth through hole 410 after the explosion vent or explosion-proof port 61 is broken through by the flue gas in the inner cavity.

### Example 20

A difference between this example and Example 19 lies in that, a gas chamber 210 in this example adopts the second structural form hereinabove, which is a second channel that is formed on a flat plate; and an orthographic projection of an inner cavity of the second channel at a top of a high-capacity battery at least covers a partial region of a gas port at a top of the each battery cell of the plurality of battery cells.

As shown in FIG. 13, the flat plate 63 is bent to form the second channel extending in an x direction as a gas chamber 210, and two ends of the second channel parallel to a yz plane are open ends. It is to be noted that, during operation of the high-capacity battery, when the gas chamber 210 serves as a gas sharing chamber, the two open ends of the second channel parallel to the yz plane need to be sealed. In FIG. 13, a structure of an entire fifth cover plate 26 may be understood as a cover plate with an omega-shaped cross section, which may be formed at one time adopting a bending process or an aluminum extrusion process. For ease of description, the cover plate may be divided into three portions, including a first sub-cover plate and a second sub-cover plate, which are located on a same plane, as well as a U-shaped hollow member is located between the first sub-cover plate and the second sub-cover plate (the U-shaped hollow member is the second channel, configuring for the gas chamber 210). Two side plates of the U-shaped hollow member are respectively connected to the first sub-cover plate and the second sub-cover plate. The first sub-cover plate and the second sub-cover plate are provided with third through holes 112. Similar to the first structure, the third through hole 112 corresponds to an electrode terminal of the each battery cell of the plurality of battery cells 11 in the high-capacity battery on a one-to-one basis, and an orthographic projection of the third through hole 112 at the top of the high-capacity battery covers the corresponding electrode terminal. When the fifth cover plate 26 is fixed to the top of the high-capacity battery, the electrode terminal of the each battery cell of the plurality of battery cells 11 extends out of the corresponding third through hole 112.

When the gas chamber serves as the gas sharing chamber, the corresponding second channel may also be directly formed on a lower surface of the flat plate by means of milling or casting to serve as the gas chamber 210, and in this case, the two ends of the second channel parallel to the yz plane are closed ends.

The fifth cover plate 26 in this example does not need to be provided with a fourth through hole 410. When the fifth cover plate 26 is fixed to the top of the high-capacity battery, if the U-shaped hollow member serves as an explosion venting channel, the U-shaped hollow member is located above an explosion vent or explosion-proof port 61 of the each battery cell of the plurality of battery cells 11. When the explosion vent or explosion-proof port 61 of any battery cell of the plurality of battery cells 11 is broken through by flue gas in an inner cavity, a gas region of the inner cavity of the battery cell 11 is in communication with an inner cavity of the U-shaped hollow member, and the flue gas is discharged via the U-shaped hollow member.

If the U-shaped hollow member serves as the gas sharing chamber, the inner cavity of the U-shaped hollow member is in direct communication with the gas region of the inner cavity of the each battery cell of the plurality of battery cells 11 via a fifth through hole 37 in an upper cover plate of the each battery cell of the plurality of battery cells 11.

### Example 21

A fifth cover plate 26 in this example is the same as that in Example 19 or Example 20. A difference between this example and Example 19 and Example 20 lies in that the fifth cover plate 26 in this example and the U-shaped housing body 12 in Example 19 are formed as an integral piece, configured to form a cylindrical member shown in FIG. 33. For ease of description, two side cover plates configured to cover two opposite open ends of the integral piece hereinabove may respectively be defined as a first end plate 13 and a third end plate 14; and the first end plate 13 and the third end plate 14 are located in a yz plane (referring to FIG. 12).

A high-capacity battery in this example may be prepared by the following processes, in an example of using the gas chamber 210 as the gas sharing chamber.

At Step 1, the cylindrical member shown in FIG. 33, the first end plate 13, and the third end plate 14 are processed.

The cylindrical member with two opposite open ends shown in FIG. 33 is integrally formed adopting an aluminum extrusion process. The cylindrical member extended in an x direction, and the open ends are parallel to a yz plane. Since the cylindrical member extended in the x direction, the open ends are parallel to the yz plane, and extrusion is performed in the x direction, such that the cylindrical member meeting a target length may be formed by one-time extrusion. Furthermore, during extrusion, the gas chamber 210 may be simultaneously formed by means of extrusion.

At Step 2, capacity grading and sorting is performed to screen out a plurality of battery cells 11 meeting requirements; a fifth through hole 37 is provided in an upper cover plate of the battery cell 11 and then sealed using a sealing assembly; the plurality of battery cells 11 with the sealing assemblies are arranged in the cylindrical member in Step 1 to ensure that a gas region of an inner cavity of the each battery cell of the plurality of battery cells 11 is in communication with an inner cavity of the gas chamber 210 after the sealing assembly is opened by an external force or electrolyte itself; and the sealing assembly may adopt sealing assemblies disclosed in Chinese patents CN218525645U and CN218525614U. An electrode terminal of the each battery cell of the plurality of battery cells 11 extends out of the corresponding third through hole 112 in the fifth cover plate 26, and a region around the third through hole 112 is welded to a housing body portion of a region around the electrode terminal to achieve sealing. It is to be noted herein that, in order to ensure that each battery cell of the plurality of battery cells 11 may be smoothly arranged in the cylindrical member shown in FIG. 33, a minimum size of the cylindrical member in a z direction need to be greater than a size of the battery cell 11 in the z direction. Moreover, in order to ensure that the electrode terminal of the each battery cell of the plurality of battery cells 11 may extend out of the third through hole 112 in the fifth cover plate 26, a support rib need to be added at a bottom of the each battery cell of the plurality of battery cells 11.

The plurality of battery cells 11 with the sealing assemblies may be arranged in the cylindrical member in Step 1 by the following three manners.
1) A long-strip equal-height support rib is selected.

The plurality of battery cells 11 are fixed as an integral body, and pushed into an inner cavity of the cylindrical member from any open end of the cylindrical member; in this case, the bottom of the each battery cell of the plurality of battery cells 11 is in contact with the bottom of the cylindrical member, and the electrode terminal of the each battery cell of the plurality of battery cells 11 corresponds to the corresponding third through hole 112, but does not extend out of the third through hole 112; then, the plurality of battery cells 11 are supported, using a tooling, from the bottom to separate the bottom of the each battery cell of the plurality of battery cells 11 from the bottom of the cylindrical member, wherein the electrode terminal of the each battery cell of the plurality of battery cells 11 extends out of the corresponding third through hole 112; and then, the long-strip equal-height support rib is inserted in the x direction, and the tooling is removed.

2) A plurality of cushion blocks corresponding to the plurality of battery cells 11 on a one-to-one basis are selected as the support ribs.

The plurality of battery cells 11 are sequentially pushed into the inner cavity of the cylindrical member from any open end of the cylindrical member, and after each battery cell of the plurality of battery cells 11 is pushed in place, the cushion block need to be inserted between the bottom of the each battery cell of the plurality of battery cells and the bottom of the cylindrical cylinder to ensure that the electrode terminal of the battery cell 11 completely extends out of the corresponding third through hole 112.

3) Each battery cell of the plurality of battery cells 11 is inverted and pushed into the inner cavity of the cylindrical member.

The cylindrical member is flipped to cause the top of the cylindrical member to face downward, the plurality of battery cells 11 are fixed as an integral body and pushed into the inner cavity of the cylindrical member from any open end of the cylindrical member; or the plurality of battery cells 11 are sequentially pushed into the inner cavity of the cylindrical member from any open end of the cylindrical member, wherein the electrode terminal of the each battery cell of the plurality of battery cells 11 extends out of the corresponding third through hole 112 under the action of gravity, and the support rib is inserted between the bottom of the each battery cell of the plurality of battery cells 11 and the bottom of the cylindrical member; and the cylindrical member is flipped to cause the top of the cylindrical member to face upward.

At Step 3, the first end plate 13 and the third end plate 14 are welded to the other two opposite open ends of the U-shaped housing body 12.

At Step 4, the sealing assembly is opened by using the external force, and an inner cavity of the gas sharing chamber penetrates through the gas region of the inner cavity of the each battery cell of the plurality of battery cells 11.

### Example 22

This example provides a high-capacity battery, including the high-capacity battery in the examples hereinabove. A structure of the high-capacity battery may be referenced in FIGs. 12 and 54. The high-capacity battery includes a housing and a plurality of battery cells 11 connected in parallel. The plurality of battery cells 11 connected in parallel are arranged in the housing in an x direction. The fifth cover plate 26 in the examples hereinabove serves as a portion of the housing. The specific structure of the high-capacity battery has been described in detail in the corresponding examples hereinabove, and thus is not described herein again.

In this example, a plurality of partition plates 116 are disposed in an inner cavity of the housing of the high-capacity battery hereinabove with the housing, so as to divide the inner cavity into a plurality of battery cell 11 mounting cavities.

A specific structure is shown in FIGs. 26, 34, 35, and 17. One battery cell 11 is fixed in each of the plurality of battery cell 11 mounting cavities; for each battery cell of the plurality of battery cells 11 near a middle portion, the side walls on two sides of the battery cell are in contact with the partition plate 116; and for the two battery cells 11 near the outermost side, one side wall is in contact with the partition plate 116, and the other side wall is in contact with a side wall of a first cylinder 64. In a first aspect, the mounting stability of the each battery cell of the plurality of battery cells 11 in the housing body may be improved. In a second aspect, the occurrence of a problem of reduced cycling performance of a high-capacity battery caused by the swelling of the each battery cell of the plurality of battery cells 11 may be prevented. In a third aspect, heat generated during the charging and discharging of the each battery cell of the plurality of battery cells 11 may be transferred to the outside via the partition plate 116, thereby reducing a risk of thermal runaway. In a fourth aspect, the strength of the first cylinder 64 may also be improved.

Two or more battery cells 11 may also be fixed in each of the plurality of battery cell 11 mounting cavities.

FIG. 26 shows the partition plate 116 added in a cylindrical member of which top and bottom are open. The partition plate 116 and the cylindrical member may be integrally extruded. Since an extrusion direction is a z direction, when a length of the cylindrical member in the x direction is too long to be completed by one-time extrusion, two or more sub-square first cylinders 64 that are open at a top and a bottom may be extruded first and then the sub-square first cylinders 64 are spliced and then connected to form the square cylindrical member with a required size through welding.

In order to ensure the load-bearing capacity of the first cylinder 64, a plurality of reinforcing ribs 211 extending in a height direction and arranged in a length direction may also be arranged on the side wall of the first cylinder 64. From the figure, it may be seen that each reinforcing rib 211 is located at a middle position of a side wall of the battery cell 11 mounting cavity.

FIGs. 34 and 35 show the partition plate 116 added in the U-shaped housing body 12 in Example 19 and Example 21. The partition plate 116 may also adopt an 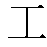 -shaped partition plate 116 shown in FIG. 17. A vertical beam 117 of the 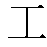 -shaped partition plate 116 is parallel to a first end plate 13 and a third end plate 14, and is in contact with side walls of two adjacent battery cells of the plurality of battery cells 11 located on a yz plane. One horizontal beam 118 of the 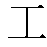 -shaped partition plate 116 is in contact with side walls of the two battery cells 11 located on an xz plane, and the other horizontal beam 118 of the 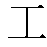 -shaped partition plate 116 is in contact with the other side walls of the two battery cells 11 located on the xz plane. The stability of the each battery cell of the plurality of battery cells 11 in the battery cell 11 mounting cavity may be improved by adding the 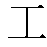 -shaped partition plate 116.

### Example 23

As shown in FIG. 55, a difference between this example and Example 22 lies in that a high-capacity battery in this example does not include a first cylinder 64. Each battery cell of the plurality of battery cells 11 in the high-capacity battery is arranged in an x direction. A fifth cover plate 26 covers a top of the high-capacity battery and is fixedly connected to an upper cover plate of the each battery cell of the plurality of battery cells 11. The fifth cover plate 26 in this example may further include two side plates parallel to an xz plane, and the two side plates are respectively fixedly connected to two edges of a flat plate 63 extending in the x direction.

When a gas chamber 210 serves as a gas sharing chamber to communicate a gas region of the each battery cell of the plurality of battery cells 11 constituting the high-capacity battery, a fifth through hole 37 penetrating through an inner cavity of the each battery cell of the plurality of battery cells 11 need to be provided in the upper cover plate of the each battery cell of the plurality of battery cells 11. In order to ensure that electrolyte in the inner cavity of the each battery cell of the plurality of battery cells 11 is not affected by an external environment, when the fifth cover plate 26 is fixed to the top of the high-capacity battery, it need to ensure that the fifth cover plate 26 may isolate the communication between the fifth through hole 37 and the external environment. In Example 22, the fifth cover plate 26 covers a top open end of the first cylinder 64 and is hermetically welded to the top open end of the first cylinder 64, such that the problem may be overcome. The high-capacity battery in this example does not include the first cylinder 64, and the fifth cover plate 26 is fixedly connected to the upper cover plate of the each battery cell of the plurality of battery cells 11. Since a gap is inevitably present between the adjacent battery cells 11, and if the fifth cover plate 26 is directly welded to the upper cover plate of the each battery cell of the plurality of battery cells 11, the sealing between the fifth cover plate 26 and the upper cover plate of the each battery cell of the plurality of battery cells 11 may not be ensured due to the presence of the gap, thus failing to isolate the fifth through hole 37 from the external environment. Based on this, in this example, the gas chamber 210 is designed as a split structure, including a long-strip member with a U-shaped cross section and a sub-cover plate covering an open end of the long-strip member. Fourth through holes 410 corresponding to the fifth through holes 37 of the battery cells 11 on a one-to-one basis are provided at a bottom of the U-shaped long-strip member and the flat plate 63, and an orthographic projection of each fourth through hole 410 at the top of the corresponding battery cell 11 completely covers the fifth through hole 37 at the top of the battery cell 11.

Such high-capacity batteries may be prepared by the following processes.

At Step 1, the fifth cover plate 26 is processed.

The flat plate 63 (as shown in FIG. 56) with the U-shaped long-strip member 618 is integrally formed adopting an aluminum extrusion process, and then the sub-cover plate configured to cover the top open end of the U-shaped long-strip member 618 is processed.

The flat plate 63 with the U-shaped long-strip member 618 is provided with the plurality of fourth through holes penetrating through an inner cavity of the U-shaped long-strip member 618.

At Step 2, capacity grading and sorting is performed to screen out the plurality of battery cells 11 meeting requirements; the fifth through hole 37 is provided at the top of the each battery cell of the plurality of battery cells 11 and then sealed using a sealing assembly; and the sealing assembly may adopt sealing assemblies disclosed in Chinese patents CN218525645U and CN218525614U.

At Step 3, the flat plate 63 with the U-shaped long-strip member 618 is positioned at the top of the each battery cell of the plurality of battery cells 11 such that each fourth through hole corresponds to each fifth through hole 37 on a one-to-one basis; a welding head extends into an edge portion of the fourth through hole from the top open end of the U-shaped long-strip member 618, so as to hermetically weld an edge of each fourth through hole to the upper cover plate of the corresponding battery cell 11; the fifth through hole 37 of the each battery cell of the plurality of battery cells 11 penetrates through the corresponding fourth through hole; and the sub-fifth cover plate 26 is hermetically welded to the top open end of the U-shaped long-strip member 618. The third through hole 112 is fixedly sealed with the upper cover plate of the battery cell 11, and a specific sealing manner is the same as that in the examples hereinabove. Then, the flat plate 63 may be welded to the upper cover plate of the each battery cell of the plurality of battery cells 11, thereby improving the strength of the entire structure.

At Step 4, the sealing assembly is opened by using an external force or electrolyte itself, and an inner cavity of the gas chamber 210 is in communication with a gas region of the inner cavity of the each battery cell of the plurality of battery cells 11.

Then, a busbar same as that in the examples may be adopted to connect all the battery cells 11 in parallel or in series. In other examples, each battery cell of the plurality of battery cells 11 may be connected in parallel or in series between Step 3 and Step 4.

In this example, the gas chamber 210 is designed as a split member, wherein one portion is the U-shaped long-strip member 618 with one open end, and the other portion is the sub-cover plate covering the open end. The fourth through hole is provided at the bottom of the U-shaped long-strip member 618 opposite to the open end. During specific welding, the welding head extends from the open end to weld the edge of the fourth through hole to the upper cover plate of the each battery cell of the plurality of battery cells 11, such that the fourth through hole penetrates through the fifth through hole 37, and the connection between the fifth cover plate 26 and the high-capacity battery is preliminarily and simultaneously completed. Finally, the sub-cover plate is welded to the open end, and the flat plate 63 is welded to the upper cover plate of the each battery cell of the plurality of battery cells 11, thereby completing the connection between the fifth cover plate 26 and the high-capacity battery. In this example, during welding, the welding head extends from the open end of the U-shaped long-strip member 618 without any obstruction, such that the welding between the edge of the fourth through hole and the upper cover plate of the each battery cell of the plurality of battery cells 11 may be completed at one time. Therefore, the process is simple, and a sealing effect is good, thereby ensuring that the electrolyte in the inner cavity of the each battery cell of the plurality of battery cells 11 is completely isolated from the external environment.

It is to be noted that the welding head described herein referred to a member of a welding device that extends into a portion to be welded. If arc welding or argon arc welding is adopted, the welding head herein referred to an end portion of a welding rod; and if laser welding is adopted, the welding head herein referred to a laser beam.

Example 24 to Example 29 provided a cover plate suitable for a high-capacity battery. A high-capacity battery is manufactured by connecting a plurality of battery cells in parallel. The battery cells here may be square housing batteries, or may also be a plurality of commercially-available pouch batteries connected in parallel. An inner cavity of the each battery cell of the plurality of battery cells includes an electrolyte region and an electrolyte region. The cover plate includes a flat plate, and an electrolyte sharing chamber that is disposed on the flat plate and configures to communicate electrolyte in the electrolyte region of the inner cavity of the each battery cell of the plurality of battery cells. A specific shape of the flat plate matches a shape of a bottom of the high-capacity battery. For example, if the battery cells are arranged in sequence in a same direction in a square housing body, the shape of the flat plate may be rectangular; and if the battery cells are arranged in a cylindrical hollow housing body or an annular hollow housing body in a manner of circular arrangement, the shape of the flat plate may be circular or annular. However, compared to the square housing body, it is relatively difficult to ensure the stability of the square housing battery in the cylindrical hollow housing body. Furthermore, an energy density of an energy storage device formed by such high-capacity batteries is average. However, the high-capacity battery with this structure has better heat dissipation performance. Moreover, if an annular hollow housing body is selected, a heat dissipation device may also be disposed in the middle of the annular hollow housing body, thereby further improving the heat dissipation performance of the high-capacity battery.

The following is mainly described in detail with respect to a rectangular flat plate adapted to the high-capacity battery formed by sequentially arranging the square housing batteries in the same direction.

For ease of description, a length direction of the flat plate (an arrangement direction of the battery cells) is defined as an x direction, a thickness direction of the flat plate (a height direction of the battery cells) is defined as a z direction, and a width direction of the flat plate (a width direction of the battery cells) is defined as a y direction.

The embodiment fixed the cover plate at the bottom of the high-capacity battery. The electrolyte region of the each battery cell of the plurality of battery cells constituting the high-capacity battery may be communicated with each other via the electrolyte sharing chamber, such that the electrolyte in each battery cell of the plurality of battery cells is shared to ensure the consistency of the each battery cell of the plurality of battery cells, thereby improving the cycle life of the high-capacity battery to a certain extent.

The electrolyte sharing chamber mainly includes the following two structural forms.

First structure: the electrolyte sharing chamber is a hollow tube disposed on the flat plate.

At least one second through hole penetrating through an inner cavity of the hollow tube is provided in the flat plate and the hollow tube; an orthographic projection of the second through hole at the bottom of the high-capacity battery at least covers a partial region of a first through hole in a lower cover plate of the each battery cell of the plurality of battery cells.

When the cover plate is fixed to the bottom of the high-capacity battery, the hollow tube is located on a lower surface of the flat plate (i.e., the hollow tube is located on the surface of the flat plate away from each battery cell of the plurality of battery cells), and the second through hole hereinabove penetrates through the first through hole in the lower cover plate of the each battery cell of the plurality of battery cells, such that the inner cavity of the hollow tube is in direct communication with the electrolyte region of the inner cavity of the each battery cell of the plurality of battery cells. It is to be noted that, during operation, two open ends of the hollow tube need to be blocked to prevent an external environment from affecting the electrolyte in the inner cavity of the each battery cell of the plurality of battery cells.

Second structure: the electrolyte sharing chamber is a first channel that is formed on the flat plate; and an orthographic projection of an inner cavity of the first channel at the bottom of the high-capacity battery at least covers the partial region of the first through hole in the lower cover plate of the each battery cell of the plurality of battery cells.

Such first channels may include the following three structures.
1) A groove extending in an x direction is directly provided on an upper surface of the flat plate to serve as the first channel.
   1) Two ends of the first channel parallel to a yz plane are closed ends, that is, in the x direction, a size of the first channel is smaller than a size of the flat plate; and the corresponding first channel may be directly formed on the upper surface of the flat plate by means of milling or casting, and the structure requires the flat plate to have a large size in the z direction.

When the cover plate is fixed to the bottom of the high-capacity battery, an open end of the first channel faces upward, that is, faces toward the top of the high-capacity battery, and the inner cavity of the first channel penetrates through the first through hole in the lower cover plate of the each battery cell of the plurality of battery cells, such that the inner cavity of the first channel is in direct communication with the electrolyte region of the inner cavity of the each battery cell of the plurality of battery cells.

2) The flat plate protrudes toward the z direction to form the first channel extending in the x direction, and the two ends of the first channel parallel to the yz plane are open ends, that is, in the x direction, the size of the first channel is equal to the size of the flat plate; a bending process may be adopted to bend the flat plate to form the first channel extending in the x direction, and the structure of the entire cover plate may be understood as a cover plate with an omega-shaped cross section; and this structure may also be integrally formed adopting an aluminum extrusion process.

When the cover plate is fixed to the bottom of the high-capacity battery, the open end (the open end parallel to an xy plane) of the first channel faces upward, and the inner cavity of the first channel penetrates through the first through hole in the lower cover plate of the each battery cell of the plurality of battery cells, such that the inner cavity of the first channel is in direct communication with the electrolyte region of the inner cavity of the each battery cell of the plurality of battery cells. It is to be noted that during operation, two open ends (open ends parallel to the yz plane) of the first channel need to be blocked to prevent an external environment from affecting electrolyte in the inner cavity of the each battery cell of the plurality of battery cells.

3) At least two first support ribs extending in the x direction are arranged on the upper surface of the flat plate, and the two first support ribs and a flat plate region are located between the two first support ribs formed the first channel extending in the x direction.

When the cover plate is fixed to the bottom of the high-capacity battery, top surfaces of the two first support ribs are in contact with the lower cover plate of the each battery cell of the plurality of battery cells, and the inner cavity of the first channel penetrates through the first through hole in the lower cover plate of the each battery cell of the plurality of battery cells, such that the inner cavity of the first channel is in direct communication with the electrolyte region of the inner cavity of the each battery cell of the plurality of battery cells. It is to be noted that during operation, two open ends (open ends parallel to the yz plane) of the first channel need to be blocked to prevent an external environment from affecting electrolyte in the inner cavity of the each battery cell of the plurality of battery cells.

It is to be noted herein that the electrolyte sharing chamber hereinabove serves as an electrolyte accommodating cavity, which need to ensure, after in communication with the electrolyte region of the inner cavity of the each battery cell of the plurality of battery cells, electrolyte in the entire high-capacity battery is not in contact with an external environment.

The embodiment is further described below according to the electrolyte sharing chambers in different structural forms, the cover plate, and a cooperative relationship between the cover plate and different high-capacity batteries with reference to the drawings and specific examples.

### Example 24

This example is described in an example of using the electrolyte sharing chamber 27 in the first structural form hereinabove.

A high-capacity battery in this example includes 9 battery cells 11 connected in parallel, and the number of battery cells 11 in other examples may be adjusted according to actual requirements. Nine battery cells 11 connected in parallel are arranged in an x direction in a rectangular housing, and a cover plate serves as a bottom plate of the rectangular housing. In order to conveniently illustrate the arrangement of the each battery cell of the plurality of battery cells 11 in the housing, FIG. 57 shows a schematic structural diagram of a high-capacity battery without mounting the cover plate. Furthermore, for ease of description, a housing structure without the cover plate may be defined as a second cylinder 74.

Referring to FIG. 5, the battery cell 11 is a square housing battery, and includes an upper cover plate, a lower cover plate, a cylinder, and a battery cell assembly; the battery cell assembly herein may also be referred to as an electrode assembly, which is assembled, adopting a stacking or winding process, by sequentially arranging a positive electrode terminal, a diaphragm, and a negative electrode terminal. The upper cover plate, the cylinder, and the lower cover plate form a housing body of the battery cell 11, and the battery cell assembly is disposed in the housing body of the battery cell 11.

It is to be noted that, in this example, a top of the second cylinder 74 is a closed end, and a third through hole capable of allowing an electrode terminal of the each battery cell of the plurality of battery cells 11 to extend out need to be provided at the top of the second cylinder 74; and after the electrode terminal of the each battery cell of the plurality of battery cells 11 extends out of the third through hole, the third through hole is fixedly sealed with a housing body of the battery cell 11.

A gas chamber may also be disposed at the top of the second cylinder 74. The gas chamber may serve as a gas sharing chamber, which is in communication with a gas region of an inner cavity of the each battery cell of the plurality of battery cells 11, or may also serve as an explosion venting channel, which covers an upper part of a first explosion venting portion of the each battery cell of the plurality of battery cells 11. The first explosion venting portion hereinabove includes an explosion vent or explosion-proof port, etc. that is provided at the top of the battery cell 11 and provided with an explosion venting film.

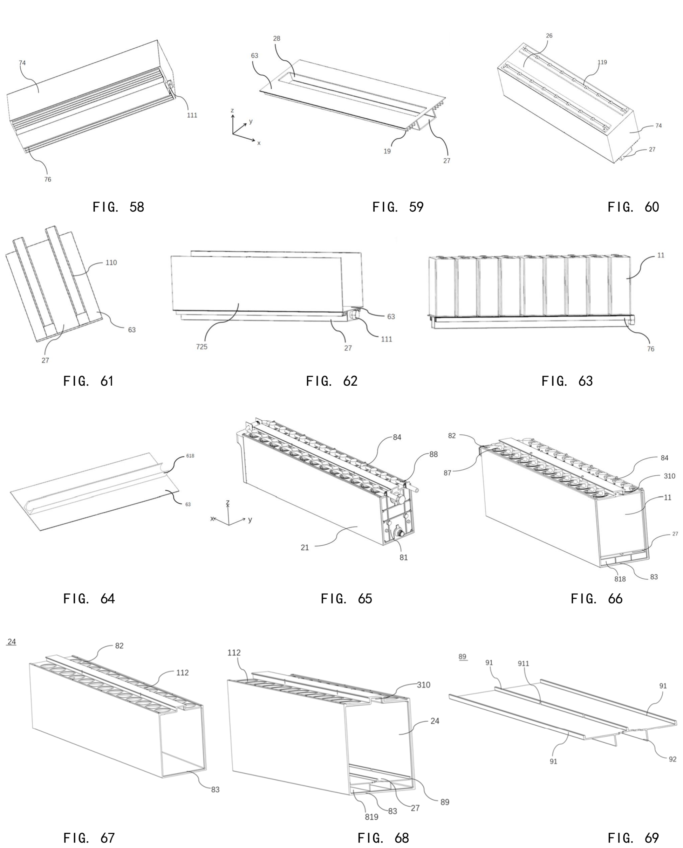

As shown in FIGs. 58, 59, and 6, the cover plate 76 covers the bottom of the high-capacity battery. The cover plate in this example includes a flat plate 63 and an electrolyte sharing chamber 27 provided on the flat plate 63.

A shape of the flat plate 63 matches a shape of a bottom open end of the second cylinder 74, which is a square second cylinder 74 in this example, such that the flat plate 63 is a square flat plate 63, an area may be slightly larger than an area of the bottom open end of the second cylinder 74, and the flat plate is fixed to the bottom open end of the second cylinder 74 by means of fusion welding; or the area may also be slightly smaller than the area of the bottom open end of the second cylinder 74, and the flat plate is fixed to the bottom open end of the second cylinder 74 by means of embedded welding.

As shown in FIGs. 59 and 6, in this example, the flat plate 63 is provided with a hollow tube extending in a length direction of the flat plate 63, and a second through hole 28 penetrating through an inner cavity of the hollow tube is provided in the hollow tube and the flat plate; and the hollow tube serves as an electrolyte sharing chamber 27. The flat plate 63 and the hollow tube may be formed as an integral piece, and may be formed at one time adopting an aluminum extrusion process; and a cross section of the hollow tube may be square (as shown in FIG. 59) or circular (as shown in FIG. 6). In other examples, the hollow tube and the flat plate 63 may also be separately arranged. However, compared to an integral piece formed at one time, the processing is relatively complex.

The lower cover plate of the each battery cell of the plurality of battery cells 11 is provided a first through hole 416 (as shown in FIG. 57) penetrating through the inner cavity of the battery cell 11. An orthographic projection of the second through hole 28 at the bottom of the high-capacity battery at least covers a partial region of the first through hole 416 in the lower cover plate of the each battery cell of the plurality of battery cells 11. When the cover plate is fixed to the bottom open end of the second cylinder 74, an inner cavity of the hollow tube is in communication with an electrolyte region of the inner cavity of the each battery cell of the plurality of battery cells 11 via the second through hole 28 and the first through hole 416. It is to be noted herein that, there may be a plurality of second through holes 28 (as shown in FIG. 6), and the number of the second through holes is equal to that of the battery cells 11. The second through holes 28 corresponds to and penetrates through the first through holes 416 on a one-to-one basis. One long-strip second through hole 28 (as shown in FIG. 59) extending in a length direction of the hollow tube may also be directly provided in the cover plate and the hollow tube. A size of the second through hole 28 need to ensure that the second through hole 28 penetrates through the first through holes 416 of all the battery cells 11 when the cover plate is fixed to the bottom open end of the second cylinder 74. The plurality of second through holes 28 with the number different from that of the battery cells may also be adopted, and each second through hole 28 may penetrate through the first through holes 416 in at least two battery cells.

The high-capacity battery hereinabove with the cover plate may be prepared by the following processes.

At Step 1, a housing is processed, wherein the housing includes the second cylinder 74 and the cover plate.

The second cylinder 74 may be formed by the following method.

A cylindrical member of which top and bottom are open is integrally formed adopting an aluminum extrusion process, and then a fifth cover plate 26 configured to cover the top open end is processed. It is to be noted that the fifth cover plate 26 need to be provided with the third through hole capable of allowing an electrode terminal of the each battery cell of the plurality of battery cells 11 to extend out.

The cover plate 76 may be formed adopting the aluminum extrusion process to form the flat plate 63 and the hollow tube, and the second through hole 28 penetrating through the inner cavity of the hollow tube is provided in the flat plate 63 and the hollow tube.

At Step 2, the cover plate is hermetically welded to the bottom open end of cylindrical member.

At Step 3, capacity grading and sorting is performed to screen out the plurality of battery cells 11 meeting requirements; the first through hole 416 is provided in the lower cover plate of the each battery cell of the plurality of battery cells 11 and then sealed using a sealing assembly; the plurality of battery cells 11 with the sealing assemblies at the first through holes 416 are arranged in the cylindrical member in Step 2 to ensure that the electrolyte region of the inner cavity of the each battery cell of the plurality of battery cells 11 is in communication with the inner cavity of the hollow tube after the sealing assembly is opened by an external force or electrolyte itself; and the sealing assembly may adopt sealing assemblies disclosed in Chinese patents CN218525645U and CN218525614U. The fifth cover plate 26 is hermetically welded to the top open end of the cylindrical member to ensure that the electrode terminal of the each battery cell of the plurality of battery cells 11 extends out of the third through hole, and the third through hole is fixedly sealed with the upper cover plate of the battery cell 11.

An edge of the third through hole may be directly welded to the upper cover plate of the battery cell 11 in a region around the electrode terminal to achieve sealing.

If a size of the each battery cell of the plurality of battery cells 11 in a z direction is not entirely identical, a problem of false welding or even inability to weld may occur between the third through holes in the housing bodies of part of the battery cells 11 with smaller sizes in the z direction and the housing of the high-capacity battery, making it difficult to ensure sealing performance between the third through hole and the housing body of the battery cell.

In order to overcome such problems, a weak portion may be provided in a region around the third through hole. During welding, differences in the size of the each battery cell of the plurality of battery cells in the z direction may be compensated by means of deformation of the weak portion, causing the electrode terminals of all the battery cells 11 to extend out of the third through hole. The weak portion in this example may be an annular groove that is provided along the region around the third through hole by using the center of the third through hole as a central point. **In** other examples, the weak portion may also be a long-strip groove that is provided in the region around the third through hole. In other examples, if a similar problem existed, that is, the electrode terminals of all the battery cells 11 may not simultaneously and completely extend out of the third through hole, the solution of adding the weak portion in the region around the third through hole may be adopted.

A sealing connection member may also be added between the third through hole and the electrode terminal. The sealing connection member includes a hollow member. A bottom of the hollow member is configured to be hermetically connected to a first region of the battery cell, and a top of the hollow member is hermetically connected to a second region of the housing. The first region is a region that is located around any electrode terminal in an upper cover plate of any battery cell of the plurality of battery cells, and the second region is a region that corresponds to any one of the third through holes in the housing. The region corresponding to the third through hole is the peripheral region on the outer surface of the housing corresponding to any one of the third through holes; or the region corresponding to the third through hole is a hole wall of the third through hole. The region around the electrode terminal is the region around an insulating sealing gasket on the electrode terminal. The insulating sealing gasket is a component on the battery cell that is configured to insulate the electrode terminal from the upper cover plate.

In Step 3, the fixed sealing of the third through hole and the upper cover plate of the battery cell 11 may also be completed first, and then the fifth cover plate 26 is hermetically welded to the top open end of the cylindrical member. In other examples, the fifth cover plate 26, the cover plate, and the top open end of the cylindrical member may also be fixed by means of adhesive bonding or screw connection. However, the sealing performance or connection reliability is relatively weak compared to a welding manner.

At Step 4, the sealing assembly is opened using the external force or the electrolyte itself (the sealing assembly may be opened by extending an unpacking tool into the electrolyte sharing chamber from the open end of one end of the hollow tube, or the sealing assembly is opened by injecting the electrolyte from the open end), and the inner cavity of the hollow tube is in communication with the electrolyte region of the inner cavity of the each battery cell of the plurality of battery cells 11.

It is to be noted that, during operation of the high-capacity battery, two open ends of the hollow tube need to be blocked. In this example, the hollow tube may also be provided with a liquid injection port 111 (referring to FIG. 58). After the inner cavity of the each battery cell of the plurality of battery cells 11 is in communication with the electrolyte sharing chamber 27, the electrolyte may be injected again into the inner cavity of the each battery cell of the plurality of battery cells 11 and the electrolyte sharing chamber 27 via the liquid injection port 111, so as to ensure the continuity of the electrolyte, and liquid replacement may also be achieved via the liquid injection port 111. When liquid is not injected, the liquid injection port 111 need to be sealed by a plug.

Then all the battery cells 11 are connected in parallel. In other examples, each battery cell of the plurality of battery cells 11 may be connected in parallel between Step 2 and Step 3.

Specifically, a heat transfer connecting member 119 shown in FIGs. 11 and 60 may be adopted to connect all the battery cells 11 in parallel, and a structure of the heat transfer connecting member 119 is the same as that in the examples hereinabove, and thus is not described herein again.

### Example 25

As shown in FIGs. 21, 22, and 61, a difference between this example and Example 24 lies in that, an electrolyte sharing chamber 27 in this example selects the second structural form hereinabove, which is a first channel that is disposed on a flat plate 63; and an orthographic projection of an inner cavity of the first channel at a bottom of a high-capacity battery at least covers a partial region of a first through hole 416 in a lower cover plate of the each battery cell of the plurality of battery cells 11.

As shown in FIG. 21, a groove extending in an x direction is directly provided on an upper surface of the flat plate to serve as the first channel electrolyte sharing chamber 27. The structure requires the flat plate 63 to have a large size in the z direction.

As shown in FIG. 22, the flat plate 63 is bent in a y direction to form the first channel extending in the x direction as the electrolyte sharing chamber 27. It is to be noted that, during operation of the high-capacity battery, two open ends of the electrolyte sharing chamber 27 parallel to a yz plane need to be sealed. In FIG. 22, the structure of the entire cover plate may be understood as a cover plate with an omega-shaped cross section. For ease of description, the cover plate may be divided into three portions, including a first sub-flat plate and a second sub-flat plate, which are located on a same plane, as well as a U-shaped long-strip member (a long-strip member with a U-shaped cross section) is located between the first sub-flat plate and the second sub-flat plate. Two side walls of the U-shaped long-strip member are respectively connected to the first sub-flat plate and the second sub-flat plate.

When the cover plate shown in FIGs. 21 and 22 is fixed to the bottom of the high-capacity battery, an open end (the open end parallel to an xy plane) of the first channel faced upward, that is, faced toward the top of the high-capacity battery, and the inner cavity of the first channel is in direct communication with an electrolyte region of an inner cavity of the each battery cell of the plurality of battery cells 11 via the first through hole 416 in the lower cover plate of the each battery cell of the plurality of battery cells 11.

In order to achieve effective heat dissipation, heat dissipation fins 19 extending in the x direction are arranged on a lower surface of the flat plate 63 and in positions located on two sides of the first channel, and heat generated by the high-capacity battery during operation may be timely dissipated via the fins.

As shown in FIG. 61, at least two first support ribs 110 extending in the x direction are arranged on the upper surface of the flat plate 63, and the two first support ribs 110 and a flat plate 63 region are located between the two first support ribs 110 formed the first channel extending in the x direction as the electrolyte sharing chamber 27.

When the cover plate is fixed to the bottom of the high-capacity battery, top surfaces of the two first support ribs 110 are in contact with the lower cover plate of the each battery cell of the plurality of battery cells 11, and the inner cavity of the first channel is in direct communication with the electrolyte region of the inner cavity of the each battery cell of the plurality of battery cells 11 via the first through hole 416 in the lower cover plate of the each battery cell of the plurality of battery cells 11.

The structural regularity of the entire high-capacity battery may be ensured by adopting a structure of the electrolyte sharing chamber 27 shown in FIG. 61. Similarly, on one hand, it is easy to ensure that a density of an energy storage device when the energy storage device is integrated on the basis of such high-capacity batteries; and on the other hand, the high-capacity battery may be treated as a whole, and the overall safety performance of such high-capacity batteries is improved by coating an insulating film (which may also be referred to as a blue film or protective film) outside the high-capacity battery.

In this example, there is no need to provide the second through hole in the cover plate. When the cover plate is fixed to the bottom of the high-capacity battery, the inner cavity of the first channel is in direct communication with the electrolyte region of the inner cavity of the each battery cell of the plurality of battery cells 11 via the first through hole 416 in the lower cover plate of the each battery cell of the plurality of battery cells 11.

### Example 26

A difference between this example and Example 24 and Example 25 lies in that, a cover plate in this example further includes two side plates 725 parallel to an xz plane, wherein the two side plates 725 are respectively connected to two sides of a flat plate 63 in an x direction to form a U-shaped housing body as shown in FIGs. 62, 7, and 8; and a top of the U-shaped housing body is an open end, and the two ends parallel to a yz plane are open ends. The cover plate corresponding to this example may directly serve as a bottom plate and side plates of a rectangular housing of a high-capacity battery. As shown in FIG. 4, the cover plate in this example is the U-shaped housing body 12 in FIG. 4.

The high-capacity battery in this example may be prepared by the following processes.

At Step 1, a housing is processed, including processing of the cover plate (the U-shaped housing body 12) and sub-cover plates configured to seal three open ends of the cover plate, wherein for ease of description, the three sub-cover plates are respectively defined as a first end plate 13, a second cover plate 15, and a third end plate 14.

The U-shaped housing body may be formed at one time by adopting an aluminum extrusion process or a bending process. It is to be noted that during the forming process, an electrolyte sharing chamber 27 located at a bottom of the U-shaped housing body may be formed simultaneously.

At Step 2, capacity grading and sorting is performed to screen out a plurality of battery cells 11 meeting requirements; first through holes 416 are provided at bottoms of housing bodies of the battery cells 11 and then sealed using sealing assemblies; the plurality of battery cells 11 with the sealing assemblies at the first through holes 416 are arranged in the U-shaped housing body in Step 1 to ensure that an electrolyte region of an inner cavity of the each battery cell of the plurality of battery cells 11 penetrates through the electrolyte sharing chamber 27 after the sealing assembly is opened by an external force or electrolyte itself; and the sealing assembly may adopt sealing assemblies disclosed in Chinese patents CN218525645U and CN218525614U.

At Step 3, a second cover plate 15 is hermetically welded to a top open end of the U-shaped housing body, a third through hole is welded to a portion around an electrode terminal of the housing body of the battery cell 11, and the first end plate 13 and the third end plate 14 are welded to the other two opposite open ends of the U-shaped housing body to achieve sealing. It is to be noted herein that, the first end plate 13 and the third end plate 14 need to simultaneously seal the two open ends of the electrolyte sharing chamber 27 located on the yz plane. The first end plate 13, the second cover plate 15, and the third end plate 14 may also be fixed to the open ends of the U-shaped housing body by means of screw fastening or adhesive bonding. However, the sealing performance or connection reliability is relatively weak compared to the welding manner.

At Step 4, the sealing assembly is opened using the external force or the electrolyte itself (the sealing assembly may be opened by extending an unpacking tool into the electrolyte sharing chamber from a liquid injection port, or the sealing assembly is opened by injecting the electrolyte from the liquid injection port), and the inner cavity of the electrolyte sharing chamber 27 penetrates through the electrolyte region of the inner cavity of the each battery cell of the plurality of battery cells 11.

The housing of the high-capacity battery in this example is constituted by the U-shaped housing body (cover plate), and the first end plate, second cover plate, and third end plate covering the three open ends of the U-shaped housing body. The U-shaped housing body may be integrally processed, and then the corresponding cover plates are utilized to seal the open ends. Potential leakage points of the entire housing are only located at connection portions between the cover plate and the U-shaped housing body. By means of welding connection, the entire housing may be a superior closed system to ensure that the electrolyte inside the high-capacity battery is not affected by external environments.

### Example 27

A difference between this example and Example 26 lies in that, a cover plate (U-shaped housing body 12) in this example and a second cover plate 15 may be integrally formed as an integral piece, with a specific structure being a cylindrical member shown in FIGs. 15 and 14. The second cover plate 15 may or may not be provided with a gas chamber, and the gas chamber is a second channel formed on the second cover plate 15.

The following is described in an example of providing the gas chamber.

It may be understood that a housing in this example includes the cylindrical member shown in FIG. 15 or FIG. 14, and a first end plate 13 and a third end plate 14, which are configured to cover two opposite open ends of the cylinder, wherein the first end plate 13 and the third end plate 14 are located in a yz plane. Similarly, it is to be noted herein that the first end plate 13 and the third end plate 14 need to cover and seal two opposite open ends of a first channel while simultaneously covering and sealing the two opposite open ends of the cylindrical member.

In this example, the cylindrical member may be integrally formed adopting an aluminum extrusion process. Since the cylindrical member extended in an x direction, the open end thereof is located on the yz plane, and extrusion is performed in an x direction, the cylindrical member with a target length may be formed by one-time extrusion.

It is to be noted that, when the cylindrical member shown in FIG. 14 is extruded, the first channel does not need to be formed simultaneously, that is, a first support rib 110 and the cylindrical member need to be arranged separately; and when the cylindrical member shown in FIG. 15 is extruded, the first channel need to be formed simultaneously.

A high-capacity battery in this example may be prepared by the following processes in an example of the structure shown in FIG. 15.

At Step 1, the cylindrical member, the first end plate 13, and the third end plate 14 are processed.

At Step 2, capacity grading and sorting is performed to screen out the plurality of battery cells meeting requirements; a first through hole is provided at a bottom of a housing body of a battery cell and then sealed using a sealing assembly; a fifth through hole is provided at a top of the housing body of the battery cell and then sealed using the sealing assembly; a plurality of battery cells with the sealing assemblies are arranged in the cylindrical member in Step 1, such that the first through hole with the sealing assembly corresponds to the first channel, and the fifth through hole with the sealing assembly corresponds to the second channel, thereby ensuring that after the sealing assembly is opened by an external force or electrolyte itself, the first through hole penetrates through the first channel, and the fifth through hole penetrates through the second channel; and the sealing assembly may adopt sealing assemblies disclosed in Chinese patents CN218525645U and CN218525614U. An electrode terminal of the each battery cell of the plurality of battery cells 11 extends out of the corresponding third through hole in the second cover plate 15, and the third through hole is welded to a portion around the electrode terminal of a housing body of the battery cell to achieve sealing. It is to be noted herein that, in order to ensure that each battery cell of the plurality of battery cells 11 may be smoothly arranged in the cylindrical member shown in FIG. 15, a minimum size of the cylindrical member in a z direction need to be greater than a size of the battery cell 11 in the z direction. Moreover, in order to ensure that the electrode terminal of the each battery cell of the plurality of battery cells 11 may extend out of the third through hole at a top of the cylindrical member, a second support rib need to be added at a bottom of the each battery cell of the plurality of battery cells 11.

The plurality of battery cells with the sealing assemblies may be arranged in the cylindrical member in Step 1 by the following three manners.
1) A long-strip equal-height second support rib is selected.

The plurality of battery cells 11 are fixed as an integral body, and pushed into an inner cavity of the cylindrical member from any open end of the cylindrical member; in this case, the bottom of the each battery cell of the plurality of battery cells 11 is in contact with the bottom of the cylindrical member, and the electrode terminal of the each battery cell of the plurality of battery cells 11 corresponds to the corresponding third through hole, but does not extend out of the third through hole; then, the plurality of battery cells 11 are supported, using a lifting tooling, from the bottom to separate the bottom of the each battery cell of the plurality of battery cells 11 from the bottom of the cylindrical member, wherein the electrode terminal of the each battery cell of the plurality of battery cells 11 extends out of the corresponding third through hole; and then, the long-strip equal-height second support rib is inserted in the x direction, and the lifting tooling is removed.

It is to be noted that, in the z direction, a size of the long-strip equal-height second support rib need to meet the following: after the second support rib is added between the bottom of the each battery cell of the plurality of battery cells 11 and the bottom of the cylindrical member, the electrode terminal of the each battery cell of the plurality of battery cells 11 extends out of the corresponding third through hole.

2) The second support rib is constituted by selecting cushion blocks corresponding to the plurality of battery cells 11 on a one-to-one basis.

The plurality of battery cells 11 are sequentially pushed into an inner cavity of the cylindrical member from any open end of the cylindrical member, and after each battery cell of the plurality of battery cells 11 is pushed in place, a corresponding cushion block need to be inserted between the bottom of the each battery cell of the plurality of battery cells and the bottom of the cylindrical member to ensure that the electrode terminal of the battery cell 11 completely extends out of the corresponding third through hole. In most cases, a size of the cushion block corresponding to each battery cell of the plurality of battery cells in the z direction is different under this manner.

3) Each battery cell of the plurality of battery cells 11 is inverted and pushed into the inner cavity of the cylindrical member.

The cylindrical member is flipped to cause the top of the cylindrical member to face downward, the plurality of battery cells 11 are fixed as an integral body and pushed into the inner cavity of the cylindrical member from any open end of the cylindrical member; or the plurality of battery cells 11 are sequentially pushed into the inner cavity of the cylindrical member from any open end of the cylindrical member, wherein the electrode terminal of the each battery cell of the plurality of battery cells 11 extends out of the corresponding third through hole under the action of gravity, and the second support rib is inserted between the bottom of the each battery cell of the plurality of battery cells 11 and the bottom of the cylindrical member; and the cylindrical member is flipped to cause the top of the cylindrical member to face upward.

At Step 3, the first end plate 13 and the third end plate 14 are welded to the other two opposite open ends of the U-shaped housing body 2.

At Step 4, the sealing assembly is opened by using the external force or the electrolyte itself, an inner cavity of the first channel penetrates through an electrolyte region of the inner cavity of the each battery cell of the plurality of battery cells, and an inner cavity of the second channel penetrates through the gas region of the inner cavity of the each battery cell of the plurality of battery cells.

After the inner cavity of the each battery cell of the plurality of battery cells 11 penetrates through the first channel, the electrolyte in the inner cavity of the each battery cell of the plurality of battery cells 11 is in communication with the first channel. In order to prevent a phenomenon of electrolyte interruption, the electrolyte may be injected, after the inner cavity of the each battery cell of the plurality of battery cells 11 penetrates through the first channel, into the first channel to ensure the continuity of the electrolyte.

Then all the battery cells 11 are connected in parallel.

In order to form a more complete SEI film, causing the high-capacity battery to have a more stable cycling capability, formation is performed on the entire high-capacity battery after the electrolyte is injected into the inner cavity of the each battery cell of the plurality of battery cells 11 via the first channel.

If the gas chamber serves as an explosion venting channel, the steps differing from the steps hereinabove are as follows.

In Step 2, there is no need to provide the fifth through hole at the top of the housing body of the battery cell; the plurality of battery cells with the sealing assemblies at the first through holes are arranged in the cylindrical member in Step 1, such that the first through hole with the sealing assembly corresponds to the first channel to ensure that after the sealing assembly is opened by the external force or the electrolyte itself, the first through hole penetrates through the first channel, and a first explosion venting portion at the top of the each battery cell of the plurality of battery cells corresponds to the second channel to ensure that the first explosion venting portion penetrates through the second channel after the first explosion venting portion is broken through by flue gas.

In Step 4, the sealing assembly is opened by using the external force or the electrolyte itself, an inner cavity of the first channel penetrates through the electrolyte region of the inner cavity of the each battery cell of the plurality of battery cells.

If the cylindrical member shown in FIG. 14 is adopted, after the plurality of battery cells with the sealing assemblies are arranged in the cylindrical member shown in FIG. 14, the first support rib 110 is inserted between the bottom of the each battery cell of the plurality of battery cells and the bottom of the cylindrical member to form the first channel while each battery cell of the plurality of battery cells may be supported, such that the electrode terminal of the each battery cell of the plurality of battery cells 11 may extend out of the third through hole at the top of the cylindrical member. Alternatively, the plurality of battery cells with the sealing assemblies may also be arranged in the cylindrical member shown in FIG. 14 in the same three manners as hereinabove, and the second support rib hereinabove only need to be replaced with the first support rib 110.

The U-shaped housing body (cover plate) and the second cover plate 15 in this example may be integrally formed adopting the aluminum extrusion process. During extrusion, the electrolyte sharing chamber may also be integrally formed by means of extrusion simultaneously, facilitating processing while achieving lower processing costs. Furthermore, compared to the structure in which the U-shaped housing body and the second cover plate are separately arranged, potential leakage points are further reduced, making it easier to achieve a superior closed system for the entire housing.

### Example 28

This example provides a high-capacity battery, including the cover plate in the examples hereinabove, with a structure shown in FIGs. 58, 60, and 4. The high-capacity battery shown in FIGs. 58, 60, and 4 includes a housing and a plurality of battery cells 11 connected in parallel. The plurality of battery cells 11 connected in parallel are arranged in the housing in an x direction. The cover plate in the examples hereinabove serves as a portion of the housing. The specific structure of the high-capacity battery has been described in detail in the corresponding examples hereinabove, and thus is not described herein again.

In this example, a plurality of partition plates 116 are disposed in an inner cavity of the housing of the high-capacity battery with the housing, so as to divide the inner cavity into a plurality of battery cell 11 mounting cavities.

A specific structure is shown in FIGs. 16 and 17. One battery cell 11 is fixed in each of the plurality of battery cell 11 mounting cavities; for each battery cell of the plurality of battery cells 11 near a middle portion, the side walls on two sides of the battery cell are in contact with the partition plate 116; and for the two battery cells 11 near the outermost side, one side wall is in contact with the partition plate 116, and the other side wall is in contact with a side wall (the side wall parallel to a yz plane) of the housing. In a first aspect, the mounting stability of the each battery cell of the plurality of battery cells 11 in the housing body may be improved. In a second aspect, the occurrence of a problem of reduced cycling performance of a high-capacity battery caused by the swelling of the each battery cell of the plurality of battery cells 11 may be prevented. In a third aspect, heat generated during the charging and discharging of the each battery cell of the plurality of battery cells 11 may be transferred to the outside via the partition plate 116, thereby reducing a risk of thermal runaway. In a fourth aspect, the strength of the housing may also be improved.

Two or more battery cells 11 may also be fixed in each of the plurality of battery cell 11 mounting cavities.

The partition plate 116 may also adopt an 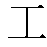 -shaped partition plate 116 shown in FIG. 17. A vertical beam 117 of the 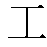 -shaped partition plate 116 is parallel to the yz plane, and is in contact with side walls of two adjacent battery cells of the plurality of battery cells 11 located on a yz plane. One horizontal beam 118 of the 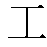 -shaped partition plate 116 is in contact with side walls of the two battery cells 11 parallel to an xz plane, and the other horizontal beam 118 of the 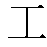 -shaped partition plate 116 is in contact with the other side walls of the two battery cells 11 parallel to the xz plane. The stability of the each battery cell of the plurality of battery cells 11 in the battery cell 11 mounting cavity may be improved by adding the 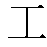 -shaped partition plate 116.

### Example 29

As shown in FIG. 63, a difference between this example and Example 28 lies in that a high-capacity battery in this example does not include a second cylinder 74. Each battery cell of the plurality of battery cells 11 in the high-capacity battery is arranged in an x direction. A cover plate covers a bottom of the high-capacity battery and is fixedly connected to a lower cover plate of the each battery cell of the plurality of battery cells 11.

When an electrolyte sharing chamber 27 is utilized to communicate an electrolyte region of an inner cavity of the each battery cell of the plurality of battery cells 11, a first through hole 416 penetrating through the inner cavity of the each battery cell of the plurality of battery cells 11 need to be provided in the lower cover plate of the each battery cell of the plurality of battery cells 11. In order to ensure that electrolyte in the inner cavity of the each battery cell of the plurality of battery cells 11 is not affected by an external environment, when the cover plate is fixed to the bottom of the high-capacity battery, it need to ensure that the cover plate may isolate the communication between the first through hole 416 and the external environment. In the examples hereinabove, the cover plate covers a bottom open end of the second cylinder 74 and is hermetically welded to the bottom open end of the second cylinder 74, such that the problem may be overcome. The high-capacity battery in this example does not include the second cylinder 74, and the cover plate is fixedly connected to the lower cover plate of the each battery cell of the plurality of battery cells 11. Since a gap is inevitably present between the adjacent battery cells 11, and if the cover plate is directly welded to the lower cover plate of the each battery cell of the plurality of battery cells 11, the sealing between the cover plate and the lower cover plate of the each battery cell of the plurality of battery cells 11 may not be ensured due to the presence of the gap, thus failing to isolate the first through hole 416 from the external environment. Based on this, in this example, the electrolyte sharing chamber 27 is designed as a split structure, including a U-shaped long-strip member 618 (a long-strip member with a U-shaped cross section) and a sub-cover plate covering an open end of the long-strip member. A plurality of second through holes 28 penetrating an inner cavity of the U-shaped long-strip member 618 are provided in the U-shaped long-strip member 618 and a flat plate 63; the second through holes 28 corresponds to the first through holes 416 of the battery cells 11 on a one-to-one basis; and an orthographic projection of each second through hole 28 in the lower cover plate of the corresponding battery cell 11 completely covers the corresponding first through hole 416.

Such high-capacity batteries may be prepared by the following processes.

At Step 1, the cover plate is processed.

The flat plate 63 (as shown in FIG. 64) with the U-shaped long-strip member 618 is integrally formed adopting an aluminum extrusion process, and then the sub-cover plates configured to cover the three open ends of the U-shaped long-strip member 618 are processed.

The U-shaped long-strip member 618 and the flat plate 63 are provided with the plurality of second through holes 28 penetrating through the inner cavity of the U-shaped long-strip member 618.

At Step 2, capacity grading and sorting is performed to screen out the plurality of battery cells 11 meeting requirements; the first through hole 416 is provided at the bottom of the each battery cell of the plurality of battery cells 11 and then sealed using a sealing assembly; and the sealing assembly may adopt sealing assemblies disclosed in Chinese patents CN218525645U and CN218525614U.

At Step 3, the flat plate 63 with the U-shaped long-strip member 618 is positioned at the lower cover plate of the each battery cell of the plurality of battery cells 11 such that each second through hole 28 corresponds to first through holes of the plurality of battery cells 416 on a one-to-one basis; a welding head extends into an edge portion of the second through hole 28 from the bottom open end of the U-shaped long-strip member 618, so as to hermetically weld an edge of each second through hole 28 to the lower cover plate of the corresponding battery cell 11; the first through hole 416 of the each battery cell of the plurality of battery cells 11 penetrates through the corresponding second through hole 28; and the sub-cover plate is hermetically welded to the open end of the U-shaped long-strip member 618. The flat plate 63 may be welded to the lower cover plate of the each battery cell of the plurality of battery cells 11, thereby improving the strength of the entire structure.

At Step 4, the sealing assembly is opened by using the external force or the electrolyte itself, the inner cavity of the electrolyte sharing chamber 27 is in communication with the electrolyte region of the inner cavity of the each battery cell of the plurality of battery cells 11.

Then, a busbar same as that in Example 24 may be adopted to connect all the battery cells 11 in parallel. **In** other examples, each battery cell of the plurality of battery cells 11 may be connected in parallel between Step 3 and Step 4.

In this example, the electrolyte sharing chamber 27 is designed as a split member, wherein one portion is the U-shaped long-strip member 618 with one open end, and the other portion is the sub-cover plate covering the open end. The second through hole 28 is provided at the top of the U-shaped long-strip member 618 opposite to the bottom open end. During specific welding, the welding head extends from the open end to weld the edge of the second through hole 28 to the lower cover plate of the each battery cell of the plurality of battery cells 11, such that the second through hole 28 penetrates through the first through hole 416, and the connection between the cover plate and the high-capacity battery is preliminarily and simultaneously completed. Finally, the sub-cover plate is welded to the open end, and the flat plate 63 is welded to the lower cover plate of the each battery cell of the plurality of battery cells 11, thereby completing the connection between the cover plate and the high-capacity battery. In this example, during welding, the welding head extends from the open end of the U-shaped long-strip member 618 without any obstruction, such that the welding between the edge of the second through hole 28 and the upper cover plate of the each battery cell of the plurality of battery cells 11 may be completed at one time. Therefore, the process is simple, and a sealing effect is good, thereby ensuring that the electrolyte in the inner cavity of the each battery cell of the plurality of battery cells 11 is completely isolated from the external environment.

It is to be noted that the welding head described herein refers to a member of a welding apparatus that extends into a portion to be welded. If arc welding or argon arc welding is adopted, the welding head herein refers to an end portion of a welding rod; and if laser welding is adopted, the welding head herein refers to a laser beam.

Examples 30 to 33 provide a high-capacity battery, as shown in FIGs. 65 and 66, including a housing 21 and a plurality of battery cells 11, wherein the plurality of battery cells 11 are arranged in a same direction and placed in the housing 21.

The housing 21 is provided with a sharing chamber, and an inner cavity of the sharing chamber is in communication with inner cavities of all the battery cells 11.

It is to be noted that,
the sharing chamber hereinabove may be an electrolyte sharing chamber 27 (as shown in FIG. 66). An inner cavity of the electrolyte sharing chamber 27 is in communication with electrolyte regions of the inner cavities of all the battery cells 11. Each battery cell of the plurality of battery cells 11 may be in a unified electrolyte environment by the electrolyte sharing chamber 27, ensuring the uniformity of electrolyte in each battery cell of the plurality of battery cells 11, thereby improving the performance and charge-discharge cycle life of the high-capacity battery.

The sharing chamber hereinabove may also be a gas sharing chamber 310 (as shown in FIG. 66). An inner cavity of the gas sharing chamber 310 is in communication with gas regions of the inner cavities of all the battery cells 11. A gas balance of the each battery cell of the plurality of battery cells 11 is achieved via the gas sharing chamber 310, and the performance and charge-discharge cycle life of the high-capacity battery may also be improved.

The sharing chamber hereinabove may be a gas-liquid sharing chamber. An inner cavity of the gas-liquid sharing chamber is in communication with the electrolyte regions and gas regions of the inner cavities of all the battery cells 11. Each battery cell of the plurality of battery cells 11 may be in the unified electrolyte environment and gas environment by the electrolyte sharing chamber, thereby improving the performance and charge-discharge cycle life of the high-capacity battery.

Through study, it is found that during battery charging and discharging, the temperature at a position of a battery electrode terminal 84 is a highest point of a battery temperature. If the heat at the battery electrode terminal 84 is treated, heat dissipation may be effectively performed on a battery, such that the effective temperature control of the battery may be realized.

Therefore, in order to improve the heat dissipation performance of such high-capacity batteries, in combination with FIG. 67, it may be seen that the embodiment provides a third through hole 112 in a housing top plate 82 corresponding to the electrode terminal 84 of the each battery cell of the plurality of battery cells 11, the electrode terminal 84 of the each battery cell of the plurality of battery cells 11 extends out of the corresponding third through hole 112, and the region of the housing top plate 82 corresponding to the third through hole 112 is fixedly sealed with a housing body of the battery cell 11, such that a gap between the electrode terminal 84 and the third through hole 112 is sealed. A heat transfer tube clamping portion 87 is provided at the portion at which the electrode terminal 84 of the each battery cell of the plurality of battery cells 11 extends out of the third through hole 112; and a heat transfer tube 88 is fixed to the heat transfer tube clamping portion 87. Since the heat transfer tube 88 hereinabove is in direct contact with the electrode terminal 84 of the battery cell 11, insulation is required between the heat transfer tube 88 and the battery cell 11 to ensure safety.

It is to be noted that the electrode terminal 84 of the battery cell 11 hereinabove may be an electrode terminal of the battery cell 11. In order to prevent the electrode terminal of the battery cell 11 from being unable to smoothly extend out of the third through hole 112 when configuring for the electrode terminal 84, a current collector piece may be connected to the electrode terminal of the battery cell 11, and the integrated structure in which the electrode terminal of the battery cell 11 is mated with the current collector piece serves as the electrode terminal 84 of the battery cell 11.

This embodiment places the plurality of battery cells inside the housing having the sharing chamber. By utilizing the sharing chamber to penetrate through the inner cavity of the each battery cell of the plurality of battery cells is located in the housing, electrolyte and/or gas in each battery cell of the plurality of battery cells is shared to ensure the consistency of the each battery cell of the plurality of battery cells. That is, the electrolyte and/or gas in all the battery cells is in a same system by communicating the electrolyte and/or gas in each battery cell of the plurality of battery cells, such that differences between the battery cells are reduced, and the consistency between the battery cells is improved to a certain extent, thereby prolonging the cycle life of the high-capacity battery to a certain extent.

Moreover, the heat transfer tube is fixed to the portion at which the electrode terminal of the each battery cell of the plurality of battery cells extends out of the third through hole, and the heat transfer tube is in direct contact with the electrode terminal of the each battery cell of the plurality of battery cells, so as to timely dissipate heat. The heat dissipation manner achieves balanced heat dissipation of the each battery cell of the plurality of battery cells in the high-capacity battery, thereby improving the use safety of the high-capacity battery.

The embodiment is described in detail below with reference to the drawings and specific examples.

### Example 30

In combination with FIGs. 65 and 66, it may be seen that a high-capacity battery in this example includes a housing 21 and a plurality of battery cells 11 arranged in the housing 21.

The battery cells 11 in this example are square housing batteries, with the number being 13. In other examples, the number of the battery cells may be adjusted according to actual requirements. An inner cavity of the each battery cell of the plurality of battery cells 11 includes an electrolyte region and a gas region.

For ease of description, a length direction of the housing 21 is defined as an x direction, a width direction of the housing 21 is defined as a y direction, and a height direction of the housing 21 is defined as a z direction. The housing 21 is disassembled into a cylinder 24 with two open ends and end plates 81 covering the open ends of the cylinder 24.

An electrolyte sharing chamber 27 is disposed in the x direction on a housing bottom plate 83 (cylinder bottom plate), and an inner cavity of the electrolyte sharing chamber 27 is in communication with the electrolyte region of the inner cavity of the each battery cell of the plurality of battery cells 11.

A gas sharing chamber 310 is disposed in the x direction on a housing top plate 82 (cylinder top plate), and an inner cavity of the gas sharing chamber 310 is in communication with the gas region of the inner cavity of the each battery cell of the plurality of battery cells 11.

In some other examples, only the electrolyte sharing chamber 27 or the gas sharing chamber 310 may be disposed, or a gas-liquid sharing chamber may also be disposed in the x direction on a side wall of the housing 21, and an inner cavity of the gas-liquid sharing chamber is in communication with both the electrolyte region and gas region of the inner cavity of the each battery cell of the plurality of battery cells 11.

The electrolyte sharing chamber 27 in this example is a liquid channel disposed on the housing bottom plate 83, with a specific structure shown in FIGs. 67, 68, and 69.

FIG. 67 is a schematic diagram of a partial structure of the housing 21 of the high-capacity battery in this example, that is, a schematic structural diagram of a cylinder 24; FIG. 68 is a schematic diagram of the structure in which a bottom support member 89 is added in the cylinder 24 in FIG. 67 to form the electrolyte sharing chamber 27; and FIG. 69 is a schematic structural diagram of the bottom support member 89 in this example.

From FIG. 67, it may be seen that the cylinder 24 in this example has open ends on both left and right sides, and may be integrally formed adopting an aluminum extrusion process.

In FIG. 68, the bottom support member 89 is fixed in the cylinder 24. The bottom support member 89 mainly has the following two functions.
1. Each battery cell of the plurality of battery cells 11 is elevated such that the electrode terminal 84 of the each battery cell of the plurality of battery cells 11 extends out of the third through hole 112 in the housing top plate 82.
2. Each battery cell of the plurality of battery cells 11 is supported, and a liquid channel is formed between the bottom support member and a bottom of the each battery cell of the plurality of battery cells 11 to serve as the electrolyte sharing chamber 27.

In combination with FIG. 66, it may be seen that the electrolyte sharing chamber 27 is formed between the bottom support member 89 in this example and the bottom of the each battery cell of the plurality of battery cells 11.

From FIG. 69, it may be seen that the bottom support member 89 in this example is made of an aluminum material, wherein a main portion of the bottom support member is a flat plate, and a shape and size of the flat plate match a shape and size of the housing bottom plate 83. A fourth support rib 92 extending in the x direction is disposed on a lower surface of the flat plate, and a third support rib 91 extending in the x direction is disposed on an upper surface of the flat plate.

In this example, two fourth support ribs 92 are provided and has a main function of elevating each battery cell of the plurality of battery cells 11, such that the electrode terminals 84 of the each battery cell of the plurality of battery cells 11 extends out of the third through hole 112 in the housing top plate 82.

In combination with FIG. 66, it may be seen that the bottom support member 89 is placed in the cylinder 24 and located between each battery cell of the plurality of battery cells 11 and the housing bottom plate 83.

It is to be noted that during the assembling of the high-capacity battery, a port of a channel 819 formed between the bottom support member 89 and the housing bottom plate 83 need to be sealed using a baffle plate 818, so as to prevent electrolyte from flowing into the channel to increase the amount of the electrolyte used for the entire high-capacity battery (as shown in FIG. 66).

Furthermore, an edge of the bottom support member 89 in the x direction and the side of the cylinder parallel to an xz plane should be sealed to prevent the electrolyte from penetrating into the channel. The sealing between the edge and the side wall may be realized by adding a sealing strip or a sealant. The channel may also be filled with a lightweight material to fill the channel. The lightweight material should not react with the electrolyte, and may select a solid column made of a PP material, which is lower in cost compared to an aluminum material. Even if there is a gap between the bottom support member 89 and the side wall of the cylinder parallel to the xz plane, excessive electrolyte does not enter the channel since the channel has been filled.

In some other examples, the same purpose may be achieved by increasing a thickness of the flat plate. However, compared to this example, the entire high-capacity battery has a large self-weight while having higher material costs. In this example, by disposing the fourth support rib 92, the thickness of the flat plate may be minimized while meeting support strength, thereby reducing material costs while reducing the self-weight of the high-capacity battery.

In this example, three third support ribs 91 are provided; each support rib extended in the x direction; and the three support ribs are uniformly arranged in the y direction. In order to improve an electrolyte sharing effect, a notch 911 is provided on the third support rib 91 located in the middle, thereby ensuring that the liquid channels on two sides of the third support rib are in communication with each other.

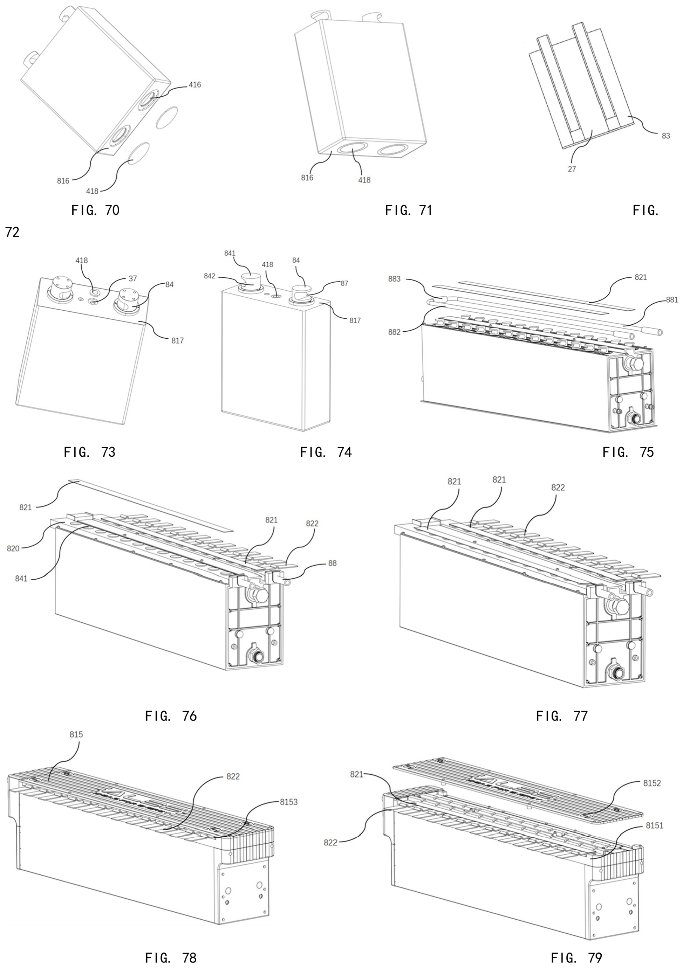

The structure of the battery cell 11 corresponding to the electrolyte sharing chamber 27 of such structure is shown in FIGs. 70 and 71.

In this example, two first through holes 416 are provided in a lower cover plate 816 of the battery cell. The two first through holes 416 are arranged in the y direction and are symmetrical to each other. The two first through holes 416 are sealed using a sealing assembly 418. After the battery cell 11 is placed into the cylinder 24 hereinabove, the two first through holes 416 are respectively located right above the two liquid channels. By means of an external force or external electrolyte (the external electrolyte herein refers to electrolyte located outside the battery cell 11), the sealing assembly 418 may be removed from the lower cover plate or an opening penetrating through the first through hole 416 is provided in the sealing assembly 418, so as to penetrate through the liquid channels.

From FIG. 70, it may be seen that the two first through holes 416 in this example are located on two sides of the lower cover plate 816 of the battery cell. When a battery cell inside the battery cell 11 adopted a coil core formed by coiling, there is a large space between the side wall in a thickness direction of a housing body of the battery cell 11 and the coil core. The first through holes 416 are provided close to the two sides of the lower cover plate 816 of the battery cell. Firstly, when the first through hole 416 is provided, an internal battery cell structure is not affected; and secondly, after the sealing assembly 418 at this portion is opened, the electrolyte in the inner cavity of the electrolyte sharing chamber 27 may better enter the inner cavity of the battery cell 11.

A size of the first through hole 416 need to meet the following conditions.
1. The first through hole 416 should not be excessively large to ensure that the lower cover plate 816 of the entire battery cell has certain strength, thereby avoiding the scrapping of the battery cell 11 due to the poor strength of the lower cover plate 816 of the battery cell before the sealing assembly 418 at the first through hole 416 is opened.
2. The first through hole 416 should not be excessively small to ensure that, after the sealing assembly 418 at the first through hole 416 is opened, the electrolyte region of the inner cavity of the each battery cell of the plurality of battery cells 11 is in smooth communication with the inner cavity of the electrolyte sharing chamber 27, thereby ensuring a better sharing effect.

In this example, the sealing assembly 418 may adopt a sealing film disclosed in Chinese Patent CN 218525645 U. The patent disclosed two types of sealing films, wherein one type of sealing film is soluble in the electrolyte, and the other type of sealing film may be opened by the external force.

When the sealing film soluble in the electrolyte is adopted, a protective film insoluble in the electrolyte need to be generally disposed on the side of the sealing film facing inward the housing body of the battery cell 11; and the protective film fell off accordingly when the sealing film is dissolved in the electrolyte.

When such sealing films are adopted, liquid path unpacking may be performed by means of the following process.

After the assembly of the high-capacity battery is completed, the electrolyte is injected into the electrolyte sharing chamber 27 such that the sealing films at the two first through holes 416 are automatically dissolved from the outside. Since the protective film and the lower cover plate 816 of the battery cell does not adopt any fixation manners, after the sealing film dissolved, the protective film automatically detached from the cover plate, such that the electrolyte sharing chamber 27 penetrates through the inner cavity of the battery cell 11, causing the electrolyte in all the battery cells 11 to be in a same system, thereby achieving the electrolyte sharing effect. In this example, during the unpacking process, even if the sealing film at one first through hole 416 is not completely dissolved, the electrolyte sharing effect may also be achieved via another first through hole 416 (the sealing film of the first through hole 416 is dissolved).

When the sealing film capable of being opened by the external force is adopted, a traction ring may generally be disposed on the sealing film, and an opening may be formed at the sealing film by using the external force to pull the traction ring.

Liquid path unpacking may be performed by means of the following process.

After the assembly of the high-capacity battery is completed, by using a traction tool to pull the traction ring, each sealing film is torn open or detached from the first through hole 416, such that the electrolyte sharing chamber 27 penetrates through the inner cavity of the battery cell 11, causing the electrolyte in all the battery cells 11 to be in a same system, thereby achieving the electrolyte sharing effect. During the unpacking process, even if the sealing film at one first through hole 416 is not completely torn open or detached, the electrolyte sharing effect may also be achieved via another first through hole 416 (the sealing film of the first through hole 416 is torn open or completely detached).

In some other examples, one or more than two first through holes 416 hereinabove may be provided in the lower cover plate 816 of the battery cell. When there is one first through hole 416 provided, the first through hole 416 is generally located at a geometric center of the lower cover plate 816 of the battery cell; and when there are more than two first through holes 416 provided, first through holes of the plurality of battery cells 416 may be uniformly distributed on the lower cover plate 816 of the battery cell. The size of the first through hole 416 still need to meet the two conditions hereinabove. Moreover, a position of the third support rib 91 need to be adjusted according to a position of the first through hole 416 of the battery cell 11. For example, when there is one first through hole 416 provided and the first through hole 416 is located at the geometric center of the lower cover plate 816 of the battery cell, only two third support ribs 91 may be provided, and a liquid channel is formed between the two third support ribs 91 and in communication with the first through hole 416 of the battery cell 11.

In some other examples, the electrolyte sharing chamber 27 shown in FIG. 72 may also be adopted, that is, the support ribs are directly arranged in the x direction on the housing bottom plate 83, and the liquid channel is formed between the two support ribs to serve as the electrolyte sharing chamber 27. The support ribs herein also have the following two functions.
1. Each battery cell of the plurality of battery cells 11 is elevated such that the electrode terminal 84 of the each battery cell of the plurality of battery cells 11 extends out of the third through hole 112 in the housing top plate 82.
2. Each battery cell of the plurality of battery cells 11 is supported, and a liquid channel is formed between the bottom support member and a bottom of the each battery cell of the plurality of battery cells 11 to serve as the electrolyte sharing chamber 27.

However, compared to this example, the electrolyte sharing chamber 27 formed thereby has a relatively large size in the z direction, causing such high-capacity batteries to use more electrolyte, thus resulting in relatively-high costs.

Specifically, for the electrolyte sharing chamber 27 shown in FIG. 72, the size of the electrolyte sharing chamber 27 in the z direction is equal to the size of the support rib, such that the volume of the electrolyte sharing chamber 27 is large, leading to more electrolyte used in the entire electrolyte sharing chamber 27 (it is to be noted that, since the lower cover plate 816 of the each battery cell of the plurality of battery cells and the support rib are arranged in a non-sealed manner, the electrolyte permeated into a cavity formed between the two support ribs and the housing 21 from the gap between the lower cover plate and the support rib), thus increasing the cost of such high-capacity batteries.

The embodiment considered that two types of support ribs are arranged on a same support member, the first type of support ribs mainly functioned to construct the electrolyte sharing chamber 27, and the second type of support ribs mainly functioned to elevate each battery cell of the plurality of battery cells 11, such that a height of the first type of support ribs in the z direction may be minimized to reduce the volume of the electrolyte sharing chamber 27, thereby decreasing the amount of electrolyte used. Since the height of the first type of support ribs in the z direction is decreased, the electrode terminal 84 of the each battery cell of the plurality of battery cells may not smoothly extend through the corresponding third through hole 112. In this case, it may ensure, by increasing the height of the second type of support ribs in the z direction, that the electrode terminal 84 of the each battery cell of the plurality of battery cells smoothly extends out of the corresponding third through hole 112. From FIG. 69, it may be obviously seen that, in the z direction, a size of the third support rib 91 in this embodiment is less than that of the fourth support rib 92. Therefore, the embodiment, based on the bottom support member 89, ensured that the electrode terminal 84 of the battery cell may extend out of the corresponding third through hole 112 in the housing top plate 82 while ensuring a small volume of the electrolyte sharing chamber.

The gas sharing chamber 310 in this example is a gas channel disposed on the housing top plate 82, with a specific structure as shown in FIGs. 67 and 68. The housing top plate 82 is provided with a protrusion extending in the x direction, and a gas channel extending in the x direction is formed at the protrusion. While the cylinder 24 is processed adopting an aluminum extrusion process, the gas channel may be extruded synchronously.

The structure of the battery cell 11 corresponding to the gas sharing chamber 310 of such structure is shown in FIGs. 73 and 74.

In this example, a fifth through hole 37 is provided in an upper cover plate 817 of the battery cell; and the fifth through hole 37 is located between the two electrode terminals 84 of the battery cells 11. The fifth through hole 37 is sealed using the sealing assembly 418. After the battery cell 11 is placed into the cylinder 24 hereinabove, the fifth through hole 37 is located under the gas sharing chamber 310. By means of the external force or external electrolyte (the external electrolyte herein referred to electrolyte locates outside the battery cell 11), the sealing assembly 418 may be removed from the upper cover plate or an opening penetrating through the fifth through hole 37 is provided in the sealing assembly 418, so as to penetrate through the gas sharing chamber 310. The specific penetration manner (i.e., the unpacking manner) is similar to the liquid path unpacking process, and thus is not described herein again.

As shown in FIGs. 67 and 68, the housing top plate 82 in this example is provided with a third through hole 112 capable of allowing the electrode terminal 84 of the each battery cell of the plurality of battery cells 11 to extend out; and the electrode terminal 84 of the each battery cell of the plurality of battery cells 11 extends out of the corresponding third through hole 112, and a housing 21 region around the third through hole 112 is fixedly sealed with the housing body of the battery cell 11. From the figures, it may be seen that, the electrode terminal 84 of the battery cell 11 in this example is the electrode terminal of the battery cell 11, and the electrode terminals of such battery cells 11 are higher than that of conventional commercially available square housing batteries.

In combination with FIGs. 65 and 66, it may be seen that, in this example, a through groove is provided at the portion at which the electrode terminal 84 of the battery cell 11 extends out of the third through hole 112, so as to serve as a heat transfer tube clamping portion 87. From FIG. 74, it may be seen that the electrode terminal 84 of the battery cell 11 in this example is a cylinder, including a first end face, a second end face 841, and a side wall 842 (the first end face and the second end face 841 are parallel to each other). The through groove is provided on the side wall 842 of the electrode terminal, that is, an opening of the through groove is located in the side wall 842.

In some other examples, a through hole may also be provided in the side wall 842, that is, an opening of the through hole is located in the side wall 842.

In some other examples, a through groove may also be provided in the second end face 841, that is, an opening of the through groove is located in the second end face 841.

The second end face 841 serves as an electrical connection portion of the electrode terminal 84, and is configured to be connected to a first electrical connection member 821 and/or a second electrical connection member 822 to achieve an electrical connection between each battery cell of the plurality of battery cells 11 and/or two high-capacity batteries; and the first end face is configured to be electrically connected to an electrode assembly in the housing body of the battery cell 11.

By providing the through groove or through hole in the side wall 842, compared to the fact of providing the through groove in the second end face 841, the heat transfer tube 88 has a larger contact area with the inner wall of the through groove or through hole in the through groove or through hole, thereby achieving higher heat exchange efficiency. Furthermore, when the through groove or through hole is located at the side wall 842, an entire region of the second end face 841 may serve as an electrical connection region. Two through grooves or through holes may also be simultaneously provided in the side wall 842 of the electrode terminal to increase the number of heat transfer tubes 88 placed, thereby further improving the heat exchange efficiency. The through groove caused the heat transfer tube 88 to be mounted more easily compared to a through hole structure.

The through groove has a C-shaped cross section. The through groove with the C-shaped cross section has an opening width less than a widest point of the through groove. Such a design facilitated interference snap-fit of the heat transfer tube 88 in the through groove, and curvatures formed at two ends of the C-shaped through groove has natural tension, facilitating tight snap-fit of the heat transfer tube 88 in the through groove.

The heat transfer tube 88 is fixed in the through groove or through hole (the heat transfer tube 88 is insulated from the battery cell 11). When a temperature of the high-capacity battery is higher than a set threshold, the high-capacity battery is cooled by introducing a low-temperature heat transfer medium into the heat transfer tube 88; and when the temperature of the high-capacity battery is lower than the set threshold, the high-capacity battery is heated by introducing a high-temperature heat transfer medium into the heat transfer tube 88. Therefore, it may ensure, by controlling the temperature of the heat transfer medium, that the high-capacity battery may operate at a normal operating temperature.

As shown in FIGs. 65 and 75, the heat transfer tube 88 in this example may adopt a U-shaped tube section. For ease of mounting, the U-shaped tube section is divided into three portions, which may be respectively defined as a first tube 881, a second tube 882, and a connection tube 883.

The first tube 881 is fixed in a positive electrode terminal through groove of the each battery cell of the plurality of battery cells 11 in the high-capacity battery; the second tube 882 is fixed in a negative electrode terminal through groove of the each battery cell of the plurality of battery cells 11 in the high-capacity battery; and two ends of the connection tube 883 are respectively connected to ports of the first tube 881 and second tube 882 located on a same side. The remaining two ports of a first section and the second tube 882 serves as a liquid inlet and a liquid outlet of the heat transfer tube 88.

In some other examples, two heat transfer tubes 88 may also be adopted. The two heat transfer tubes 88 are respectively clamped in the heat transfer tube clamping portions 87 of a positive electrode terminal and a negative electrode terminal of the each battery cell of the plurality of battery cells 11 in the high-capacity battery.

This example may complete the assembly of the high-capacity battery by means of the following processes.

At Step 1, the cylinder 24 and two end plates 81 are processed.

At Step 2, capacity grading and sorting is performed to screen out the plurality of battery cells 11 meeting requirements; a first through hole 416 is provided in the lower cover plate 816 of the battery cell and then sealed using with the sealing assembly 418; the fifth through hole 37 is provided in the upper cover plate 817 of the battery cell and then sealed using with the sealing assembly 418; and the plurality of battery cells 11 with the sealing assemblies 418 are arranged in the cylinder 24 in Step 1.

A specific arrangement process is as follows.

The plurality of battery cells 11 are fixed as an integral body, and pushed into the inner cavity of the cylinder 24 from any open end of the cylinder 24; in this case, the bottom of the each battery cell of the plurality of battery cells 11 is in contact with the housing bottom plate 83, and the electrode terminal 84 of the each battery cell of the plurality of battery cells 11 corresponds to the corresponding third through hole 112, but does not extend out of the third through hole 112; then, the plurality of battery cells 11 are supported, using a lifting tooling, from the bottom to separate the bottom of the each battery cell of the plurality of battery cells 11 from the housing bottom plate 83, wherein the electrode terminal 84 of the each battery cell of the plurality of battery cells 11 extends out of the corresponding third through hole 112; and then, the bottom support member 89 is inserted between each battery cell of the plurality of battery cells 11 and the housing bottom plate 83 in the x direction, and the lifting tooling is removed.

The cylinder 24 may also be flipped to cause the cylinder 24 top plate to face downward, the plurality of battery cells 11 are fixed as an integral body and pushed into the inner cavity of the cylinder 24 from any open end of the cylinder 24; or the plurality of battery cells 11 are sequentially pushed into the inner cavity of the cylinder 24 from any open end of the cylinder 24; the electrode terminal 84 of the each battery cell of the plurality of battery cells 11 extends out of the corresponding third through hole 112 under the action of gravity, and the bottom support member 89 is inserted between the bottom of the each battery cell of the plurality of battery cells 11 and the housing bottom plate 83; and the cylinder 24 is flipped to cause the cylinder 24 top plate to face upward.

It is to be noted that, in the z direction, the size of the bottom support member 89 need to meet the following: after the bottom support member 89 is added between the bottom of the each battery cell of the plurality of battery cells 11 and the housing bottom plate 83, the electrode terminal 84 of the each battery cell of the plurality of battery cells 11 extends out of the corresponding third through hole 112.

At Step 3, the third through hole 112 and a peripheral portion of the electrode terminal of the housing body of the battery cell 11 are sealed; and the two end plates 81 are welded to two opposite open ends of the cylinder 24.

At Step 4, the sealing assembly 418 is opened by using the external force or the electrolyte itself, the inner cavity of the electrolyte sharing chamber 27 penetrates through the electrolyte region of the inner cavity of the each battery cell of the plurality of battery cells 11, and the inner cavity of the gas sharing chamber 310 penetrates through the gas region of the inner cavity of the each battery cell of the plurality of battery cells 11.

After the inner cavity of the each battery cell of the plurality of battery cells 11 penetrates through the electrolyte sharing chamber 27, the electrolyte in the inner cavity of the each battery cell of the plurality of battery cells 11 is in communication with the electrolyte sharing chamber 27. In order to prevent a phenomenon of electrolyte interruption, the electrolyte may be injected, after the inner cavity of the each battery cell of the plurality of battery cells 11 penetrates through the electrolyte sharing chamber 27, into the electrolyte sharing chamber 27 to ensure the continuity of the electrolyte.

Then, the heat transfer tube 88 is fixed in the through groove of each electrode terminal 84, and all the battery cells 11 are connected in parallel by adopting the first electrical connection member 821 as shown in FIG. 75. The step may also be executed before Step 4.

In order to form a more complete SEI film, causing the high-capacity battery to have a more stable cycling capability, formation is performed on the entire high-capacity battery after the electrolyte is injected into the inner cavity of the each battery cell of the plurality of battery cells 11 via the electrolyte sharing chamber 27.

### Example 31

When the heat transfer tube 88 in Example 30 is in contact with an electrode terminal 84 of a battery cell 11 for heat exchange, the heat transfer tube 88 need to be disposed insulated from the polar terminal 84 of the battery cell 11, as well as the battery cell 11. This example provides a heat transfer tube 88 with double-layer insulation. The heat transfer tube is mounted on the polar terminal 84 of the battery cell 11, such that the polar terminal 84 of the battery cell 11 has reliable insulation performance when exchanging heat with the heat transfer tube 88.

The heat transfer tube 88 in this example specifically includes a metal tube, wherein the metal tube is provided with an insulating layer and an insulating sleeve; and the insulating layer is formed on a tube wall of the metal tube, and the insulating sleeve is disposed on the metal tube with the insulating layer. The heat transfer tube 88 hereinabove is provided with both an insulating layer and an insulating sleeve on the tube wall in contact with the electrode terminal 84 of the battery cell 11 to form double insulation, wherein when the heat transfer tube 88 exchanged heat with the electrode terminal 84 of the battery cell 11, even if one of the insulating layer or the insulating sleeve is damaged, reliable insulation performance between the heat transfer tube 88 and the electrode terminal 84 of the battery cell 11 may still be maintained, thereby improving the safety of the battery cell 11 during use. A specific structure of the heat transfer tube 88 formed by the metal tube, the insulating layer, and the insulating sleeve is described in detail below.

The heat transfer tube 88 hereinabove is a pipeline having a heat exchange function, is mainly in contact with the electrode terminal 84 of the battery cell 11, is configured to perform heat exchange with the electrode terminal 84 of the battery cell 11. No requirements are made to a cross-sectional shape of the heat transfer tube 88, as long as it may be in contact with the electrode terminal 84 of the battery cell 11 for heat exchange, for example, the heat transfer tube may adopt a square tube, an elliptical tube, a circular tube, etc. In this example, the heat transfer tube 88 is preferably a circular tube, as the circular tube is easy to mount and may be made adopting existing metal tubes, and the cost is relatively low.

The heat transfer tube 88 in this example specifically adopted a metal tube with good thermal conductivity, such as an aluminum tube, a copper tube, etc. Preferably, the heat transfer tube 88 hereinabove adopted an aluminum tube with a good heat conduction effect and relatively-low cost. In order to ensure the heat conduction effect, the thinner the wall thickness of the aluminum tube, the better. However, if the wall thickness of the aluminum tube is too thin, the aluminum tube is relatively soft, and thus is prone to bending and damage during mounting. Therefore, in this example, the wall thickness of the aluminum tube is preferably 0.5 mm to 1 mm, and the aluminum tube with the wall thickness may maintain mounting reliability while achieving good heat conduction performance, thereby avoiding a risk of bending and damage when the wall thickness of the aluminum tube is too thin. During specific use, a diameter of the aluminum tube is generally about 10 mm to 20 mm.

In the heat transfer tube 88 in this example, the insulating layer is formed on the tube wall of the aluminum tube and is integrated formed with the aluminum tube, which may be specifically implemented by adopting the following manners.

First, a ceramic coating, which is a high-temperature electrical insulating coating, is formed on the tube wall of the aluminum tube, configured to form the insulating layer. The ceramic coating may specifically be a boron nitride, aluminum oxide, or copper fluoride coating. However, the insulating layer formed in this manner is prone to detachment, and is high in processing cost.

Second, an insulating material (e.g., insulating paint, etc.) is coated on a surface of the tube wall of the aluminum tube to form the insulating layer; and this manner is easy to process and implement, and is low in processing cost.

Third, an oxidation treatment is performed on the aluminum tube to form the insulating layer; and the oxidation treatment is to form an oxide film by utilizing a metal surface to undergo a chemical reaction with oxygen, thereby improving the insulation performance of the metal surface. For example, an electrochemical oxidation method and the like are adopted. Specifically, the oxidation treatment is performed on the aluminum tube to form a hard oxide layer. The insulating layer formed by the method is not easy to detach and has relatively good insulation performance.

If a thickness of the hard oxide layer formed by the oxidation treatment is thicker, the insulation performance is better, but the heat conduction performance is reduced. In this example, the thickness of the hard oxide layer hereinabove is preferably 20 um to 50 um, such that while the hard oxide layer with the thickness ensures the insulation performance, the tube wall of the aluminum tube also has better heat conduction performance.

In this example, in order to ensure the reliability of insulation, the insulating sleeve is disposed outside the aluminum tube hereinabove with the insulating layer, such that double insulation is formed on an outer wall of the aluminum tube.

The insulating sleeve hereinabove may be processed and manufactured by adopting an insulating material with good heat conduction performance, such that the insulating sleeve has excellent heat conduction performance while also having good insulation performance. In this example, the insulating sleeve adopted a thermally conductive plastic sleeve or a thermally conductive rubber sleeve with excellent insulation performance and thermal conductivity, such as a thermally conductive silicone sleeve, etc. Moreover, the thickness of the insulating sleeve is preferably 0.1 mm to 1 mm, and the thickness ensures good heat conduction performance while ensuring excellent insulation performance. A cross-sectional shape of the insulating sleeve may be circular, U-shaped, or C-shaped, as long as the insulating sleeve may be sleeved on the aluminum tube with the insulating layer to achieve insulation at a contact portion between the aluminum tube and the electrode terminal 84 of the battery cell 11. Moreover, the cross-sectional shape of the insulating sleeve hereinabove is preferably the same as a cross-sectional shape of the aluminum tube, such that the insulating sleeve may be tightly sleeved on the aluminum tube, thereby improving the thermal conductivity of the aluminum tube.

In some other examples, an oxide layer may be directly disposed on the tube wall of the aluminum tube or the insulating sleeve may be sleeved on the tube wall of the aluminum tube, such that the structure is relatively simple. However, if the thickness of the oxide layer or the insulating sleeve is too thin, the oxide layer or the insulating sleeve is easy to detach or be easily scratched, resulting in a problem of unreliable insulation.

### Example 32

During long-term use, due to a temperature difference between the inside and outside of a heat transfer tube 88, condensation forms on a surface. When accumulating to a certain amount, the condensation may penetrate into a gap between the electrode terminal 84 and a third through hole 112, causing the electrode terminal 84 to be electrically connected to a housing 21, thus resulting in a short circuit in a same battery cell 11.

In this example, by optimizing a top structure of a high-capacity battery, an insulating sealant layer 820 is laid on a housing top plate 82 to overcome the problems hereinabove. An electrical connection portion (second end face 841) of the electrode terminal 84 of the each battery cell of the plurality of battery cells 11 extends out of the insulating sealant layer 820, and is configured to be connected to a first electrical connection member 821 or a second electrical connection member 822. A liquid inlet end and a liquid outlet end of the heat transfer tube 88 extends out of the insulating sealant layer 820, and are configured to be connected to a liquid cooling device. The first electrical connection member 821 is a connection device configured to achieve a parallel connection of the each battery cell of the plurality of battery cells 11; and the second electrical connection member 822 is a connection device configured to achieve a series connection of two high-capacity batteries, or may also be a connection device configured to connect the high-capacity battery and an external load.

As shown in FIG. 76, in this example, the insulating sealant layer 820 is laid on the housing top plate 82. From the figure, it may be seen that a partial region of the electrode terminal 84 of the each battery cell of the plurality of battery cells 11 is covered by the insulating sealant layer 820, the electrical connection portion (i.e., second end face 841) of the electrode terminal 84 of the each battery cell of the plurality of battery cells 11 is connected to the first electrical connection member 821 and/or the second electrical connection member 822 by extending out of the insulating sealant layer 820. A main body portion of the heat transfer tube 88 is covered by the insulating sealant layer 820. The liquid inlet end and the liquid outlet end of the heat transfer tube 88 extends out of the insulating sealant layer 820, and are configured to be connected to the liquid cooling device.

In some other examples, the insulating sealant layer 820 may have a small size in a z direction, which is lower than the main body portion of the heat transfer tube 88, may cover only a partial region of the main body portion of the heat transfer tube 88, as long as it ensured that the condensation may not enter the gap between the electrode terminal 84 and the third through hole 112.

An insulating sealant adopts in this example is generally a battery pouring sealant commonly used for batteries, such as a silicone thermal conductive pouring sealant, which has good functions of sealing, insulation, vibration resistance, heat dissipation, waterproofing, etc.

In order to prevent overflow of the insulating sealant liquid, during adhesive injection in this example, an adhesive injection mold may be added around edges around the housing top plate 82, thereby ensuring that the insulating sealant liquid may be smoothly injected. After adhesive injection is completed, demolding may be performed.

In combination with FIG. 77, two first electrical connection members 821 in this example are provided. One of the first electrical connection members 821 is connected to the second end faces 841 of positive electrode terminals of all the battery cells 11 in the high-capacity battery, and the other first electrical connection member 821 is connected to the second end faces 841 of the negative electrode terminals of all the battery cells 11 in the high-capacity battery. Therefore, all the battery cells 11 in the high-capacity battery are connected in parallel.

From the figure, it may be seen that, the first electrical connection member 821 is a metal plate, and may select a metal material such as copper, aluminum, etc., and an aluminum material is selected in this example on the basis of cost considerations.

The first electrical connection member 821 and the electrode terminal 84 of the battery cell 11 may be connected by adopting screws or by means of welding. Considering the reliability of connection, this example adopts the welding manner to achieve the connection between the first electrical connection member and the electrode terminal.

Thirteen second electrical connection members 822 in this example are provided, and fixed to the electrical connection portion of the electrode terminal 84 of the each battery cell of the plurality of battery cells 11. In some other examples, the number of the second electrical connection members 822 may be determined according to actual requirements, and the second electrical connection member may be directly connected to the first electrical connection member 821.

### Example 33

In the examples hereinabove, the electrode terminal 84 is directly exposed to an external environment, and during use, a significant safety hazard existed due to the electrode terminal 84 being electrified. Based on this, as shown in FIGs. 78 and 79, on the basis of the examples hereinabove, this example disposes an insulating protective cover 815 at a top of a high-capacity battery to provide insulation protection for the electrode terminal 84, such that potential safety hazards caused by exposed electrode terminal 84 during operation of the high-capacity battery are avoided, and the problem of a short circuit in the high-capacity battery due to the falling of some foreign objects of an external environment into the position of the electrode terminal 84 is also avoided, thereby improving the safety of the high-capacity battery.

It is to be noted that, if the insulating protective cover 815 completely wraps the electrode terminal 84, an electrical connection of such high-capacity batteries is relatively difficult. Therefore, in this example, a slit 8153 is provided on the side wall of the insulating protective cover 815 parallel to an xz plane, and the second electrical connection member 822 may be connected to the electrode terminal 84 via the slit 8153, thereby achieving the electrical connection.

It is to also be noted that a channel configured to allow the liquid inlet end and the liquid outlet end of the heat transfer tube 88 to extend out also need to be provided on the side wall of the insulating protective cover 815.

In order to facilitate implementation of an electrical connection process, this example designed the insulating protective cover 815 as a split structure, as shown in FIG. 79, including an insulating frame body 8151 and an insulating cover plate 8152 covering the insulating frame body 8151. A lower end of the insulating frame body 8151 is configured to mate with a top of the high-capacity battery and is fixed to the top of the high-capacity battery by means of screw connection or adhesive bonding, an upper end of the insulating frame body 8151 is configured to mount the insulating cover plate 8152 in a snap-fit manner, and a notch is provided at the upper end of the side wall of the insulating frame body 8151 parallel to the xz plane, wherein the notch is mated with the insulating cover plate 8152 to form the slit 8153 hereinabove.

During assembly, the insulating frame body 8151 may first be fixed to the top of the high-capacity battery, and then the second electrical connection member 822 is connected to the electrode terminal 84 via the slit 8153. After adhesive injection, the insulating cover plate 8152 is fixed to the upper end of the insulating frame body 8151.

Furthermore, in Example 32, during adhesive injection, in order to prevent overflow of the insulating sealant liquid, the adhesive injection mold is required. However, after adhesive injection, demolding is required, making the process relatively complex. Furthermore, during demolding, a structure of the insulating sealant layer 820 may be damaged, resulting in reduced sealing reliability.

In this example, the insulating frame body 8151 of the insulating protective cover 815 may be used as the adhesive injection mold, demolding is not required after adhesive injection, and the bonding strength between the insulating frame body 8151 and the top of the high-capacity battery may also be improved.

### Example 34

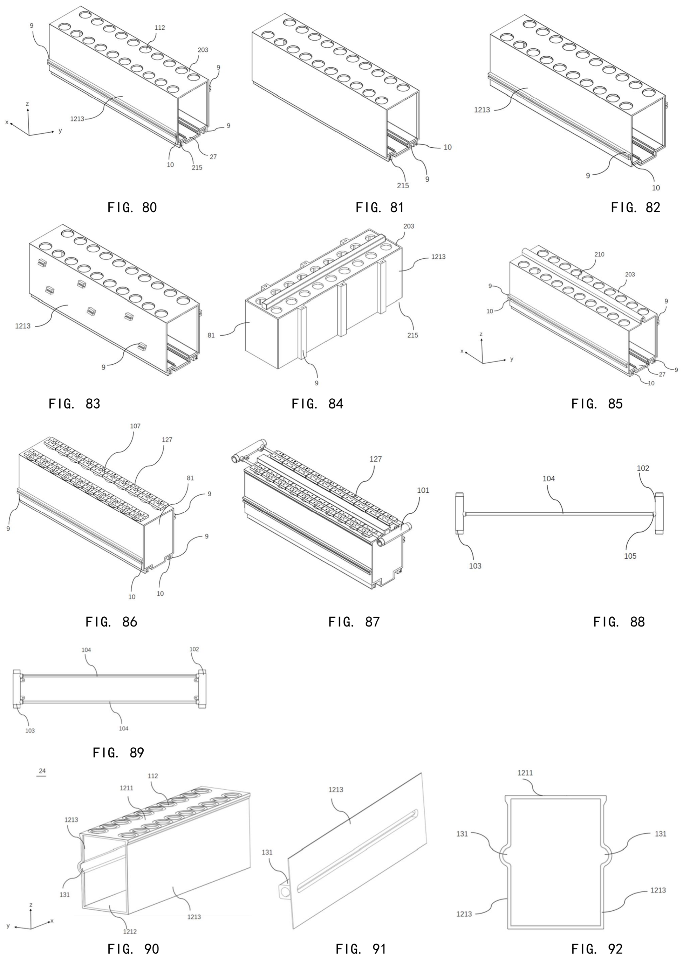

This example provides a cylinder assembly, which may be used as the cylinder 24 of the high-capacity battery hereinabove in this example, wherein the cylinder assembly has a structure shown in FIGs. 80 to 82, and includes a main cylinder body. The main cylinder body is formed by enclosing a cylinder top plate 203, a cylinder bottom plate 215, and two cylinder side plates 1213. The cylinder top plate 203 is provided with a third through hole 112 corresponding to an electrode terminal of the each battery cell of the plurality of battery cells on a one-to-one basis. The cylinder bottom plate 215 is provided with a protruding portion in a direction away from the cylinder top plate 203, configured to form an electrolyte sharing chamber 27. For ease of description, a length direction of the cylinder 24 may be defined as an x direction, a width direction of the cylinder 24 may be defined as a y direction, and a height direction of the cylinder 24 may be defined as a z direction.

Different from the cylinder 24 in the examples hereinabove, this example further is provided a fixing portion on the cylinder 24, wherein the fixing portion is a boss 9 (FIG. 82) protruding from the cylinder side plate 1213 or a boss 9 (FIG. 81) protruding from the cylinder bottom plate 215, and the boss 9 is provided with a first snap groove 10 extending in the x direction, so as to fix a heat exchange tube. In order to improve heat exchange efficiency, the fixing portions (FIG. 80) may be provided on both the cylinder side plate 1213 and the cylinder bottom plate 215.

In this example, the boss 9 is in a long strip shape, and the first snap groove 10 is a through groove and penetrates through the long-strip boss 9 in the x direction. A heat transfer tube of which length is greater than that of the cylinder 24 and cross section matched a cross section of the first snap groove 10 may be snapped into the first snap groove 10, and two ends of the heat transfer tube are ensured to extend out of end faces of the cylinder 24, so as to be connected to a heat transfer medium source. For example, heat generated by the high-capacity battery may be transferred, using a low-temperature heat transfer medium flowing in its inner cavity, to a heat transfer medium, and then the heat may be removed by the flowing of the heat transfer medium; alternatively, the heat may be transferred, using a high-temperature heat transfer medium flowing in its inner cavity, to the high-capacity battery. The heat transfer medium described herein may include water and an electrically-insulating heat transfer medium, for example, an insulating oil-based heat transfer medium need to ultimately ensure that the heat transfer medium is non-conductive.

In this example, the cylinder assembly hereinabove may be integrally formed by adopting an aluminum extrusion process. In the cylinder assembly formed adopting the aluminum extrusion process, in the x direction, a size of the boss 9 and a size of the first snap groove 10 both are equal to a size of the cylinder 24, and an end face of the boss 9 and an end face of the cylinder 24 are located on a same plane.

In some other examples, as shown in FIG. 83, the boss 9 is a small rectangular block and fixed on the cylinder 24 in a manner of punctate distribution, and the corresponding heat transfer tube is a flexible tube and fixed with the high-capacity battery via the first snap groove 10 on each boss 9. However, compared to this example, the above has the following disadvantages: in an aspect, a local position of the heat transfer tube in the solution is snap-fitted in the first snap groove 10 of the boss 9, causing the heat transfer tube to easily detach from the first snap groove 10. In another aspect, each boss 9 is fixed to an outer wall of the cylinder side plate 1213 by welding, the processing process is relatively complex; and furthermore, during welding, a welding portion may also be burnt through, causing the cylinder 24 to become a defective product. In a third aspect, the plurality of welding portions hereinabove may be a potential leakage point, and when a high-capacity battery is assembled, electrolyte in an inner cavity of the cylinder 24 is prone to leaking from the welding portions, or external air may enter the inner cavity of the cylinder 24 via the welding portions, causing the electrolyte to deteriorate, thus causing a battery to be scrapped. In a fourth aspect, the heat transfer tube in the solution has a small contact area with the cylinder, resulting in a poor heat transfer effect.

In some other examples, the fixing portion is the boss 9 protruding from the cylinder side plate 1213 or the cylinder bottom plate 215, a through hole extending in the x direction is provided in the boss 9, the heat transfer tube with a length greater than that of the main cylinder body and a cross section matching that of the through hole may be sleeved into the through hole, and the two ends of the heat transfer tube are ensured to extend out of the end surfaces of the cylinder 24, so as to be connected to a heat transfer medium source. However, compared to this example, when the size of the cylinder in the x direction is large, coaxiality between the heat transfer tube and the through hole is difficult to ensure, leading to the heat transfer tube being not easily able to smoothly pass through the through hole.

In some other examples, the main cylinder body further includes end plates 81 on two sides, as shown in FIG. 84. The main cylinder body in the solution is a housing of the high-capacity battery. The end plates 81 on the two sides and the two cylinder side plates 1213 may be formed as an integral piece, and are formed adopting the aluminum extrusion process. The cylinder top plate 203 and the cylinder bottom plate 215 are connected to upper and lower open ends by means of welding. Similar to this example, a heat transfer tube fixing portion may be added on such cylinder side plate 1213 or the cylinder bottom plate 215. For ease of processing, the fixing portion may extend in the height direction of the main cylinder body, and is formed as an integral piece with the two end plates 81 and the two cylinder side plates 1213. In the solution, the size of the main cylinder body in the height direction is small, such that the boss 9 may be provided with the third through hole extending in the z direction, the heat transfer tube with a height greater than that of the main cylinder body and a cross section matching that of the third through hole is sleeved into the third through hole, and the two ends of the heat transfer tube extends out of the third through hole, so as to be connected to the heat transfer medium source. Certainly, similar to this example, the boss 9 may also be provided with a snap groove extending in the z direction.

### Example 35

A difference between this example and Example 34, as shown in FIG. 85, on the basis of Example 34, this example provides a protruding portion on a cylinder top plate 203 in a direction away from a cylinder bottom plate 215, configured to form a second channel as a gas chamber 210.

### Example 36

This example provides a high-capacity battery, which has a structure shown in FIG. 86 and includes a cylinder 24, a plurality of battery cells arranged in an inner cavity of the cylinder 24, end plates 81 respectively hermetically fixed to two opposite open ends of the cylinder 24, and current collector piece 127 fixed on a cylinder top plate 203, wherein the cylinder 24 is the cylinder assembly in Example 34 or Example 35; a housing region corresponding to a third through hole 112 is fixedly sealed with a housing body of the each battery cell of the plurality of battery cells; and the current collector piece 127 is electrically connected to an electrode terminal of the each battery cell of the plurality of battery cells via the third through hole 112.

### Example 37

This example further is provided a high-capacity battery. A difference between this example and Example 36 lies in that, this example added a heat exchange assembly 101 on the basis of Example 36, with a structure shown in FIG. 87, wherein the heat exchange assembly 101 is fixed to the current collector piece 127 of the high-capacity battery.

The structure of the heat exchange assembly 101 is shown in FIGs. 88 and 89, and is a tube section similar to an I-shape, with an inner cavity being a heat transfer medium transmission cavity. A heat transfer medium described herein may include water or other insulating oil-based heat transfer media such as insulating oil-based heat transfer media or fluorinated liquid, and when the heat transfer medium is fixed to the high-capacity battery, it need to ultimately ensure that the heat transfer medium is non-conductive.

For ease of description, the three portions of the I-shaped tube section may be respectively defined as a first tube member 102, a second tube member 103, and a third tube member 104, wherein the third tube member 104 is located between the first tube member 102 and the second tube member 103, two ends of the third tube member are connected to tube walls of the first tube member 102 and the second tube member 103, and an inner cavity of the third tube member penetrates through the first tube member 102 and the second tube member 103.

From the figures, it may be seen that, the first tube member 102 and the second tube member 103 are parallel to each other; first connection tubes 105 perpendicular to central axes are disposed on the tube walls of the first tube member 102 and the second tube member 103; and the two ends of the third tube member 104 are respectively connected to the first connection tubes 105 of the first tube member 102 and second tube member 103, wherein the connection may be implemented by means of welding, insertion, threaded connection, or hot melt, etc., and the sealing performance of a connection portion need to be ensured after the connection. Different connection manners correspond to different materials and structures. For example, when the connection is implemented by means of welding or insertion (interference fit), the third tube member 104 and the first connection tube 105 generally adopt metal members; when the connection is implemented by means of threaded connection, external threads are provided in an outer wall of the connection portion between the third tube member 104 and the first connection tube 105, and internal threads matching the external threads hereinabove are provided in an inner wall of the first connection tube 105, a sealing gasket may be simultaneously added at the connection portion, and there is no special requirement for the materials of the third tube member 104 and the first connection tube 105; and when the connection is implemented by means of hot melt, the third tube member 104 and the first connection tube 105 generally adopt plastic members. Injection molding may also be adopted. A third connection tube is a metal member. The first tube member and the second tube member are formed at the two ends of the third tube member by means of injection molding. The heat exchange assembly processed using the method has better sealing performance.

Since a temperature of a lithium-ion battery is mainly concentrated on the electrode terminal, this example preferably fixed the heat exchange assembly 101 to the current collector piece 127. From FIGs. 87 and 89, it may be seen that this example provides two third tube members 104, which are respectively connected to the current collector pieces in the high-capacity battery located on the same side, so as to perform heat exchange with the high-capacity battery. For example, heat generated by the high-capacity battery may be transferred, using a low-temperature heat transfer medium flowing in its inner cavity, to a heat transfer medium, and then the heat may be removed by the flowing of the heat transfer medium; alternatively, the heat may be transferred, using a high-temperature heat transfer medium flowing in its inner cavity, to the high-capacity battery. It is to be noted that, when two third tube members are provided and respectively connected to positive and negative electrode terminals, the two third tube members need to be insulated. For example, the two third tube members 104 may adopt metal members (e.g., materials such as silver, copper, aluminum, etc., but considering costs as well as conductive and thermal conductive effects comprehensively, aluminum is generally selected as the material of the third tube member 104), and the first tube member 102 and the second tube member 103 may be plastic members. The first tube member 102, the second tube member 103, and the third tube member 104 may all adopt metal members, as long as an insulation treatment is performed on the connection portions between the third tube member 104 and the first tube member 102 and the second tube member 103.

In this example, a second snap groove 107 extending in the x direction is provided in the current collector piece 127 to serve as a third tube member 104 fixing portion (refer to FIG. 86). A size of an opening of the second snap groove 107 need to ensure that the third tube member 104 may be snapped therein and the third tube member 104 has a large contact area with an inner wall of the second snap groove 107, leading to a large heat exchange area, thereby improving the heat exchange efficiency. Furthermore, the second snap groove 107 serves as the third tube member 104 fixing portion, causing the heat exchange assembly 101 to be mounted more easily. The heat exchange assembly 101 is directly treated as an integral body, and the third tube member 104 is snapped into the second snap groove 107. From the figures, it may be seen that, after the third tube member 104 is snapped into the second snap groove 107, the first tube member 102 and the second tube member 103 are located at two ends of the housing.

At least one port of the first tube member 102 and the second tube member 103 is configured to be connected to a heat transfer medium source. For example, one end of the first tube member 102 is connected to an outlet of the heat transfer medium source, and the other end is blocked; and one end of the second tube member 103 is connected to an inlet of the heat transfer medium source, and the other end is blocked. For another example, two ends of the first tube member 102 are both connected to the outlet of the heat transfer medium source; and two ends of the second tube member 103 are both connected to the inlet of the heat transfer medium source. However, compared to the second connection manner, when the first connection manner is adopted, the heat transfer medium may flow better in the heat exchange assembly, thereby achieving a better heat exchange effect.

When the cylinder side plate 1213 in this example is provided with a fixing portion and a heat transfer tube is fixed in the fixing portion, two ends of the heat transfer tube are preferably in communication with the first tube member 102 and the second tube member 103, respectively. A specific connection manner may be the same as the connection manners between the third tube member 104 and the first tube member 102 and the second tube member 103.

When the cylinder bottom plate 215 in this example is provided with the fixing portion, the two third tube members 104 of the heat exchange assembly hereinabove may be snapped into the first snap groove of the fixing portion as the heat transfer tubes, so as to fix the heat exchange assembly on the cylinder bottom plate 215.

In order to ensure that the heat transfer medium is non-conductive, materials of the first tube member 102, the second tube member 103, the third tube member 104, and the heat transfer tube may be selected according to the following manners.
1. The first tube member 102, the second tube member 103, and the third tube member 104 are all aluminum tubes, and the third tube member 104 is insulated from the connection portions with the first tube member 102 and the second tube member 103, for example, the first connection tube 105 adopts a plastic tube, or a plastic film is wrapped at the connection portion between the third tube member 104 and the first connection tube 105, etc. to achieve insulation. The corresponding heat transfer medium may be an electrically-insulating heat transfer medium such as an insulating oil.
2. The first tube member 102, the second tube member 103, and the third tube member 104 are all aluminum tubes, and an insulating film is coated on an inner wall or an outer wall of the third tube member 104. Aluminum oxide layers are formed on inner and outer walls of the aluminum tube by an anodic oxidation method. The corresponding heat transfer medium may be water or the electrically-insulating heat transfer medium. Compared to the first one, the water may be adopted as the heat transfer medium, but the use of a specific aluminum tube is required, resulting in high costs.
3. The first tube member 102 and the second tube member 103 are plastic tubes, and the third tube member 104 is an aluminum tube; and the heat transfer medium is the electrically-insulating heat transfer medium. Therefore, good heat transfer performance is achieved while the heat exchange member is ensured to be not electrified, safe and reliable.
4. The third tube member 104 is a non-conductive non-metal tube and may be a plastic tube such as PP, PE, etc.; and the first tube member 102 and the second tube member 103 are metal tubes, for example, may be aluminum tubes, copper tubes, etc. The corresponding heat transfer medium may be water or the electrically-insulating heat transfer medium. The plastic tube has lower heat transfer efficiency than the metal tube. However, compared to the solution in which the first tube member 102, the second tube member 103 and the third tube member 104 all adopt the plastic tubes, the solution has higher heat transfer efficiency.

When the heat exchange assembly 101 is mounted in the high-capacity battery, the heat exchange assembly 101 may directly be treated as an integral body, and then the third tube member 104 and the current collector piece 127 of the high-capacity battery are fixed, such that the operation is simple, and the mounting is convenient.

### Example 38

This example provides an energy storage device, including a plurality of high-capacity batteries described in Example 36 or Example 37, wherein first tube members 102 in two heat exchange members on the adjacent high-capacity batteries are connected to each other via a second connection tube (which may be a flexible tube) and has inner cavities interpenetrating with each other; and second tube members 103 in the two heat exchange members are connected to each other via a third connection tube (which may be a flexible tube) and has inner cavities interpenetrating with each other. When a heat exchange assembly is mounted in the energy storage device, the plurality of heat exchange members may be directly connected to form one heat exchange assembly, and then a third tube member 104 of each heat exchange member is fixed to an electrode terminal or electrode terminal connection member of each high-capacity battery, thereby achieving simple operations and convenient mounting.

One end of the first tube member 102 on the outermost high-capacity battery is connected to an outlet of a heat transfer medium source, and the other end is blocked. One end of the second tube member 103 is connected to an inlet of the heat transfer medium source, and the other end is blocked. When heat exchange is required, the heat transfer medium source is turned on, a heat transfer medium first flows from the heat transfer medium source by passing through the plurality of first tube members and the plurality of third tube members, then flows out from the second tube member of the outermost high-capacity battery, and enters the heat transfer medium source, and the operation is repeated for a plurality of times, thereby achieving the cooling or heating of the high-capacity battery.

Example 39 to Example 46 below provide a cylinder for a high-capacity battery, wherein the cylinder is formed by enclosing a cylinder top plate, a cylinder bottom plate, and two cylinder side plates, and is configured to accommodate a plurality of battery cells; and an inner cavity of the each battery cell of the plurality of battery cells includes a gas region and an electrolyte region.

Third through holes allowing a first electrode terminal and a second electrode terminal of the battery cell to extend out are provided in the cylinder top plate corresponding to the first electrode terminal and the second electrode terminal of the each battery cell of the plurality of battery cells.

At least one sharing chamber configured to be in communication with the inner cavity of the each battery cell of the plurality of battery cells is disposed on cylinder side plate. The sharing chamber may only be in communication with the electrolyte region of the inner cavity of the battery cell, or may also only be in communication with the gas region of the inner cavity of the battery cell. Both the electrolyte region and the gas region of the battery cell may also be communicated with each other by adopting one sharing chamber.

In the embodiment, the battery cell refers to a commercially-available square housing battery, or a plurality of pouch batteries are connected in parallel and then placed in a housing body to form a similar square housing battery.

The first electrode terminal and the second electrode terminal are positive and negative electrode terminals on the battery cell, or positive and negative current collector pieces added on the positive and negative electrode terminals of the battery cell.

In the embodiment, electrolyte and/or gas in each battery cell of the plurality of battery cells is shared via the sharing chamber to ensure the consistency of the each battery cell of the plurality of battery cells, such that the electrolyte and/or gas in all the battery cells are in a same system, differences in the electrolyte between the battery cells are reduced, and the consistency between the battery cells is improved to a certain extent, thereby prolonging the cycle life of the high-capacity battery to a certain extent.

The embodiment is further described below with reference to the drawings and specific examples.

### Example 39

As shown in FIG. 90, a cylinder 24 for a high-capacity battery in this example is formed by enclosing a cylinder top plate 1211, a cylinder bottom plate 1212, and two cylinder side plates 1213.

For ease of description, a length direction of the cylinder 24 is defined as an x direction, a width direction of the cylinder 24 is defined as a y direction, and a height direction of the cylinder 24 is defined as a z direction.

Third through holes 112 allowing a first electrode terminal and a second electrode terminal of the battery cell 11 to extend out are provided in the cylinder top plate 1211 corresponding to the first electrode terminal and the second electrode terminal of the each battery cell of the plurality of battery cells 11.

A sharing chamber 131 is disposed on one of the cylinder side plates 1213. In this example, the sharing chamber 131 serves as an electrolyte sharing chamber, which is configured to be in communication with an electrolyte region of an inner cavity of the each battery cell of the plurality of battery cells 11 in the cylinder 24.

The electrolyte sharing chamber may adopt the following structural forms.

In a first structure, as shown in FIG. 91, a hollow tube section with a square or circular cross section is fixed on an outer surface of the cylinder side plate 1213, and extended in the x direction; through holes interpenetrating with each other are provided in a tube wall of the tube section and the cylinder side plate 1213; the plurality of through holes may be provided, corresponds to the battery cells 11 in the cylinder 24 on a one-to-one basis, and penetrates through the inner cavities of the battery cells; and the through hole may also be one long-strip through hole penetrating through the inner cavities of all the battery cells 11.

In a second structure, as shown in FIG. 90, a channel extending in the x direction is provided on the cylinder side plate 1213; and the channel directly penetrates through the inner cavity of the each battery cell of the plurality of battery cells 11 located in an inner cavity of the cylinder 24.

Compared to the first structure in which the tube section need to be separately arranged and the through holes need to be provided in the cylinder side plate 1213 and the tube section, the second structure is simpler in processing and manufacturing.

The channel may be formed, adopting a bending, stamping, die-casting, or aluminum extrusion process, directly on the cylinder side plate 1213, and an inner surface of one cylinder side plate 1213 protrudes in a direction away from another cylinder side plate 1213.

It is to be noted that, although a cross section of the channel shown in the figure is semicircular, the cross section of the channel is not limited in this example. For example, in order to achieve structural regularity, a channel with a rectangular cross section may be adopted.

In some other examples, as shown in FIG. 92, electrolyte sharing chambers may also be disposed on the two cylinder side plates 1213; the two electrolyte sharing chambers are symmetrical to each other and may serve as support frames; and the high-capacity battery may be fixed on a battery rack on the basis of the two electrolyte sharing chambers.

In FIG. 90, two ends of the sharing chamber 131 located on a yz plane are open ends, which may be sealed, after the high-capacity battery is constituted, by end plates fixed to the open ends of the cylinder 24. In other examples, the two ends of the sharing chamber 131 located on the yz plane may also directly be closed ends. However, a forming manner is relatively complex.

In this example, the cylinder 24 may be integrally formed adopting an aluminum extrusion process. Since the cylinder 24 extends in the x direction, the open end thereof is located on the yz plane, and extrusion is performed in the x direction, the cylinder 24 with a target length may be formed by one-time extrusion.

It is to be noted that, when the cylinder 24 is extruded, the sharing chamber 131 may be formed simultaneously.

### Example 40

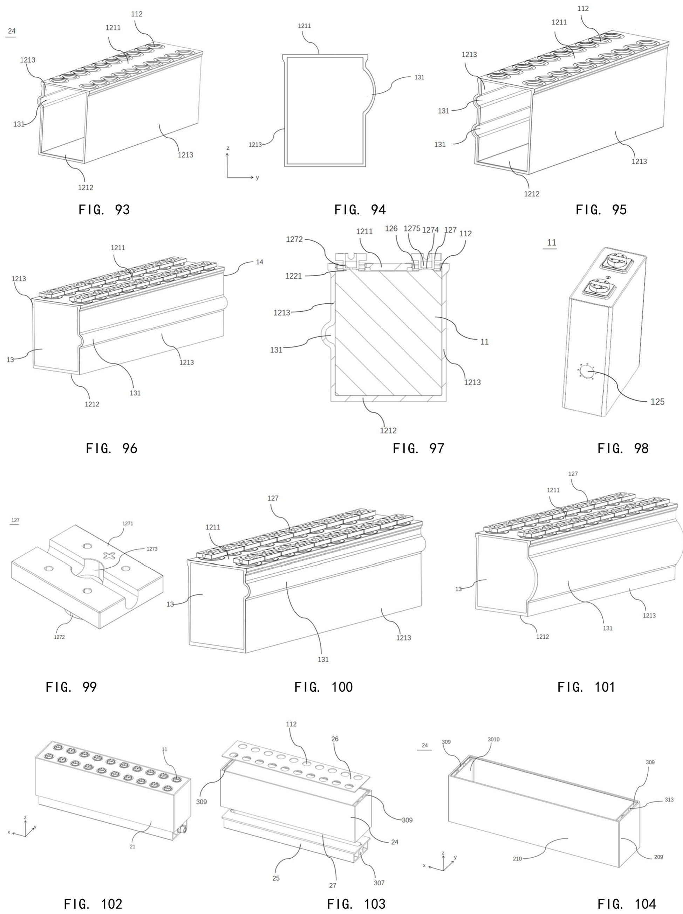

A difference between this example and Example 39 lies in that, a sharing chamber 131 in this example serves as a gas sharing chamber. From FIG. 93, it may be seen that compared to Example 39, the sharing chamber 131 in this example is located at a higher position on a cylinder side plate 1213.

In some other examples, gas sharing chambers may also be disposed on two cylinder side plates 1213; the two gas sharing chambers are symmetrical to each other and may serve as support frames; and a high-capacity battery may be fixed on a battery rack on the basis of the two sharing chambers 131.

### Example 41

A difference between this example and Example 39 lies in that, a sharing chamber 131 in this example serves as a gas-liquid sharing chamber. From FIG. 94, it may be seen that compared to Example 39, the sharing chamber 131 in this example has a large size in a z direction.

In this example, by limiting a size and mounting position of the gas-liquid sharing chamber in a height direction of a cylinder side plate 1213, gas and electrolyte in each battery cell of the plurality of battery cells 11 may enter at the same time. In this case, the gas is distributed at an upper half portion of the sharing chamber 131, and the electrolyte is distributed at a lower half portion of the sharing chamber 131. In order to isolate the gas and the electrolyte in the sharing chamber 131, this example may further add a partition plate in the sharing chamber 131 to divide the sharing chamber 131 into a gas chamber and an electrolyte chamber, wherein the gas chamber is located above the electrolyte chamber.

In some other examples, as shown in FIG. 95, two sharing chambers 131 may be arranged on the cylinder side plate 1213 to respectively serve as a gas sharing chamber and an electrolyte sharing chamber. The two sharing chambers 131 may be located on the same cylinder side plate 1213, or may also be located on different cylinder side plates 1213. However, the structure is relatively complex compared to this example.

In this example, electrolyte and gas in each battery cell of the plurality of battery cells 11 are shared via one sharing chamber 131 to ensure the consistency of the each battery cell of the plurality of battery cells 11, that is, the electrolyte in all the battery cells 11 is in a same system by communicating the electrolyte chamber of the each battery cell of the plurality of battery cells 11, such that differences in the electrolyte between the battery cells 11 are reduced, and the consistency between the battery cells 11 is improved to a certain extent, thereby prolonging the cycle life of the high-capacity battery to a certain extent. Moreover, gas communication inside each battery cell of the plurality of battery cells 11 is also achieved by a hollow member, causing the gases in all the battery cells 11 to be in the same system, and an electrolyte level in each battery cell of the plurality of battery cells 11 may be consistently maintained at the same height, such that the consistency between the battery cells 11 wasfurther improved, thereby further prolonging the cycle life of the high-capacity battery. Furthermore, the simple structure causes such high-capacity batteries to have a small volume, such that the energy storage device formed by the plurality of high-capacity batteries have a high energy density.

### Example 42

A difference between this example and Example 41 lies in that, in a z direction, a size of a gas-liquid sharing chamber in this example is equal to a size of a cylinder side plate 1213.

Compared to Example 41, the gas-liquid sharing chamber in this example is not limited by a position of a gas-liquid separation layer in a battery cell 11, such that gas-liquid sharing is more easily achieved, and a fault tolerance rate is high.

### Example 43

A difference between this example and Example 42 lies in that, in this example, gas-liquid sharing chambers are symmetrically arranged on two cylinder side plates 1213. The two sharing chambers 131 may achieve gas-liquid sharing, and may also serve as support frames. A high-capacity battery may be fixed on a battery rack on the basis of the two sharing chambers 131.

### Example 44

As shown in FIGs. 96 and 97, this example provides a high-capacity battery, including a housing, and 10 battery cells 11 connected in parallel and arranged in the housing, wherein the number of the battery cells in other examples may be adjusted according to actual requirements. The housing includes a cylinder 24, and a first end plate 13 and a third end plate 14, which respectively hermetically fixed to two opposite open ends of the cylinder 24, wherein the cylinder 24 is the cylinder 24 for a high-capacity battery in Example 39.

In this example, a sixth through hole 125 penetrating through an electrolyte region of an inner cavity of the battery cell is provided in a side wall of a housing body of the each battery cell of the plurality of battery cells 11; and a sharing chamber 131 is in communication with the electrolyte region of the inner cavity of the each battery cell of the plurality of battery cells 11 via the sixth through hole 125, as shown in FIG. 98.

In this example, a liquid injection port may also be provided at one end of the sharing chamber 131. After the inner cavity of the each battery cell of the plurality of battery cells 11 is in communication with the sharing chamber 131, electrolyte may be injected again into the inner cavity of the each battery cell of the plurality of battery cells 11 and the sharing chamber 131 via the liquid injection port, so as to ensure the continuity of the electrolyte, and liquid replacement may also be achieved via the liquid injection port.

It is to be noted that when liquid is not injected, the liquid injection port need to be sealed by a plug.

A second explosion venting portion may also be provided at the other end of the sharing chamber 131. When thermal runaway occurs in any battery cell of the plurality of battery cells 11, the electrolyte may be first discharged from the second explosion venting portion, so as to avoid the occurrence of a greater safety problem caused by vaporization of a large amount of electrolyte at a thermal runaway temperature.

It is to be noted that the second explosion venting portion described in this example includes an explosion vent or explosion-proof port, etc. provided at an end portion of the sharing chamber 131 and provided with an explosion venting film.

A first electrode terminal and a second electrode terminal of the each battery cell of the plurality of battery cells 11 extends out of third through holes 112 a cylinder top plate 1211. A region of the cylinder top plate 1211 corresponding to the third through hole 112 is fixedly sealed with the housing body of the battery cell 11. An edge of the third through hole 112 may be welded to the housing body of the battery cell 11 in the regions around the first electrode terminal and the second electrode terminal to achieve sealing.

If a size of the each battery cell of the plurality of battery cells 11 in a z direction is not entirely identical, a problem of false welding or even inability to weld may occur between the housing bodies of part of the battery cells 11 with smaller sizes in the z direction and the housing of the high-capacity battery, making it difficult to ensure sealing performance between the region of the cylinder top plate 1211 corresponding to the third through hole 112 and the housing body of the battery cell 11.

In order to overcome such problems, a weak portion may be provided in a region around the third through hole 112. During welding, differences in the size of the each battery cell of the plurality of battery cells 11 in the z direction may be compensated by means of deformation of the weak portion. The weak portion in this example may be an annular groove that is provided along the region around the third through hole 112 by using the center of the third through hole 112 as a central point. In other examples, the weak portion may also be a long-strip groove that is provided in the region around the third through hole 112.

A sealing connection member 126 may also be added between the third through hole 112 and the first electrode terminal and the second electrode terminal. As shown in FIG. 97, the sealing connection member 126 includes a hollow member. A bottom of the hollow member is configured to be hermetically connected to a first region of the battery cell 11, and a top of the hollow member is hermetically connected to a second region of the housing. The first region is a region that is located around any electrode terminal in an upper cover plate of any battery cell of the plurality of battery cells 11, and the second region is a region that corresponds to any one of the third through holes 112 in the housing. The region corresponding to the third through hole 112 is the peripheral region on the outer surface of the housing corresponding to any one of the third through holes 112; or the region corresponding to the third through hole 112 is a hole wall of the third through hole 112. The region around the electrode terminal is the region around an insulating sealing gasket on the electrode terminal. The insulating sealing gasket is a component on the battery cell 11 that is configured to insulate the electrode terminal from the upper cover plate.

The high-capacity battery in this example may be prepared by the following processes.

At Step 1, the cylinder 24, the first end plate 13, and the third end plate 14 are processed.

At Step 2, capacity grading and sorting is performed to screen out the plurality of battery cells 11 meeting requirements; the sixth through hole 125 is provided in the side wall of the housing body of the battery cell 11 and then sealed using a sealing assembly; the plurality of battery cells 11 with the sealing assemblies are arranged in the cylinder 24 in Step 1; and the sealing assembly may adopt sealing assemblies disclosed in Chinese patents CN218525645U and CN218525614U. The first electrode terminal and the second electrode terminal of the each battery cell of the plurality of battery cells 11 extends out of the corresponding third through hole 112 in the cylinder top plate 1211, and the region of the cylinder top plate 1211 corresponding to the third through hole 112 and a portion around the electrode terminal of the housing body of the battery cell 11were welded to achieve sealing.

It is to be noted herein that, in order to ensure that each battery cell of the plurality of battery cells 11 may be smoothly arranged in the cylinder 24 shown in FIG. 90, a minimum size of the cylinder 24 in the z direction need to be greater than the size of the battery cell 11 in the z direction.

If the first electrode terminal and the second electrode terminal are the positive and negative electrode terminals of the battery cell 11, in order to ensure that the positive and negative electrode terminals of the each battery cell of the plurality of battery cells 11 may extend out of the third through hole 112 in the cylinder top plate 1211, a support rib need to be added between a bottom of the each battery cell of the plurality of battery cells 11 and a bottom of the cylinder.

The plurality of battery cells 11 with the sealing assemblies may be arranged in the cylinder 24 in Step 1 by the following three manners.
1) A long-strip equal-height support rib is selected.

The plurality of battery cells 11 are fixed as an integral body, and pushed into an inner cavity of the cylinder 24 from any open end of the cylinder 24; in this case, the bottom of the each battery cell of the plurality of battery cells 11 is in contact with the bottom of the cylinder 24, and the electrode terminal of the each battery cell of the plurality of battery cells 11 corresponds to the corresponding third through hole 112, but does not extend out of the third through hole 112; then, the plurality of battery cells 11 are supported, using a lifting tooling, from the bottom to separate the bottom of the each battery cell of the plurality of battery cells 11 from the bottom of the cylinder 24, wherein the electrode terminal of the each battery cell of the plurality of battery cells 11 extends out of the corresponding third through hole 112; and then, the long-strip equal-height support rib is inserted in the x direction, and the lifting tooling is removed.

It is to be noted that, in the z direction, a size of the long-strip equal-height support rib need to meet the following: after the support rib is added between the bottom of the each battery cell of the plurality of battery cells 11 and the bottom of the cylinder 24, the electrode terminal of the each battery cell of the plurality of battery cells 11 extends out of the corresponding third through hole 112. Moreover, the sixth through hole 125 with the sealing assembly need also to correspond to the sharing chamber 131 to ensure that the sixth through hole 125 penetrates through the sharing chamber 131 after the sealing assembly is opening by an external force or electrolyte itself.

2) The support rib is constituted by selecting a plurality of cushion blocks corresponding to the plurality of battery cells 11 on a one-to-one basis.

The plurality of battery cells 11 are sequentially pushed into the inner cavity of the cylinder 24 from any open end of the cylinder 24, and after each battery cell of the plurality of battery cells 11 is pushed in place, each cushion block need to be inserted between the bottom of the each battery cell of the plurality of battery cells and the bottom of the cylinder 24 to ensure that the electrode terminal of the battery cell 11 completely extends out of the corresponding third through hole 112. Moreover, the sixth through hole 125 with the sealing assembly need also to correspond to the sharing chamber 131 to ensure that the sixth through hole 125 penetrates through the sharing chamber 131 after the sealing assembly is opening by the external force or electrolyte itself. In most cases, the cushion block corresponding to each battery cell of the plurality of battery cells 11 has a different size in the z direction in this manner.

3) Each battery cell of the plurality of battery cells 11 is inverted and pushed into the inner cavity of the cylinder 24.

The cylinder 24 is flipped to cause the cylinder top plate 1211 to face downward, the plurality of battery cells 11 are fixed as an integral body and pushed into the inner cavity of the cylinder 24 from any open end of the cylinder 24; or the plurality of battery cells 11 are sequentially pushed into the inner cavity of the cylinder 24 from any open end of the cylinder 24, wherein the electrode terminal of the each battery cell of the plurality of battery cells 11 extends out of the corresponding third through hole 112 under the action of gravity, and the second support rib is inserted between the bottom of the each battery cell of the plurality of battery cells 11 and the bottom of the cylinder 24; and the cylinder 24 is flipped to cause the cylinder top plate 1211 to face upward. Similarly, the height of the support rib also need to cause the sixth through hole 125 with the sealing assembly to correspond to the sharing chamber 131 to ensure that the sixth through hole 125 penetrates through the sharing chamber 131 after the sealing assembly is opening by the external force or electrolyte itself.

If the first electrode terminal and the second electrode terminal are the positive and negative current collector pieces 127 added on the positive and negative electrode terminals of the battery cell 11, and the current collector pieces 127 adopts a structure shown in FIG. 99, there is no need to add the support rib.

In FIG. 99, the current collector piece 127 includes a main current collector piece body 1271 and an electrical connection column 1272 disposes on the main current collector piece body 1271. As shown in FIG. 97, the electrical connection column 1272 extends into the third through hole 112 and is connected to the electrode terminal 1221 of the each battery cell of the plurality of battery cells is located inside the cylinder 24. In order to facilitate the connection between the electrical connection column 1272 and the electrode terminal 1221 of the battery cell, this example provides a blind hole 1273 in the main current collector piece body 1271, and a bottom of the blind hole 1273 and the electrode terminal 1221 of the battery cell may be connected by means of fusion welding.

In order to eliminate welding stress, a stress relief hole 1274 penetrating through the blind hole 1273 may be provided at the bottom of the blind hole 1273.

Considering that the conductive capability of a hollow conductor is weaker than that of a solid conductor due to different flow guiding cross sections, this example may fix a conductive column 1275 in the blind hole 1273 after connecting the current collector piece 127 to the electrode terminal 1221 of the battery cell, so as to improve the conductive capability of the current collector piece 127.

At Step 3, the first end plate 13 and the third end plate 14 are welded to the two opposite open ends of the cylinder 24.

At Step 4, the sealing assembly is opened by using the external force or the electrolyte itself, and the inner cavity of the sharing chamber 131 penetrates through the electrolyte region of the inner cavity of the each battery cell of the plurality of battery cells 11.

After the inner cavity of the each battery cell of the plurality of battery cells 11 penetrates through the sharing chamber 131, the electrolyte in the inner cavity of the each battery cell of the plurality of battery cells 11 is in communication with the sharing chamber 131. In order to prevent a phenomenon of electrolyte interruption, the electrolyte may be injected, after the inner cavity of the each battery cell of the plurality of battery cells 11 penetrates through the sharing chamber 131, into the sharing chamber 131 to ensure the continuity of the electrolyte.

At Step 5, all the battery cells 11 are connected in parallel. The step may also be completed in Step 2 or Step 3.

In order to form a more complete SEI film, causing the high-capacity battery to have a more stable cycling capability, formation is performed on the entire high-capacity battery after the electrolyte is injected into the inner cavity of the each battery cell of the plurality of battery cells 11 via the sharing chamber 131.

### Example 45

As shown in FIG. 100, this example adopts the cylinder 24 for a high-capacity battery in Example 40.

A difference between this example and Example 44 lies in that, in this example, a sixth through hole 125 penetrating through a gas region of an inner cavity of the battery cell is provided in a side wall of a housing body of the each battery cell of the plurality of battery cells 11; and a sharing chamber is in communication with the gas region of the inner cavity of the each battery cell of the plurality of battery cells 11 via the sixth through hole 125.

Two ends of the sharing chamber may also be provided with a liquid injection port and an explosion vent, respectively. Electrolyte may be subsequently injected into the inner cavity of the each battery cell of the plurality of battery cells 11 via the liquid injection port. Explosion venting and liquid discharge are achieved via the explosion vent.

The preparation process is substantially the same as that in Example 44, with a difference lying in that wherein in Step 4, a sealing assembly is opened by using an external force or electrolyte itself, and an inner cavity of the sharing chamber penetrates through the gas region of the inner cavity of the each battery cell of the plurality of battery cells 11.

### Example 46

This example adopts the cylinder 24 for a high-capacity battery in Examples 3, 4, and 5. As shown in FIG. 101, FIG. 101 is described in an example of the cylinder 24 a high-capacity battery in Examples 3.

A difference between this example and Example 44 lies in that, in this example, a sixth through hole 125 penetrating through an inner cavity of the battery cell is provided in a side wall of a housing body of the each battery cell of the plurality of battery cells 11; and a sharing chamber is in communication with electrolyte and gas regions of the inner cavity of the each battery cell of the plurality of battery cells 11 via the sixth through hole 125.

It is to be noted that the plurality of sixth through hole 125 hereinabove may be provided, wherein a portion of the sixth through hole serves as vent holes and a portion of the sixth through hole serves as liquid outlet holes. The vent hole penetrates through the gas region of the battery cell 11, and the liquid outlet hole penetrates through the electrolyte region of the battery cell 11. The sixth through hole 125 hereinabove may also be a long-strip or waist-shaped through hole in a z direction. A size of the sixth through hole 125 in the z direction need to meet the following: gas in the gas region of the battery cell 11 and electrolyte in the electrolyte region may pass through the sixth through hole 125 simultaneously.

Two ends of the sharing chamber may also be provided with a liquid injection port and an explosion vent, respectively. Electrolyte injection and replacement may be subsequently implemented via the liquid injection port. Explosion venting and liquid discharge are achieved via the explosion vent.

The preparation process is substantially the same as that in Example 44, with a difference lying in that wherein in Step 4, a sealing assembly is opened by using an external force or electrolyte itself, and an inner cavity of the sharing chamber penetrates through the electrolyte region and gas region of the inner cavity of the each battery cell of the plurality of battery cells 11.

Example 47 to Example 53 below provide a high-capacity battery, including a housing and m battery cells connected in parallel and arranged in the housing, wherein m>1; and the battery cells herein may be square housing batteries, or may also be a plurality of commercially-available pouch batteries connected in parallel. An inner cavity of the each battery cell of the plurality of battery cells includes an electrolyte region and a gas region.

For ease of description, a length direction of the housing is defined as an x direction, a width direction of the housing is defined as a y direction, and a height direction of the housing is defined as a z direction.

The housing is provided with an electrolyte sharing chamber and at least one fourth chamber (the fourth chamber may also be understood as another sharing chamber), which interpenetrated with each other; and the electrolyte sharing chamber extends in the x direction, and the fourth chamber extends in the z direction.

The electrolyte liquid sharing chamber and the fourth chamber both contained electrolyte, and the electrolyte is in communication with the electrolyte region of the inner cavity of the each battery cell of the plurality of battery cells.

The housing may adopt at least the following two structures.

A first structure includes a cylinder with two open ends (i.e., ports parallel to a yz plane are the open ends) and end plate assemblies respectively fixed to the two open ends of the cylinder (i.e., the end plate assemblies are parallel to the yz plane).

A second structure includes a cylinder with open ends at the top and bottom (i.e., ports parallel to an xy plane are the open ends), and a fifth cover plate and a fourth cover plate, which are respectively fixed to the top and bottom open ends of the cylinder (i.e., both the fifth cover plate and the fourth cover plate are parallel to the xy plane).

Compared to the first structure, in the second structure, a fourth chamber is easily formed by means of adding a fourth partition plate. Therefore, the following examples are mainly introduced in an example of the second structure.

It is to be noted herein that the electrolyte sharing chamber and the fourth chamber hereinabove are electrolyte accommodating cavities, which need to ensure, after in communication with the electrolyte region of the inner cavity of the each battery cell of the plurality of battery cells, electrolyte in the entire high-capacity battery is not in contact with an external environment.

A gas chamber may also be disposed on the housing, and covered a gas port at a top of the each battery cell of the plurality of battery cells in the high-capacity battery. It is to be noted that the gas port herein includes the following two meanings.
1) The gas port is a through hole that is directly provided in the upper cover plate of the battery cell and penetrates through the inner cavity of the battery cell.

In this case, an inner cavity of the gas chamber is in communication with a gas region of the inner cavity of the each battery cell of the plurality of battery cells via the gas port, the gas chamber serves as a gas sharing chamber for each battery cell of the plurality of battery cells, and the gas regions of all the battery cells may be in communication with each other on the basis of the gas chamber, so as to achieve a gas balance, causing a gas in each battery cell of the plurality of battery cells to be shared to ensure the consistency of the each battery cell of the plurality of battery cells, thereby improving the cycle life of the high-capacity battery to a certain extent. When thermal runaway occurs in any battery cell of the plurality of battery cells, flue gas in the inner cavity of the battery cell entered the gas chamber and is discharged via the gas chamber, thereby improving the safety of the high-capacity battery.

2) The gas port is an explosion vent or explosion-proof port provided in the upper cover plate of the battery cell, and an explosion venting film is disposed at the explosion vent or explosion-proof port.

In this case, the gas chamber is used as an explosion venting channel. When the explosion venting film at the gas port of any battery cell of the plurality of battery cells is broken through by flue gas in the inner cavity, the flue gas in the inner cavity of the battery cell is discharged via the gas chamber, thereby improving the safety of the high-capacity battery.

In order to improve the heat dissipation performance of such high-capacity batteries, the housing (fifth cover plate) is provided with a third through hole capable of allowing an electrode terminal of the each battery cell of the plurality of battery cells to extend out; and the electrode terminal of the each battery cell of the plurality of battery cells extends out of the third through hole, and a cylinder top plate region around the third through hole is fixedly sealed with a housing body of the battery cell.

It is to be noted that the electrode terminal of the battery cell hereinabove may be an electrode terminal of the battery cell. In order to prevent the electrode terminal of the battery cell from being unable to smoothly extend out of the third through hole when configuring for the electrode terminal, a current collector piece may be connected to the electrode terminal of the battery cell, and the integrated structure in which the electrode terminal of the battery cell is mated with the current collector piece serves as the electrode terminal of the battery cell.

The embodiment is further described below with reference to the drawings and specific examples.

### Example 47

As shown in FIG. 102, a high-capacity battery in this example includes a housing 21 and 10 battery cells 11 connected in parallel and located in the housing 21, wherein the battery cell 11 is a square housing battery. In other examples, the number of battery cells may be adjusted according to actual requirements. A through hole penetrating through an inner cavity of the battery cell is provided at a bottom of the housing body of the each battery cell of the plurality of battery cells 11.

As shown in FIG. 103, the housing 21 includes a cylinder 24 with two opposite open ends, and a fifth cover plate 26 and a fourth cover plate 25, which are respectively fixed to the two open ends of the cylinder 24, wherein the fifth cover plate 26 and the fourth cover plate 25 are parallel to an xy plane. The fourth cover plate 25 and the cylinder 24 may be formed as an integral piece, or may also be split members. When being an integral piece, the fourth cover plate 25 and the cylinder 24 may be integrally formed by adopting a die-casting process; and when being split members, the cylinder 24 may be integrally formed by adopting an aluminum extrusion process. The fourth cover plate 25 may also be integrally formed by adopting the aluminum extrusion process.

The fourth cover plate 25 is provided with an electrolyte sharing chamber 27 extending in an x direction; and the electrolyte sharing chamber 27 is in communication with an electrolyte region of an inner cavity of the each battery cell of the plurality of battery cells via a through hole of the each battery cell of the plurality of battery cells 11. In this example, an opening at one end of the electrolyte sharing chamber 27 parallel to a yz plane serves as an unpacking device operation port 307. An unpacking device extends into the electrolyte sharing chamber 27 via the unpacking device operation port 307 to unpack each battery cell of the plurality of battery cells 11, such that the electrolyte sharing chamber 27 is in communication with the electrolyte region of the inner cavity of the each battery cell of the plurality of battery cells 11 (during specific unpacking, the unpacking device extends into the electrolyte sharing chamber 27 via the unpacking device operation port 307 and opens a sealing film sealed at a through hole in a lower cover plate 03 of the each battery cell of the plurality of battery cells 11, and the sealing film may specifically adopt sealing films disclosed in Chinese patents CN218525645U and CN218525614U). It is to be noted that, after unpacking is completed, the unpacking device operation port 307 need to be sealed by a blocking member.

A fifth cover plate 26 is provided with a third through hole 112 capable of allowing an electrode terminal of the each battery cell of the plurality of battery cells 11 to extend out; and the electrode terminal of the each battery cell of the plurality of battery cells 11 extends out of the third through hole 112, and a fifth cover plate 26 region around the third through hole 112 is fixedly sealed with a housing body of the battery cell 11. From FIG. 102, it may be seen that, in this example, the electrode terminal of the battery cell 11 refers to an electrode terminal of the each battery cell of the plurality of battery cells 11.

A fourth chamber 309 extending in a z direction is provided in the cylinder 24. The fourth chamber 309 is in communication with the electrolyte sharing chamber 27, with an inner cavity being filled with electrolyte. From FIG. 104, it may be seen that the cylinder 24 in this example is provided with two fourth chambers 309, which are respectively located on two sides of the cylinder 24.

In this example, the fourth chamber 309 is formed by disposing a third partition plate 3010 in the cylinder 24. The third partition plate 3010 is parallel to a first side plate 209. A cavity formed among the first side plate 209, two second side plates 210, and the third partition plate 3010 serves as the fourth chamber 309. The first side plate 209 is parallel to the yz plane; and the second side plate 210 is parallel to the xz plane.

When the cylinder 24 and the fourth cover plate 25 are formed as an integral piece, the third partition plate 3010 is formed simultaneously while the integral piece is formed by adopting the die-casting process, thereby forming the fourth chamber 309.

When the cylinder 24 and the fourth cover plate 25 are split members, the fourth chamber 309 may be synchronously formed while the cylinder 24 is formed by adopting the aluminum extrusion process.

From the figure, it may be seen that this example provides a fourth reinforcing rib 313 in the z direction in the fourth chamber 309 to divide the fourth chamber 309 into at least two sub-chambers, so as to enhance the strength of the fourth chamber 309, thereby further improving the structural stability of the entire high-capacity battery.

### Example 48

A difference between this example and Example 47 lies in that, a fourth chamber 309 in this example is located at a middle portion of a cylinder 24.

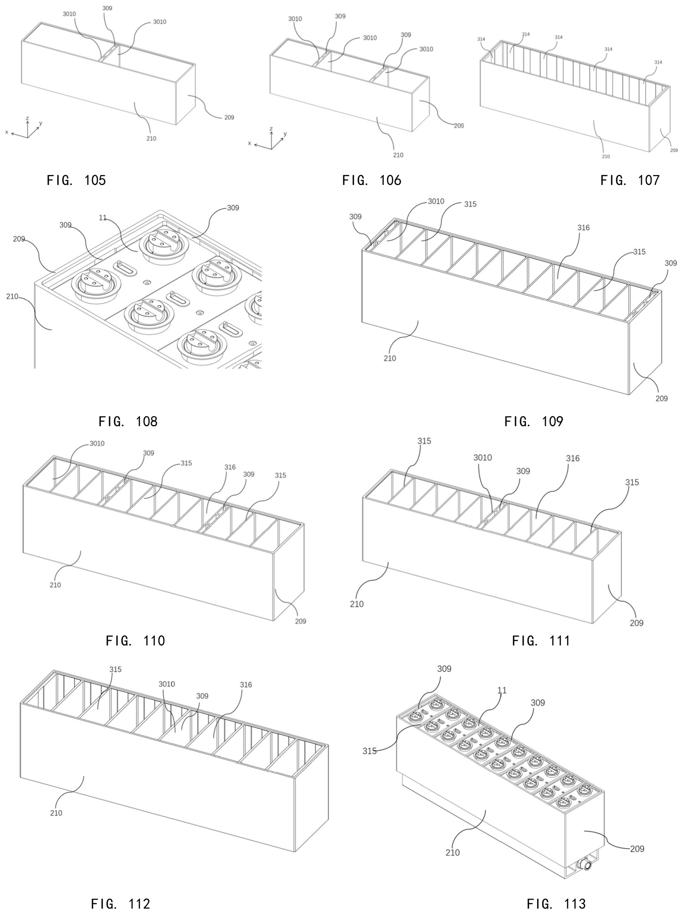

As shown in FIG. 105, one fourth chamber 309 is provided at the middle portion of the cylinder 24. Specifically, two third partition plates 3010 parallel to a yz plane may be disposed at the portion close to the middle portion of the cylinder 24. A cavity formed between the two third partition plates 3010 and two second side plates 210 serves as one fourth chamber 309.

As shown in FIG. 106, two fourth chambers 309 are provided at the middle portion of the cylinder 24. Similarly, two third partition plates 3010 parallel to a yz plane may also be disposed at the portion close to the middle portion of the cylinder 24. The cavity formed between the two third partition plates 3010 and the two second side plates 210 serves as one fourth chamber 309.

In some other examples, two or more fourth chambers 309 may be provided at the middle portion of the cylinder 24, or fourth chambers 309 may also be provided on two sides of the cylinder 24 and at the middle portion of the cylinder 24.

### Example 49

A difference between this example and the examples hereinabove lies in that, this example provides a fourth chamber 309 with a different structural form.

As shown in FIGs. 107 and 108, this example provides a through groove 314 extending in the z direction in the first side plate 209 and the second side plate 210 of the cylinder 24. A cavity formed between the through groove 314 and a battery cell 11 serves as one fourth chamber 309. In order to increase a liquid storage space of an entire high-capacity battery, this example forms one fourth chamber 309 between each battery cell of the plurality of battery cells 11 and the second side plate 210, and forms the fourth chamber 309 between the two outermost battery cells 11 and the first side plate 209.

In some other examples, the fourth chamber 309 may be formed by only providing the through groove 314 in the second side plate 210 of the cylinder 24 or the first side plate 209 of the cylinder 24.

### Example 50

A difference between this example and the examples hereinabove lies in that, this example further is provided a plurality of fourth partition plates 315 in a cylinder 24.

As shown in FIGs. 109 to 113, FIG. 109 showed that, on the basis of the cylinder 24 in Example 47, 9 fourth partition plates 315 are added; and the 9 fourth partition plates 315 are all parallel to a yz plane, and arranged in an x direction in the cylinder 24, so as to divide an inner cavity of the cylinder 24 into a plurality of battery cell mounting cavities 316. From FIG. 109, it may be seen that, the two fourth partitions 315 located at the outermost sides forms the battery cell mounting cavity 316 with the adjacent third partition plates 3010, respectively; for the 7 fourth partition plates 315 located in the middle, the battery cell mounting cavity 316 is formed between the adjacent two fourth partition plates 315; and one battery cell 11 is fixed in each battery cell mounting cavity of the plurality of battery cell mounting cavities 316.

FIGs. 110 and 111 show that the fourth partition plate 315 is added on the basis of the cylinder 24 in Example 48. In FIG. 110, 7 fourth partition plates 315 are added on the basis of the cylinder 24 with two fourth chambers 309. The 7 fourth partition plates 315 are all parallel to the yz plane and arranged in the x direction in the cylinder 24, so as to divide the inner cavity of the cylinder 24 into the plurality of battery cell mounting cavities 316. From FIG. 110, it may be seen that, the battery cell mounting cavity 316 is formed between each of the four fourth partition plates 315 adjacent to the fourth chamber 309 and the adjacent third partition plates 3010, and for the remaining fourth partition plates 315, the battery cell installation cavities 316 are formed between the adjacent two fourth partition plates 315 or between the fourth partition plate 315 and the first side plate 209. FIG. 111, 8 fourth partition plates 315 are added on the basis of the cylinder 24 with one fourth chamber 309. The 8 fourth partition plates 315 are all parallel to the yz plane and arranged in the x direction in the cylinder 24, so as to divide the inner cavity of the cylinder 24 into the plurality of battery cell mounting cavities 316. From FIG. 111, it may be seen that, the battery cell mounting cavity 316 is formed between each of the two fourth partition plates 315 adjacent to the fourth chamber 309 and the adjacent third partition plates 3010, and for the remaining fourth partition plates 315, the battery cell installation cavities 316 are formed between the adjacent two fourth partition plates 315 or between the fourth partition plate 315 and the first side plate 209.

FIGs. 112 and 113 show that 9 fourth partition plates 315 are added on the basis of the cylinder 24 in Example 49. The cylinder 24 is divided into 10 battery cell mounting cavities 316. From FIG. 112, it may be seen that, one battery cell 11 is fixed in each battery cell mounting cavity of the plurality of battery cell mounting cavities 316, and the fourth chamber 309 is formed between each battery cell of the plurality of battery cells 11 and the second side plate 210 or the first side plate 209.

### Example 51

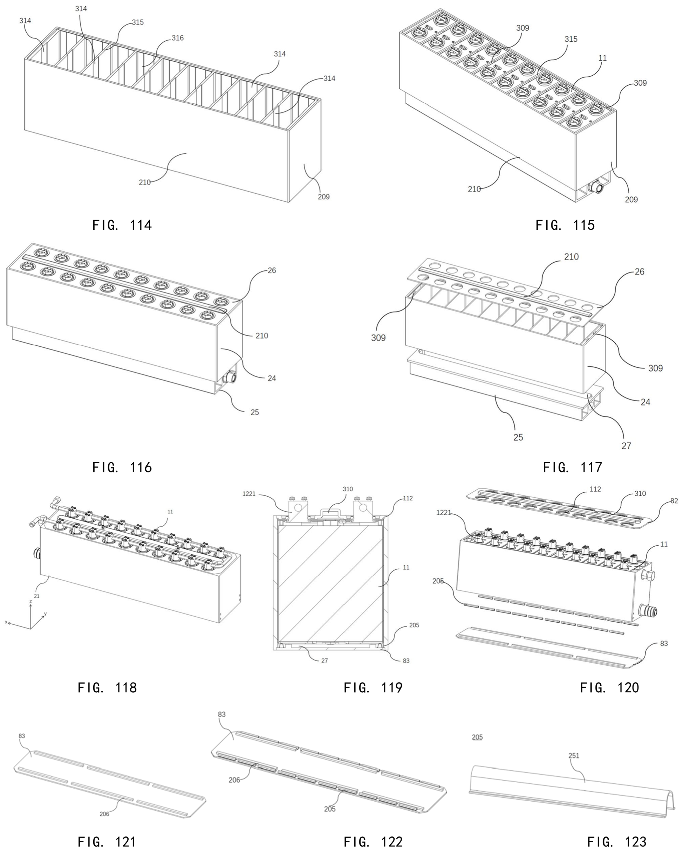

As shown in FIGs. 114 and 115, a difference between this example and the examples hereinabove lies in that, this example further is provided, on the basis of a structure shown in FIG. 112, a through groove 314 in a fourth partition plate 315 in an z direction. A cavity formed between the through groove 314 and a battery cell 11 also serves as one fourth chamber 309.

In some other examples, the through groove 314 may also be provided, on the basis of a structure shown in FIGs. 109 to 111, in the fourth partition plate 315 in the z direction. The cavity formed between the through groove 314 and the battery cell 11 also serves as one fourth chamber 309.

### Example 52

As shown in FIGs. 116 and 117, a housing 21 in this example is further provided with a gas chamber 210 penetrating through a fourth chamber 309. The gas chamber 210 covers a gas port at a top of the each battery cell of the plurality of battery cells 11 and is in communication with a gas region of an inner cavity of the each battery cell of the plurality of battery cells 11. In FIG. 117, description is made in an example of disposing the gas chamber 210 on a high-capacity battery in Example 4. In this example, the gas regions of all the battery cells 11 are in communication with each other via the gas chamber 210, causing gases in all the battery cells 11 to be in a same environment, so as to achieve a gas balance, such that differences between the battery cells 11 are reduced, the consistency between the battery cells 11 is improved, and the cycle life of the high-capacity battery is further prolonged. Furthermore, from the figure, it may be seen that, in this example, the gas chamber 210 may be in communication with the electrolyte sharing chamber 27 via the fourth chamber 309, such that environmental differences between the battery cells 11 may be further reduced.

### Example 53

A difference between this example and Example 52 lies in that, a gas chamber 210 in this example covers a gas port at a top of the each battery cell of the plurality of battery cells 11 and is used as an explosion venting channel. When a pressure of an inner cavity of any battery cell of the plurality of battery cells 11 is excessive, an internal gas or thermal runaway flue gas broke through a first explosion venting portion on each battery cell of the plurality of battery cells 11, enters the gas chamber 210, and is discharged from the gas chamber 210.

Example 54 to Example 56 provides a battery pack, including a housing and n battery cells, wherein n is greater than 1, and the n battery cells are arranged in a same direction and placed in the housing.

The housing is provided with a sharing chamber, and an inner cavity of the sharing chamber is in communication with inner cavities of all the battery cells.

It is to be noted that,
the sharing chamber hereinabove may be an electrolyte sharing chamber. Each battery cell of the plurality of battery cells may be in a unified electrolyte environment by the electrolyte sharing chamber, ensuring the uniformity of electrolyte in each battery cell of the plurality of battery cells, thereby improving the performance and charge-discharge cycle life of the battery pack.

The sharing chamber hereinabove may also be a gas sharing chamber. A gas balance of the each battery cell of the plurality of battery cells is achieved via the gas sharing chamber, and the performance and charge-discharge cycle life of the battery pack may also be improved.

The sharing chamber hereinabove may be a gas-liquid sharing chamber. Each battery cell of the plurality of battery cells may be in the unified electrolyte environment and gas environment by the gas-liquid sharing chamber, thereby improving the performance and charge-discharge cycle life of the battery pack.

In order to improve the heat dissipation performance of such battery packs, a housing top plate is provided with a third through hole corresponding to an electrode terminal of the each battery cell of the plurality of battery cells; the electrode terminal of the each battery cell of the plurality of battery cells extends out of the corresponding third through hole, and a region of the housing top plate corresponding to the third through hole is fixedly sealed with an upper cover plate of the battery cell, thereby ensuring the sealing performance of the entire housing.

It is to be noted that the electrode terminal of the battery cell described herein may be an electrode terminal of the battery cell. In order to prevent the length of the electrode terminal of the battery cell extending out of the third through hole from being too short when configuring for the electrode terminal, leading to a heat exchange device being unable to be disposed, a current collector piece may be connected to the electrode terminal of the battery cell, and the integrated structure in which the electrode terminal of the battery cell is mated with the current collector piece serves as the electrode terminal of the battery cell.

A heat exchange member may be fixed to the portion at which the electrode terminal extends out of the third through hole, and is configured to exchange heat for the battery pack. Heat exchange herein may be understood as the following: heat dissipation of the battery pack or heating of the battery pack; when a temperature of the battery pack is higher than a set threshold, the battery pack is cooled by introducing a low-temperature heat transfer medium into a heat exchange member; and when the temperature of the battery pack is lower than the set threshold, the battery pack is heated by introducing a high-temperature heat transfer medium into the heat exchange member. Therefore, it may ensure, by controlling the temperature of the heat transfer medium, that the battery pack may operate at a normal operating temperature.

When there is an error in grouped battery cells in a height direction, it is difficult to weld the region of the housing top plate corresponding to the third through hole to the upper cover plate region around the electrode terminal of the battery cell, so as to achieve sealing. Therefore, the embodiment adds an external elastic support member at the bottom of the battery cell, the housing top plate may apply a downward pressure to each battery cell of the plurality of battery cells, and the error between the battery cells in the height direction is compensated by utilizing the deformation of the elastic support member. The upper cover plates of the battery cells in a group are all located in the same plane and in good and close contact with the housing top plate. Therefore, the problem of false welding or even inability to weld does not occur in the region of the housing top plate corresponding to the third through hole and the upper cover plate region around the electrode terminal of the battery cell.

The embodiment is further described below with reference to the drawings and specific examples.

### Example 54

FIG. 118 is a schematic structural diagram of a battery pack in this example. From the figure, it may be seen that the battery pack in this example includes a housing 21 and a plurality of battery cells 11 connected in parallel and arranged in the housing 21.

The battery cells 11 in this example are square housing batteries, with the number being 10. In other examples, the number of the battery cells may be adjusted according to actual requirements. An inner cavity of the each battery cell of the plurality of battery cells 11 includes an electrolyte region and a gas region.

For ease of description, a length direction of the housing 21 is defined as an x direction, a width direction of the housing 21 is defined as a y direction, and a height direction of the housing 21 is defined as a z direction.

In combination with FIG. 119, it may be seen that, in this example, a liquid channel is disposed between a housing bottom plate 83 and each battery cell of the plurality of battery cells 11 (a gap between each battery cell of the plurality of battery cells 11 and the housing bottom plate 83 may serve as the liquid channel), and may serve as an electrolyte sharing chamber 27. An inner cavity of the electrolyte sharing chamber 27 is in communication with the electrolyte region of the inner cavity of the each battery cell of the plurality of battery cells 11. A gas channel is disposed in the x direction on a housing top plate 82, and may serve as a gas sharing chamber 310. An inner cavity of the gas sharing chamber 310 is in communication with the gas region of the inner cavity of the each battery cell of the plurality of battery cells 11.

In some other examples, only the electrolyte sharing chamber 27 or the gas sharing chamber 310 may be disposed, or a gas-liquid sharing chamber may also be disposed in the x direction on a side plate of the housing 21, and an inner cavity of the gas-liquid sharing chamber is in communication with both the electrolyte region and gas region of the inner cavity of the each battery cell of the plurality of battery cells 11.

As shown in FIG. 120, the housing top plate 82 is provided with a third through hole 112 capable of allowing the electrode terminal of the each battery cell of the plurality of battery cells 11 to extend out; and the electrode terminal of the each battery cell of the plurality of battery cells 11 extends out of the corresponding third through hole 112, and a region of the housing top plate 82 around the third through hole 112 is fixedly sealed with the upper cover plate of the battery cell 11. From the figure, it may be seen that, the electrode terminal of the battery cell 11 in this example refers to an electrode terminal 1221 of the battery cell.

In combination with FIG. 119, it may be seen that, this example disposes an elastic support member 205 between a housing bottom plate 83 and the battery cell 11. A error between the battery cells 11 in the height direction is compensated by the deformation of the elastic support member 205, so as to ensure that the upper cover plates of all the battery cells 11 are in contact with the housing top plate 82, such that the region of the housing top plate 82 around the third through hole 112 may be welded to the upper cover plate of the battery cell 11, so as to achieve sealing.

A structure of the housing bottom plate 83 in this example is shown in FIG. 121. A limiting column 206 in the x direction is disposed at a portion of the housing bottom plate 83 close to two long edges to serve as a limiting mechanism. The limiting column 206 at least has the following two functions.
1. The limiting column is configured to be mated with the side plates of the adjacent housings 21 to form a mounting space of the elastic support member 205 (refer to FIGs. 119 and 122), that is, a gap between the limiting column and the side plate of the housing 21 in the Y direction is greater than a deformation amount of the elastic support member in the Y direction.
2. The limiting column is configured to improve the strength of the housing bottom plate 83.

In the z direction, a size of the limiting column 206 should be less than a maximum size of the elastic support member 205, and a z-direction distance between the limiting column 206 and a lower cover plate of the each battery cell of the plurality of battery cells 11 should be greater than a maximum height difference between the battery cells 11. If the size of the limiting column 206 in the z direction is greater than the maximum size of the elastic support member 205, the lower cover plate of the each battery cell of the plurality of battery cells 11 is in direct contact with the limiting column 206 instead of the elastic support member 205, causing the elastic support member 205 to be unable to play a role in adjusting the height of the battery cell 11; if the z-direction distance between the limiting column 206 and each battery cell of the plurality of battery cells 11 is less than the maximum height difference between the battery cells 11, when a downward pressure is applied, the upper cover plate of the battery cell 11 with a large z-direction size is still in a position higher than the upper cover plates of the other battery cells 11, the lower cover plate has already been in contact with the limiting column 206 and may not move downward, resulting in the upper cover plate of the battery cell 11 being unable to be located on a same plate with the upper cover plates of the other battery cells 11 on the same plane, causing the upper cover plate of the battery cell 11 to be unable to be effectively sealed with the region of the housing top plate 82 around the corresponding third through hole 112.

From FIG. 121, it may be seen that, each limiting column 206 in this example is constituted by three sub-limiting columns arranged in the X direction, there is a gap between the adjacent sub-limiting columns, and the gap may serve as an electrolyte flowing channel, thereby further improving an electrolyte sharing effect.

In some other examples, two limiting columns 206 in the x direction may be respectively disposed at portions of the housing bottom plate 83 close to the two long edges, and a space between the two limiting columns 206 serves as the mounting space for the elastic support member 205.

In some other examples, the limiting mechanism may also be a groove provided in the housing bottom plate 83, and the elastic support member 205 is fixed therein. Compared to this example, requirements for a thickness of the housing bottom plate 83 are higher.

FIG. 123 is a schematic structural diagram of the elastic support member 205 in this example. The elastic support member 205 has certain elastic deformation capability in the z direction. When the battery cell 11 is placed on the elastic support member, the elastic support member may not deform or has a slight deformation, and when a downward pressure is applied to the battery cell 11, deformation occurred to compensate for a height difference between the battery cells 11.

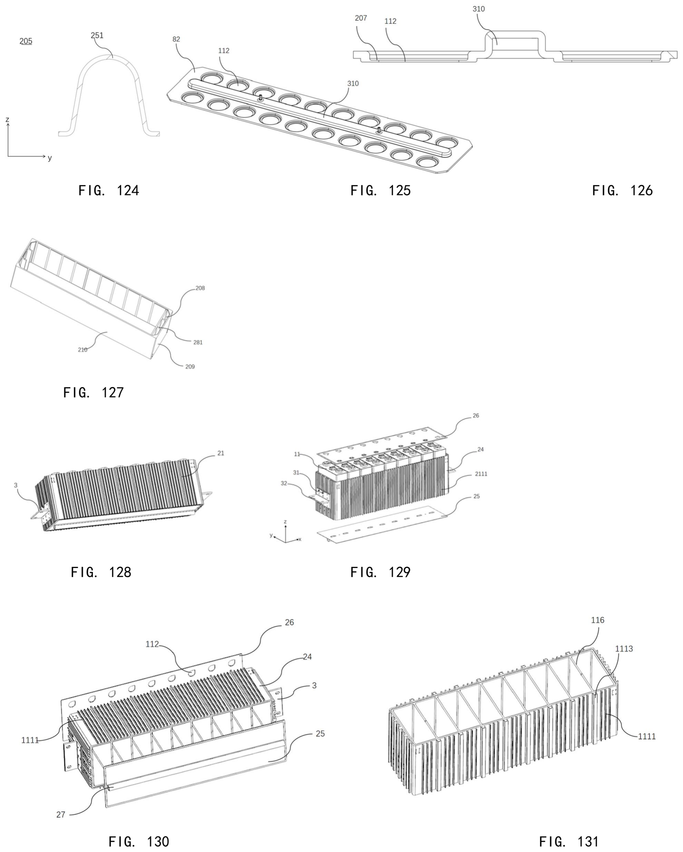

From FIG. 124, it may be seen that, the elastic support member 205 in this example adopts a semi-tubular member with a cross section similar to an Ω shape. For ease of description, the structure may be decomposed into a semi-tubular member with an inverted U-shaped cross section and two support plates; and the two support plates are respectively connected to two side walls of the semi-tubular member with the inverted U-shaped cross section via smooth arc transitions.

During use, the support plate is in contact with the housing bottom plate 83, the battery cell is placed on a top 251 of the elastic support member thereof, and the two support plates move away from each other by applying downward pressure, such that the elastic support member 205 is reduced in size in the z direction. Therefore, an effect of compensating for the height difference between the battery cells 11 is achieved.

In combination with FIGs. 120 and 122, it may be seen that, this example disposes two elastic support members 205 at the bottom of the each battery cell of the plurality of battery cells 11. The two elastic support members 205 both extends in the x direction. In some other examples, the number and placement position of the elastic support members 205 may be adjusted according to actual requirements.

In some other examples, the structure of the elastic support member 205 may also be a "brimmed top hat" type member, a "bottle cap" type member, etc. However, the structure is relatively complex compared to this example.

In this example, a material of the elastic support member 205 is aluminum alloy, which is similar to a material of the battery pack housing 21 and the housing body of the battery cell 11, without electrochemical reactions. Furthermore, in a case of thermal runaway in a battery, the elastic support member 205 is relatively stable.

The battery pack in this example may be assembled by the following processes.

At Step 1, the housing 21 is processed, including the cylinder, the housing bottom plate 83, and the housing top plate 82, wherein the cylinder is formed by enclosing four side plates and may be integrally formed by adopting the aluminum extrusion process; and the housing bottom plate 83 and the side plates of the housing 21 all may be integrally formed by adopting the casting process.

At Step 2, the housing bottom plate 83 is hermetically welded to a bottom open end of the cylinder.

At Step 3, capacity grading and sorting is performed to screen out the plurality of battery cells 11 meeting requirements; the first through hole is provided at the bottom of the housing body of the battery cell 11 and then sealed using the sealing assembly; the second through hole is provided at the top of the housing body of the battery cell 11 and then sealed using the sealing assembly; and the sealing assembly may adopt sealing assemblies disclosed in Chinese patents CN218525645U and CN218525614U.

At Step four, each elastic support member 205 is placed in a corresponding mounting space of the housing bottom plate 83 of the member in Step 2, and then the plurality of battery cells 11 treated in Step 3 are arranged in the mounting space, and placed on the corresponding elastic support members 205.

At Step 5, the housing top plate 82 is placed at the top open end of the cylinder such that the electrode terminal 1221 of the battery cell corresponds to the respective third through hole 112; a downward pressure is applied to the housing top plate 82 such that the electrode terminal 1221 of the battery cell extends out of the respective third through hole 112, and the upper cover plate of the battery cell 11 is in contact with an inner surface of the housing top plate 82; and then the housing top plate 82 is hermetically welded to the top open end of the cylinder, and the region of the housing top plate 82 corresponding to the third through hole 112 is welded to the upper cover plate of the battery cell 11 to achieve sealing.

It is to be noted herein that, in Step 3, when the battery cells 11 are screened, the height of the battery cells should also be taken into consideration. If the height is too high, even if a downward pressure is applied to the housing top plate 82 in this step, the upper cover plate of the battery cell may still be higher than those of other battery cells, resulting in a situation that the upper cover plate of the battery cell 11 may not be in contact with the inner surface of the housing top plate 82. If the height is too low, even if a downward pressure is applied to the housing top plate 82 in this step, the upper cover plate of the battery cell 11 may still be lower than the housing top plate 82, causing the upper cover plate and the inner surface to be unable to be in contact with each other.

At Step 6, the sealing assembly is opened by using the external force or the electrolyte itself, the inner cavity of the electrolyte sharing chamber 27 penetrates through the electrolyte region of the inner cavity of the each battery cell of the plurality of battery cells 11, and the inner cavity of the gas sharing chamber 310 penetrates through the gas region of the inner cavity of the each battery cell of the plurality of battery cells 11.

Then all the battery cells 11 are connected in parallel. In other examples, each battery cell of the plurality of battery cells 11 may be connected in parallel between Step 5 and Step 6.

In order to form a more complete SEI film, causing the battery pack to have a more stable cycling capability, formation is performed on the entire battery pack after the electrolyte is injected into the inner cavity of the each battery cell of the plurality of battery cells 11 via the electrolyte sharing chamber 27.

### Example 55

A difference between this example and Example 54 lies in that, as shown in FIGs. 125 and 126, this example provides a protrusion on the surface of a housing top plate 82 close to a battery cell, and the protrusion is provided with a stepped through hole penetrating through the housing top plate 82 to serve as a third through hole 112; and a small hole of the stepped through hole is close to the battery cell, and a hole depth of the small hole is less than that of a large hole. A step surface 207 is sealed with an upper cover plate of the battery cell 11 by means of fusion welding.

### Example 56

In this example, a liquid storage chamber 208 is provided on a side plate of a housing. The liquid storage chamber 208 is in communication with an electrolyte sharing chamber 27, and has an inner cavity being filled with electrolyte. From FIG. 127, it may be seen that the liquid storage chamber 208 in this example is located on a side plate of a cylinder parallel to a yz plane. For ease of description, the side plate may be defined as a first side plate 209, and a side plate parallel to an xz plane may be defined as a second side plate 210.

In this example, the liquid storage chamber 208 is formed by disposing a partition plate in the housing. The partition plate is parallel to the first side plate 209. A cavity formed among the first side plate 209, the two second side plates 210, and a first partition plate serves as one liquid storage chamber 208. By means of adjusting the size of the partition plate in the x direction to clamp all the battery cells in the x direction, the stability of the each battery cell of the plurality of battery cells in the inner cavity of the housing may be improved, and the occurrence of a problem of reduced cycling performance of a battery pack caused by the swelling of the each battery cell of the plurality of battery cells may be prevented.

In some other examples, the liquid storage chamber 208 may be disposed on the second side plate 210 by adding the partition plate. However, compared to this example, the battery cells may not be all clamped in the x direction.

From the figure, it may be seen that this example provides a third reinforcing rib 281 in the liquid storage chamber 208 to divide the liquid storage chamber 208 into at least two sub-chambers, so as to enhance the strength of the liquid storage chamber 208, thereby further improving the structural stability of the entire battery pack.

Example 57 and Example 58 below provide a high-capacity battery, including a housing and a plurality of battery cells connected in parallel and arranged in the housing, wherein an inner cavity of the each battery cell of the plurality of battery cells includes an electrolyte region and a gas region. The battery cells may be square housing batteries, or may also be a plurality of commercially-available pouch batteries connected in parallel. The following examples are mainly described in detail by using a square housing battery as the battery cell.

The housing is of a split structure, and includes a cylinder of which top and bottom are open, and a fourth cover plate and a fifth cover plate. The cylinder may be formed by means of aluminum extrusion. The fourth cover plate is provided with an electrolyte sharing chamber and fixed to the bottom open end of the cylinder; the electrolyte sharing chamber is in communication with the electrolyte region of the inner cavity of the each battery cell of the plurality of battery cells; the fifth cover plate is provided with a third through hole capable of allowing an electrode terminal of the each battery cell of the plurality of battery cells to extend out; the fifth cover plate covers the top open end of the cylinder and is hermetically connected to the top open end of the cylinder; and the electrode terminal of the each battery cell of the plurality of battery cells extends out of the third through hole, and a housing region corresponding to the third through hole is fixedly sealed with a housing body of the battery cell.

The electrolyte sharing chamber penetrates through the electrolyte region of the inner cavity of the each battery cell of the plurality of battery cells, such that electrolyte in each battery cell of the plurality of battery cells is shared to ensure the consistency of the each battery cell of the plurality of battery cells, thereby improving the cycle life of the high-capacity battery to a certain extent. Furthermore, a heat dissipation structure is added on an outer wall of the housing, thereby improving the heat dissipation performance of the entire high-capacity battery.

Further description is made below with reference to the drawings and specific examples.

### Example 57

As shown in FIGs. 128 and 129, a high-capacity battery in this example includes 9 battery cells 11 connected in parallel, and the number of the battery cells in other examples may be adjusted according to actual requirements. The battery cell 11 is a square housing battery, the square housing battery includes an upper cover plate, a lower cover plate, a cylinder, and a battery cell assembly; the battery cell assembly herein may also be referred to as an electrode assembly, which is assembled, adopting a stacking or winding process, by sequentially arranging a positive electrode terminal, a diaphragm, and a negative electrode terminal. The upper cover plate, the cylinder, and the lower cover plate forms a housing body of the battery cell 11, and the battery cell assembly is disposed in the housing body of the battery cell 11.

In combination with FIG. 130, a housing 21 in this example is a rectangular housing, and includes a cylinder 24 with open ends at the top and bottom and a rectangular cross section, a fourth cover plate 25 covering the bottom open end of the cylinder 24, and a fifth cover plate 26 covering the top open end. The fourth cover plate 25 is provided with an electrolyte sharing chamber 27.

The fourth cover plate 25 may adopt different structural forms, but it is required to ensure the sealing performance of a connection portion between the fourth cover plate and the bottom open end of the cylinder 24 when the fourth cover plate covers the bottom open end of the cylinder 24, and simultaneously ensure that an inner cavity of the electrolyte sharing chamber 27 provided on the fourth cover plate 25 penetrates through an inner cavity of the each battery cell of the plurality of battery cells 11. In this example, a flat plate matching a shape of the bottom open end of the cylinder 24 is selected as the fourth cover plate 25, and the sealing performance between the fourth cover plate and the bottom open end of the cylinder is ensured by welding the fourth cover plate 25 with an edge of the bottom open end of the cylinder 24.

A shape of the fifth cover plate 26 matches a shape of the top open end of the cylinder 24, covers the top open end of the cylinder 24, and is hermetically connected to the top open end of the cylinder. As shown in FIGs. 129 and 130, the fifth cover plate 26 is provided with a third through hole 112 capable of allowing an electrode terminal of the each battery cell of the plurality of battery cells 11 to extend out.

A wall thickness of the cylinder 24 in this example is not less than 9 mm. The cylinder is integrally formed by adopting an aluminum extrusion process, and has three advantages below.
1. The rigidity stability of the housing 21 body and the high-capacity battery during thermal runaway is ensured.
2. A friction stir welding process may be adopted, the fourth cover plate 25 and the fifth cover plate 26 are respectively welded to the bottom open end and the top open end of the cylinder 24 to improve the reliability, sealing performance, and stability of the connection between the cylinder 24 and the fourth cover plate 25 as well as the fifth cover plate 26, thereby significantly improving the rigidity at a junction.
3. The temperature uniformity of the high-capacity battery is improved.

From FIGs. 128 to 130, this example disposes a plurality of heat sink fins 1111 on all four side walls of the cylinder 24. For ease of description, a length direction of the cylinder 24 is defined as an x direction, a width direction of the cylinder 24 is defined as a y direction, and a height direction of the cylinder 24 is defined as a z direction. Each heat sink fin 1111 extends in the z direction. The plurality of heat sink fins 1111 are arranged in the x direction, and may be integrally formed, adopting the aluminum extrusion process, with the cylinder 24. In some other examples, the heat sink fins 1111 may extend in the x direction, are arranged in the z direction, and are fixed to a cylinder by means of welding or other processing manners. Compared to this example, the processing is relatively complex, and the costs are relatively high.

In order to further improve the heat dissipation performance of the housing 21, this example may further dispose a plurality of partition plates 116 in the cylinder 24, so as to divide the inner cavity of the cylinder 24 into a plurality of battery cell 11 mounting cavities. A hollow boss 1113 is provided on an outer wall of the cylinder 24 at a portion corresponding to each partition plate 116. A specific structure is as shown in FIG. 131. Each hollow boss 1113 extends in the z direction. The plurality of hollow bosses 1113 are arranged in the x direction. Each hollow boss 1113 and the corresponding partition plate 116 are located in the same plane and are both parallel to the yz plane. In this example, the hollow boss 1113 is preferably selected a hollow column structure with a rectangular cross section and two open ends. In some other examples, a hollow column structure with a semi-circular or triangular, etc. cross section may be selected. However, compared to this example, the flatness of the outer wall of the cylinder 24 is relatively low.

One battery cell 11 is fixed in each of the plurality of battery cell 11 mounting cavities; for each battery cell of the plurality of battery cells 11 near a middle portion, the side walls on two sides of the battery cell are in contact with the partition plate 116; and for the two battery cells 11 near the outermost side, one side wall is in contact with the partition plate 116, and the other side wall is in contact with a side wall of the cylinder 24. The heat generated by each battery cell of the plurality of battery cells 11 during charging and discharging may be transferred to the hollow boss 1113 via the partition plate 116. The hollow boss 1113 conducts the heat to the outside of the high-capacity battery as a natural air-cooling heat dissipation channel, reducing a risk of the occurrence of thermal runaway, thereby ensuring that the battery may operate safely and reliably.

After the partition plate 116 is added, the mounting stability of the each battery cell of the plurality of battery cells 11 in the housing body may also be improved, the occurrence of a problem of reduced cycling performance of a high-capacity battery caused by the swelling of the each battery cell of the plurality of battery cells 11 may be prevented, and the strength of the cylinder 24 may also be improved.

The partition plate 116, the heat sink fin 1111, and the hollow boss 1113 in this example may all be integrally formed, adopting the aluminum extrusion process, with the cylinder 24.

In this example, a heat exchange medium may also be injected into the hollow boss 1113 by adding a liquid cooling tube in communication with each hollow boss 1113, thereby realizing the adjustment of an operating temperature of the high-capacity battery.

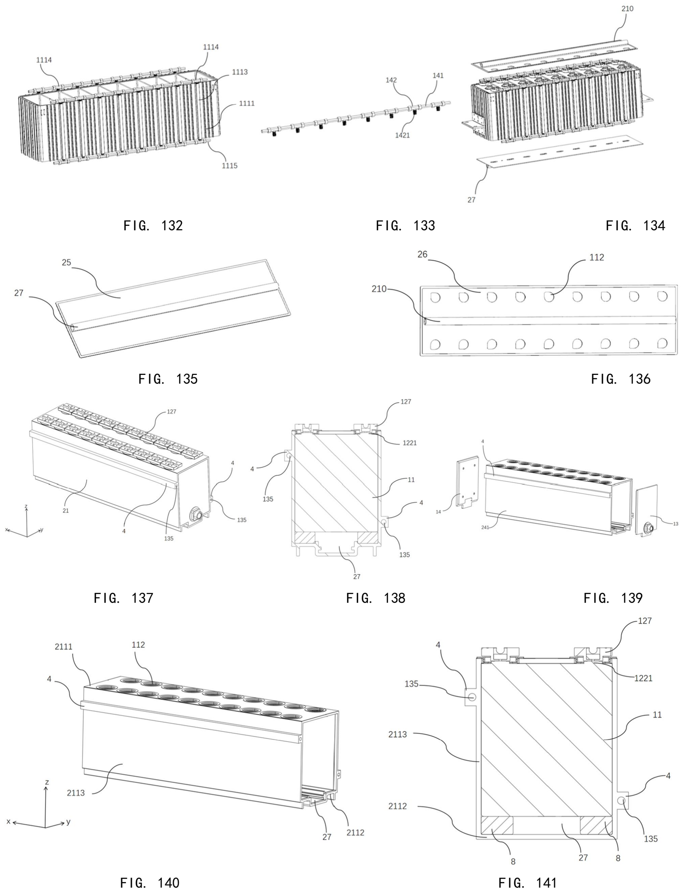

Specifically, as shown in FIG. 132, a first liquid cooling tube 1114 and a second liquid cooling tube 1115, which are respectively disposed at the top and bottom of the housing 21, are comprised. The first liquid cooling tube 1114 and the second liquid cooling tube 1115 both extends in the x direction; and the first liquid cooling tube 1114 is in communication with a top open end of each hollow boss 1113, and the second liquid cooling tube 1115 is in communication with a bottom open end of each hollow boss 1113. When the temperature of the high-capacity battery is higher than a normal operating temperature, the battery may be cooled by injecting the heat exchange medium into the first liquid cooling tube 1114, so as to prevent the occurrence of a thermal runaway phenomenon. The heat exchange medium herein may include a gas or liquid with a temperature being T (wherein a difference value between the value of T and the normal operating temperature of the battery is ±5°C), such as air, helium, cold water, or ethanol, etc. with the temperature being T. When the temperature of the high-capacity battery is too low, the battery temperature may also be increased to the normal operating temperature by such medium.

In some other examples, the plurality of hollow bosses 1113 on the same side wall may be connected in series via the liquid cooling tube, configured to form a heat exchange medium circulation channel with a long path.

As shown in FIG. 133, the first liquid cooling tube 1114 and the second liquid cooling tube 1115 in this example both includes a plurality of sub-liquid cooling tubes 141 and a plurality of three-way connectors 142; the adjacent sub-liquid cooling tubes 141 are connected via one three-way connector 142; and each branch tube of the three-way connector 142 is connected to the open end of one hollow boss 1113. The three-way connector 142 may be connected to the liquid cooling tube and the hollow boss 1113 by means of threaded connection, welding, or insertion. For ease of connection, each sub-liquid cooling tube 141 is a flexible tube.

In some other examples, the hollow boss 1113 may not be disposed at the portion at which the outer wall of the cylinder 24 corresponds to each partition plate 116. The heat dissipation performance is improved by increasing a heat dissipation area of the heat sink fin 1111 at the portion. However, compared to this example, the heat dissipation effect is relatively poor.

This example may also arrange two support members 3 insulated from the cylinder on the cylinder 24. A structure of the support member 3 may be found in FIGs. 128 and 129, and includes a fixing plate 31 and a support plate 32, which are integrally arranged, wherein the fixing plate 31 is fixed on the side wall of the cylinder 24 parallel to the yz plane, and may be fixed by adopting screws or by means of welding; and the support plate 32 is configured to be connected to a support frame in an energy storage device box body.

### Example 58

A difference between this example and Example 57, as shown in FIG. 134, this example adds a gas chamber 210 on a fifth cover plate 26, and the gas chamber 210 covers a gas port at a top of the each battery cell of the plurality of battery cells 11 in a high-capacity battery.

It is to be noted that the gas port herein includes the following two meanings.
1) The gas port is a through hole that is directly provided in the upper cover plate of the battery cell 11 and penetrates through the inner cavity of the battery cell 11.

In this case, an inner cavity of the gas chamber 210 is in communication with a gas region of the inner cavity of the each battery cell of the plurality of battery cells 11 via the gas port, the gas chamber 210 serves as a gas sharing chamber for each battery cell of the plurality of battery cells 11, and the gas regions of all the battery cells 11 may be in communication with each other on the basis of the gas chamber 210, so as to achieve a gas balance, causing a gas in each battery cell of the plurality of battery cells 11 to be shared to ensure the consistency of the each battery cell of the plurality of battery cells 11, thereby improving the cycle life of the high-capacity battery to a certain extent.

2) The gas port is an explosion vent or explosion-proof port provided in the upper cover plate of the battery cell 11, and an explosion venting film is disposed at the explosion vent or explosion-proof port.

In this case, the gas chamber 210 is used as an explosion venting channel. When the explosion venting film at the gas port of any battery cell of the plurality of battery cells 11 is broken through by flue gas in the inner cavity, the flue gas in the inner cavity of the battery cell 11 is discharged via the gas chamber 210, thereby improving the safety of the high-capacity battery.

In order to reduce production costs, an electrolyte sharing chamber 27 and the gas chamber 210 in this example adopts the same structure, and thus may be formed by adopting a same mold and using an aluminum extrusion process. Moreover, the rigidity of a fourth cover plate 25 and a fifth cover plate 26 may also be substantially the same, such that the instability of products is not caused by rigidity differences.

As shown in FIG. 135, the electrolyte sharing chamber 27 may be a hollow tube, of which cross section may be rectangular or circular. When the hollow tube serves as the electrolyte sharing chamber 27, second through holes penetrating the inner cavity of the electrolyte sharing chamber 27 need to be provided in a tube wall and the fourth cover plate 25, causing the inner cavity of the electrolyte sharing chamber 27 to penetrate through the inner cavity of the each battery cell of the plurality of battery cells 11. It is to be noted that, two open ends of the hollow tube need to be blocked after the inner cavity of the electrolyte sharing chamber 27 penetrates through the inner cavity of the each battery cell of the plurality of battery cells 11.

As shown in FIG. 136, the gas chamber 210 and the electrolyte sharing chamber 27 have the same structure.

This example adopts the tubular electrolyte sharing chamber 27 and the gas chamber 210, which may not only serve as a sharing channel or an explosion venting channel, but also improve the overall strength of the fourth cover plate 25 and the fifth cover plate 26.

In some other examples, the electrolyte sharing chamber 27 may be formed by directly forming, adopting a bending or aluminum extrusion process, a first channel on the fourth cover plate 25, and then causing an inner surface of the fourth cover plate 25 to protrude in a direction away from the inner surface of the fourth cover plate 25.

The gas chamber 210 may be a second channel formed on the fifth cover plate 26, and the second channel protrudes in a direction away from the bottom of the cylinder 24. The second channel may also be integrally formed, adopting the bending or aluminum extrusion process, with the fifth cover plate 26.

A high-capacity battery in this example may be prepared by the following processes, in an example of using the gas chamber 210 as the gas sharing chamber.

At Step 1, the housing 21 is processed, including the cylinder 24, the fourth cover plate 25 with the electrolyte sharing chamber 27, and the fifth cover plate 26.

At Step 2, the fourth cover plate 25 with the electrolyte sharing chamber 27 is hermetically welded to the bottom open end of the cylinder 24.

At Step 3, capacity grading and sorting is performed to screen out the plurality of battery cells 11 meeting requirements; first through holes are provided at the bottoms of housing bodies of the battery cells 11 and then sealed using sealing assemblies; the fifth through hole is provided at the top of the each battery cell of the plurality of battery cells 11 and then sealed using the sealing assembly; the plurality of battery cells 11 with the sealing assemblies are arranged in the cylinder 24 in Step 2 to ensure that, after the sealing assembly is opened by an external force or electrolyte itself, the electrolyte region of the inner cavity of the each battery cell of the plurality of battery cells 11 penetrates through the electrolyte sharing chamber 27, and the gas region of the inner cavity of the each battery cell of the plurality of battery cells 11 penetrates through the gas chamber 210. The sealing assembly may adopt sealing assemblies disclosed in Chinese patents CN218525645U and CN218525614U.

At Step 4, the fifth cover plate 26 is hermetically welded to the top open end of the cylinder 24, the housing 21 region corresponding to the third through hole 112 is fixedly sealed with the housing body of the battery cell 11 after the electrode terminal of the each battery cell of the plurality of battery cells 11 extends out of the third through hole 112, and an edge of the third through hole 112 may be welded to the housing body of the battery cell 11 in the region around the electrode terminal, so as to achieve sealing.

If a size of the each battery cell of the plurality of battery cells 11 in a z direction is not entirely identical, a problem of false welding or even inability to weld may occur between the housing bodies of part of the battery cells 11 with smaller sizes in the z direction and the housing 21 of the high-capacity battery, making it difficult to ensure sealing performance between the third through hole 112 and the housing body of the battery cell 11. In order to overcome such problems, this example may add a cushion block between the bottom of the each battery cell of the plurality of battery cells 11 and the fourth cover plate 25, so as to ensure the sealing performance between the third through hole 112 and the housing body of the battery cell 11.

At Step 5, the sealing assembly is opened by using the external force or the electrolyte itself, the inner cavity of the electrolyte sharing chamber 27 penetrates through the electrolyte region of the inner cavity of the each battery cell of the plurality of battery cells 11, and the inner cavity of the gas chamber 210 penetrates through the gas region of the inner cavity of the each battery cell of the plurality of battery cells 11.

After the inner cavity of the each battery cell of the plurality of battery cells 11 penetrates through the electrolyte sharing chamber 27, the electrolyte in the inner cavity of the each battery cell of the plurality of battery cells 11 is in communication with the electrolyte sharing chamber 27. In order to prevent a phenomenon of electrolyte interruption, the electrolyte may be injected, after the inner cavity of the each battery cell of the plurality of battery cells 11 penetrates through the electrolyte sharing chamber 27, into the electrolyte sharing chamber 27 to ensure the continuity of the electrolyte.

Then all the battery cells 11 are connected in parallel. In other examples, each battery cell of the plurality of battery cells 11 may be connected in parallel between Step 4 and Step 5.

When the gas chamber 210 serves as the explosion venting channel, differences between this preparation process and the preparation process hereinabove lie in that,
in Step 3, there is no need to provide the fifth through hole at the top of the each battery cell of the plurality of battery cells 11; and the plurality of battery cells 11 meeting the requirements are directly arranged in the cylinder 24, so as to ensure that the explosion vent or explosion-proof port penetrates through the inner cavity of the gas chamber 210 after the explosion vent or explosion-proof port is broken through by the flue gas in the inner cavity.

Example 59 to Example 61 provide a high-capacity battery, including a housing and a plurality of battery cells, wherein the plurality of battery cells are arranged in a same direction and placed in the housing.

The housing is provided with a sharing chamber, and an inner cavity of the sharing chamber is in communication with inner cavities of all the battery cells.

It is to be noted that, the sharing chamber hereinabove may be an electrolyte sharing chamber. Each battery cell of the plurality of battery cells may be in a unified electrolyte environment by the electrolyte sharing chamber, ensuring the uniformity of electrolyte in each battery cell of the plurality of battery cells, thereby improving the performance and charge-discharge cycle life of the high-capacity battery.

The sharing chamber hereinabove may also be a gas sharing chamber. A gas balance of the each battery cell of the plurality of battery cells is achieved via the gas sharing chamber, and the performance and charge-discharge cycle life of the high-capacity battery may also be improved.

The sharing chamber hereinabove may be a gas-liquid sharing chamber. Each battery cell of the plurality of battery cells may be in the unified electrolyte environment and gas environment by the gas-liquid sharing chamber, thereby improving the performance and charge-discharge cycle life of the high-capacity battery.

In order to improve the heat dissipation performance of such high-capacity batteries, a third through hole is provided in a housing top plate corresponding to the electrode terminal of the each battery cell of the plurality of battery cells, the electrode terminal of the each battery cell of the plurality of battery cells extends out of the corresponding third through hole, and the region of the housing top plate corresponding to the third through hole is fixedly sealed with a housing body of the battery cell, such that a gap between the electrode terminal and the third through hole is sealed.

It is to be noted that the electrode terminal of the battery cell hereinabove may be an electrode terminal of the battery cell. In order to prevent the electrode terminal of the battery cell from being unable to smoothly extend out of the third through hole when configuring for the electrode terminal, a current collector piece may be connected to the electrode terminal of the battery cell, and the integrated structure in which the electrode terminal of the battery cell is mated with the current collector piece serves as the electrode terminal of the battery cell.

For ease of description, a length direction of the housing is defined as an x direction, a width direction of the housing is defined as a y direction, and a height direction of the housing is defined as a z direction.

The housing may adopt at least the following two structures.

A first structure includes a cylinder with two open ends (i.e., ports parallel to a yz plane are the open ends), and a first end plate and a third end plate, which are respectively fixed to the two open ends of the cylinder (the first end plate and the third end plate are parallel to the yz plane). In the example below, such cylinders are defined as first cylinders.

A second structure includes a cylinder with open ends at the top and bottom (i.e., ports parallel to an xy plane are the open ends), and two cover plates respectively fix to the open ends of the cylinder. For ease of description, the cover plate fixed to the top open end of the cylinder is defined as the fifth cover plate, and the cover plate fixed to the bottom open end of the cylinder is defined as the fourth cover plate (i.e., the fifth cover plate and the fourth cover plate both are parallel to the xy plane). In the example below, such cylinders are defined as second cylinders.

In order to further improve the heat dissipation performance of such high-capacity batteries, the present invention provides a heat exchange channel on the housing, and the heat exchange channel serves as a heat transfer medium circulation channel. Heat generated by the high-capacity battery may be transferred to a heat transfer medium by using a low-temperature heat transfer medium flowing in an inner cavity of the heat exchange channel, and then the heat may be removed by the flowing of the heat transfer medium; alternatively, the heat may be transferred to the high-capacity battery by using a high-temperature heat transfer medium flowing in the inner cavity of the heat exchange channel. The heat transfer medium described herein may include water and an electrically-insulating heat transfer medium, such as an insulating oil-based heat transfer medium. However, regardless of the heat transfer media adopted, it needs to ultimately ensure that the heat transfer medium is non-conductive. That is to say, when the housing of the high-capacity battery is electrified, the insulating oil-based heat transfer medium is preferred.

The heat exchange channel of the present invention may adopt a plurality of structural forms. For example, a heat transfer medium circulation channel may be directly provided on the housing to serve as the heat exchange channel; a liquid cooling plate may be disposed on an outer wall of the housing, and a channel of the liquid cooling plate serves as the heat exchange channel; or a hollow member may be disposed on the outer wall of the housing, and an inner cavity of the hollow member serves as the heat exchange channel, all of which may achieve good heat dissipation effects.

Further description is made below with reference to the drawings and specific examples.

### Example 59

As shown in FIGs. 137 and 138, a high-capacity battery in this example includes a housing 21 and 10 battery cells 11 connected in parallel and arranged in the housing 21.

The battery cells 11 in this example are commercially available square housing batteries, with the number being 10. In other examples, the number of the battery cells may be adjusted according to actual requirements. An inner cavity of the each battery cell of the plurality of battery cells 11 includes an electrolyte region and a gas region.

As shown in FIG. 139, the housing 21 includes a first cylinder 241 with two open ends (i.e., ports parallel to a yz plane are the open ends), and a first end plate 13 and a third end plate 14, which are respectively fixed to the two open ends of the first cylinder 241.

In combination with FIG. 140, it may be seen that, the first cylinder 241 is formed by enclosing a first cylinder top plate 2111, a first cylinder bottom plate 2112, and two first cylinder side plates 2113.

The first cylinder top plate 2111 is provided with a third through hole 112 corresponding to an electrode terminal of the each battery cell of the plurality of battery cells 11 on a one-to-one basis. From FIGs. 137 and 138, it may be seen that, the electrode terminal of the battery cell 11 in this example is an integrated structure in which an electrode terminal 1221 of the battery cell is mated with a current collector piece 127.

The first cylinder bottom plate 2112 is provided with an electrolyte channel extending in an x direction as an electrolyte sharing chamber 27.

The electrolyte sharing chamber 27 mainly includes the following three structures.
1) A groove extending in a length direction is directly provided in an inner surface of the first cylinder bottom plate 2112 to serve as the electrolyte channel.

Two ends of the electrolyte channel parallel to a yz plane are closed ends, that is, in the x direction, a size of the electrolyte channel is less than a size of the first cylinder bottom plate 2112; and the corresponding electrolyte channel may be directly formed on an upper surface of the first cylinder bottom plate 2112 by means of milling or casting, and the structure requires the first cylinder bottom plate 2112 to have a large size in the z direction.

An inner cavity of the electrolyte channel is in direct communication with the electrolyte region of the inner cavity of the each battery cell of the plurality of battery cells 11.

2) As shown in FIG. 140, a protruding portion is provided on the first cylinder bottom plate 2112 in the z direction, the electrolyte channel extending in the x direction is provided on the protrusion portion, and two ends of the electrolyte channel parallel to the yz plane are open ends; and the inner cavity of the electrolyte channel is in direct communication with the electrolyte region of the inner cavity of the each battery cell of the plurality of battery cells 11. It is to be noted that during operation, two open ends (open ends parallel to the yz plane) of the electrolyte channel need to be blocked to prevent an external environment from affecting electrolyte in the inner cavity of the each battery cell of the plurality of battery cells 11.

3) As shown in FIG. 141, at least two support ribs 8 extending in the x direction are arranged on the inner surface of the first cylinder bottom plate 2112, and the electrolyte channel extending in the x direction is formed by the two support ribs 8 and a region of the first cylinder bottom plate 2112 located between the two support ribs 8; and the inner cavity of the electrolyte channel is in direct communication with the electrolyte region of the inner cavity of the each battery cell of the plurality of battery cells 11. It is to be noted that during operation, two open ends (open ends parallel to the yz plane) of the electrolyte channel need to be blocked to prevent an external environment from affecting electrolyte in the inner cavity of the each battery cell of the plurality of battery cells 11.

It is to be noted herein that the electrolyte sharing chamber 27 hereinabove serves as an electrolyte accommodating cavity, which need to ensure, after in communication with the electrolyte region of the inner cavity of the each battery cell of the plurality of battery cells 11, electrolyte in the entire high-capacity battery is not in contact with an external environment.

A hollow member 4 extending in the x direction is provided on an outer wall of the first cylinder side plate 2113, and the inner cavity of the hollow member 4 serves as a heat exchange channel 135. In order to improve the heat exchange efficiency, a plurality of hollow members 4 may be arranged on the first cylinder side plate 2113 in the z direction. Compared to the solution of directly providing a heat transfer medium circulation channel on the housing as the heat exchange channel, this example provides the hollow member on an outer wall of the cylinder as the heat exchange channel without increasing a thickness of the housing body. Furthermore, lower costs are achieved compared to a solution adopting the liquid cooling plate.

In some other examples, the hollow member 4 may also be disposed on the first cylinder top plate 2111. However, compared to this example, since a height of electrolyte in the inner cavity of the housing 21 may be slightly lower than an upper cover plate of the each battery cell of the plurality of battery cells 11, the heat exchange medium is unable to act on the electrolyte, thus leading to a poor heat exchange effect. In some other examples, the hollow member 4 may also be disposed on the first cylinder bottom plate 2112, which may achieve the same heat exchange effect as this example, but may affect the flatness of the bottom of the entire high-capacity battery. In some other examples, the hollow members 4 may also be disposed on the first end plate 13 and the third end plate 14 of the housing 21. However, the first end plate 13 and the third end plate 14 are located at two ends of the high-capacity battery, such that when the hollow members 4 are fixed on the first end plate and the third end plate, it is difficult to achieve a uniform heat exchange effect. Certainly, in some other examples, the hollow members 4 may be disposed on at least two of the first cylinder side plate 2113, the first cylinder top plate 2111, the first cylinder bottom plate 2112, the first end plate 13, and the third end plate 14 simultaneously. A better heat exchange effect may be achieved compared to this example, but the structure is relatively complex.

In this example, the hollow member 4 is straight, a cross section of the heat exchange channel 135 is circular (in some other examples, the cross section of the heat exchange channel 135 may also be U-shaped or C-shaped), and two opposite open ends of the hollow member 4 are configured to be connected to a heat transfer medium source. Heat generated by the high-capacity battery may be transferred, using a low-temperature heat transfer medium flowing in its inner cavity, to a heat transfer medium, and then the heat may be removed by the flowing of the heat transfer medium; alternatively, the heat may be transferred, using a high-temperature heat transfer medium flowing in its inner cavity, to the high-capacity battery. The heat transfer medium described herein may include water and an electrically-insulating heat transfer medium, for example, an insulating oil-based heat transfer medium need to ultimately ensure that the heat transfer medium is non-conductive.

In this example, the first cylinder 241 hereinabove provided with the hollow member 4 (the first cylinder 241 provided with the hollow member 4 may be defined as a first cylinder 241 assembly) may be integrally formed by adopting an aluminum extrusion process. In the first cylinder 241 assembly formed adopting the aluminum extrusion process, a size of the hollow member 4 is equal to a size of the first cylinder 241 in the x direction. When the electrolyte sharing chamber 27 adopts the 2nd) structure hereinabove, the electrolyte sharing chamber 27 may be formed synchronously while the first cylinder 241 assembly is formed. The processing technology is simple, and after the entire first cylinder 241 assembly constituted the housing 21 with the first end plate 13 and the third end plate 14, the sealing performance of the housing 21 is good.

In some other examples, the hollow members 4 are arranged in a serpentine shape on the first cylinder side plate 2113, so as to increase a heat exchange area. However, the processing is relatively complex, and the hollow member may not be integrally formed with the first cylinder 241.

In some other examples, the hollow member 4 may also be fixed on the first cylinder side plate 2113 by a welding process. However, compared to this example, there are disadvantages as follows. In an aspect, the hollow member 4 is fixed to the outer wall of the first cylinder side plate 2113 by welding, the processing process is relatively complex. Furthermore, during welding, a welding portion may also be burnt through, causing the first cylinder 241 to become a defective product. In another aspect, the plurality of welding portions hereinabove may be a potential leakage point, and when a high-capacity battery is assembled, electrolyte in an inner cavity of the first cylinder 241 is prone to leaking from the welding portions, or external air may enter the inner cavity of the first cylinder 241 via the welding portions, causing the electrolyte to deteriorate, thus causing a battery to be scrapped.

### Example 60

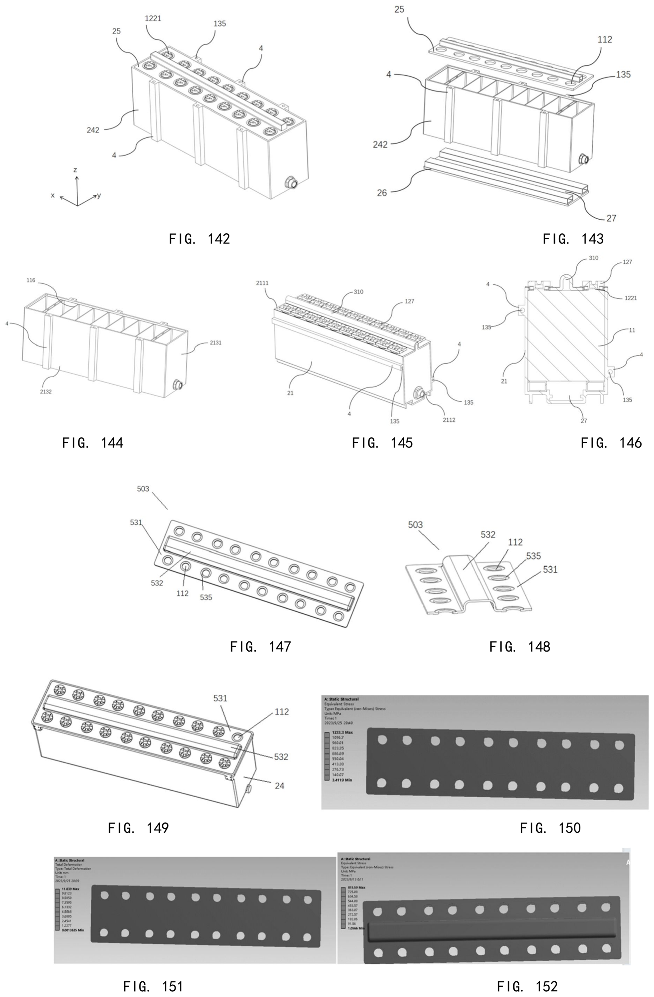

A difference between this example and Example 59 lies in that, as shown in FIGs. 142 and 143, a housing 21 in this example includes a second cylinder 242 with open ends at the top and bottom (i.e., ports parallel to an xy plane are the open ends), and a fifth cover plate 26 and a fourth cover plate 25, which are respectively fixed to the top and bottom open ends of the second cylinder 242 (i.e., both the fifth cover plate 26 and the fourth cover plate 25 are parallel to the xy plane).

In this example, the fifth cover plate 26 is provided with a third through hole 112 corresponding to an electrode terminal of the each battery cell of the plurality of battery cells 11 on a one-to-one basis; the fourth cover plate 25 is provided with an electrolyte channel extending in an x direction as an electrolyte sharing chamber 27; and the electrolyte sharing chamber 27 has the same structure as that in the example, and thus is not described herein again.

As shown in FIG. 144, the second cylinder 242 is formed by enclosing two second cylinder end plates 2131 and two second cylinder side plates 2132;

The second cylinder side plate 2132 is provided with a hollow member 4 extending in a z direction, and an inner cavity of the hollow member 4 serves as a heat exchange channel 135. In order to improve heat exchange efficiency, a plurality of hollow members 4 may be arranged on the second cylinder side plate 2132 in the x direction.

In this example, the hollow member 4 is straight, and two opposite open ends of the hollow member 4 are configured to be connected to a heat transfer medium source. Heat generated by the high-capacity battery may be transferred, using a low-temperature heat transfer medium flowing in its inner cavity, to a heat transfer medium, and then the heat may be removed by the flowing of the heat transfer medium; alternatively, the heat may be transferred, using a high-temperature heat transfer medium flowing in its inner cavity, to the high-capacity battery. The heat transfer medium described herein may include water and an electrically-insulating heat transfer medium, for example, an insulating oil-based heat transfer medium need to ultimately ensure that the heat transfer medium is non-conductive.

In this example, the second cylinder 242 hereinabove provided with the hollow member 4 (the second cylinder 242 provided with the hollow member 4 may be defined as a second cylinder 242 assembly) may be integrally formed by adopting an aluminum extrusion process. In the second cylinder 242 assembly forms adopting the aluminum extrusion process, a size of the hollow member 4 is equal to a size of the second cylinder 242 in a z direction. The processing technology is simple, and after the entire second cylinder 242 assembly constituted the housing 21 with the fifth cover plate 26 and the fourth cover plate 25, the housing 21 has the good sealing performance.

Furthermore, this example may also provide a plurality of partition plates 116 in an inner cavity of an inner cavity of the second cylinder 242, so as to divide the inner cavity into a plurality of battery cell 11 mounting cavities. A specific structure is shown in FIG. 144. One battery cell 11 is fixed in each of the plurality of battery cell 11 mounting cavities; for each battery cell of the plurality of battery cells 11 near a middle portion, the side walls on two sides of the battery cell are in contact with the partition plate 116; and for the two battery cells 11 near the outermost side, one side wall is in contact with the partition plate 116, and the other side wall is in contact with a second cylinder end plate 2131. In a first aspect, the mounting stability of the each battery cell of the plurality of battery cells 11 in the housing 21 may be improved. In a second aspect, the occurrence of a problem of reduced cycling performance of a high-capacity battery caused by the swelling of the each battery cell of the plurality of battery cells 11 may be prevented. In a third aspect, heat generated during the charging and discharging of the each battery cell of the plurality of battery cells 11 may be transferred to the outside via the partition plate 116, thereby reducing a risk of thermal runaway. In a fourth aspect, the strength of the cylinder may also be improved.

In some other examples, the second cylinder 242 assembly hereinabove and the fourth cover plate 25 may be integrally formed by adopting a casting process.

### Example 61

A difference between this example and Example 59, as shown in FIGs. 145 and 146, on the basis of Example 59 hereinabove, this example provides a protruding portion on a first cylinder top plate 2111 in a direction away from a first cylinder bottom plate 2112, configured to form a gas channel as a gas sharing chamber 310.

Example 62 to Example 65 disclosed a high-capacity battery with the bottom support member 89, and the bottom support member 89.

A basic structure of such high-capacity batteries is as shown in FIGs. 65 and 66, and includes a housing 21 and a plurality of battery cells 11, wherein the plurality of battery cells 11 are arranged in a same direction and placed in the housing 21.

Through study, it is found that during battery charging and discharging, the temperature at a position of an electrode terminal 84 is a highest point of a battery temperature. If the heat at the electrode terminal 84 is treated, heat dissipation may be effectively performed on the battery cell 11, such that the effective temperature control of the high-capacity battery may be realized.

Therefore, in order to improve the heat dissipation performance of such high-capacity batteries, in combination with FIG. 67, it may be seen that, In Example 62 to Example 65, a third through hole 112 is provided in a housing top plate 82 corresponding to each electrode terminal 84, the electrode terminal 84 extends out of the corresponding third through hole 112, and the region of the housing top plate 82 corresponding to the third through hole 112 is fixedly sealed with a housing body of the battery cell 11, such that a gap between the electrode terminal and the third through hole 112 is sealed. A heat transfer tube clamping portion 87 is provided at a portion at which each electrode terminal 84 extends out of the third through hole 112. A heat transfer tube 88 may be fixed to the heat transfer tube clamping portion 87, and a heat transfer medium is injected into an inner cavity of the heat transfer tube 88 to achieve heat dissipation by means of primary heat exchange. Since the heat transfer tube 88 hereinabove is in direct contact with the electrode terminal 84, the heat transfer tube 88 need to be insulated from the battery cell 11, so as to ensure safety.

It is to be noted that the electrode terminal 84 hereinabove may be an electrode terminal of the battery cell 11. In order to prevent the electrode terminal of the battery cell 11 from being unable to smoothly extend out of the third through hole 112 when configuring for the electrode terminal, a current collector piece may be connected to the electrode terminal of the battery cell 11, and the integrated structure in which the electrode terminal of the battery cell 11 is mated with the current collector piece serves as the electrode terminal 84.

As shown in FIGs. 66 and 68, in Example 62 to Example 65, a bottom support member 89 is placed in the housing 21 hereinabove, and is located between a lower cover plate 816 of the each battery cell of the plurality of battery cells and a housing bottom plate 83.

The bottom support member 89 in Example 62 to Example 65 mainly has the following two functions.
1. Each battery cell of the plurality of battery cells 11 is elevated such that the electrode terminal 84 extends out of the third through hole 112 in the housing top plate 82.
2. Each battery cell of the plurality of battery cells 11 is supported, and a liquid channel is formed between the lower cover plate 816 of the each battery cell of the plurality of battery cells to serve as the electrolyte sharing chamber 27.

An inner cavity of the electrolyte sharing chamber 27 is in communication with electrolyte regions of the inner cavities of all the battery cells 11. Each battery cell of the plurality of battery cells 11 may be in a unified electrolyte environment by the electrolyte sharing chamber 27, ensuring the uniformity of electrolyte in each battery cell of the plurality of battery cells 11, thereby improving the performance and charge-discharge cycle life of the high-capacity battery.

It may be considered that at least two support ribs are directly arranged between the lower cover plate 816 of the each battery cell of the plurality of battery cells and the housing bottom plate 83. As shown in FIG. 61, a liquid channel may be directly formed between the two support ribs to serve as an electrolyte sharing chamber 27, and the two support ribs may also directly support each battery cell of the plurality of battery cells 11, such that each electrode terminal 84 extends out of the third through hole 112 in a housing top plate 82.

However, through such arrangement, the size of the electrolyte sharing chamber 27 in the z direction is equal to the size of the support rib, such that the volume of the electrolyte sharing chamber 27 is large, leading to more electrolyte used in the entire electrolyte sharing chamber 27 (it is to be noted that, since the lower cover plate 816 of the each battery cell of the plurality of battery cells and the support rib are arranged in a non-sealed manner, the electrolyte permeated into a cavity formed between the two support ribs and the housing 21 from the gap between the lower cover plate and the support rib), thus increasing the cost of such high-capacity batteries.

Based on this, in order to reduce the amount of electrolyte used to reduce the cost of such high-capacity batteries, Example 62 to Example 65 consider that two types of support ribs are arranged on a same support member, the first type of support ribs mainly function to construct the electrolyte sharing chamber 27, and the second type of support ribs mainly functioned to elevate each battery cell of the plurality of battery cells 11, such that a height of the first type of support ribs in the z direction may be minimized to reduce the volume of the electrolyte sharing chamber 27, thereby decreasing the amount of electrolyte used. Since the height of the first type of support ribs in the z direction is decreased, each electrode terminal 84 may not smoothly extend through the third through hole 112 in the housing top plate 82. In this case, it may ensure, by increasing the height of the second type of support ribs in the z direction, that each electrode terminal 84 smoothly extends out of the third through hole 112 in the housing top plate 82.

Therefore, Example 62 to Example 65 provide a bottom support member 89 shown in FIG. 69, including a flat plate, and a third support rib 91 and a fourth support rib 92, which are respectively disposed on two opposite surfaces of the flat plate, wherein the third support rib 91 and the fourth support rib 92 both extend in a length direction of the flat plate. From FIGs. 66 and 69, the third support rib 91 is configured to be in contact with the lower cover plate 816 of the each battery cell of the plurality of battery cells, with a main function of forming a liquid channel between the lower cover plate 816 of the each battery cell of the plurality of battery cells and the flat plate. The fourth support rib 92 is configured to be in contact with the housing bottom plate 83 of the high-capacity battery, with a main function of supporting the flat plate and each battery cell of the plurality of battery cells 11 located thereon, thereby ensuring that the electrode terminal 84 extends out of the corresponding third through hole 112 in the housing top plate 82. From the figure, it may be seen that, in the z direction, a size of the third support rib 91 in Example 62 to Example 65 is less than a size of the fourth support rib 92, and when the electrolyte sharing chamber has a small volume, it may also ensure that the electrode terminal 84 extends out of the corresponding third through hole 112 of the housing top plate 82.

In Example 62 to Example 65, a gas sharing chamber 310 (as shown in FIG. 66) may also be disposed on an external top plate. An inner cavity of the gas sharing chamber 310 is in communication with gas regions of the inner cavities of all the battery cells 11. A gas balance of the each battery cell of the plurality of battery cells 11 is achieved via the gas sharing chamber 310, and the performance and charge-discharge cycle life of the high-capacity battery may also be improved.

Further description is made below with reference to the drawings and specific examples.

### Example 62

This example provides a bottom support member 89, with a structure shown in FIG. 69 and a main body portion being a flat plate. A shape and size of the flat plate matches a shape and size of the housing bottom plate 83. A fourth support rib 92 extending in the x direction is disposed on a lower surface of the flat plate, and a third support rib 91 extending in the x direction is disposed on an upper surface of the flat plate.

In this example, two fourth support ribs 92 are provided and has a main function of elevating each battery cell of the plurality of battery cells 11, such that each electrode terminals 84 extends out of the third through hole 112 in the housing top plate 82.

In combination with FIGs. 66 and 68, it may be seen that the bottom support member 89 is placed in the housing 21 and located between each battery cell of the plurality of battery cells 11 and the housing bottom plate 83.

It is to be noted that during the assembling of the high-capacity battery, a port of a channel 819 formed between the bottom support member 89 and the housing bottom plate 83 need to be sealed using a baffle plate 818, so as to prevent electrolyte from flowing into the channel 819 to increase the amount of the electrolyte used for the entire high-capacity battery (as shown in FIG. 66).

Furthermore, an edge of the bottom support member 89 in the x direction should be sealed with the side wall of the housing 21 parallel to the xz plane, so as to prevent the electrolyte from penetrating into the channel 819. The sealing between the edge and the side wall may be realized by adding a sealing strip or a sealant. The channel 819 may also be filled with a lightweight material to fill the channel 819. The lightweight material herein should not react with the electrolyte, and may select a solid column made of a PP material, and the solid column made of the PP material is lower in cost compared to an aluminum material. Even if there is a gap between the bottom support member 89 and the side wall of the cylinder 24 parallel to the xz plane, excessive electrolyte does not enter the channel 819 since the channel 819 has been filled.

In some other examples, the same purpose may be achieved by increasing a thickness of the flat plate. However, compared to this example, the entire high-capacity battery has a large self-weight while having higher material costs. In this example, by disposing the fourth support rib 92, the thickness of the flat plate may be minimized while meeting support strength, thereby reducing material costs while reducing the self-weight of the high-capacity battery.

In this example, three third support ribs 91 are provided; each support rib extends in the x direction; and the three support ribs are uniformly arranged in the y direction. In order to improve an electrolyte sharing effect, a notch 911 is provided on the third support rib 91 located in the middle, thereby ensuring that the liquid channel formed between the third support ribs 91 in pairs is in communication with each other and serves as the electrolyte sharing chamber 27.

The bottom support member 89 in this example may select an aluminum material and integrally formed by adopting an aluminum extrusion process. In other examples, the bottom support member may also be integrally formed by adopting a casting process.

### Example 63

This example provides a high-capacity battery with the bottom support member 89 in Example 62, with a structure shown in FIGs. 65 and 66. From the figures, it may be seen that the high-capacity battery in this example includes a housing 21 and battery cells 11 arranged in the housing 21.

The battery cells 11 in this example are square housing batteries, with the number being 13. In other examples, the number of the battery cells may be adjusted according to actual requirements. An inner cavity of the each battery cell of the plurality of battery cells 11 includes an electrolyte region and a gas region.

For ease of description, the housing 21 is disassembled into a cylinder 24 with two open ends and end plates 81 covering the open ends of the cylinder 24.

An electrolyte sharing chamber 27 is disposed in the x direction between a housing bottom plate 83 (cylinder 24 bottom plate) and each battery cell of the plurality of battery cells 11, and an inner cavity of the electrolyte sharing chamber 27 is in communication with the electrolyte region of the inner cavity of the each battery cell of the plurality of battery cells 11.

A gas sharing chamber 310 is disposed in the x direction between a housing top plate 82 (cylinder 24 top plate) and each battery cell of the plurality of battery cells 11, and an inner cavity of the gas sharing chamber 310 is in communication with the gas region of the inner cavity of the each battery cell of the plurality of battery cells 11.

In some other examples, an electrolyte sharing chamber 27 may only be provided.

The electrolyte sharing chamber 27 in this example is a liquid channel disposed between the housing bottom plate 83 and each battery cell of the plurality of battery cells 11, with a specific structure shown in FIGs. 67, 68, and 69.

FIG. 67 is a schematic diagram of a partial structure of the housing 21 of the high-capacity battery in this example, that is, a schematic structural diagram of a cylinder 24; FIG. 68 is a schematic diagram of the structure in which a bottom support member 89 is added in the cylinder 24 in FIG. 67 to form the electrolyte sharing chamber 27; and FIG. 69 is a schematic structural diagram of the bottom support member 89 in this example.

From FIG. 67, it may be seen that the cylinder 24 in this example has open ends on both left and right sides, and may be integrally formed adopting an aluminum extrusion process.

In FIG. 68, the bottom support member 89 is fixed in the cylinder 24. In combination with FIG. 66, it may be seen that the electrolyte sharing chamber 27 is formed between the bottom support member 89 in this example and the bottom of the each battery cell of the plurality of battery cells 11.

It is to be noted that during the assembling of the high-capacity battery, a port of a channel 819 formed between the bottom support member 89 and the housing bottom plate 83 need to be sealed using a baffle plate 818, so as to prevent electrolyte from flowing into the channel 819 to increase the amount of the electrolyte used for the entire high-capacity battery (as shown in FIG. 66).

Furthermore, an edge of the bottom support member 89 in the x direction should be sealed with the side wall of the housing 21 parallel to the xz plane, so as to prevent the electrolyte from penetrating into the channel 819. The sealing between the edge and the side wall may be realized by adding a sealing strip or a sealant. The channel 819 may also be filled with a lightweight material to fill the channel 819. The lightweight material herein should not react with the electrolyte, and may select a solid column made of a PP material, and the solid column made of the PP material is lower in cost compared to an aluminum material. Even if there is a gap between the bottom support member 89 and the side wall of the cylinder 24 parallel to the xz plane, excessive electrolyte does not enter the channel 819 since the channel 819 has been filled.

In this example, three third support ribs 91 are provided; each support rib extends in the x direction; and the three support ribs are uniformly arranged in the y direction. In order to improve an electrolyte sharing effect, a notch 911 is provided in each third support rib 91, thereby ensuring that the liquid channel formed between the third support ribs 91 in pairs is in communication with each other and serves as the electrolyte sharing chamber 27.

The structure of the battery cell 11 corresponding to the electrolyte sharing chamber 27 of such structure is shown in FIGs. 70 and 71.

In this example, two first through holes 416 are provided in a lower cover plate 816 of the battery cell. The two first through holes 416 are arranged in the y direction and are symmetrical to each other. The two first through holes 416 are sealed using a sealing assembly 418. After the battery cell 11 is placed into the cylinder 24 hereinabove, the two first through holes 416 are respectively located right above the two liquid channels. By means of an external force or external electrolyte (the external electrolyte herein refers to electrolyte located outside the battery cell 11), the sealing assembly 418 may be removed from the lower cover plate or an opening penetrating through the first through hole 416 is provided in the sealing assembly 418, so as to penetrate through the liquid channels.

From FIG. 70, it may be seen that the two first through holes 416 in this example are located on two sides of the lower cover plate 816 of the battery cell. When a battery cell inside the battery cell 11 adopts a coil core formed by coiling, there is a large space between the side wall in a thickness direction of a housing body of the battery cell 11 and the coil core. The first through holes 416 are provided close to the two sides of the lower cover plate 816 of the battery cell. Firstly, when the first through hole 416 is provided, an internal battery cell structure is not affected; and secondly, after the sealing assembly 418 at this portion is opened, the electrolyte in the inner cavity of the electrolyte sharing chamber 27 may better enter the inner cavity of the battery cell 11.

A size of the first through hole 416 need to meet the following conditions.
1. The first through hole 416 should not be excessively large to ensure that the lower cover plate 816 of the entire battery cell has certain strength, thereby avoiding the scrapping of the battery cell 11 due to the poor strength of the lower cover plate 816 of the battery cell before the sealing assembly 418 at the first through hole 416 is opened.
2. The first through hole 416 should not be excessively small to ensure that, after the sealing assembly 418 at the first through hole 416 is opened, the electrolyte region of the inner cavity of the each battery cell of the plurality of battery cells 11 is in smooth communication with the inner cavity of the electrolyte sharing chamber 27, thereby ensuring a better sharing effect.

In this example, the sealing assembly 418 may adopt a sealing film disclosed in Chinese Patent CN 218525645 U. The patent disclosed two types of sealing films, wherein one type of sealing film is soluble in the electrolyte, and the other type of sealing film may be opened by the external force.

When the sealing film soluble in the electrolyte is adopted, a protective film insoluble in the electrolyte need to be generally disposed on the side of the sealing film facing inward the housing body of the battery cell 11; and the protective film fell off accordingly when the sealing film is dissolved in the electrolyte.

When such sealing films are adopted, liquid path unpacking may be performed by means of the following process.

After the assembly of the high-capacity battery is completed, the electrolyte is injected into the electrolyte sharing chamber 27 such that the sealing films at the two first through holes 416 are automatically dissolved from the outside. Since the protective film and the lower cover plate 816 of the battery cell does not adopt any fixation manners, after the sealing film dissolved, the protective film automatically detached from the cover plate, such that the electrolyte sharing chamber 27 penetrates through the inner cavity of the battery cell 11, causing the electrolyte in all the battery cells 11 to be in a same system, thereby achieving the electrolyte sharing effect. In this example, during the unpacking process, even if the sealing film at one first through hole 416 is not completely dissolved, the electrolyte sharing effect may also be achieved via another first through hole 416 (the sealing film of the first through hole 416 is dissolved).

When the sealing film capable of being opened by the external force is adopted, a traction ring may generally be disposed on the sealing film, and an opening may be formed at the sealing film by using the external force to pull the traction ring.

Liquid path unpacking may be performed by means of the following process.

After the assembly of the high-capacity battery is completed, by using a traction tool to pull the traction ring, each sealing film is torn open or detached from the first through hole 416, such that the electrolyte sharing chamber 27 penetrates through the inner cavity of the battery cell 11, causing the electrolyte in all the battery cells 11 to be in a same system, thereby achieving the electrolyte sharing effect. During the unpacking process, even if the sealing film at one first through hole 416 is not completely torn open or detached, the electrolyte sharing effect may also be achieved via another first through hole 416 (the sealing film of the first through hole 416 is torn open or completely detached).

In some other examples, one or more than two first through holes 416 hereinabove may be provided in the lower cover plate 816 of the battery cell. When there is one first through hole 416 provided, the first through hole 416 is generally located at a geometric center of the lower cover plate 816 of the battery cell; and when there are more than two first through holes 416 provided, first through holes of the plurality of battery cells 416 may be uniformly distributed on the lower cover plate 816 of the battery cell. The size of the first through hole 416 still need to meet the two conditions hereinabove. Moreover, a position of the third support rib 91 need to be adjusted according to a position of the first through hole 416 of the battery cell 11. For example, when there is one first through hole 416 provided and the first through hole 416 is located at the geometric center of the lower cover plate 816 of the battery cell, only two third support ribs 91 may be provided, and a liquid channel is formed between the two third support ribs 91 and in communication with the first through hole 416 of the battery cell 11.

The gas sharing chamber 310 in this example is a gas channel disposed on the housing top plate 82, with a specific structure as shown in FIGs. 66 and 67. The housing top plate 82 is provided with a protrusion extending in the x direction, and a gas channel extending in the x direction is formed at the protrusion. While the cylinder 24 is processed adopting an aluminum extrusion process, the gas channel may be extruded synchronously.

The structure of the battery cell 11 corresponding to the gas sharing chamber 310 of such structure is shown in FIGs. 73 and 74.

In this example, a fifth through hole 37 is provided in an upper cover plate 817 of the battery cell; and the fifth through hole 37 is located between the two electrode terminals of the battery cells 11. The fifth through hole 37 is sealed using the sealing assembly 418. After the battery cell 11 is placed into the cylinder 24 hereinabove, the fifth through hole 37 is located under the gas sharing chamber 310. By means of the external force or external electrolyte (the external electrolyte herein refers to electrolyte located outside the battery cell 11), the sealing assembly 418 may be removed from the upper cover plate or an opening penetrating through the fifth through hole 37 is provided in the sealing assembly 418, so as to penetrate through the gas sharing chamber 310. The specific penetration manner (i.e., the unpacking manner) is similar to the liquid path unpacking manner, and thus is not described herein again.

As shown in FIGs. 66 and 67, the housing top plate 82 in this example is provided with a third through hole 112 capable of allowing each electrode terminal 84 to extend out; and each electrode terminal 84 extends out of the corresponding third through hole 112, and a housing 21 region around the third through hole 112 is fixedly sealed with the housing body of the battery cell 11. From the figures, it may be seen that, the electrode terminal 84 in this example is the electrode terminal of the battery cell 11, and the electrode terminals of such battery cells 11 are higher than that of conventional commercially available square housing batteries.

In this example, all the electrode terminals 84 located on one side serves as first polar terminals of the high-capacity battery, and all the electrode terminals 84 located on the other side serves as second polar terminals of the high-capacity battery.

In combination with FIG. 66, it may be seen that, in this example, a through groove is provided at the portion at which the electrode terminal 84 extends out of the third through hole 112, so as to serve as a heat transfer tube clamping portion 87. In combination with FIG. 74, the electrode terminal 84 in this example is a cylinder, including a first end face, a second end face 841, and a side wall 842 (the first end face and the second end face 841 are parallel to each other). The through groove is provided on the side wall 842 of the electrode terminal, that is, an opening of the through groove is located in the side wall 842.

In some other examples, a through hole may also be provided in the side wall 842, that is, an opening of the through hole is located in the side wall 842.

In some other examples, a through groove may also be provided in the second end face 841, that is, an opening of the through groove is located in the second end face 841.

The second end face 841 serves as an electrical connection portion of the electrode terminal, and is configured to be connected to a first electrical connection member 821 and/or a second electrical connection member 822 to achieve an electrical connection between each battery cell of the plurality of battery cells 11 and/or two high-capacity batteries; and the first end face is configured to be electrically connected to an electrode assembly in the housing body of the battery cell 11.

By providing the through groove or through hole in the side wall 842, compared to the fact of providing the through groove in the second end face 841, the heat transfer tube 88 has a larger contact area with the inner wall of the through groove or through hole in the through groove or through hole, thereby achieving higher heat exchange efficiency. Furthermore, when the through groove or through hole is located at the side wall 842, an entire region of the second end face 841 may serve as an electrical connection region. Two through grooves or through holes may also be simultaneously provided in the side wall 842 of the electrode terminal to increase the number of heat transfer tubes 88 placed, thereby further improving the heat exchange efficiency. The through groove caused the heat transfer tube 88 to be mounted more easily compared to a through hole structure.

The through groove has a C-shaped cross section. The through groove with the C-shaped cross section has an opening width less than a widest point of the through groove. Such a design facilitated interference snap-fit of the heat transfer tube 88 in the through groove, and curvatures formed at two ends of the C-shaped through groove has natural tension, facilitating tight snap-fit of the heat transfer tube 88 in the through groove.

The heat transfer tube 88 is fixed in the through groove or through hole (the heat transfer tube 88 is insulated from the battery cell 11). When a temperature of the high-capacity battery is higher than a set threshold, the high-capacity battery is cooled by introducing a low-temperature heat transfer medium into the heat transfer tube 88; and when the temperature of the high-capacity battery is lower than the set threshold, the high-capacity battery is heated by introducing a high-temperature heat transfer medium into the heat transfer tube 88. Therefore, it may ensure, by controlling the temperature of the heat transfer medium, that the high-capacity battery may operate at a normal operating temperature.

As shown in FIGs. 65 and 75, the heat transfer tube 88 in this example may adopt a U-shaped tube section. For ease of mounting, the U-shaped tube section is divided into three portions, which may be respectively defined as a first tube 881, a second tube 882, and a connection tube 883.

The first tube 881 is fixed in a first electrode terminal through groove of the high-capacity battery; the second tube 882 is fixed in a second terminal through groove of the high-capacity battery; and two ends of the connection tube 883 are respectively connected to ports of the first tube 881 and second tube 882 located on a same side. The remaining two ports of a first section and the second tube 882 serves as a liquid inlet and a liquid outlet of the heat transfer tube 88.

In some other examples, two heat transfer tubes 88 may also be adopted. The two heat transfer tubes 88 are respectively clamped in the heat transfer tube clamping portions 87 of a first electrode terminal and a second electrode terminal of the high-capacity battery.

This example may complete the assembly of the high-capacity battery by means of the following processes.

At Step 1, the cylinder 24 and two end plates 81 are processed.

At Step 2, capacity grading and sorting is performed to screen out the plurality of battery cells 11 meeting requirements; a first through hole 416 is provided in the lower cover plate 816 of the battery cell and then sealed using with the sealing assembly 418; the fifth through hole 37 is provided in the upper cover plate 817 of the battery cell and then sealed using with the sealing assembly 418; and the plurality of battery cells 11 with the sealing assemblies 418 are arranged in the cylinder 24 in Step 1.

A specific arrangement process is as follows.

The plurality of battery cells 11 are fixed as an integral body, and pushed into the inner cavity of the cylinder 24 from any open end of the cylinder 24; in this case, the bottom of the each battery cell of the plurality of battery cells 11 is in contact with the housing bottom plate 83, and each electrode terminal 84 corresponds to the corresponding third through hole 112, but does not extend out of the third through hole 112; then, the plurality of battery cells 11 are supported from the bottom using a lifting tooling to separate the bottom of the each battery cell of the plurality of battery cells 11 from the housing bottom plate 83, wherein each electrode terminal 84 extends out of the corresponding third through hole 112; and then, the bottom support member 89 is inserted between each battery cell of the plurality of battery cells 11 and the housing bottom plate 83 in the x direction, and the lifting tooling is removed.

The cylinder 24 may also be flipped to cause the cylinder 24 top plate to face downward, the plurality of battery cells 11 are fixed as an integral body and pushed into the inner cavity of the cylinder 24 from any open end of the cylinder 24; or the plurality of battery cells 11 are sequentially pushed into the inner cavity of the cylinder 24 from any open end of the cylinder 24; each electrode terminal 84 extends out of the corresponding third through hole 112 under the action of gravity, and the bottom support member 89 is inserted between the bottom of the each battery cell of the plurality of battery cells 11 and the housing bottom plate 83; and the cylinder 24 is flipped to cause the cylinder 24 top plate to face upward.

It is to be noted that, in the z direction, the size of the bottom support member 89 need to meet the following: after the bottom support member 89 is added between the bottom of the each battery cell of the plurality of battery cells 11 and the housing bottom plate 83, each electrode terminal 84 extends out of the corresponding third through hole 112.

At Step 3, the third through hole 112 and a peripheral portion of the electrode terminal of the housing body of the battery cell 11 are sealed; and the two end plates 81 are welded to two opposite open ends of the cylinder 24.

At Step 4, the sealing assembly 418 is opened by using the external force or the electrolyte itself, the inner cavity of the electrolyte sharing chamber 27 penetrates through the electrolyte region of the inner cavity of the each battery cell of the plurality of battery cells 11, and the inner cavity of the gas sharing chamber 310 penetrates through the gas region of the inner cavity of the each battery cell of the plurality of battery cells 11.

After the inner cavity of the each battery cell of the plurality of battery cells 11 penetrates through the electrolyte sharing chamber 27, the electrolyte in the inner cavity of the each battery cell of the plurality of battery cells 11 is in communication with the electrolyte sharing chamber 27. In order to prevent a phenomenon of electrolyte interruption, the electrolyte may be injected, after the inner cavity of the each battery cell of the plurality of battery cells 11 penetrates through the electrolyte sharing chamber 27, into the electrolyte sharing chamber 27 to ensure the continuity of the electrolyte.

Then, the heat transfer tube 88 is fixed in the through groove of each electrode terminal, and all the battery cells 11 are connected in parallel by adopting the first electrical connection member 821 as shown in FIG. 75. The step may also be executed before Step 4.

In order to form a more complete SEI film, causing the high-capacity battery to have a more stable cycling capability, formation is performed on the entire high-capacity battery after the electrolyte is injected into the inner cavity of the each battery cell of the plurality of battery cells 11 via the electrolyte sharing chamber 27.

### Example 64

When the heat transfer tube 88 in Example 62 is in contact with an electrode terminal 84 for heat exchange, the heat transfer tube 88 need to be disposed insulated from the electrode terminal 84, as well as the battery cell 11. This example provides a heat transfer tube 88 with double-layer insulation. The heat transfer tube is mounted on the electrode terminal 84, such that the electrode terminal 84 has reliable insulation performance when exchanging heat with the heat transfer tube 88.

The heat transfer tube 88 in this example specifically includes a metal tube, wherein the metal tube is provided with an insulating layer and an insulating sleeve; and the insulating layer is formed on a tube wall of the metal tube, and the insulating sleeve is disposed on the metal tube with the insulating layer. The heat transfer tube 88 hereinabove is provided with both an insulating layer and an insulating sleeve on the tube wall in contact with the electrode terminal 84 to form double insulation, wherein when the heat transfer tube 88 exchanges heat with the electrode terminal 84, even if one of the insulating layer or the insulating sleeve is damaged, reliable insulation performance between the heat transfer tube 88 and the electrode terminal 84 may still be maintained, thereby improving the safety of the battery cell 11 during use. A specific structure of the heat transfer tube 88 formed by the metal tube, the insulating layer, and the insulating sleeve is described in detail below.

The heat transfer tube 88 hereinabove is a pipeline having a heat exchange function, is mainly in contact with the electrode terminal 84, is configured to perform heat exchange with the electrode terminal 84. No requirements are made to a cross-sectional shape of the heat transfer tube 88, as long as it may be in contact with the electrode terminal 84 for heat exchange, for example, the heat transfer tube may adopt a square tube, an elliptical tube, a circular tube, etc. **In** this example, the heat transfer tube 88 is preferably a circular tube, as the circular tube is easy to mount and may be made adopting existing metal tubes, and the cost is relatively low.

The heat transfer tube 88 in this example specifically adopts a metal tube with good thermal conductivity, such as an aluminum tube, a copper tube, etc. Preferably, the heat transfer tube 88 hereinabove adopts an aluminum tube with a good heat conduction effect and relatively-low cost. In order to ensure the heat conduction effect, the thinner the wall thickness of the aluminum tube, the better. However, if the wall thickness of the aluminum tube is too thin, the aluminum tube is relatively soft, and thus is prone to bending and damage during mounting. Therefore, in this example, the wall thickness of the aluminum tube is preferably 0.5 mm to 1 mm, and the aluminum tube with the wall thickness may maintain mounting reliability while achieving good heat conduction performance, thereby avoiding a risk of bending and damage when the wall thickness of the aluminum tube is too thin. During specific use, a diameter of the aluminum tube is generally about 10 mm to 20 mm.

In the heat transfer tube 88 in this example, the insulating layer is formed on the tube wall of the aluminum tube and is integrated formed with the aluminum tube, which may be specifically implemented by adopting the following manners.

First, a ceramic coating, which is a high-temperature electrical insulating coating, is formed on the tube wall of the aluminum tube, configured to form the insulating layer. The ceramic coating may specifically be a boron nitride, aluminum oxide, or copper fluoride coating. However, the insulating layer formed in this manner is prone to detachment, and is high in processing cost.

Second, an insulating material (e.g., insulating paint, etc.) is coated on a surface of the tube wall of the aluminum tube to form the insulating layer; and this manner is easy to process and implement, and is low in processing cost.

Third, an oxidation treatment is performed on the aluminum tube to form the insulating layer; and the oxidation treatment is to form an oxide film by utilizing a metal surface to undergo a chemical reaction with oxygen, thereby improving the insulation performance of the metal surface. For example, an electrochemical oxidation method and the like are adopted. Specifically, the oxidation treatment is performed on the aluminum tube to form a hard oxide layer. The insulating layer formed by the method is not easy to detach and has relatively good insulation performance.

It is to be noted that, the tube wall hereinabove may be an tube wall or an inner tube wall of an aluminum tube, and preferably selected both the outer tube wall and the inner tube wall.

If a thickness of the hard oxide layer formed by the oxidation treatment is thicker, the insulation performance is better, but the heat conduction performance is reduced. In this example, the thickness of the hard oxide layer hereinabove is preferably 20 um to 50 um, such that while the hard oxide layer with the thickness ensured the insulation performance, the tube wall of the aluminum tube also has better heat conduction performance.

In this example, in order to ensure the reliability of insulation, the insulating sleeve is disposed outside the aluminum tube hereinabove with the insulating layer, such that double insulation is formed on an outer wall of the aluminum tube.

The insulating sleeve hereinabove may be processed and manufactured by adopting an insulating material with good heat conduction performance, such that the insulating sleeve has excellent heat conduction performance while also having good insulation performance. In this example, the insulating sleeve adopted a thermally conductive plastic sleeve or a thermally conductive rubber sleeve with excellent insulation performance and thermal conductivity, such as a thermally conductive silicone sleeve, etc. Moreover, the thickness of the insulating sleeve is preferably 0.1 mm to 1 mm, and the thickness ensured good heat conduction performance while ensuring excellent insulation performance. A cross-sectional shape of the insulating sleeve may be circular, U-shaped, or C-shaped, as long as the insulating sleeve may be sleeved on the aluminum tube with the insulating layer to achieve insulation at a contact portion between the aluminum tube and the electrode terminal 84. Moreover, the cross-sectional shape of the insulating sleeve hereinabove is preferably the same as a cross-sectional shape of the aluminum tube, such that the insulating sleeve may be tightly sleeved on the aluminum tube, thereby improving the thermal conductivity of the aluminum tube.

In some other examples, an oxide layer may be directly disposed on the tube wall of the aluminum tube or the insulating sleeve may be sleeved on the tube wall of the aluminum tube, such that the structure is relatively simple. However, if the thickness of the oxide layer or the insulating sleeve is too thin, the oxide layer or the insulating sleeve is easy to detach or be easily scratched, resulting in a problem of unreliable insulation.

### Example 65

During long-term use, due to a temperature difference between the inside and outside of a heat transfer tube 88, condensation form on a surface. When accumulating to a certain amount, the condensation may penetrate into a gap between the electrode terminal 84 and a third through hole 112, causing the electrode terminal 84 to be electrically connected to a housing 21, thus resulting in a short circuit in a same battery cell 11.

In this example, by optimizing a top structure of a high-capacity battery, an insulating sealant layer 820 is laid on a housing top plate 82 to overcome the problems hereinabove. An electrical connection portion (second end face 841) of the electrode terminal 84 extends out of the insulating sealant layer 820, and is configured to be connected to a first electrical connection member 821 or a second electrical connection member 822. A liquid inlet end and a liquid outlet end of the heat transfer tube 88 extends out of the insulating sealant layer 820, and are configured to be connected to an external liquid cooling apparatus. The first electrical connection member 821 is a connection device configured to achieve a parallel connection of the each battery cell of the plurality of battery cells 11; and the second electrical connection member 822 is a connection device configured to achieve a series connection of two high-capacity batteries, or may also be a connection device configured to connect the high-capacity battery and an external load.

As shown in FIG. 76, in this example, the insulating sealant layer 820 is laid on the housing top plate 82. From the figure, it may be seen that a partial region of each electrode terminal 84 is covered by the insulating sealant layer 820, the electrical connection portion (i.e., second end face 841) of each electrode terminal 84 is connected to the first electrical connection member 821 and/or the second electrical connection member 822 by extending out of the insulating sealant layer 820. A main body portion of the heat transfer tube 88 is covered by the insulating sealant layer 820. The liquid inlet end and the liquid outlet end of the heat transfer tube 88 extends out of the insulating sealant layer 820, and are configured to be connected to the external liquid cooling apparatus.

In some other examples, the insulating sealant layer 820 may have a small size in a z direction, which is lower than the main body portion of the heat transfer tube 88, may cover only a partial region of the main body portion of the heat transfer tube 88, as long as it ensured that the condensation may not enter the gap between the electrode terminal 84 and the third through hole 112.

An insulating sealant adopted in this example is generally a battery pouring sealant commonly used for batteries, such as a silicone thermal conductive pouring sealant, which has good functions of sealing, insulation, vibration resistance, heat dissipation, waterproofing, etc.

In order to prevent overflow of the insulating sealant liquid, during adhesive injection in this example, an adhesive injection mold may be added around edges around the housing top plate 82, thereby ensuring that the insulating sealant liquid may be smoothly injected. After adhesive injection is completed, demolding may be performed.

In combination with FIG. 77, two first electrical connection members 821 in this example are provided. One of the first electrical connection members 821 is connected to the second end faces 841 of positive electrode terminals of all the battery cells 11 in the high-capacity battery, and the other first electrical connection member 821 is connected to the second end faces 841 of the negative electrode terminals of all the battery cells 11 in the high-capacity battery. Therefore, all the battery cells 11 in the high-capacity battery are connected in parallel.

From the figure, it may be seen that, the first electrical connection member 821 is a metal plate, and may select a metal material such as copper, aluminum, etc., and an aluminum material is selected in this example on the basis of cost considerations.

The first electrical connection member 821 and the electrode terminal 84 may be connected by adopting screws or by means of welding. Considering the reliability of connection, this example adopts the welding manner to achieve the connection between the first electrical connection member and the electrode terminal.

Thirteen second electrical connection members 822 in this example are provided, and fixed to the electrical connection portion of the electrode terminal 84. **In** some other examples, the number of the second electrical connection members 822 may be determined according to actual requirements, and the second electrical connection member may be directly connected to the first electrical connection member 821.

### Example 65

In the examples hereinabove, electrode terminals (first electrode terminal and a second electrode terminal) are directly exposed to an external environment, and during use, a significant safety hazard existed due to the electrode terminal being electrified. Based on this, as shown in FIGs. 78 and 79, on the basis of the examples hereinabove, this example disposes an insulating protective cover 815 at a top of a high-capacity battery to provide insulation protection for the electrode terminal, such that potential safety hazards caused by exposed electrode terminal during operation of the high-capacity battery are avoided, and the problem of a short circuit in the high-capacity battery due to the falling of some foreign objects of an external environment into the position of the electrode terminal is also avoided, thereby improving the safety of the high-capacity battery.

It is to be noted that, if the insulating protective cover 815 completely wrapped the electrode terminal, an electrical connection of such high-capacity batteries is relatively difficult. Therefore, in this example, a slit 8153 is provided on the side wall of the insulating protective cover 815 parallel to an xz plane, and the second electrical connection member 822 may be connected to the electrode terminal 84 via the slit 8153, thereby achieving the electrical connection.

It is to also be noted that a channel configured to allow the liquid inlet end and the liquid outlet end of the heat transfer tube 88 to extend out also need to be provided on the side wall of the insulating protective cover 815.

In order to facilitate implementation of an electrical connection process, this example designed the insulating protective cover 815 as a split structure, as shown in FIG. 79, including an insulating frame body 8151 and an insulating cover plate 8152 covering the insulating frame body 8151. A lower end of the insulating frame body 8151 is configured to mate with a top of the high-capacity battery and is fixed to the top of the high-capacity battery by means of screw connection or adhesive bonding, an upper end of the insulating frame body 8151 is configured to mount the insulating cover plate 8152 in a snap-fit manner, and a notch is provided at the upper end of the side wall of the insulating frame body 8151 parallel to the xz plane, wherein the notch is mated with the insulating cover plate 8152 to form the slit 8153 hereinabove.

During assembly, the insulating frame body 8151 may first be fixed to the top of the high-capacity battery, and then the second electrical connection member 822 is connected to the electrode terminal via the slit 8153. After adhesive injection, the insulating cover plate 8152 is fixed to the upper end of the insulating frame body 8151.

Furthermore, in Example 64, during adhesive injection, in order to prevent overflow of the insulating sealant liquid, the adhesive injection mold is required. However, after adhesive injection, demolding is required, making the process relatively complex. Furthermore, during demolding, a structure of the insulating sealant layer 820 may be damaged, resulting in reduced sealing reliability.

In this example, the insulating frame body 8151 of the insulating protective cover 815 may be used as the adhesive injection mold, demolding is not required after adhesive injection, and the bonding strength between the insulating frame body 8151 and the top of the high-capacity battery may also be improved.

The basic design concept of Example 66 to Example 68 is as follows.

A cover plate is designed. The cover plate includes a cover plate body and a first pressure-bearing protrusion integrally formed on the cover plate body and extending in a length direction of the cover plate body. By disposing the first pressure-bearing protrusion, the cover plate body may meet a pressure-bearing capacity required by the high-capacity battery while having a relatively thin thickness. Moreover, the first pressure-bearing protrusion is integrally formed on the cover plate body, facilitating simple processing. Therefore, compared to the existing high-capacity batteries, the cover plate in this embodiment, when the thickness is designed to be relatively thin, raw materials may be saved for cover plate manufacturing, reducing costs, and simultaneously meeting pressure-bearing requirements during use.

The length direction of the cover plate body refers to the direction that a plurality of battery cells are arranged in a high-capacity battery.

The first pressure-bearing protrusion may be of a solid structure integrally formed on the cover plate body by means of casting or 3D printing, or may also be of a hollow structure integrally formed on the cover plate body by means of pressing or stamping.

### Example 66

As shown in FIGs. 147 and 148, a cover plate 503 includes a cover plate body 531 and a first pressure-bearing protrusion 532 integrally forms on the cover plate body by means of a stamping or extrusion process. In this example, the first pressure-bearing protrusion 532 is of a hollow structure, and the first pressure-bearing protrusion 532 extends in a length direction of the cover plate body 531. A protrusion direction of the first pressure-bearing protrusion 532 is a first direction, and the first direction is a direction away from an inner cavity of a high-capacity battery when apply to the high-capacity battery.

In this example, when the cover plate serves as an upper cover plate of the high-capacity battery, as shown in FIG. 149, in order to ensure that an electrode terminal of a battery cell may be connected in parallel outside the high-capacity battery, a plurality of third through holes 112 need to be provided on the cover plate body 531 and on two sides of the first pressure-bearing protrusion 532. In order to ensure the sealing performance of the high-capacity battery, a corresponding housing region around the third through holes 112 and an upper cover plate region around the electrode terminal of the battery cell 11 are sealed by means of laser welding. When an existing cover plate with a relatively-large thickness is used as the upper cover plate for the high-capacity battery, a higher laser power is required to fixedly seal the upper cover plate and a top cover of the battery cell by means of fusion welding (the laser power of 4 kW is required when a 4 mm cover plate is adopted), wasting energy, but more importantly, a non-metal insulation portion inside the battery cell may be carbonized during laser fusion welding, leading to irreversible damage to the battery cell. The cover plate in Example 66 to Example 68 has a thinner thickness (the laser power of only 1.3 kW is required when a 2.5 mm cover plate is adopted), such that the problems hereinabove may be avoided.

In this example, the thicknesses of the cover plate body and the first pressure-bearing protrusion are both 2.5 mm. In order to verify an effect, the following comparative simulation analysis is also performed in this example. As shown in FIGs. 150 and 151, when a load of 0.5 MPa is applied to a cover plate without provided with the first pressure-bearing protrusion and with a thickness of 2.5 mm, the maximum internal stress the cover plate experienced is 1233.3 MPa, and a deformation amount is 11.03 mm. On the basis of the simulation hereinabove, it may be determined that merely reducing the thickness of the cover plate from 4-6 mm to 2.5 mm may not meet the pressure-bearing requirements for the high-capacity battery during use.

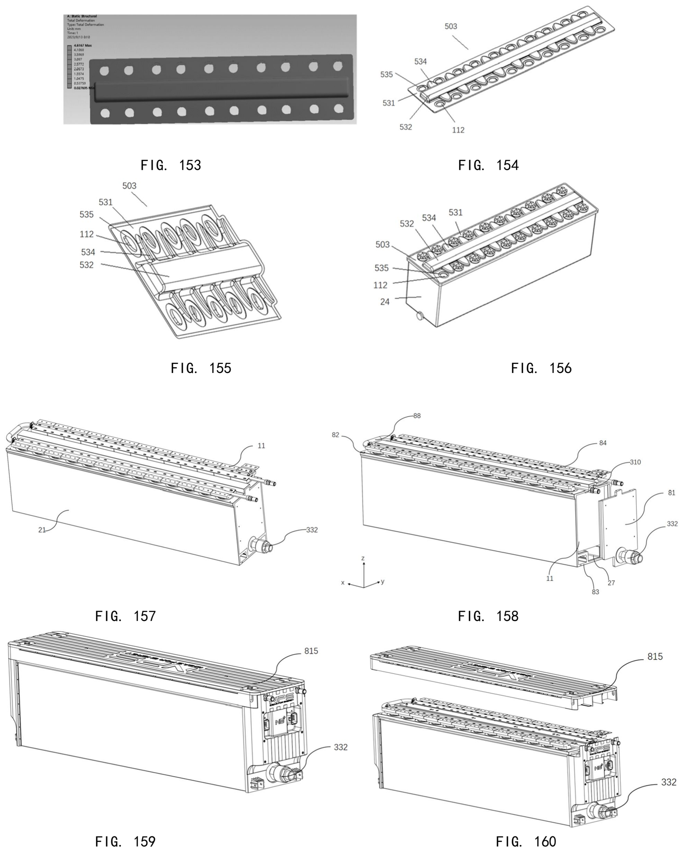

As shown in FIGs. 152 and 153, when the load of 0.5 Mpa is applied to the cover plate in this example, the maximum internal stress the cover plate born is 815.59 Mpa, and the deformation amount is 4.62 mm. Therefore, it may be seen that the addition of the first pressure-bearing protrusion significantly improves the strength of the cover plate, and the addition of the first pressure-bearing protrusion on the 2.5 mm-thick cover plate body may basically meet the pressure-bearing requirements during the use of the high-capacity battery.

### Example 67

As shown in FIGs. 154, 156, and 157, this example further added, on the basis of Example 66, a plurality of second pressure-bearing protrusions 534 on the cover plate body 531. The plurality of second pressure-bearing protrusions 534 are of a hollow structure and protrudes in a same direction as first pressure-bearing protrusions 532. The plurality of second pressure-bearing protrusions 534 are uniformly distributed on two sides of the first pressure-bearing protrusions 532. In this example, the thicknesses of the cover plate body 531, first pressure-bearing protrusion 532, and second pressure-bearing protrusion 534 are all 2.5 mm.

In order to verify the effect, comparative simulation analysis is performed on this example and Example 66. As shown in FIGs. 151 and 152, when a load of 0.5Mpa is applied to the cover plate in this example, the maximum internal stress the cover plate born is 815.59 Mpa, and the deformation amount is 4.62mm.

When the load of 0.5 Mpa is applied to the cover plate in this example, the maximum internal stress the cover plate experienced is 405 Mpa, and the deformation amount is 0.95 mm. Therefore, it may be seen that, compared with the cover plate only provided with the first pressure-bearing protrusion, the addition of the plurality of second pressure-bearing protrusions significantly improved the strength of the cover plate again, such that the cover plate may better meet the pressure-bearing requirements during the use of the high-capacity batteries.

### Example 68

When the cover plate in Example 66 or 2 is adopted as a cover plate for a high-capacity battery, a housing region corresponding to the periphery of a third through hole and an upper cover plate region around an electrode terminal of a battery cell need to be sealed by means of laser fusion welding. However, during mass production of high-capacity batteries, due to the presence of processing errors and assembly errors, if the bottoms of all the battery cells are ensured to be on a same horizontal plane, gaps may exist between top covers of part of the battery cells and a housing top plate in part of the high-capacity batteries, resulting in problems of false welding or even inability to weld during laser fusion welding.

In order solve these problems, as shown in FIG. 153, this example formed, on the basis of Example 66 or 2, an annular recess 535 in a peripheral region of each third through hole 112 by means of stamping. A recess direction of the annular recess 535 is a second direction. The second direction is a direction facing inward an inner cavity of the high-capacity battery (i.e., a direction opposite to a first direction). The arrangement of the annular recess may compensate for a gap between the housing and the top cover of the battery cell, avoiding the problems of false welding or inability to weld. Moreover, the annular recess is formed by means of stamping, such that a thickness here is less than 2.5 mm, and the laser power required during laser fusion welding may be further reduced, thereby reducing damage to the battery cell.

In the three examples hereinabove, since a first pressure-bearing protrusion is of a hollow structure, when a vent hole is provided at the top of the each battery cell of the plurality of battery cells in the housing of the high-capacity battery, the first pressure-bearing protrusion on the cover plate is in communication with the vent hole of the each battery cell of the plurality of battery cells, such that each battery cell of the plurality of battery cells is in a gas balance system. Each battery cell of the plurality of battery cells in the high-capacity battery is in the gas balance system, such that the probability of thermal runaway caused by excessive internal pressure in a certain battery cell may be reduced. In this embodiment, an exhaust valve may be disposed on the first pressure-bearing protrusion, and the probability of thermal runaway in the battery cell may be further avoided by periodically turning on the exhaust valve.

An explosion venting film is disposed at the top of the each battery cell of the plurality of battery cells in the housing of the high-capacity battery, the first pressure-bearing protrusion on the cover plate covers the explosion venting film of the each battery cell of the plurality of battery cells, and when thermal runaway occurred in a certain battery cell, the first pressure-bearing protrusion serves as an explosion venting channel to release thermal runaway flue gas to an external thermal runaway flue gas treatment device for treatment, thereby avoiding the impact of thermal runaway in one battery cell on other battery cells, thereby reducing the probability of larger accidents.

The three examples hereinabove all used the cover plate in Example 66 to Example 68 as the upper cover plate of the high-capacity battery. Certainly, in some other examples, the third through hole may not be processed in the cover plate body, and only the first pressure-bearing protrusion and the second pressure-bearing protrusion with the hollow structure may be provided on the cover plate body. In this case, the cover plate may serve as the lower cover plate of the high-capacity battery. During use, the first pressure-bearing protrusion may also be used as an electrolyte channel when sharing electrolyte, such that the flow of the electrolyte in a shared electrolyte system of the high-capacity battery is smoother. Moreover, an electrolyte injection and replacement mechanism may also be disposed on the first pressure-bearing protrusion, so as to perform operations such as injection, replacement, or replenishment, etc. on the shared electrolyte system of the high-capacity battery.

The plurality of battery cells in the high-capacity battery of the examples hereinabove achieved explosion venting via a second explosion venting portion (the second explosion venting portion herein may be an explosion vent or explosion-proof port provided with the explosion venting film, or may also be an explosion venting valve) of the same explosion venting channel (the sharing chamber hereinabove). When thermal runaway occurs in the plurality of battery cells at the same time, a single explosion venting portion based on the same explosion venting channel is unable to timely discharge a large amount of thermal runaway flue gas, posing certain safety problems.

Based on this, Example 69 and Example 70 are optimized from the following two aspects to avoid the occurrence of the problems hereinabove.

In a first aspect, the number of explosion venting portions on the explosion venting channel is increased, causing the thermal runaway flue gas to be discharged from different explosion venting portions of the explosion venting channel.

In a second aspect, the number of explosion venting channels is increased to allow the thermal runaway flue gas to be discharged via the plurality of explosion venting channels, and moreover, each explosion venting channel may also include a plurality of explosion venting portions.

It is to be noted that the explosion venting channel in the high-capacity battery in Example 69 and Example 70 may be located at the bottom of the each battery cell of the plurality of battery cells and in communication with the inner cavity of the each battery cell of the plurality of battery cells, thereby achieving an electrolyte communication effect. During normal charge-discharge cycles of the high-capacity battery, each battery cell of the plurality of battery cells may be in a unified electrolyte environment via the explosion venting channel, ensuring the uniformity of the electrolyte in each battery cell of the plurality of battery cells, thereby improving the performance and charge-discharge cycle life of the high-capacity battery.

The explosion venting channel in the high-capacity battery in Example 69 and Example 70 may also be located at the top of the each battery cell of the plurality of battery cells to cover the explosion vent of the each battery cell of the plurality of battery cells (no explosion venting film is provided in the explosion vent herein), and is in communication with the inner cavity of the each battery cell of the plurality of battery cells via the explosion vent, thereby achieving a gas communication effect. During the normal charge-discharge cycle of the high-capacity battery, the explosion venting channel may also realize a gas balance between the battery cells, and may also improve the performance and charge-discharge cycle life of the high-capacity battery.

The explosion venting channel in the high-capacity battery in Example 69 and Example 70 may also be located at the top of the each battery cell of the plurality of battery cells to cover the explosion vent of the each battery cell of the plurality of battery cells (the explosion venting film is provided in the explosion vent herein). When the internal pressure of any battery cell of the plurality of battery cells is too high, the thermal runaway flue gas broke through the explosion venting film on the explosion vent of the each battery cell of the plurality of battery cells, enters the explosion venting channel, and discharges from the explosion venting portion.

The explosion venting channel in the high-capacity battery in Example 69 and Example 70 may also be located on the side wall of the each battery cell of the plurality of battery cells, and the inner cavity of the explosion venting channel is in communication with the electrolyte regions and gas regions of the inner cavities of all the battery cells. During the normal charge-discharge cycles of the high-capacity battery, each battery cell of the plurality of battery cells may be in a unified electrolyte environment and gas environment via one explosion venting channel, thereby improving the performance and charge-discharge cycle life of the high-capacity battery.

For the high-capacity batteries with different structures, the explosion venting channels with different structure may be adopted in Example 69 and Example 70. Further description is made below with reference to the drawings and specific examples.

### Example 69

FIGs. 157 and 158 are schematic structural diagrams of a high-capacity battery in this example. The high-capacity battery in this example includes a housing 21 and a plurality of battery cells 11 connected in parallel and arranged in the housing 21.

The battery cells 11 in this example are square housing batteries, with the number being 13. In other examples, the number of the battery cells may be adjusted according to actual requirements. An inner cavity of the each battery cell of the plurality of battery cells 11 includes an electrolyte region and a gas region.

The inner cavity of the housing 21 is in communication with the inner cavity of each of the battery cells 11. An electrolyte sharing chamber 27 or a gas sharing chamber 310 may be provided in the housing 21, such that the inner cavity of the electrolyte sharing chamber 27 or gas sharing chamber 310 is in communication with the inner cavities of all the battery cells 11, thereby achieving the communication effect hereinabove.

In this example, the electrolyte sharing chamber 27 or the gas sharing chamber 310 hereinabove serves as the explosion venting channel, and the second explosion venting portion 332 is fixed to the region of the housing 21 corresponding to the explosion venting channel. FIGs. 157 and 158 are mainly described in an example of using the electrolyte sharing chamber as the explosion venting channel.

For ease of description, in this example, a length direction of the housing 21 is defined as an x direction, a width direction of the housing 21 is defined as a y direction, and a height direction of the housing 21 is defined as a z direction.

As shown in FIG. 158, in this example, the electrolyte sharing chamber 27 is disposed in the x direction on the housing bottom plate 83, and an inner cavity of the electrolyte sharing chamber 27 is in communication with the electrolyte region of the inner cavity of the each battery cell of the plurality of battery cells 11.

A gas sharing chamber 310 is disposed in the x direction on a housing top plate 82, and an inner cavity of the gas sharing chamber 310 is in communication with the gas region of the inner cavity of the each battery cell of the plurality of battery cells 11.

In some other examples, only the electrolyte sharing chamber 27 or the gas sharing chamber 310 may be disposed (when the gas sharing chamber 310 is provided only, the gas sharing chamber 310 serves as the explosion venting channel).

In this example, through holes penetrating through the electrolyte sharing chamber 27 are provided in end plates 81 (side plates parallel to the yz plane) of the housing 21 on both left and right sides, and explosion venting tubes are connected at the through holes. Explosion venting films are fixed in the explosion venting tubes to serve as the second explosion venting portions 332 of the high-capacity battery.

In some other examples, through holes penetrating through the gas sharing chamber are provided in the end plates 81 (the side plates parallel to the yz plane) of the housing 21 on both left and right sides, and the explosion venting tubes are connected at the through holes. The explosion venting films are fixed in the explosion venting tubes to serve as the second explosion venting portions 332 of the high-capacity battery.

In some other examples, the explosion venting film may also be directly fixed in the through hole of the end plate 81 of the housing 21 as the second explosion venting portion 332 of the high-capacity battery.

When thermal runaway occurred in any battery cell of the plurality of battery cells 11 in the high-capacity battery hereinabove, since the second explosion venting portions 332 are provided at both left and right ends of the explosion venting channel, and the electrolyte and thermal runaway flue gas may be discharged from the two ends of the electrolyte sharing chamber, reducing accumulation of the thermal runaway flue gas in the explosion venting channel and the inner cavity of the each battery cell of the plurality of battery cells 11, shortening pressure build-up time, thereby achieving high safety.

During the normal charge-discharge cycles of the high-capacity battery, each battery cell of the plurality of battery cells 11 may be in a unified electrolyte environment via the electrolyte sharing chamber hereinabove, ensuring the uniformity of the electrolyte in each battery cell of the plurality of battery cells 11. A gas balance of the each battery cell of the plurality of battery cells is achieved via the gas sharing chamber, and the performance and charge-discharge cycle life of the high-capacity battery may also be improved.

As shown in FIG. 158, in order to improve the heat dissipation performance of the high-capacity battery hereinabove, the housing top plate 82 of the high-capacity battery in this example is provided with an avoidance hole capable of allowing the electrode terminal 84 of the each battery cell of the plurality of battery cells 11 to extend out; and the electrode terminal 84 of the each battery cell of the plurality of battery cells 11 extends out of the corresponding avoidance hole, and the housing 21 region around the avoidance hole is fixedly sealed with the housing body of the battery cell 11.

It is to be noted that the electrode terminal 84 of the battery cell 11 hereinabove may be an electrode terminal of the battery cell 11. In order to prevent the electrode terminal of the battery cell 11 from being unable to smoothly extend out of the avoidance hole when configuring for the electrode terminal 84, a current collector piece may be connected to the electrode terminal of the battery cell 11, and the integrated structure in which the electrode terminal of the battery cell 11 is mated with the current collector piece serves as the electrode terminal 84 of the battery cell 11.

In this example, an integrated structure in which the electrode terminal of the battery cell 11 is mated with the current collector piece serves as the electrode terminal 84 of the battery cell 11.

In this example, a through groove is provided at the portion at which the electrode terminal 84 of the battery cell 11 extends out of the avoidance hole to serve as a heat transfer tube 88 clamping portion. The heat transfer tube 88 is fixed in the through groove. When a temperature of the high-capacity battery is higher than a set threshold, the high-capacity battery is cooled by introducing a low-temperature heat transfer medium into the heat transfer tube 88; and when the temperature of the high-capacity battery is lower than the set threshold, the high-capacity battery is heated by introducing a high-temperature heat transfer medium into the heat transfer tube 88. Therefore, it may ensure, by controlling the temperature of the heat transfer medium, that the high-capacity battery may operate at a normal operating temperature.

In order to prevent safety problems caused by condensation generated by the heat transfer tube 88, in this example, an insulating sealant layer may also be laid on the housing top plate 82. A partial region of the electrode terminal 84 of the each battery cell of the plurality of battery cells 11 is covered by the insulating sealant layer, an electrical connection portion (which may be an upper end face) of the electrode terminal 84 of the each battery cell of the plurality of battery cells 11 is connected to the electrical connection member by extending out of the insulating sealant layer (the parallel connection of the battery cells 11 or the series connection of the plurality of high-capacity batteries may be realized on the basis of the electrical connection member). A main body portion of the heat transfer tube 88 is covered by the insulating sealant layer. The liquid inlet end and the liquid outlet end of the heat transfer tube 88 extends out of the insulating sealant layer, and are configured to be connected to the liquid cooling apparatus.

Moreover, the electrode terminal 84 is directly exposed to an external environment, and during use, a significant safety hazard exists due to the electrode terminal 84 being electrified. Based on this, as shown in FIGs. 159 and 160, this example disposes an insulating protective cover 815 at a top of a high-capacity battery to provide insulation protection for the electrode terminal 84, such that potential safety hazards caused by exposed electrode terminal 84 during operation of the high-capacity battery are avoided, and the problem of a short circuit in the high-capacity battery due to the falling of some foreign objects of an external environment into the position of the electrode terminal 84 is also avoided, thereby improving the safety of the high-capacity battery.

It is to be noted that, if the insulating protective cover 815 completely wraps the electrode terminal 84, an electrical connection of such high-capacity batteries is relatively difficult. Therefore, in this example, a slit is provided on the side wall of the insulating protective cover 815 parallel to an xz plane, and the electrical connection member may be connected to the electrode terminal 84 via the slit, thereby achieving the electrical connection.

It is to also be noted that a channel configured to allow the liquid inlet end and the liquid outlet end of the heat transfer tube 88 to extend out also need to be provided on the side wall of the insulating protective cover 815.

### Example 70

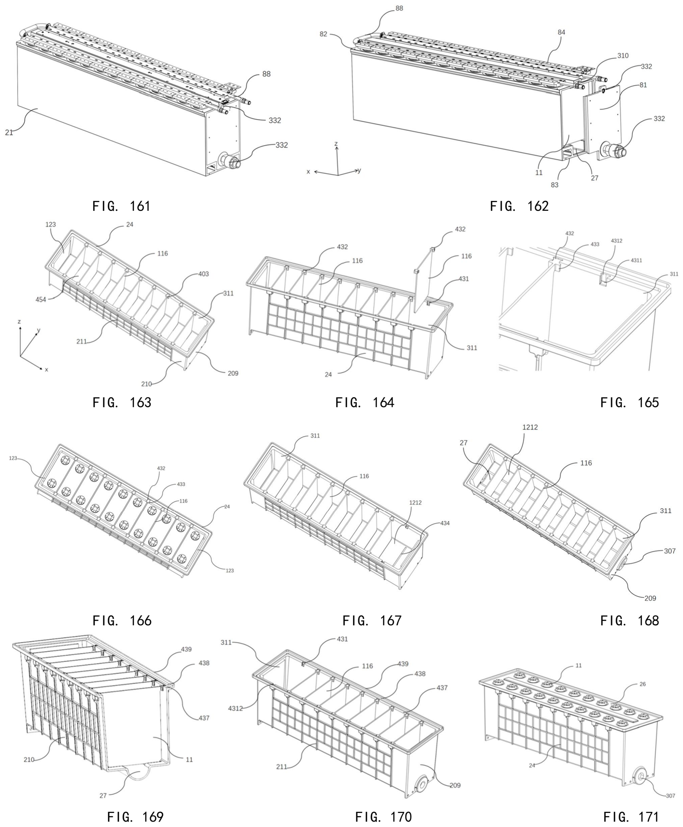

FIGs. 161 and 162 are schematic structural diagrams of a high-capacity battery in this example. A difference between this example and Example 69 lies in that, this example provides two through holes in one end plate 81 of the housing 21 (a side plate parallel to a yz plane). The two through holes respectively penetrates through a gas sharing chamber 310 and an electrolyte sharing chamber 27, and an explosion venting tube is connected at the through hole in communication with the electrolyte sharing chamber 27. An explosion venting film is fixed in the explosion venting tube to serve as one of second explosion venting portions 332 of the high-capacity battery, and an explosion venting film is fixed in the through hole in communication with the gas sharing chamber 310 to serve as another second explosion venting portion 332 of the high-capacity battery.

In some other examples, one through hole may also be provided in each of the end plates 81 (the side plates parallel to the yz plane) of the housing 21 on both left and right sides. Each through hole penetrates through the gas sharing chamber 310 and the electrolyte sharing chamber 27, and the explosion venting tube is connected at the through hole. The explosion venting films are fixed in the explosion venting tubes to serve as two second explosion venting portions 332 of the high-capacity battery.

In some other examples, two through holes may also be provided in each of the end plates 81 (the side plates parallel to the yz plane) of the housing 21 on both left and right sides. The two through holes in each end plate 81 respectively penetrates through the gas sharing chamber 310 and the electrolyte sharing chamber 27, and the explosion venting tube is connected at the through hole. The explosion venting films are fixed in the explosion venting tubes to serve as two second explosion venting portions 332 of the high-capacity battery.

When thermal runaway occurred in any battery cell of the plurality of battery cells 11 in the high-capacity battery hereinabove, since the gas sharing chamber and the electrolyte sharing chamber both may serve as the explosion venting channels, the electrolyte and thermal runaway flue gas may be discharged from different explosion venting channels, reducing accumulation of the thermal runaway flue gas in the explosion venting channel and the inner cavity of the each battery cell of the plurality of battery cells 11, shortening pressure build-up time, thereby achieving high safety.

During the normal charge-discharge cycles of the high-capacity battery, each battery cell of the plurality of battery cells 11 may also be in a unified electrolyte environment via the electrolyte sharing chamber, ensuring the uniformity of the electrolyte in each battery cell of the plurality of battery cells 11. A gas balance of the each battery cell of the plurality of battery cells is achieved via the gas sharing chamber, thereby improving the performance and charge-discharge cycle life of the high-capacity battery.

Example 71 to Example 76 provide a cylinder assembly for a high-capacity battery. The cylinder assembly includes a cylinder. The cylinder herein generally refers to a housing body structure with one or two opposite ends being open ends. For ease of description, in Example 71 to Example 76, one of the open ends is defined as a top open end, and each battery cell of the plurality of battery cells may be put into the cylinder via the open end, so as to assemble a high-capacity battery. In Example 71 to Example 76, in order to fix each battery cell of the plurality of battery cells in the cylinder, a plurality of partition plates are arranged at equal intervals in the cylinder in a same direction, and fixing mechanisms that are mated with each other are arranged on the partition plates and/or the cylinder, such that the partition plates are detachably fixed in the cylinder to divide the cylinder into a plurality of battery cell accommodating cavities. For example, a threaded hole may be provided in the partition plate and the cylinder, and the partition plate is fixed in the cylinder by a screw. Snap-fit structures that are mated with each other may also be provided on the partition plate and the cylinder, respectively, and the partition plate is fixed in the cylinder in a snap-fitted manner. Compared to a screw connection, the snap-fit structure has no influence on the sealing performance of the cylinder. Therefore, in Example 71 to Example 76, the partition plate is preferably fixed in the cylinder in a snap-fitted manner.

In Example 71 to Example 76, the cylinder and the partition plate adopts split structures. Compared to an integrally-formed structure, the accuracy of the each battery cell of the plurality of battery cells accommodating cavity is higher, and the battery cell may be firmly fixed in the battery cell accommodating cavity.

It is to be noted that the battery cell in Example 71 to Example 76 may be a commercially available square housing battery.

Example 71 to Example 76 are further described below with reference to the drawings and specific examples.

### Example 71

FIG. 163 is a schematic structural diagram of a cylinder assembly in this example. It may be seen from the figure that the cylinder assembly in this example mainly includes a cylinder 24 and a partition plate 116 fixed in the cylinder 24.

The cylinder 24 in this example is a rectangular housing body. For ease of description, a length direction of the cylinder 24 is defined as an x direction, a width direction is defined as a y direction, and a height direction is defined as a z direction. The rectangular housing body has an open end parallel to an xy plane, and the open end is defined as a top open end 311. Each battery cell of the plurality of battery cells 11 may be placed in the cylinder 24 via the top open end 311. In order to improve the structural strength of the cylinder 24, this example may further provide a plurality of reinforcing ribs 211 on a first side plate 210 of the cylinder 24, wherein the first side plate 210 is a side wall parallel to the xz plane.

This example includes 9 partition plates 116, which are arranged at equal intervals in the cylinder 24 in the x direction. Each partition plate 116 is detachably fixed to the cylinder 24 via a snap-fit structure 403, so as to divide the cylinder 24 into 10 battery cell accommodation cavities 454. In some other examples, the number of the partition plates 116 may be adjusted according to actual requirements. A spacing between the adjacent partition plates 116 may be determined according to the number of the battery cells 11 in the battery cell accommodating cavity 454 and the size of one battery cell 11 in the x direction. After the battery cell 11 is placed in the battery cell accommodating cavity 454, the side wall of the battery cell 11 close to the partition plate 116 should be in contact with the partition plate 116, or there is a tiny gap between the side wall and the partition plate, so as to fix the battery cell 11.

The specific snap-fit structure 403 is shown in FIGs. 164 and 165, which adopted a semi-transparent dovetail joint structure. The semi-transparent dovetail joint structure includes a semi-transparent dovetail groove 431 and a tenon 432. A shape of the tenon 432 matches the semi-transparent dovetail groove 431, and the tenon is snapped into the semi-transparent dovetail groove 431.

In this example, the semi-transparent dovetail groove 431 is provided in the first side plate 210 of the cylinder 24, and is close to the top open end 311 of the cylinder 24. The tenon 432 is disposed on the partition plate 116.

In some other examples, the semi-transparent dovetail groove 431 may be provided in the partition plate 116, and correspondingly, the tenon 432 is disposed on the first side plate 210 of the cylinder 24.

From FIG. 165, it may be seen that, the tenons 432 in this example are disposed on two sides of a top end of the partition plate 116; and a first opening 4311 of the semi-transparent dovetail groove 431 is located in an inner surface of the first side plate 210 of the cylinder 24, and a second opening 4312 is located in an end surface of the top open end 311 of the cylinder 24.

From FIG. 166, it may be seen that, in the y direction, each partition plate 116 in this example has an appropriate gap with the first side plate 210 of the cylinder, such that the partition plate 116 may be smoothly put into the cylinder. If the gap is small or there is no gap, it is difficult to assemble the partition plate and the cylinder, and deformation of a bonding surface between the partition plate and the cylinder may even occur.

The cylinder 24 in this example is integrally formed by means of casting. In order to compensate for draft angles of the two second side plates, compensation plates 123 may be added to inner surfaces of the two second side plates 209 (two side walls located in the width direction) of the cylinder 24, such that the inner surfaces of the two second side plates 209 are completely parallel to a yz plane.

In order to compensate for the draft angles of the two first side plates to further improve the stability of the each battery cell of the plurality of battery cells in the battery cell mounting cavity, a limiting block 433 may also be disposed between the partition plate 116 and the tenon 432. A maximum width of the limiting block is equal to a gap between the partition plate and the first side plate of the cylinder. The two limiting blocks located on the same partition plate are configured to limit the battery cell in the battery cell accommodation cavity on two sides of the partition plate in the width direction.

### Example 72

A difference between this example and Example 71 lies in that, as shown in FIG. 167, a snap-fit structure 403 in this example further includes snap grooves 434 that are provided on a cylinder bottom plate 1212 and corresponds to 9 partition plates 116 on a one-to-one basis, wherein a shape of each snap groove 434 matches a shape of a bottom end of each partition plate 116. When each partition plate 116 is inserted into the cylinder 24 from a top open end 311 of the cylinder 24, the bottom end of the partition plate 116 is snapped into the corresponding snap groove 434, and the tenon 432 of the partition plate 116 is snapped into the corresponding semi-transparent dovetail groove 431, such that the stability of the partition plate 116 in the cylinder 24 may be further improved.

### Example 73

A difference between this example and the examples hereinabove lies in that, in this example, a cylinder bottom plate 1212 is provided with an electrolyte sharing chamber 27; and the electrolyte sharing chamber 27 is configured to be in communication with an electrolyte region of an inner cavity of the each battery cell of the plurality of battery cells 11 in a high-capacity battery.

As shown in FIGs. 168 and 169, in an example of providing the electrolyte sharing chamber 27 on the cylinder bottom plate 1212 in Example 72, the electrolyte sharing chamber 27 in this example is a liquid flow channel provided on the cylinder bottom plate 1212. When the battery cell is a commercially available square housing battery, correspondingly, an unpacking device operation port 307 is provided in a second side plate 209 of a cylinder corresponding to an end portion of the electrolyte sharing chamber 27. An unpacking device extends into the electrolyte sharing chamber 27 via the unpacking device operation port 307 to unpack each battery cell of the plurality of battery cells 11, such that the electrolyte sharing chamber 27 is in communication with the electrolyte region of the inner cavity of the each battery cell of the plurality of battery cells 11 (during specific unpacking, the unpacking device extends into the electrolyte sharing chamber 27 via the unpacking device operation port 307 and opens a sealing film sealed at a through hole in a lower cover plate of the each battery cell of the plurality of battery cells 11, and the sealing film may specifically adopt sealing films disclosed in Chinese patents CN218525645U and CN218525614U). It is to be noted that, after unpacking is completed, the unpacking device operation port 307 need to be sealed by a blocking member.

In some other examples, a tube section fixed to the cylinder bottom plate 1212 may be adopted, and a through hole in communication with the electrolyte region of the inner cavity of the battery cell 11 is provided in the tube section, so as to serve as the electrolyte sharing chamber 27.

This example places the plurality of battery cells 11 inside one cylinder 24 with the electrolyte sharing chamber 27 at the bottom. By utilizing the electrolyte sharing chamber 27 to penetrate through the inner cavity of the each battery cell of the plurality of battery cells 11 located in the cylinder 24, electrolyte in each battery cell of the plurality of battery cells 11 is shared to ensure the consistency of the each battery cell of the plurality of battery cells 11. That is, the electrolyte in all the battery cells 11 is in a same system by communicating an electrolyte cavity of the each battery cell of the plurality of battery cells 11, such that differences between the electrolyte in each battery cell of the plurality of battery cells 11 are reduced, and the consistency between the battery cells 11 is improved to a certain extent, thereby prolonging the cycle life of the high-capacity battery to a certain extent.

Furthermore, when there is a gap between each partition plate and the first side plate of the cylinder, the omnidirectional mutual convection of the electrolyte between the battery cells may also be facilitated.

### Example 74

This example optimized, on the basis of the examples hereinabove, a structure of a top open end 311 of a cylinder 24, so as to seal the top open end 311 by utilizing a cover plate.

A specific structure may be found in FIG. 170. From FIG. 170, it may be seen that, this example provides a three-step structure at the top open end 311 of the cylinder 24. From bottom to top, three step surfaces may be respectively defined as a first step surface 437, a second step surface 438, and a third step surface 439. A second opening 4312 of a semi-transparent dovetail groove 431 is located on the first step surface 437, and the first step surface serves as a positioning surface for the cover plate. The second step surface 438 serves as an adhesive injection surface, and a side wall between the second step surface 438 and the third step surface 439 serves as an adhesive blocking surface.

When the top open end 311 is sealed by utilizing the cover plate, first, peripheral edges of the cover plate are fixed on the first step surface 437 by means of welding; and then, under the blocking of the adhesive blocking surface, a sealant layer is laid at a seam between the cover plate and the second step surface 438 to perform secondary sealing, thereby further improving the sealing performance between the cylinder 24 and the cover plate.

### Example 75

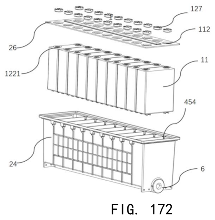

This example provides a high-capacity battery, as shown in FIGs. 171 and 172, including the cylinder assembly for a high-capacity battery in the examples hereinabove, a battery cell 11 located in a battery cell accommodating cavity 454, and a cover plate fixed to an open end of the cylinder assembly for a high-capacity battery.

For ease of description, the cover plate fixed to a top open end 311 of a cylinder 24 is defined as a fifth cover plate 26; a peripheral edge of the fifth cover plate 26 is fixed to a first step surface 437 by means of welding; and an sealant layer is laid at a seam between the fifth cover plate 26 and a second step surface 438, so as to improve the sealing performance between the fifth cover plate 26 and the cylinder assembly. A sealant generally selects a battery pouring sealant commonly used for batteries, such as a silicone thermal conductive pouring sealant, which has good functions of sealing, insulation, vibration resistance, heat dissipation, waterproofing, etc.

In order to improve the heat dissipation performance of such high-capacity batteries, the fifth cover plate 26 is provided with a third through hole 112 capable of allowing an electrode terminal of the each battery cell of the plurality of battery cells 11 to extend out; and the electrode terminal of the each battery cell of the plurality of battery cells 11 extends out of the third through hole 112, and a cover plate region around the third through hole 112 is fixedly sealed with a housing body of the battery cell 11.

It is to be noted that the electrode terminal of the battery cell 11 hereinabove may be an electrode terminal 1221 of the battery cell. In order to prevent the electrode terminal 1221 of the battery cell from being unable to smoothly extend out of the third through hole 112 when configuring for the electrode terminal, a current collector piece 127 may be connected to the electrode terminal 1221 of the battery cell, and the integrated structure in which the electrode terminal 1221 of the battery cell is mated with the current collector piece 127 serves as the electrode terminal of the battery cell 11. From the figure, it may be seen that, the electrode terminal of the battery cell 11 in this example is an integrated structure in which the electrode terminal 1221 of the battery cell is mated with the current collector piece 127.

A heat exchange tube may be fixed to the electrode terminal extending out of the third through hole 112, and is configured to exchange heat for the battery pack. Heat exchange herein may be understood as the following: heat dissipation of the high-capacity battery or heating of the high-capacity battery; when a temperature of the high-capacity battery is higher than a set threshold, the high-capacity battery is cooled by introducing a low-temperature heat transfer medium into the heat exchange tube; and when the temperature of the high-capacity battery is lower than the set threshold, the high-capacity battery is heated by introducing a high-temperature heat transfer medium into the heat exchange tube. Therefore, it may ensure, by controlling the temperature of the heat transfer medium, that the high-capacity battery may operate at a normal operating temperature.

### Example 76

A difference between this example and Example 75 lies in that, in this example, a sealant layer is laid on an entire upper surface of a fifth cover plate 26, and an electrode terminal of the each battery cell of the plurality of battery cells 11 extends out of the adhesive sealing layer.

When a liquid cooling tube is adopted as a heat exchange tube, condensation may be prevented from entering a gap between a current collector piece 127 and the fifth cover plate 26 by lying the sealant layer on the entire upper surface of the fifth cover plate 26, causing such high-capacity batteries to have higher safety.

In this example, a gas chamber may also be provided on the fifth cover plate. The gas chamber covers a gas port at a top of the each battery cell of the plurality of battery cells in the high-capacity battery. It is to be noted that the gas port herein includes the following two meanings.
1) The gas port is a through hole that is directly provided in the fifth cover plate of the battery cell and penetrates through an inner cavity of the battery cell.

In this case, an inner cavity of the gas chamber is in communication with a gas region of the inner cavity of the each battery cell of the plurality of battery cells via the gas port, the gas chamber serves as a gas sharing chamber for each battery cell of the plurality of battery cells, and the gas regions of all the battery cells may be in communication with each other on the basis of the gas chamber, so as to achieve a gas balance, causing a gas in each battery cell of the plurality of battery cells to be shared to ensure the consistency of the each battery cell of the plurality of battery cells, thereby improving the cycle life of the high-capacity battery to a certain extent. When thermal runaway occurs in any battery cell of the plurality of battery cells, flue gas in the inner cavity of the battery cell entered the gas chamber and is discharged via the gas chamber, thereby improving the safety of the high-capacity battery.

2) The gas port is an explosion vent or explosion-proof port provided in the fifth cover plate of the battery cell, and an explosion venting film is disposed at the explosion vent or explosion-proof port.

In this case, the gas chamber is used as an explosion venting channel. When the explosion venting film at the gas port of any battery cell of the plurality of battery cells is broken through by flue gas in the inner cavity, the flue gas in the inner cavity of the battery cell is discharged via the gas chamber, thereby improving the safety of the high-capacity battery.

## Claims

1. A high-capacity battery, comprising a housing and a plurality of battery cells, wherein the plurality of battery cells are arranged in a same direction in the housing; and the housing is provided with a sharing chamber, and an inner cavity of the sharing chamber is in communication with inner cavities of the plurality of battery cells.

2. The high-capacity battery as claimed in claim 1, wherein the plurality of battery cells are connected in parallel in sequence; an inner cavity of each battery cell of the plurality of battery cells comprises an electrolyte region and a gas region; the sharing chamber is an electrolyte sharing chamber that is disposed at a bottom of the housing; and the electrolyte sharing chamber is in communication with the electrolyte region of the inner cavity of the each battery cell of the plurality of battery cells.

3. The high-capacity battery as claimed in claim 2, wherein a top of the housing is provided with a third through hole capable of allowing an electrode terminal of the each battery cell of the plurality of battery cells to extend out; and the electrode terminal of the each battery cell of the plurality of battery cells extends out of the third through hole, and a housing region corresponding to the third through hole is fixedly sealed with a housing body of the each battery cell.

4. The high-capacity battery as claimed in claim 3, wherein the housing comprises a U-shaped housing body, a first end plate, a third end plate, and a second cover plate; the electrolyte sharing chamber is disposed at a bottom of the U-shaped housing body; the first end plate and the third end plate respectively cover two opposite open ends of the U-shaped housing body; the third through hole is provided in the second cover plate; and the second cover plate covers a top open end of the U-shaped housing body and is hermetically connected to the top open end of the U-shaped housing body.

5. The high-capacity battery as claimed in claim 4, wherein a first through hole penetrating through the inner cavity of the each battery cell is provided at the bottom of the housing body of the each battery cell of the plurality of battery cells; the electrolyte sharing chamber is a first channel disposed at the bottom of the U-shaped housing body; and the first channel penetrates through first through holes of the plurality of battery cells.

6. The high-capacity battery as claimed in claim 5, wherein the bottom of the U-shaped housing body protrudes in a direction away from the top of the U-shaped housing body to form the first channel.

7. The high-capacity battery as claimed in claim 6, wherein heat dissipation fins are disposed in an outer surface region of the bottom of the U-shaped shell housing body located on two sides of the first channel.

8. The high-capacity battery as claimed in any one of claims 4 to 7, wherein the U-shaped housing body and the second cover plate are formed as an integral piece.

9. The high-capacity battery as claimed in claim 8, wherein the U-shaped housing body and the second cover plate are integrally formed adopting an aluminum extrusion process.

10. The high-capacity battery as claimed in claim 8, wherein a second support rib is disposed between the bottom of the U-shaped housing body and the bottom of the each battery cell of the plurality of battery cells; and a height of the second support rib meets the following: after the each battery cell of the plurality of battery cells is supported using the second support rib, it needs to ensure that the electrode terminal of the each battery cell extends out of the third through hole provided in the second cover plate.

11. The high-capacity battery as claimed in claim 10, wherein a weak portion is provided in a region around the third through hole in the second cover plate.

12. The high-capacity battery as claimed in claim 5, wherein at least two first support ribs extending in an arrangement direction of the plurality of battery cells are disposed on an inner surface of the bottom of the U-shaped housing body, and the two first support ribs and a bottom region of the U-shaped housing body located between the two first support ribs form a first channel.

13. The high-capacity battery as claimed in claim 12, wherein the U-shaped housing body and the second cover plate are formed as an integral piece.

14. The high-capacity battery as claimed in claim 13, wherein the U-shaped housing body and the second cover plate are integrally formed adopting an aluminum extrusion process.

15. The high-capacity battery as claimed in claim 13, wherein a weak portion is provided in a region around the third through hole.

16. The high-capacity battery as claimed in claim 4, wherein a partition plate is disposed between two adjacent battery cells of the plurality of battery cells.

17. The high-capacity battery as claimed in claim 16, wherein the partition plate is an 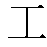 -shaped partition plate; a vertical beam of the 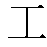 -shaped partition plate is in contact with adjacent side walls of the two battery cells located on a yz plane; and one horizontal beam of the 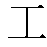 -shaped partition plate is in contact with side walls of the two battery cells located on an xz plane, and the other horizontal beam of the 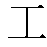 -shaped partition plate is in contact with the other side walls of the two battery cells located on the xz plane.

18. The high-capacity battery as claimed in claim 4, wherein a gas chamber is disposed on the second cover plate; the gas chamber covers a first explosion venting portion at a top of the each battery cell of the plurality of battery cells; when the first explosion venting portion of any battery cell of the plurality of battery cells is broken through by flue gas in the inner cavity, the gas region of the inner cavity of the each battery cell is in communication with the inner cavity of the gas chamber; or a fifth through hole penetrating through the inner cavity of the each battery cell is provided at the top of the housing body of the each battery cell of the plurality of battery cells, the gas chamber covers the fifth through hole, and an inner cavity of the gas chamber is in communication with the gas region of the inner cavity of the each battery cell of the plurality of battery cells via the fifth through hole.

19. The high-capacity battery as claimed in claim 18, wherein the second cover plate protrudes in a direction away from the bottom of the U-shaped housing body to form a second channel, configuring for the gas chamber.

20. The high-capacity battery as claimed in claim 18, wherein the U-shaped housing body and the second cover plate are formed as an integral piece.

21. The high-capacity battery as claimed in claim 20, wherein the U-shaped housing body and the second cover plate are integrally formed adopting an aluminum extrusion process.

22. The high-capacity battery as claimed in claim 20, wherein a support rib is disposed between the bottom of the U-shaped housing body and the bottom of the each battery cell of the plurality of battery cells; and a height of the support rib meets the following: after each battery cell of the plurality of battery cells is supported using the support rib, the electrode terminal of the each battery cell of the plurality of battery cells is able to extend out of the third through hole provided in the second cover plate.

23. The high-capacity battery as claimed in claim 22, wherein a weak portion is provided in a region around the third through hole.

24. The high-capacity battery as claimed in claim 18, wherein a partition plate is disposed between two adjacent battery cells of the plurality of battery cells.

25. The high-capacity battery as claimed in claim 24, wherein the partition plate is an 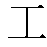 -shaped partition plate; a vertical beam of the 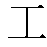 -shaped partition plate is in contact with adjacent side walls of the two battery cells located on a yz plane; and one horizontal beam of the 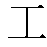 -shaped partition plate is in contact with side walls of the two battery cells located on an xz plane, and the other horizontal beam of the 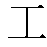 -shaped partition plate is in contact with the other side walls of the two battery cells located on the xz plane.

26. The high-capacity battery as claimed in claim 3 or 4, wherein the high-capacity battery further comprises two heat transfer connecting members, wherein the two heat transfer connecting members are two slender members, and the two slender members are respectively configured to be connected to a positive electrode terminal and a negative electrode terminal of the each battery cell of the plurality of battery cells; and a clamping portion configured to mount a heat transfer tube is provided on each of the two slender members in an axial direction of each of the two slender members.

27. The high-capacity battery as claimed in claim 1, wherein the plurality of battery cells are connected in parallel in sequence; the inner cavity of the each battery cell of the plurality of battery cells comprises an electrolyte region and a gas region; the housing comprises a cylinder, a fourth cover plate, and a fifth cover plate; the cylinder is open at a top and a bottom; the sharing chamber is an electrolyte sharing chamber disposed on the fourth cover plate, and the fourth cover plate covers a bottom open end of the cylinder and is hermetically connected to the bottom open end of the cylinder; the electrolyte sharing chamber is in communication with the electrolyte region of the inner cavity of the each battery cell of the plurality of battery cells; the fifth cover plate is provided with a third through hole capable of allowing an electrode terminal of the each battery cell of the plurality of battery cells to extend out; the fifth cover plate covers the top open end of the cylinder and is hermetically connected to the top open end of the cylinder; and the electrode terminal of the each battery cell of the plurality of battery cells extends out of the third through hole, and a housing region corresponding to the third through hole is fixedly sealed with a housing body of the battery cell.

28. The high-capacity battery as claimed in claim 27, wherein a first through hole penetrating through the inner cavity of the each battery cell is provided at the bottom of the housing body of the each battery cell of the plurality of battery cells; the electrolyte sharing chamber is a first channel extending in a length direction of the fourth cover plate; or the electrolyte sharing chamber is a hollow tube extending in the length direction of the fourth cover plate, and second through holes penetrating through the first through hole are provided in a tube wall of the hollow tube and in the fourth cover plate.

29. The high-capacity battery as claimed in claim 28, wherein a gas chamber is disposed on the fifth cover plate; the gas chamber covers a first explosion venting portion at the top of the each battery cell of the plurality of battery cells; and when the first explosion venting portion of any battery cell of the plurality of battery cells is broken through by flue gas in the inner cavity, the gas region of the inner cavity of the each battery cell is in communication with an inner cavity of the gas chamber.

30. The high-capacity battery as claimed in claim 29, wherein the gas chamber is disposed on the fifth cover plate; a fifth through hole penetrating through the inner cavity of the each battery cell is provided at the top of the housing body of the each battery cell of the plurality of battery cells; and the gas region of the inner cavity of the each battery cell of the plurality of battery cells is in communication with the inner cavity of the gas chamber via the fifth through hole.

31. The high-capacity battery as claimed in claim 1, wherein the plurality of battery cells are connected in parallel in sequence; the inner cavity of the each battery cell of the plurality of battery cells comprises an electrolyte region and a gas region; a first through hole penetrating through the inner cavity of the each battery cell is provided at a bottom of a housing body of the each battery cell of the plurality of battery cells; the sharing chamber is an electrolyte sharing chamber; the housing comprises a cylinder, a fifth cover plate, and a hollow box body configuring for the electrolyte sharing chamber; the cylinder is open at a top and a bottom; the hollow box body covers the bottom open end of the cylinder and is hermetically connected to the bottom open end of the cylinder; a second through hole penetrating through the first through hole is provided at the top of the hollow box body, and an inner cavity of the hollow box body is in communication with the electrolyte region of the inner cavity of the each battery cell of the plurality of battery cells via the first through hole and the second through hole; the fifth cover plate is provided with a third through hole capable of allowing an electrode terminal of the each battery cell of the plurality of battery cells to extend out; the fifth cover plate covers the top open end of the cylinder and is hermetically connected to the top open end of the cylinder; and the electrode terminal of the each battery cell of the plurality of battery cells extends out of the third through hole, and a housing region corresponding to the third through hole is fixedly sealed with the housing body of the battery cell.

32. The high-capacity battery as claimed in any one of claims 27 to 31, wherein the high-capacity battery further comprises a heat transfer connecting member, wherein the heat transfer connecting member is a slender member, and the slender member is configured to be connected to a positive electrode terminal or a negative electrode terminal of the each battery cell of the plurality of battery cells; and a clamping portion configured to mount a heat transfer tube is provided on the slender member in an axial direction of the slender member.

33. The high-capacity battery as claimed in any one of claims 27 to 31, wherein the cylinder further comprises a plurality of partition plates disposed in an inner cavity of the cylinder to divide the inner cavity of the cylinder into a plurality of battery cell mounting cavities; and at least one battery cell is fixed in each battery cell mounting cavity of the plurality of battery cell mounting cavities.

34. The high-capacity battery as claimed in claim 33, wherein the cylinder is integrally formed adopting an extrusion process; or the cylinder is formed by splicing at least two sub-cylinders; and each sub-cylinder of the at least two sub-cylinders is integrally formed adopting the extrusion process.

35. The high-capacity battery as claimed in claim 1, wherein the plurality of battery cells are sequentially arranged in series or in parallel in an inner cavity of the housing; the inner cavity of the each battery cell of the plurality of battery cells comprises a gas region; the sharing chamber is a gas sharing chamber disposed at the top of the housing; and the gas sharing chamber is in communication with the gas region of the inner cavity of the each battery cell of the plurality of battery cells.

36. The high-capacity battery as claimed in claim 35, wherein a fifth through hole penetrating through the inner cavity of the each battery cell of the plurality of battery cells is provided at the top of a housing body of the each battery cell of the plurality of battery cells; the housing comprises a cylinder, a fourth cover plate, and a fifth cover plate; the cylinder is open at a top and a bottom; the fourth cover plate covers a bottom open end of the cylinder and is hermetically connected to the bottom open end of the cylinder; the fifth cover plate is provided with a third through hole capable of allowing an electrode terminal of the each battery cell of the plurality of battery cells to extend out; the gas sharing chamber is disposed on the fifth cover plate; the fifth cover plate covers a top open end of the cylinder and is hermetically connected to the top open end of the cylinder; the electrode terminal of the each battery cell of the plurality of battery cells extends out of the third through hole, and a housing region corresponding to the third through hole is fixedly sealed with the housing body of the battery cell; and an inner cavity of the gas sharing chamber is in communication with the gas region of the inner cavity of the each battery cell of the plurality of battery cells via the fifth through hole.

37. The high-capacity battery as claimed in claim 36, wherein the fifth cover plate is provided with a groove extending in a length direction of the fifth cover plate as the gas sharing chamber; or the gas sharing chamber is a hollow tube extending in the length direction of the fifth cover plate, and is integrally formed with the fifth cover plate; and a tube wall of the hollow tube and the fifth cover plate are provided with fourth through holes.

38. The high-capacity battery as claimed in claim 37, wherein the cylinder further comprises a plurality of partition plates disposed in an inner cavity of the cylinder to divide the inner cavity of the cylinder into a plurality of battery cell mounting cavities; and at least one battery cell of the plurality of battery cells is fixed in each of the plurality of battery cell mounting cavities.

39. The high-capacity battery as claimed in any one of claims 36 to 38, wherein the cylinder is integrally formed adopting an extrusion process; or the cylinder is formed by splicing at least two sub-cylinders, and each of the at least two sub-cylinders is integrally formed adopting the extrusion process.

40. The high-capacity battery as claimed in claim 35 wherein a fifth through hole penetrating through the inner cavity of the each battery cell is provided at the top of a housing body of the each battery cell of the plurality of battery cells; the housing comprises a U-shaped housing body, a first end plate, a second cover plate, and a third end plate; the first end plate and the third end plate respectively cover two opposite open ends of the U-shaped housing body; the second cover plate is provided with a third through hole capable of allowing an electrode terminal of the each battery cell of the plurality of battery cells to extend out; the gas sharing chamber is disposed on the second cover plate; the second cover plate covers an open end at the top of the U-shaped housing body and is hermetically connected to the top open end of the U-shaped housing body; the electrode terminal of the each battery cell of the plurality of battery cells extends out of the third through hole, and a housing region corresponding to the third through hole is fixedly sealed with a housing body of the battery cell; and an inner cavity of the gas sharing chamber is in communication with the gas region of the inner cavity of the each battery cell of the plurality of battery cells via the fifth through hole.

41. The high-capacity battery as claimed in claim 40, wherein the second cover plate is provided with a groove extending in a length direction of the second cover plate as the gas sharing chamber; or the gas sharing chamber is a hollow tube extending in the length direction of the second cover plate, and is integrally formed with the second cover plate; and a tube wall of the hollow tube and the second cover plate are provided with fourth through holes.

42. The high-capacity battery as claimed in claim 41, wherein the U-shaped housing body and the second cover plate are formed as an integral piece.

43. The high-capacity battery as claimed in claim 42, wherein a support rib is disposed between the bottom of the U-shaped housing body and the bottom of the each battery cell of the plurality of battery cells; and a height of the support rib meets the following: after each battery cell of the plurality of battery cells is supported using the support rib, it needs to ensure that the electrode terminal of the each battery cell of the plurality of battery cells extends out of the third through hole provided in the second cover plate.

44. The high-capacity battery as claimed in claim 43, wherein a weak portion is provided in a region around the third through hole.

45. The high-capacity battery as claimed in claim 40 or 42, wherein the high-capacity battery further comprises a plurality of partition plates disposed in an inner cavity of the U-shaped housing body to divide the inner cavity of the U-shaped housing body into a plurality of battery cell mounting cavities, wherein at least one battery cell is fixed in each of the plurality of battery cell mounting cavities.

46. The high-capacity battery as claimed in claim 35, wherein the high-capacity battery further comprises a heat transfer connecting member, wherein the heat transfer connecting member is a slender member, and the slender member is configured to be connected to a positive electrode terminal or a negative electrode terminal of the each battery cell of the plurality of battery cells; and a clamping portion configured to mount a heat transfer tube is provided on the slender member in an axial direction of the slender member.

47. The high-capacity battery as claimed in claim 1, wherein the plurality of battery cells are connected in parallel in sequence; the inner cavity of the each battery cell of the plurality of battery cells comprises an electrolyte region and a gas region; the sharing chamber is an electrolyte sharing chamber disposed at the bottom of the housing and a gas sharing chamber disposed at the side wall of the housing; the electrolyte sharing chamber is in communication with the electrolyte region of the inner cavity of the each battery cell of the plurality of battery cells; and the gas sharing chamber is in communication with the gas region of the inner cavity of the each battery cell of the plurality of battery cells.

48. The high-capacity battery as claimed in claim 47, wherein a first through hole penetrating through the inner cavity of the each battery cell is provided at a bottom of a housing body of the each battery cell of the plurality of battery cells; a ninth through hole penetrating through the inner cavity of the each battery cell is provided in the side wall of the housing body of the each battery cell of the plurality of battery cells; the housing is a square housing and comprises a cylinder, a fourth cover plate, and a fifth cover plate; a length direction of the housing is defined as an x direction, a width direction of the housing is defined as a y direction, and a height direction of the housing is defined as a z direction; the cylinder is open at a top and a bottom; the gas sharing chamber is disposed on the side wall of the cylinder parallel to an xz plane, and the gas sharing chamber is in communication with the gas region of the inner cavity of the each battery cell of the plurality of battery cells via the ninth through hole; the electrolyte sharing chamber is disposed on the fourth cover plate; the fourth cover plate covers the bottom open end of the cylinder and is hermetically connected to the bottom open end of the cylinder; the electrolyte sharing chamber is in communication with the electrolyte region of the inner cavity of the each battery cell of the plurality of battery cells via the first through hole; the fifth cover plate is provided with a third through hole capable of allowing an electrode terminal of the each battery cell of the plurality of battery cells to extend out; the fifth cover plate covers the top open end of the cylinder and is hermetically connected to the top open end of the cylinder; and the electrode terminal of the each battery cell of the plurality of battery cells extends out of the third through hole, and the edge of the third through hole is fixedly sealed with the housing body of the battery cell.

49. The high-capacity battery as claimed in claim 48, wherein the fourth cover plate is provided with two first support ribs extending in the x direction; and the electrolyte sharing chamber is constituted by the two first support ribs and a fourth cover plate region located between the two first support ribs.

50. The high-capacity battery as claimed in claim 48, wherein a first partition plate parallel to the xz plane is disposed in an inner cavity of the cylinder to divide the inner cavity of the cylinder into a first chamber and a second chamber; the plurality of battery cells are arranged in the first chamber; and the second chamber serves as the gas sharing chamber.

51. The high-capacity battery as claimed in claim 50, wherein the cylinder further comprises a plurality of second partition plates that are arranged in the first chamber, parallel to a yz plane, and distributed in the X direction; the plurality of second partition plates divide the first chamber into a plurality of battery cell mounting cavities; and each of the plurality of battery cell mounting cavities is fixed with one battery cell.

52. The high-capacity battery as claimed in claim 51, wherein the fifth cover plate comprises n sub-fifth cover plates corresponding to n battery cells on a one-to-one basis; each sub-fifth cover plate of the n sub-fifth cover plates is provided with the third through hole capable of allowing the electrode terminal of the corresponding battery cell of the plurality of battery cells to extend out; the n sub-fifth cover plates respectively cover top open ends of the plurality of battery cell mounting cavities, and are hermetically connected to the top open ends of the plurality of battery cell mounting cavities; and the electrode terminal of the corresponding battery cell extends out of the third through hole, and an edge of the third through hole is sealed with the housing body of the each battery cell.

53. The high-capacity battery as claimed in claim 48, wherein the cylinder is integrally formed adopting an extrusion process.

54. The high-capacity battery as claimed in claim 48, wherein the cylinder is formed by splicing at least two sub-cylinders; and each sub-cylinder of the at least two sub-cylinders is integrally formed adopting the extrusion process.

55. The high-capacity battery as claimed in claim 47, wherein the electrolyte sharing chamber is provided with a liquid injection port.

56. The high-capacity battery as claimed in claim 1, wherein the plurality of battery cells are sequentially arranged in series or in parallel in an inner cavity of the housing; the inner cavity of each battery cell of the plurality of battery cells comprises a gas region; the sharing chamber is a gas chamber disposed at the top of the housing; the gas chamber covers a first explosion venting portion at the top of the each battery cell of the plurality of battery cells; and when the first explosion venting portion of any battery cell of the plurality of battery cells is broken through by flue gas in the inner cavity, the gas region of the inner cavity of the each battery cell is in communication with the inner cavity of the gas chamber, and the flue gas is discharged by the gas chamber.

57. The high-capacity battery as claimed in claim 56, wherein the housing comprises a cylinder, a fourth cover plate, and a fifth cover plate; the cylinder is open at a top and a bottom; the fourth cover plate covers a bottom open end of the cylinder and is hermetically connected to the bottom open end of the cylinder; the fifth cover plate is provided with a third through hole capable of allowing an electrode terminal of the each battery cell of the plurality of battery cells to extend out; the gas chamber is disposed on the fifth cover plate; the fifth cover plate covers the top open end of the cylinder and is hermetically connected to the top open end of the cylinder; and the electrode terminal of the each battery cell of the plurality of battery cells extends out of the third through hole, and a housing region corresponding to the third through hole is fixedly sealed with the housing body of the battery cell.

58. The high-capacity battery as claimed in claim 57, wherein the fifth cover plate is provided with a groove extending in a length direction of the fifth cover plate as the gas chamber; or the gas chamber is a hollow tube extending in the length direction of the fifth cover plate, and is integrally formed with the fifth cover plate; and a tube wall of the hollow tube and the fifth cover plate are provided with fourth through holes.

59. The high-capacity battery as claimed in claim 58, wherein the cylinder further comprises a plurality of partition plates disposed in an inner cavity of the cylinder to divide the inner cavity of the cylinder into a plurality of battery cell mounting cavities; and at least one battery cell is fixed in each of the plurality of battery cell mounting cavities.

60. The high-capacity battery as claimed in any one of claims 57 to 59, wherein the cylinder is integrally formed adopting an extrusion process; or the cylinder is formed by splicing at least two sub-cylinders; and each sub-cylinder of the at least two sub-cylinders is integrally formed adopting the extrusion process.

61. The high-capacity battery as claimed in claim 56, wherein the housing comprises a U-shaped housing body, a first end plate, a second cover plate, and a third end plate; the first end plate and the third end plate respectively cover two opposite open ends of the U-shaped housing body; the second cover plate is provided with a third through hole capable of allowing an electrode terminal of the each battery cell of the plurality of battery cells to extend out; the gas chamber is disposed on the second cover plate; the second cover plate covers an open end at the top of the U-shaped housing body and is hermetically connected to the top open end of the U-shaped housing body; the electrode terminal of the each battery cell of the plurality of battery cells extends out of the third through hole, and a housing region corresponding to the third through hole is fixedly sealed with a housing body of the each battery cell.

62. The high-capacity battery as claimed in claim 61, wherein the second cover plate is provided with a groove extending in a length direction of the second cover plate as the gas chamber; or the gas chamber is a hollow tube extending in the length direction of the second cover plate, and is integrally formed with the second cover plate; and a tube wall of the hollow tube and the second cover plate are provided with fourth through holes.

63. The high-capacity battery as claimed in claim 61, wherein the U-shaped housing body and the second cover plate are formed as an integral piece.

64. The high-capacity battery as claimed in claim 63, wherein a support rib is disposed between the bottom of the U-shaped housing body and the bottom of the each battery cell of the plurality of battery cells; and a height of the support rib meets the following: after each battery cell of the plurality of battery cells is supported using the support rib, it needs to ensure that the electrode terminal of the each battery cell of the plurality of battery cells extends out of the third through hole provided in the second cover plate.

65. The high-capacity battery as claimed in claim 64, wherein a weak portion is provided in a region around the third through hole.

66. The high-capacity battery as claimed in claim 62 or 64, wherein the high-capacity battery further comprises a plurality of partition plates disposed in an inner cavity of the U-shaped housing body to divide the inner cavity of the U-shaped housing body into a plurality of battery cell mounting cavities, wherein at least one battery cell of the plurality of battery cells is fixed in each of the plurality of battery cell mounting cavities.

67. The high-capacity battery as claimed in claim 56, wherein the high-capacity battery further comprises a heat transfer connecting member, wherein the heat transfer connecting member is a slender member, and the slender member is configured to be connected to a positive electrode terminal or a negative electrode terminal of the each battery cell of the plurality of battery cells; and a clamping portion configured to mount a heat transfer tube is provided on the slender member in an axial direction of the slender member.

68. The high-capacity battery as claimed in claim 1, wherein the high-capacity battery further comprises a heat transfer tube, wherein a third through hole is provided in a housing top plate corresponding to an electrode terminal of the each battery cell of the plurality of battery cells; the electrode terminal of the each battery cell of the plurality of battery cells extends out of the third through hole, and the region of the housing top plate corresponding to the third through hole is fixedly sealed with a housing body of the battery cell; a heat transfer tube clamping portion is provided at the portion of the electrode terminal of the each battery cell of the plurality of battery cells extending out of the third through hole; and the heat transfer tube is fixed on the heat transfer tube clamping portion of the electrode terminal of the each battery cell of the plurality of battery cells, and the heat transfer tube is insulated from each battery cell of the plurality of battery cells.

69. The high-capacity battery as claimed in claim 68, wherein the heat transfer tube clamping portion is a through groove or a through hole that is provided at the portion of the electrode terminal of the each battery cell of the plurality of battery cells extending out of the third through hole.

70. The high-capacity battery as claimed in claim 69, wherein the electrode terminal of the each battery cell is a columnar body, which comprises a first end face, a second end face, and a side wall; the first end face is configured to be electrically connected to an electrode assembly; the second end face serves as an electrical connection portion; and the through groove or through hole is provided in the side wall.

71. The high-capacity battery as claimed in any one of claims 68 to 70, wherein the heat transfer tube comprises a first tube, a second tube, and a connection tube; the first tube is fixed in a heat transfer tube clamping portion of a positive electrode terminal of the each battery cell of the plurality of battery cells in the high-capacity battery; the second tube is fixed in a heat transfer tube clamping portion of a negative electrode terminal of the each battery cell of the plurality of battery cells in the high-capacity battery; and two ends of the connection tube are respectively connected to ports of the first tube and the second tube located on the same side.

72. The high-capacity battery as claimed in claim 71, wherein the first tube and the second tube are aluminum tubes, an oxide layer is provided on a tube wall of the aluminum tube, and an insulating sleeve is sleeved on the aluminum tube with the oxide layer; or the first tube and the second tube are the aluminum tubes, and the insulating sleeves are sleeved on the aluminum tubes; or the first tube and the second tube are the aluminum tubes, and the oxide layer is provided on the tube wall of the aluminum tube.

73. The high-capacity battery as claimed in claim 70, wherein an insulating sealant layer is laid on the housing top plate; the second end face of the electrode terminal of the each battery cell of the plurality of battery cells extends out of the insulating sealant layer; and a liquid inlet end and liquid outlet end of the heat transfer tube extend out of the insulating sealant layer.

74. The high-capacity battery as claimed in claim 70, wherein the high-capacity battery further comprises two first electrical connection members, wherein one of the first electrical connection members is connected to the second end faces of the positive electrode terminals of the plurality of battery cells in the high-capacity battery, and the other first electrical connection member of the two first electrical connection members is connected to the second end faces of the negative electrode terminals of the plurality of battery cells in the high-capacity battery.

75. The high-capacity battery as claimed in claim 74, wherein the high-capacity battery further comprises an insulating protective cover, wherein the insulating protective cover is disposed on a top of the housing of the high-capacity battery, and the electrode terminal of the each battery cell of the plurality of battery cells is located in the insulating protective cover; a length direction of the housing is defined as an x direction, a width direction is defined as a y direction, and a height direction is defined as a z direction; the side wall of the insulating protective cover parallel to a yz plane has a channel that is configured to allow a liquid inlet end and liquid outlet end of the heat transfer tube to extend out; two side walls of the insulating protective cover parallel to an xz plane are provided with slits; and the electrical connection portion of the electrode terminal of the each battery cell of the plurality of battery cells is connected to a second electrical connection member via the slit.

76. The high-capacity battery as claimed in claim 68, wherein the sharing chamber is an electrolyte sharing chamber, which is a liquid channel located between a housing bottom plate and each battery cell of the plurality of battery cells; and the liquid channel is in communication with an electrolyte region of the inner cavity of the each battery cell of the plurality of battery cells.

77. The high-capacity battery as claimed in claim 76, wherein a bottom support member is disposed between the housing bottom plate and each battery cell of the plurality of battery cells; the bottom support member comprises a flat plate, an upper surface of the flat plate is provided with at least two third support ribs extending in an x direction, each battery cell of the plurality of battery cells is supported on the third support ribs, and a liquid channel is formed between the adjacent third support ribs to serve as an electrolyte sharing chamber; and a lower surface of the flat plate is provided with a fourth support rib extending in the x direction, which is in direct contact with the housing bottom plate.

78. The high-capacity battery as claimed in claim 68 or 76, wherein the sharing chamber is a gas sharing chamber and is a gas channel located between the housing top plate and each battery cell of the plurality of battery cells; and the gas channel is in communication with a gas region of the inner cavity of the each battery cell of the plurality of battery cells.

79. The high-capacity battery as claimed in claim 1, wherein the high-capacity battery further comprises a current collector piece, wherein the sharing chamber is an electrolyte sharing chamber; the housing comprises a cylinder, and end plates that are respectively sealed and fixed to two opposite open ends of the cylinder; the cylinder comprises a main cylinder body and a fixing portion disposed on the main cylinder body; the plurality of battery cells are arranged in an inner cavity of the main cylinder body in the same direction; the main cylinder body comprises a cylinder top plate, a cylinder bottom plate, and two cylinder side plates; the cylinder top plate is provided with a third through hole corresponding to an electrode terminal of the each battery cell on a one-to-one basis; a housing region corresponding to the third through hole is fixedly sealed with a housing body of the each battery cell; the current collector piece is electrically connected to the electrode terminal of the each battery cell of the plurality of battery cells; the cylinder bottom plate is provided with a first channel as the electrolyte sharing chamber; and the fixing portion is located on an outer wall of at least one of the cylinder bottom plate and the two cylinder side plates, and is configured to fix a heat exchange tube.

80. The high-capacity battery as claimed in claim 79, wherein the fixing portion is a boss that is provided with a first snap groove.

81. The high-capacity battery as claimed in claim 80, wherein the boss extends in a length direction of the main cylinder body; and the first snap groove is provided in a length direction of the boss and penetrates through the boss in the length direction of the boss.

82. The high-capacity battery as claimed in claim 81, wherein the main cylinder body and the boss provided with the first snap groove are formed as an integral piece.

83. The high-capacity battery as claimed in claim 79, wherein the sharing chamber further comprises a gas chamber; and a protruding portion is provided on the cylinder top plate in a direction away from the cylinder bottom plate, configured to form the gas chamber.

84. The high-capacity battery as claimed in any one of claims 79 to 83, wherein the high-capacity battery further comprises a heat exchange assembly, wherein the heat exchange assembly comprises a first tube member, a second tube member, and a third tube member; the third tube member is located between the first tube member and the second tube member, with both ends being connected to the first tube member and the second tube member, and an inner cavity penetrating through the first tube member and the second tube member; inner cavities of the first tube member, second tube member, and third tube member are configured to transmit a heat transfer medium, and the heat transfer medium is insulated from the high-capacity battery; the third tube member is fixedly connected to the current collector piece; and at least one port of the first tube member is a heat transfer medium inlet, and at least one port of the second tube member is a heat transfer medium outlet.

85. The high-capacity battery as claimed in claim 84, wherein two fixing portions are provided; the two fixing portions are respectively located on the outer walls of the two cylinder side plates; and the two ends of the heat exchange tube located on the fixing portions are in communication with the first tube member and the second tube member.

86. The high-capacity battery as claimed in claim 84, wherein the high-capacity battery further comprises another heat exchange assembly, wherein the fixing portion is located on an outer wall of the cylinder bottom plate; and a third tube member of another heat exchange assembly is fixed in the first snap groove of the fixing portion.

87. The high-capacity battery as claimed in claim 1, wherein the plurality of battery cells are connected in parallel; the housing comprises a cylinder, and a first end plate and a third end plate, which are respectively sealed and fixed to two opposite open ends of the cylinder; the cylinder is formed by enclosing a cylinder top plate, a cylinder bottom plate, and two cylinder side plates;
third through holes allowing a first electrode terminal and a second electrode terminal of the each battery cell to extend out are provided on the cylinder top plate corresponding to the first electrode terminal and the second electrode terminal of the each battery cell of the plurality of battery cells; the first electrode terminal and the second electrode terminal of the each battery cell of the plurality of battery cells extend out of the third through holes in the cylinder top plate, and a cylinder top plate region corresponding to the third through holes is fixedly sealed with a housing body of the each battery cell; at least one sharing chamber is provided in the cylinder side plate; and a sixth through hole penetrating through the inner cavity of the each battery cell is provided in a side wall of the housing body of the each battery cell of the plurality of battery cells, and the sharing chamber is in communication with the inner cavity of the each battery cell of the plurality of battery cells via the sixth through hole.

88. The high-capacity battery as claimed in claim 87, wherein the sharing chamber is a first channel that is disposed on the cylinder side plate in a length direction of the cylinder, and an inner cavity of the first channel penetrates through the inner cavity of the each battery cell of the plurality of battery cells.

89. The high-capacity battery as claimed in claim 88, wherein one cylinder side plate protrudes in a direction away from the other cylinder side plate to form the first channel.

90. The high-capacity battery as claimed in claim 89, wherein the cylinder is integrally formed adopting an aluminum extrusion process.

91. A cylinder for the high-capacity battery as claimed in any one of claims 87 to 90, wherein one sharing chamber is provided and serves as an electrolyte sharing chamber; and the electrolyte sharing chamber is configured to communicate with an electrolyte region of an inner cavity of the each battery cell of the plurality of battery cells.

92. The high-capacity battery as claimed in any one of claims 87 to 90, wherein one sharing chamber is provided and serves as a gas sharing chamber; and the gas sharing chamber is configured to be in communication with a gas region of the inner cavity of the each battery cell of the plurality of battery cells.

93. The high-capacity battery as claimed in any one of claims 87 to 90, wherein one sharing chamber is provided and serves as a gas-liquid sharing chamber; and the gas-liquid sharing chamber is configured to be in communication with a gas region and an electrolyte region of the inner cavity of the each battery cell of the plurality of battery cells.

94. The high-capacity battery as claimed in claim 93, wherein in a height direction, a size of the gas-liquid sharing chamber is the same as a size of the cylinder side plate.

95. The high-capacity battery as claimed in any one of claims 87 to 90, wherein two sharing chambers are provided, are symmetrically located on two different cylinder side plates, respectively, and both serve as gas-liquid sharing chambers; and the gas-liquid sharing chamber is configured to be in communication with a gas region and an electrolyte region of the inner cavity of the each battery cell of the plurality of battery cells.

96. The high-capacity battery as claimed in claim 87, wherein a second explosion venting portion and a liquid injection port are respectively provided at two ends of the sharing chamber.

97. The high-capacity battery as claimed in claim 1, wherein the inner cavity of the each battery cell of the plurality of battery cells comprises an electrolyte region and a gas region; the housing is provided with a third through hole capable of allowing an electrode terminal of the each battery cell of the plurality of battery cells to extend out; the electrode terminal of the each battery cell of the plurality of battery cells extends out of the corresponding third through hole, and a housing region around the third through hole is fixedly sealed with a housing body of the battery cell; a length direction of the housing is defined as an x direction, a width direction of the housing is defined as a y direction, and a height direction of the housing is defined as a z direction; the sharing chamber is an electrolyte sharing chamber, and the housing is provided with at least one fourth chamber interpenetrating with the electrolyte sharing chamber; the electrolyte sharing chamber extends in the x direction, and the fourth chamber extends in the z direction; and both the electrolyte sharing chamber and the fourth chamber contain electrolyte, and the electrolyte is in communication with the electrolyte region of the inner cavity of the each battery cell of the plurality of battery cells.

98. The high-capacity battery as claimed in claim 97, wherein the housing comprises a cylinder with two opposite open ends, and a fifth cover plate and a fourth cover plate, which are configured to seal the two open ends of the cylinder; the fifth cover plate and the fourth cover plate are parallel to an xy plane; each battery cell of the plurality of battery cells is arranged in the cylinder in the x direction; the electrolyte sharing chamber is located at the fourth cover plate; and a fourth chamber is located in the cylinder.

99. The high-capacity battery as claimed in claim 98, wherein the fourth chambers are located on two sides of the cylinder; a third partition plate parallel to a first side plate is disposed in the cylinder close to the first side plate of the cylinder; a cavity formed among the first side plate, two second side plates, and the third partition plate serves as one fourth chamber; and the first side plate is parallel to a yz plane, and the second side plates are parallel to an xz plane.

100. The high-capacity battery as claimed in claim 98, wherein the fourth chamber is located at a middle portion of the cylinder; two third partition plates parallel to a yz plane are disposed in the cylinder close to the middle portion of the cylinder; and a cavity formed between the two third partition plates and two second side plates serves as one fourth chamber.

101. The high-capacity battery as claimed in claim 97, wherein the housing comprises a cylinder with two opposite open ends, and a fifth cover plate and a fourth cover plate, which are configured to seal the two open ends of the cylinder; the fifth cover plate and the fourth cover plate are parallel to an xy plane; each battery cell of the plurality of battery cells is arranged in the cylinder in the x direction; an electrolyte sharing chamber is located at the fourth cover plate; a through groove is provided in the z direction in at least one of a first side plate of the cylinder and a second side plate of the cylinder; and a cavity between the through groove and the each battery cell serves as one fourth chamber.

102. The high-capacity battery as claimed in any one of claims 99 to 101, wherein a plurality of fourth partition plates parallel to the yz plane are also disposed in the cylinder to divide an inner cavity of the cylinder into a plurality of battery cell mounting cavities; and at least one battery cell of the plurality of battery cells is fixed in each of the plurality of battery cell mounting cavities.

103. The high-capacity battery as claimed in claim 102, wherein a through groove is provided in the fourth partition plate in the z direction, and a cavity between the through groove and the each battery cell serves as one fourth chamber.

104. The high-capacity battery as claimed in any one of claims 97 to 103, wherein the sharing chamber further comprises a gas chamber; the gas chamber penetrates through the fourth chamber; and the gas chamber covers a gas port at the top of the each battery cell of the plurality of battery cells.

105. The high-capacity battery as claimed in claim 1, wherein the high-capacity battery further comprises an elastic support member configured to support the battery cell, wherein a housing top plate is provided with a third through hole corresponding to an electrode terminal of the each battery cell of the plurality of battery cells; the electrode terminal of the each battery cell of the plurality of battery cells extends out of the third through hole, a region of the housing top plate corresponding to the third through hole is in contact with and fixedly sealed with an upper cover plate of the battery cell; the elastic support member has the capability for elastic deformation in a height direction of the battery cell, and is disposed between a housing bottom plate and each battery cell of the plurality of battery cells.

106. The high-capacity battery as claimed in claim 105, wherein a limiting mechanism is disposed on the housing bottom plate, and is configured to limit the position of the elastic support member on the housing bottom plate.

107. The high-capacity battery as claimed in claim 106, wherein the limiting mechanism is a limiting column that is disposed on the housing bottom plate and extends in its length direction; a height of the limiting column is less than a maximum height of the elastic support member; and a vertical distance between the limiting column and a lower cover plate of the each battery cell of the plurality of battery cells is greater than a maximum height difference of grouped battery cells of the plurality of battery cells.

108. The high-capacity battery as claimed in claim 107, wherein two limiting columns are provided and respectively disposed close to two long edges of the housing bottom plate; and a space formed among the limiting columns, the housing bottom plate, and a side plate of the housing serves as an elastic support member mounting space.

109. The high-capacity battery as claimed in claim 105, wherein the sharing chamber is an electrolyte sharing chamber; the electrolyte sharing chamber is a liquid channel located on the housing bottom plate; and the electrolyte sharing chamber is in communication with an electrolyte region of the inner cavity of the each battery cell of the plurality of battery cells.

110. The high-capacity battery as claimed in any one of claims 105 to 109, wherein the sharing chamber is a gas sharing chamber; the gas sharing chamber is a gas channel located on the housing top plate; and the gas channel is in communication with a gas region of the inner cavity of the each battery cell of the plurality of battery cells.

111. The high-capacity battery as claimed in claim 110, wherein the elastic support member adopts a semi-tubular member with a cross section similar to a Ω shape, and comprises a semi-tubular member with an inverted U-shaped cross section and support plates respectively connected to two side walls of the semi-tubular member with the inverted U-shaped cross section via smooth arc transitions; and a size of a bottom open end of the semi-tubular member with the inverted U-shaped cross section is greater than a size of a top portion.

112. The high-capacity battery as claimed in claim 110, wherein a first side plate of the housing is further provided with a liquid storage chamber interpenetrating with the electrolyte sharing chamber; the liquid storage chamber contains electrolyte; and the electrolyte is in communication with the electrolyte region of the inner cavity of the each battery cell of the plurality of battery cells.

113. The high-capacity battery as claimed in claim 105, wherein a protrusion is provided on the surface of the housing top plate close to the battery cell, and the protrusion is provided with a stepped through hole penetrating through the housing top plate to serve as the third through hole; and a small hole of the stepped through hole is close to the battery cell, and a hole depth of the small hole is less than that of a large hole.

114. The high-capacity battery as claimed in claim 1, wherein the plurality of battery cells are connected in parallel in sequence; the inner cavity of the each battery cell of the plurality of battery cells comprises an electrolyte region and a gas region; the housing comprises a cylinder, a fourth cover plate, and a fifth cover plate; the cylinder is open at a top and a bottom; a plurality of heat sink fins are disposed on a side wall of the cylinder; the fourth cover plate covers the bottom open end of the cylinder and is hermetically connected to the bottom open end of the cylinder; the sharing chamber is an electrolyte sharing chamber and disposed on the fourth cover plate, and the electrolyte sharing chamber is in communication with the electrolyte region of the inner cavity of the each battery cell of the plurality of battery cells; the fifth cover plate is provided with a third through hole capable of allowing an electrode terminal of the each battery cell of the plurality of battery cells to extend out; the fifth cover plate covers the top open end of the cylinder and is hermetically connected to the top open end of the cylinder; and the electrode terminal of the each battery cell of the plurality of battery cells extends out of the third through hole, and a housing region corresponding to the third through hole is fixedly sealed with a housing body of the battery cell.

115. The high-capacity battery as claimed in claim 114, wherein the high-capacity battery further comprises a plurality of partition plates disposed in an inner cavity of the cylinder to divide the inner cavity of the cylinder into a plurality of battery cell mounting cavities, wherein each of the plurality of battery cell mounting cavities is fixed with one battery cell; a length direction of the cylinder is defined as an x direction, a width direction of the cylinder is defined as a y direction, and a height direction of the cylinder is defined as a z direction; the side wall of the cylinder is provided with a plurality of hollow bosses, each hollow boss extends in the z direction, and the plurality of hollow bosses are arranged in the x direction; and the hollow bosses correspond to the partition plates on a one-to-one basis, and each hollow boss and the corresponding partition plate are located in a same plane.

116. The high-capacity battery as claimed in claim 115, wherein the plurality of heat sink fins extend in the z direction and are arranged in the x direction.

117. The high-capacity battery as claimed in claim 116, wherein the cylinder, the heat sink fins, and the hollow bosses are formed as an integrally-extruded component.

118. The high-capacity battery as claimed in claim 117, wherein the high-capacity battery further comprises a first liquid cooling tube and a second liquid cooling tube, which are respectively disposed at the top and bottom of the housing, wherein the first liquid cooling tube and the second liquid cooling tube both extend in the x direction; and the first liquid cooling tube is in communication with a top open end of each hollow boss, and the second liquid cooling tube is in communication with a bottom open end of each hollow boss.

119. The high-capacity battery as claimed in claim 118, wherein the first liquid cooling tube and the second liquid cooling tube both comprise a plurality of sub-liquid cooling tubes and a plurality of three-way connectors; the adjacent sub-liquid cooling tubes are connected via one three-way connector; and each branch tube of the three-way connector is connected to the open end of one hollow boss.

120. The high-capacity battery as claimed in claim 114, wherein the high-capacity battery further comprises at least two support members, wherein the support members comprise fixing plates and support plates, which are integrally arranged; the fixing plates of the two support members are respectively fixed on two side walls of the cylinder parallel to a yz plane, and are insulated from the cylinder; and the support plates of the two support members are configured to be connected to an external support frame.

121. The high-capacity battery as claimed in any one of claims 114 to 120, wherein the fifth cover plate is provided with a gas chamber, and the gas chamber covers a gas port at the top of the each battery cell of the plurality of battery cells in the high-capacity battery.

122. The high-capacity battery as claimed in claim 121, wherein a first through hole penetrating through the inner cavity of the each battery cell is provided at a bottom of a housing body of the each battery cell of the plurality of battery cells; the electrolyte sharing chamber is a hollow tube extending in a length direction of the fourth cover plate, and second through holes penetrating through the first through hole are provided in a tube wall of the hollow tube and the fourth cover plate; and the gas chamber is a hollow tube extending in a length direction of the fifth cover plate.

123. The high-capacity battery as claimed in claim 122, wherein the electrolyte sharing chamber and the gas chamber are identical in size.

124. The high-capacity battery as claimed in claim 1, wherein the housing is provided with a third through hole corresponding to an electrode terminal of the each battery cell of the plurality of battery cells; the electrode terminal of the each battery cell of the plurality of battery cells extends out of the third through hole, and a housing region corresponding to the third through hole is fixedly sealed with a housing body of the battery cell; and the housing is provided with a heat exchange channel, and the heat exchange channel serves as a heat transfer medium circulation channel.

125. The high-capacity battery as claimed in claim 124, wherein the housing comprises a cylinder with two opposite open ends, and a first end plate and a third end plate, which are configured to seal open ends of the cylinder; and an outer wall of the cylinder is provided with a hollow member, and an inner cavity of the hollow member serves as the heat exchange channel.

126. The high-capacity battery as claimed in claim 125, wherein the cylinder and the hollow member are integrally formed adopting an aluminum extrusion process.

127. The high-capacity battery as claimed in claim 126, wherein a plurality of hollow members are provided; each hollow member extends in a length direction of the cylinder; and the plurality of hollow members are arranged in a height direction of the cylinder.

128. The high-capacity battery as claimed in claim 124, wherein the sharing chamber is an electrolyte sharing chamber, and is a liquid channel located on a housing bottom plate; and the liquid channel is in communication with an electrolyte region of the inner cavity of the each battery cell of the plurality of battery cells.

129. The high-capacity battery as claimed in claim 124 or 128, wherein the sharing chamber is a gas sharing chamber, and is a gas channel located on a housing top plate; and the gas channel is in communication with a gas region of the inner cavity of the each battery cell of the plurality of battery cells.

130. The high-capacity battery as claimed in claim 1, wherein the high-capacity battery further comprises a bottom support member disposed between a housing bottom plate and each battery cells, wherein a housing top plate is provided with a third through hole corresponding to an electrode terminal of the each battery cell of the plurality of battery cells; each electrode terminal extends out of the third through hole, and the region of the housing top plate corresponding to the third through hole is fixedly sealed with a housing body of the battery cell; the bottom support member comprises a flat plate, and a third support rib and a fourth support rib, which are respectively disposed on two opposite surfaces of the flat plate; the sharing chamber is an electrolyte sharing chamber; each battery cell of the plurality of battery cells is supported on the third support rib; a liquid channel extending in a length direction of the flat plate is formed between a lower cover plate of the each battery cell of the plurality of battery cells and the flat plate to serve as the electrolyte sharing chamber; an inner cavity of the electrolyte sharing chamber is in communication with electrolyte regions of the inner cavities of the plurality of battery cells; and the fourth support rib is in contact with the housing bottom plate of the high-capacity battery.

131. The high-capacity battery as claimed in claim 130, wherein three third support ribs are provided and evenly distributed in a width direction of the flat plate; and a liquid channel is formed between every two third support ribs.

132. The high-capacity battery as claimed in claim 131, wherein at least one notch is provided in the third support rib located in the middle.

133. The high-capacity battery as claimed in claim 131, wherein the lower cover plate of the each battery cell is provided with at least two first through holes; the two first through holes are respectively located above two liquid channels; and sealing assemblies sealing the first through holes are disposed at the two first through holes; and
by means of external force or external electrolyte, the sealing assemblies are able to be detached from the lower cover plate of the each battery cell or openings are formed in the sealing assemblies such that the inner cavity of the each battery cell is in communication with the electrolyte sharing chamber.

134. The high-capacity battery as claimed in claim 130, wherein the housing top plate is further provided with a gas sharing chamber, and an inner cavity of the gas sharing chamber is in communication with gas regions of the inner cavities of the plurality of battery cells.

135. The high-capacity battery as claimed in claim 1, wherein the housing comprises an upper cover plate, a lower cover plate, and a cylinder; electrolyte in the inner cavities of the plurality of battery cells and electrolyte in the housing form a shared electrolyte system; the shared electrolyte system is able to cause each battery cell of the plurality of battery cells to be in a unified electrolyte environment; the cover plate comprises a cover plate body, and a first pressure-bearing protrusion integrally formed on the cover plate body and extending in a length direction of the cover plate body; and a protrusion direction of the first pressure-bearing protrusion is a first direction.

136. The high-capacity battery as claimed in claim 135, wherein the first pressure-bearing protrusion is of a hollow structure that is integrally formed on the cover plate body by means of extrusion or stamping.

137. The high-capacity battery as claimed in claim 136, wherein the cover plate body further comprises a plurality of second pressure-bearing protrusions that are of a hollow structure and have a protrusion direction identical to that of the first pressure-bearing protrusion, and the plurality of second pressure-bearing protrusions are uniformly distributed on two sides of the first pressure-bearing protrusion; and the plurality of second pressure-bearing protrusions are connected to the first pressure-bearing protrusion and remain in communication.

138. The high-capacity battery as claimed in claim 137, wherein portions of the cover plate body located on the two sides of the first pressure-bearing protrusion are provided with a plurality of third through holes allowing a positive electrode terminal and negative electrode terminal of the each battery cell to extend out; and one second pressure-bearing protrusion is provided in a middle region between every two adjacent third through holes.

139. The high-capacity battery as claimed in claim 138, wherein a peripheral region of each third through hole is stamped to form an annular recess, and a recess direction of the annular recess is a second direction.

140. The high-capacity battery as claimed in claim 139, wherein a thickness of the cover plate body is 2.5 mm.

141. The high-capacity battery as claimed in claim 140, wherein a vent hole is provided at a top of the each battery cell of the plurality of battery cells, and the first pressure-bearing protrusion on the cover plate is in communication with the vent hole of the each battery cell of the plurality of battery cells.

142. The high-capacity battery as claimed in claim 141, wherein an explosion venting film is disposed at the top of the each battery cell of the plurality of battery cells, and the first pressure-bearing protrusion on the cover plate covers the explosion venting film of the each battery cell of the plurality of battery cells.

143. The high-capacity battery as claimed in claim 1, wherein one of the sharing chambers serves as an explosion venting channel; a second explosion venting portion corresponding to the explosion venting channel is fixed on the housing; the explosion venting channel has at least two second explosion venting portions; and a thermal runaway flue gas is discharged from the second explosion venting portions via the explosion venting channel in a case where thermal runaway occurs in any battery cell of the plurality of battery cells.

144. The high-capacity battery as claimed in claim 143, wherein two second explosion venting portions are provided and are respectively located at two ends of the explosion venting channel.

145. The high-capacity battery as claimed in claim 1, wherein at least two sharing chambers serve as explosion venting channels; second explosion venting portions corresponding to the explosion venting channels are fixed on the housing; each explosion venting channel has at least one second explosion venting portion; and a thermal runaway flue gas is discharged from the second explosion venting portions via at least two explosion venting channels in a case where thermal runaway occurs in any battery cell of the plurality of battery cells.

146. The high-capacity battery as claimed in claim 145, wherein two explosion venting channels are provided; and each explosion venting channel has one second explosion venting portion, which is located at one end of the explosion venting channel.

147. The high-capacity battery as claimed in any one of claims 143 to 146, wherein an avoidance hole is provided in a housing top plate corresponding to an electrode terminal of the each battery cell of the plurality of battery cells; the electrode terminal of the each battery cell of the plurality of battery cells extends out of the avoidance hole, and the region of the housing top plate corresponding to the avoidance hole is fixedly sealed with a housing body of the battery cell; a heat transfer tube clamping portion is provided at the portion of the electrode terminal of the each battery cell of the plurality of battery cells extending out of the avoidance hole; and a heat transfer tube is fixed on the heat transfer tube clamping portion of the electrode terminal of the each battery cell of the plurality of battery cells.

148. The high-capacity battery as claimed in claim 147, wherein an insulating sealant layer is laid on the housing top plate; an electrical connection portion of the electrode terminals of the each battery cell of the plurality of battery cells extends out of the insulating sealant layer; and a liquid inlet end and liquid outlet end of the heat transfer tube extend out of the insulating sealant layer.

149. The high-capacity battery as claimed in claim 1, wherein the housing comprises a cylinder with at least the top end being an open end, a cover plate fixed to the open end of the cylinder, and n partition plates; the n partition plates are arranged in a same direction, are detachably fixed in the cylinder, and divide the cylinder into n+1 battery cell accommodating cavities, wherein n is greater than or equal to 1; the each battery cell is located in the each battery cell accommodating cavity; the cover plate fixed to the top open end of the cylinder is provided with a third through hole capable of allowing an electrode terminal of the each battery cell of the plurality of battery cells to extend out; and the electrode terminal of the each battery cell of the plurality of battery cells extends out of the third through hole, and a cover plate region corresponding to the third through hole is fixedly sealed with a housing body of the battery cell.

150. The high-capacity battery as claimed in claim 149, wherein each partition plate is detachably fixed in the cylinder by means of a snap-fit structure.

151. The high-capacity battery as claimed in claim 150, wherein the snap-fit structure is a semi-transparent dovetail joint structure.

152. The high-capacity battery as claimed in claim 151, wherein the semi-transparent dovetail joint structure comprises a semi-transparent dovetail groove and a tenon, the semi-transparent dovetail groove is provided in a first side plate of the cylinder; the tenon is disposed on the partition plate; the tenon matches the semi-transparent dovetail groove in shape, and is snap-fitted in the semi-transparent dovetail groove.

153. The high-capacity battery as claimed in claim 152, wherein the tenons are disposed on two sides of a top end of the partition plate; a first opening of the semi-transparent dovetail groove is located on an inner surface of the first side plate of the cylinder, and a second opening is located on an end face of the top open end of the cylinder.

154. The high-capacity battery as claimed in claim 153, wherein in a width direction, a gap is provided between the partition plate and the first side plate of the cylinder.

155. The high-capacity battery as claimed in claim 151, wherein a cylinder bottom plate is fixed to a bottom end of the cylinder; the snap-fit structure further comprises a clamping groove provided in the cylinder bottom plate; and a bottom end of the partition plate is clamped into the clamping groove.

156. The high-capacity battery as claimed in claim 155, wherein the cylinder bottom plate is provided with an electrolyte sharing chamber; and the electrolyte sharing chamber is configured to be in communication with an electrolyte region of the inner cavity of the each battery cell of the plurality of battery cells in the high-capacity battery.

157. The high-capacity battery as claimed in claim 156, wherein the top open end of the cylinder is provided with a three-step structure; the second opening of the semi-transparent dovetail groove is located on a first step surface, and the first step surface serves as a positioning surface; a second step surface serves as an adhesive injection surface, and a side wall between the second step surface and a third step surface serves as an adhesive blocking surface; an edge around the cover plate fixed to the top open end of the cylinder is welded with the positioning surface; an adhesive sealing layer is disposed in a cavity between the cover plate and the adhesive blocking surface; and the electrode terminal of the each battery cell of the plurality of battery cells extends out of the adhesive sealing layer.

158. A cover plate for a high-capacity battery, wherein the cover plate comprises a flat plate and a sharing chamber disposed on the flat plate; the sharing chamber is a gas chamber, and the gas chamber is configured to cover a gas port at a top of the each battery cell of the plurality of battery cells in a high-capacity battery; the flat plate is provided with n third through holes; the third through holes correspond to electrode terminals of the plurality of battery cells in the high-capacity battery on a one-to-one basis; and orthographic projections of the third through holes at a top of the high-capacity battery cover the corresponding electrode terminals, wherein n is an integer greater than 1.

159. The cover plate as claimed in claim 158, wherein the gas chamber is a hollow tube disposed on the flat plate; at least one fourth through hole penetrating through an inner cavity of the hollow tube is provided in the flat plate and the hollow tube; an orthographic projection of the fourth through hole on the top of the high-capacity battery at least covers a partial region of the gas port at the top of the each battery cell of the plurality of battery cells in the high-capacity battery.

160. The cover plate as claimed in claim 159, wherein m fourth through holes are provided; the m fourth through holes correspond to the plurality of battery cells on a one-to-one basis; and an orthographic projection of each fourth through hole at the top of the corresponding battery cell at least covers a partial region of the gas port at the top of the battery cell, wherein m is an integer greater than 1.

161. The cover plate as claimed in claim 159, wherein one fourth through hole is provided; and the orthographic projection of the fourth through hole at the top of the high-capacity battery at least covers partial regions of the gas ports at the top of the plurality of battery cells.

162. The cover plate as claimed in claim 159, wherein the flat plate and the hollow tube are formed as an integral piece.

163. The cover plate as claimed in claim 158, wherein the gas chamber is a second channel that is formed on the flat plate; and an orthographic projection of an inner cavity of the second channel at the top of the high-capacity battery at least covers a partial region of the gas port at the top of the each battery cell of the plurality of battery cells.

164. The cover plate as claimed in claim 163, wherein a length direction of the flat plate is defined as an x direction, a width direction of the flat plate is defined as a y direction, and a thickness direction of the flat plate is defined as a z direction; and the two ends of the second channel parallel to a yz plane are closed ends.

165. The cover plate as claimed in claim 163, wherein a length direction of the flat plate is defined as an x direction, a width direction of the flat plate is defined as a y direction, and a thickness direction of the flat plate is defined as a z direction; and at least one of the two ends of the second channel parallel to a yz plane is an open end.

166. The cover plate as claimed in any one of claims 158 to 159, wherein a weak portion is provided in a region around the third through hole.

167. The cover plate as claimed in claim 166, wherein the weak portion is an annular groove that is provided in the region around the third through hole in a circumferential direction of the third through hole.

168. A cover plate for a high-capacity battery, wherein the cover plate comprises a flat plate and a sharing chamber disposed on the flat plate; the sharing chamber is an electrolyte sharing chamber; and the electrolyte sharing chamber is configured to communicate an electrolyte region of an inner cavity of the each battery cell of the plurality of battery cells in a high-capacity battery.

169. The cover plate as claimed in claim 168, wherein an orthographic projection area of the flat plate at a bottom of the high-capacity battery is greater than or equal to an area of the bottom of the high-capacity battery.

170. The cover plate as claimed in claim 169, wherein the electrolyte sharing chamber is a hollow tube disposed on the flat plate; at least one second through hole penetrating through an inner cavity of the hollow tube is provided in the flat plate and the hollow tube; an orthographic projection of the second through hole at the bottom of the high-capacity battery at least covers partial regions of first through holes in lower cover plates of the plurality of battery cells in the high-capacity battery.

171. The cover plate as claimed in claim 170, wherein m second through holes are provided; the m second through holes correspond to the plurality of battery cells on a one-to-one basis; and the orthographic projection of each second through hole on the lower cover plate of the corresponding battery cell at least covers the partial region of the first through hole in the lower cover plate of the battery cell, wherein m is an integer greater than 1.

172. The cover plate as claimed in claim 170, wherein one second through hole is provided; and the orthographic projection of the second through hole at the bottom of the high-capacity battery at least covers the partial regions of the first through holes in the lower cover plates of the plurality of battery cells.

173. The cover plate as claimed in claim 170, wherein the flat plate and the hollow tube are formed as an integral piece.

174. The cover plate as claimed in claim 169, wherein the electrolyte sharing chamber is a first channel that is formed on the flat plate; and an orthographic projection of an inner cavity of the first channel at the bottom of the high-capacity battery at least covers the partial region of the first through hole in the lower cover plate of the each battery cell of the plurality of battery cells.

175. The cover plate as claimed in claim 174, wherein a length direction of the flat plate is defined as an x direction, a width direction of the flat plate is defined as a y direction, and a thickness direction of the flat plate is defined as a z direction; and the flat plate protrudes toward the z direction to form the first channel extending in the x direction.

176. The cover plate as claimed in claim 175, wherein a plurality of heat dissipation fins are arranged in the regions of a lower surface of the flat plate that are located on two sides of the first channel.

177. The cover plate as claimed in claim 174, wherein a length direction of the flat plate is defined as an x direction, a width direction of the flat plate is defined as a y direction, and a thickness direction of the flat plate is defined as a z direction; at least two first support ribs extending in the x direction are arranged on the flat plate; and the first channel is formed by the two first support ribs and a flat plate region located between the two first support ribs.

178. The cover plate as claimed in any one of claims 168 to 177, wherein the high-capacity battery further comprises side plates respectively connected to two x direction long edges of the flat plate and extending in the z direction.

179. A housing for a high-capacity battery, wherein the housing is configured to accommodate a plurality of battery cells, and comprises a U-shaped housing body, a first end plate, a third end plate, and a second cover plate; a sharing chamber is disposed at a bottom of the U-shaped housing body; the sharing chamber is an electrolyte sharing chamber; the electrolyte sharing chamber is configured to be in communication with an electrolyte region of an inner cavity of the each battery cell of the plurality of battery cells; the first end plate and the third end plate respectively cover two opposite open ends of the U-shaped housing body; the second cover plate is provided with a third through hole capable of allowing an electrode terminal of the each battery cell of the plurality of battery cells to extend out; and the second cover plate covers a top open end of the U-shaped housing body and is hermetically connected to the top open end of the U-shaped housing body.

180. The housing as claimed in claim 179, wherein a gas chamber is disposed on the second cover plate.

181. The housing as claimed in claim 179 or 180, wherein the U-shaped housing body and the second cover plate are formed as an integral piece.

182. The housing as claimed in claim 181, wherein the U-shaped housing body and the second cover plate are integrally formed adopting an aluminum extrusion process.

183. A housing for a high-capacity battery, wherein the housing is configured to accommodate a plurality of battery cells, and comprises a cylinder, a fourth cover plate, and a fifth cover plate;
the cylinder is open at a top and a bottom; a sharing chamber is disposed on the fourth cover plate and is an electrolyte sharing chamber; the fourth cover plate covers a bottom open end of the cylinder and is hermetically connected to the bottom open end of the cylinder; the electrolyte sharing chamber is configured to be in communication with an electrolyte region of an inner cavity of the each battery cell of the plurality of battery cells; the fifth cover plate is provided with a third through hole capable of allowing an electrode terminal of the each battery cell of the plurality of battery cells to extend out; the fifth cover plate covers a top open end of the cylinder and is hermetically connected to the top open end of the cylinder.

184. A housing for a high-capacity battery, wherein the housing is configured to accommodate a plurality of battery cells; a first through hole penetrating through an inner cavity of the each battery cell is provided at a bottom of a housing body of the each battery cell of the plurality of battery cells; the housing comprises a cylinder, a fifth cover plate, and a hollow box body; the cylinder is open at a top and a bottom; the hollow box body covers the bottom open end of the cylinder and is hermetically connected to the bottom open end of the cylinder; a top of the hollow box body is provided with a second through hole, and an inner cavity of the hollow box body is in communication with an electrolyte region of the inner cavity of the each battery cell of the plurality of battery cells via the second through hole and the first through hole; the fifth cover plate is provided with a third through hole capable of allowing an electrode terminal of the each battery cell of the plurality of battery cells to extend out; and the fifth cover plate covers the top open end of the cylinder and is hermetically connected to the top open end of the cylinder.

185. The housing as claimed in claim 183 or 184, wherein a gas chamber is disposed on the fifth cover plate.

186. A housing for a high-capacity battery, wherein the housing is configured to accommodate a plurality of battery cells and comprises a cylinder, a fourth cover plate, and a fifth cover plate; the cylinder is open at a top and a bottom; the fourth cover plate covers the bottom open end of the cylinder and is hermetically connected to the bottom open end of the cylinder; the fifth cover plate is provided with a gas sharing chamber configured to be in communication with a gas region of an inner cavity of the each battery cell of the plurality of battery cells; the fifth cover plate is provided with a third through hole capable of allowing an electrode terminal of the each battery cell of the plurality of battery cells to extend out; and the fifth cover plate covers the top open end of the cylinder and is hermetically connected to the top open end of the cylinder.

187. The housing as claimed in claim 186, wherein the fifth cover plate is provided with a groove extending in a length direction of the fifth cover plate as the gas sharing chamber; or the gas sharing chamber is a hollow tube extending in the length direction of the fifth cover plate, and is integrally formed with the fifth cover plate; and a tube wall of the hollow tube and the fifth cover plate are provided with fourth through holes.

188. A housing for a high-capacity battery, wherein the housing is configured to accommodate a plurality of battery cells, and comprises a U-shaped housing body, a first end plate, a second cover plate, and a third end plate; the first end plate and the third end plate respectively cover two opposite open ends of the U-shaped housing body; the second cover plate is provided with a gas sharing chamber configured to penetrate with a gas region of an inner cavity of the each battery cell of the plurality of battery cells; the second cover plate is provided with a third through hole capable of allowing an electrode terminal of the each battery cell of the plurality of battery cells to extend out; and the second cover plate covers a top open end of the U-shaped housing body and is hermetically connected to the top open end of the U-shaped housing body.

189. The housing as claimed in claim 188, wherein the second cover plate is provided with a groove extending in a length direction of the second cover plate as the gas sharing chamber; or the gas sharing chamber is a hollow tube extending in the length direction of the second cover plate, and is integrally formed with the second cover plate; and a tube wall of the hollow tube and the second cover plate are provided with fourth through holes.

190. The housing as claimed in claim 188 or 189, wherein the U-shaped housing body and the second cover plate are integrally formed adopting an aluminum extrusion process.

191. A cylinder assembly for a high-capacity battery, wherein the cylinder assembly comprises a main cylinder body and a fixing portion disposed on the main cylinder body; the main cylinder body comprises a cylinder top plate, a cylinder bottom plate, and two cylinder side plates; the cylinder top plate is provided with a third through hole corresponding to an electrode terminal of the each battery cell of the plurality of battery cells on a one-to-one basis; the cylinder bottom plate is provided with a first channel as an electrolyte sharing chamber; and the fixing portion is located on an outer wall of at least one of the cylinder bottom plate and the two cylinder side plates, and is configured to fix a heat exchange tube.

192. The cylinder assembly for a high-capacity battery as claimed in claim 191, wherein the fixing portion is a boss that is provided with a first snap groove.

193. The cylinder assembly for a high-capacity battery as claimed in claim 192, wherein the boss extends in a length direction of the main cylinder body; and the first snap groove is provided in a length direction of the boss and penetrates through the boss in the length direction of the boss.

194. The cylinder assembly for a high-capacity battery as claimed in claim 193, wherein the main cylinder body and the boss provided with the first snap groove are formed as an integral piece.

195. The cylinder assembly for a high-capacity battery as claimed in claim 191, wherein a protruding portion is provided on the cylinder top plate in a direction away from the cylinder bottom plate, configured to form the gas chamber.

196. A cylinder for a high-capacity battery, wherein the cylinder is configured to accommodate a plurality of battery cells, and formed by enclosing a cylinder top plate, a cylinder bottom plate, and two cylinder side plates; the cylinder top plate is provided with third through holes corresponding to a first electrode terminal and a second electrode terminal of the each battery cell of the plurality of battery cells and allowing the first electrode terminal and the second electrode terminal of the each battery cell to extend out; at least one sharing chamber is disposed on the cylinder side plate; and the sharing chamber is configured to be in communication with an inner cavity of the each battery cell of the plurality of battery cells.

197. The cylinder for a high-capacity battery as claimed in claim 196, wherein the sharing chamber is a first channel that is disposed on the cylinder side plate in a length direction of the cylinder, and an inner cavity of the first channel penetrates through the inner cavity of the each battery cell of the plurality of battery cells.

198. The cylinder for a high-capacity battery as claimed in claim 197, wherein one cylinder side plate protrudes in a direction away from the other cylinder side plate to form the first channel.

199. The cylinder for a high-capacity battery as claimed in claim 198, being integrally formed adopting an aluminum extrusion process.

200. The cylinder for the high-capacity battery as claimed in any one of claims 196 to 199, wherein one sharing chamber is provided and serves as an electrolyte sharing chamber; and the electrolyte sharing chamber is configured to communicate with an electrolyte region of an inner cavity of the each battery cell of the plurality of battery cells.

201. The cylinder for the high-capacity battery as claimed in any one of claims 196 to 199, wherein one sharing chamber is provided and serves as a gas sharing chamber; and the gas sharing chamber is configured to be in communication with a gas region of the inner cavity of the each battery cell of the plurality of battery cells.

202. The cylinder for the high-capacity battery as claimed in any one of claims 196 to 199, wherein one sharing chamber is provided and serves as a gas-liquid sharing chamber; and the gas-liquid sharing chamber is configured to be in communication with a gas region and an electrolyte region of the inner cavity of the each battery cell of the plurality of battery cells.

203. The cylinder for the high-capacity battery as claimed in claim 196, wherein in a height direction, a size of the gas-liquid sharing chamber is the same as a size of the cylinder side plate.

204. The cylinder for the high-capacity battery as claimed in any one of claims 196 to 199, wherein two sharing chambers are provided, are symmetrically located on two different cylinder side plates, respectively, and both serve as gas-liquid sharing chambers; and the gas-liquid sharing chamber is configured to be in communication with a gas region and an electrolyte region of the inner cavity of the each battery cell of the plurality of battery cells.

205. A cylinder for a high-capacity battery, wherein the cylinder comprises at least one fourth chamber disposed in the cylinder as a sharing chamber; and the fourth chamber is configured to be in communication with an electrolyte region of an inner cavity of the each battery cell of the plurality of battery cells in a high-capacity battery.

206. The cylinder for a high-capacity battery as claimed in claim 205, wherein the fourth chambers are located on two sides of the cylinder; a third partition plate parallel to a first side plate is disposed in the cylinder close to the first side plate of the cylinder; the first side plate is parallel to a yz plane; and a cavity formed among the first side plate, two second side plates, and the third partition plate serves as one fourth chamber.

207. The cylinder for a high-capacity battery as claimed in claim 205, wherein the fourth chamber is located at a middle portion of the cylinder; two third partition plates parallel to a yz plane are disposed in the cylinder close to the middle portion of the cylinder; and a cavity formed between the two third partition plates and two second side plates serves as one fourth chamber.

208. A cylinder for a high-capacity battery, wherein a through groove is provided in a z direction in at least one of a first side plate of the cylinder and a second side plate of the cylinder; and the through groove is configured to form a fourth chamber as a sharing chamber by mating with a side wall of a battery cell.

209. The cylinder for a high-capacity battery as claimed in any one of claims 206 to 208, wherein a plurality of fourth partition plates parallel to the yz plane are also disposed in the cylinder to divide an inner cavity of the cylinder into a plurality of battery cell mounting cavities.

210. The cylinder for a high-capacity battery as claimed in claim 209, wherein a through groove is provided in the z direction in the fourth partition plate; and the through groove is configured to form a fourth chamber as a sharing chamber by mating with a side wall of a battery cell.

211. An elastic support member, configured to be disposed between housing bottom plate of a high-capacity battery and each battery cell of the plurality of battery cells, adopting a semi-tubular member with a cross section similar to a Ω shape, and comprising a semi-tubular member with an inverted U-shaped cross section and support plates respectively connected to two side walls of the semi-tubular member with the inverted U-shaped cross section via smooth arc transitions, wherein a size of a bottom open end of the semi-tubular member with the inverted U-shaped cross section is greater than a size of a top portion.

212. A cover plate for a high-capacity battery, wherein the cover plate is provided with a third through hole configured to allow an electrode terminal of the each battery cell of the plurality of battery cells to extend out; a protrusion is provided on the surface of the housing top plate close to the battery cell, and the protrusion is provided with a stepped through hole penetrating through the cover plate to serve as the third through hole; and a small hole of the stepped through hole is close to the battery cell, and a hole depth of the small hole is less than that of a large hole.

213. A cylinder assembly for a high-capacity battery, wherein the cylinder assembly comprises a cylinder and a hollow member disposed on an outer wall of the cylinder; an inner cavity of the cylinder serves as an accommodating cavity of the each battery cell of the plurality of battery cells in a high-capacity battery; the hollow member is disposed on the outer wall of the cylinder; and an inner cavity of the hollow member serves as a heat exchange channel, and the heat exchange channel serves as a heat transfer medium circulation channel.

214. The cylinder assembly for a high-capacity battery as claimed in claim 213, wherein the hollow member and the cylinder are formed as an integral piece.

215. The cylinder assembly for a high-capacity battery as claimed in claim 214, wherein the cylinder and the hollow member are integrally formed adopting an aluminum extrusion process.

216. The cylinder assembly for a high-capacity battery as claimed in claim 215, wherein a plurality of hollow members are provided; each hollow member extends in a length direction of the cylinder; and the plurality of hollow members are arranged in a height direction of the cylinder.

217. A bottom support member, comprising a flat plate, and a third support rib and a fourth support rib, which are respectively disposed on two opposite surfaces of the flat plate, wherein the third support rib is configured to be in contact with a lower cover plate of the each battery cell of the plurality of battery cells in a high-capacity battery, so as to support each battery cell of the plurality of battery cells such that a liquid channel extending in a length direction of the flat plate is formed between the lower cover plate of the each battery cell of the plurality of battery cells and the flat plate to serve as an electrolyte sharing chamber; the fourth support rib is configured to be in contact with housing bottom plate of the high-capacity battery to elevate each battery cell of the plurality of battery cells, so as to ensure that an electrode terminal extends out of a corresponding third through hole in a housing top plate.

218. The bottom support member as claimed in claim 217, wherein three third support ribs are provided and evenly distributed in a width direction of the flat plate.

219. The bottom support member as claimed in claim 218, wherein at least one notch is provided in the third support rib located in the middle.

220. The bottom support member as claimed in any one of claims 217 to 219, wherein the flat plate, the third support rib, and the fourth support rib are made of an aluminum material.

221. The bottom support member as claimed in claim 220, wherein the flat plate, the third support rib, and the fourth support rib are formed as an integral piece and are integrally formed adopting an aluminum extrusion process.

222. A cover plate for a high-capacity battery and comprising a cover plate body and a first pressure-bearing protrusion integrally formed on the cover plate body and extending in a length direction of the cover plate body, wherein a protrusion direction of the first pressure-bearing protrusion is a first direction.

223. The cover plate as claimed in claim 222, wherein the first pressure-bearing protrusion is of a hollow structure that is integrally formed on the cover plate body by means of extrusion or stamping.

224. The cover plate as claimed in claim 223, wherein the cover plate body further comprises a plurality of second pressure-bearing protrusions that are of a hollow structure and have a protrusion direction identical to that of the first pressure-bearing protrusion, and the plurality of second pressure-bearing protrusions are uniformly distributed on two sides of the first pressure-bearing protrusion; and the plurality of second pressure-bearing protrusions are connected to the first pressure-bearing protrusion and remain in communication.

225. The cover plate as claimed in claim 224, wherein portions of the cover plate body located on the two sides of the first pressure-bearing protrusion are provided with a plurality of third through holes allowing a positive electrode terminal and negative electrode terminal of the each battery cell to extend out; and one second pressure-bearing protrusion is provided in a middle region between every two adjacent third through holes.

226. The cover plate as claimed in claim 225, wherein a peripheral region of each third through hole is stamped to form an annular recess, and a recess direction of the annular recess is a second direction.

227. The cover plate as claimed in claim 226, wherein a thickness of the cover plate body is 2.5 mm.

228. A process for preparing a high-capacity battery, comprising the following steps:
shell processing: processing a cylinder with two open ends, and processing a third through hole corresponding to an electrode terminal of the each battery cell of the plurality of battery cells in a cylinder top plate;
processing a first end plate and a third end plate, which are configured to cover the open ends of the cylinder;
placing of battery cells into the cylinder: arranging a plurality of battery cells in the cylinder such that the electrode terminal of the each battery cell of the plurality of battery cells extends out of the corresponding third through hole in the cylinder top plate;
sealing: fixedly sealing a housing region corresponding to each third through hole with a housing body of the corresponding battery cell; and hermetically connecting the first end plate and the third end plate to two opposite open ends of the cylinder, respectively; and
unpacking: providing, using an external force or electrolyte itself, an opening in the housing body of the each battery cell such that an inner cavity of an electrolyte sharing chamber penetrates through an electrolyte region of an inner cavity of the each battery cell of the plurality of battery cells.

229. The process for preparing a high-capacity battery as claimed in claim 228, wherein
the unpacking step further comprises: providing, using the external force or electrolyte itself, the opening in the housing body of the each battery cell such that an inner cavity of a gas chamber penetrates through a gas region of the inner cavity of the each battery cell of the plurality of battery cells.

230. The process for preparing a high-capacity battery as claimed in claim 229, wherein in the step of placing the plurality of battery cells into the cylinder, the plurality of battery cells after capacity grading and sorting are arranged in the cylinder.

231. The process for preparing a high-capacity battery as claimed in claim 229, wherein in the step of housing processing, the cylinder with two open ends is integrally formed adopting an aluminum extrusion process; and a first channel and a second channel are integrally formed at the same time, and respectively serve as an electrolyte sharing chamber and a gas chamber.

232. The process for preparing a high-capacity battery as claimed in claim 231, wherein the step of placing the plurality of battery cells into the cylinder specifically comprises: fixing the plurality of battery cells as an integral body, and pushing same into an inner cavity of the cylinder from any open end of the cylinder; supporting, using a lifting tooling, the plurality of battery cells from a bottom to separate a bottom of the each battery cell of the plurality of battery cells from the bottom of the cylinder, wherein the electrode terminal of the each battery cell of the plurality of battery cells extends out of the corresponding third through hole; and inserting a long-strip equal-height second support rib in a length direction of the cylinder, and removing the lifting tooling.

233. The process for preparing a high-capacity battery as claimed in claim 231, wherein the step of placing the plurality of battery cells into the cylinder specifically comprises: sequentially pushing the plurality of battery cells into an inner cavity of the cylinder from any open end of the cylinder, and pushing each battery cell of the plurality of battery cells in place; and inserting a cushion block between a bottom of the each battery cell of the plurality of battery cells and a bottom of the cylinder to ensure that the electrode terminal of the each battery cell completely extends out of the corresponding third through hole.

234. The process for preparing a high-capacity battery as claimed in claim 231, wherein the step of placing the plurality of battery cells into the cylinder specifically comprises: flipping the cylinder to cause a top of the cylinder to face downward, fixing the plurality of battery cells as an integral body, and pushing same into an inner cavity of the cylinder from any open end of the cylinder; or sequentially pushing the plurality of battery cells into the inner cavity of the cylinder from any open end of the cylinder, wherein the electrode terminal of the each battery cell of the plurality of battery cells extends out of the corresponding third through hole under the action of gravity, and inserting a second support rib between a bottom of the each battery cell of the plurality of battery cells and a bottom of the cylinder; and flipping the cylinder to cause the top of the cylinder to face upward.

235. The process for preparing a high-capacity battery as claimed in claim 229, wherein in the step of housing processing, the cylinder with two open ends is integrally formed adopting an aluminum extrusion process; and a second channel is integrally formed at the same time and serves as a gas chamber.

236. The process for preparing a high-capacity battery as claimed in claim 235, wherein the step of placing the plurality of battery cells into the cylinder specifically comprises: fixing the plurality of battery cells as an integral body, and pushing same into an inner cavity of the cylinder from any open end of the cylinder; supporting, using a lifting tooling, the plurality of battery cells from a bottom to separate a bottom of the each battery cell of the plurality of battery cells from the bottom of the cylinder, wherein the electrode terminal of the each battery cell of the plurality of battery cells extends out of the corresponding third through hole; inserting at least two first support ribs between the bottom of the each battery cell of the plurality of battery cells and the bottom of the cylinder in a length direction of the cylinder, configured to form a first channel as an electrolyte sharing chamber, and ensuring that the electrode terminal of the each battery cell of the plurality of battery cells extends out of the corresponding third through hole; and removing the lifting tooling.

237. The process for preparing a high-capacity battery as claimed in claim 235, wherein the step of placing the plurality of battery cells into the cylinder specifically comprises: sequentially pushing the plurality of battery cells into an inner cavity of the cylinder from any open end of the cylinder, pushing each battery cell of the plurality of battery cells in place, and then inserting a cushion block between a bottom of the each battery cell and a bottom of the cylinder to ensure that the electrode terminal of the each battery cell completely extends out of the corresponding third through hole while forming an electrolyte sharing chamber.

238. The process for preparing a high-capacity battery as claimed in claim 235, wherein the step of placing the plurality of battery cells into the cylinder specifically comprises: flipping the cylinder to cause a top of the cylinder to face downward, fixing the plurality of battery cells as an integral body, and pushing same into an inner cavity of the cylinder from any open end of the cylinder; or sequentially pushing the plurality of battery cells into the inner cavity of the cylinder from any open end of the cylinder, wherein the electrode terminal of the each battery cell of the plurality of battery cells extends out of the corresponding third through hole under the action of gravity, and inserting at least two first support ribs between a bottom of the each battery cell of the plurality of battery cells and a bottom of the cylinder, configured to form an electrolyte sharing chamber; and flipping the cylinder to cause the top of the cylinder to face upward.

239. The process for preparing a high-capacity battery as claimed in any one of claims 228 to 238, wherein after, during the unpacking process, the opening is provided, using the external force or the electrolyte itself, in the housing body of the battery cell, to cause the inner cavity of the electrolyte sharing chamber to penetrate through the electrolyte region of the inner cavity of the each battery cell of the plurality of battery cells, the preparation process further comprises a step of injecting electrolyte into the inner cavity of the each battery cell of the plurality of battery cells via the electrolyte sharing chamber and performing formation on an entire high-capacity battery.

240. A process for preparing a high-capacity battery, comprising the following steps:
shell processing: processing a semi-finished housing, wherein the semi-finished housing comprises a cylinder with two opposite open ends and a first end plate fixed to any one of open ends of the cylinder, and the first end plate is provided with an electrolyte sharing chamber; and processing a second cover plate configured to be fixed to the other open end of the cylinder, and processing, in the second cover plate, a third through hole corresponding to an electrode terminal of the each battery cell of the plurality of battery cells.
placing of battery cells into the semi-finished housing: arranging a plurality of battery cells in the semi-finished housing;
sealing: hermetically welding the second cover plate to the other open end of the cylinder, wherein the electrode terminal of the each battery cell of the plurality of battery cells extends out of the corresponding third through hole in the second cover plate, and then fixedly sealing a second cover plate region corresponding to the third through hole with a housing body of the battery cell; and
unpacking: providing, using an external force or electrolyte itself, an opening in the housing body of the each battery cell such that an inner cavity of an electrolyte sharing chamber penetrates through an electrolyte region of an inner cavity of the each battery cell of the plurality of battery cells.

241. The process for preparing a high-capacity battery as claimed in claim 240, wherein the step of processing the second cover plate further comprises: processing a gas chamber on the second cover plate; and
the unpacking step further comprises: providing, using the external force or electrolyte itself, the opening in the housing body of the each battery cell such that an inner cavity of a gas chamber penetrates through a gas region of the inner cavity of the each battery cell of the plurality of battery cells.

242. The process for preparing a high-capacity battery as claimed in claim 240 or 241, wherein in the step of processing the semi-finished housing, the cylinder with two opposite open ends is integrally formed adopting an aluminum extrusion process, the first end plate is integrally formed adopting the aluminum extrusion process or a casting process, and then the first end plate is hermetically fixed to any one of open ends of the cylinder.

243. The process for preparing a high-capacity battery as claimed in claim 240 or 241, wherein the semi-finished housing is integrally formed adopting a casting process.

244. The process for preparing a high-capacity battery as claimed in claim 240 or 241, wherein after, during the unpacking process, the opening is provided, using the external force or the electrolyte itself, in the housing body of the battery cell, to cause the inner cavity of the electrolyte sharing chamber to penetrate through the electrolyte region of the inner cavity of the each battery cell of the plurality of battery cells, the preparation process further comprises a step of injecting electrolyte into the inner cavity of the each battery cell of the plurality of battery cells via the electrolyte sharing chamber and performing formation on an entire high-capacity battery.

245. The process for preparing a high-capacity battery as claimed in claim 240 or 241, wherein the plurality of battery cells adopted in the step of placing the plurality of battery cells into the semi-finished housing are battery cells that are subjected to capacity grading and sorting.

246. The process for preparing a high-capacity battery as claimed in claim 240 or 241, wherein in the sealing step, a sealing connection member is added between the third through hole and the electrode terminal, and the sealing connection member is utilized to fixedly seal a housing region corresponding to the third through hole with the housing body of the battery cell; and
the sealing step specifically comprises: hermetically connecting a bottom of a hollow member as the sealing connection member and a first region of the battery cell, wherein the first region is the region that is located around any one of the electrode terminals on an upper cover plate of any one of the plurality of battery cells; and hermetically welding the second cover plate to the top open end of the cylinder, and hermetically connecting a top of the hollow member and a second region of the second cover plate after the electrode terminal of the each battery cell of the plurality of battery cells and the hollow member extend out of the corresponding third through holes in the second cover plate, wherein the second region is the region that corresponds to any one of the third through holes in the second cover plate.
